# EUROPÄISCHE PATENTSCHRIFT

(11) **EP 3 823 916 B1**
(45) Veröffentlichungstag und Bekanntmachung des Hinweises auf die Patenterteilung: **24.08.2022**
(21) Anmeldenummer: 19759489.8
(22) Anmeldetag: 19.07.2019
(51) Int. Cl.: B65G 1/137, B66F 9/18

(54) **VERFAHREN UND KOMMISSIONIERLAGER ZUM LAGERN UND KOMMISSIONIEREN VON WAREN**
METHOD AND ORDER-PICKING STORAGE FACILITY FOR STORING AND ORDER-PICKING ARTICLES
PROCÉDÉ ET ENTREPÔT DESTINÉ À ENTREPOSER ET À PRÉPARER DES MARCHANDISES

(30) Priorität: 20.07.2018 AT 506322018
(43) Veröffentlichungstag der Anmeldung: 26.05.2021
(60) Teilanmeldung: 22183855.0
(73) Patentinhaber: TGW Logistics Group GmbH, 4614 Marchtrenk (AT)
(72) Erfinder: SCHEDLBAUER, Michael Johannes, 94491 Hengersberg (DE); HOLZNER, Stefan, 83569 Zaisering (DE); SCHRÖPF, Harald Johannes, 4600 Wels (AT)
(74) Vertreter: Burger, Hannes
(86) Internationale Anmeldenummer: PCT/AT2019/060240
(87) Internationale Veröffentlichungsnummer: WO 2020/014725

(56) Entgegenhaltungen:
- WO-A1-2008/022767
- WO-A1-2014/077683
- WO-A1-2014/111890
- AT-A1- 507 811
- DE-A1-102013 101 659
- DE-A1-102014 104 470
- US-A- 3 866 780
- US-A1- 2005 047 895
- US-A1- 2018 085 788

## Beschreibung

Die Erfindung betrifft ein Verfahren und Kommissionierlager zum Lagern und Kommissionieren von Waren, insbesondere Lebensmittel aus dem Frischebereich, enthaltenden und stapelbaren Warenträgern, wie in den Ansprüchen 1 und 16 beschrieben.

Aus dem Stand der Technik sind Kommissionierlager bekannt, bei welchen aus Wareneingangseinheiten mit gleichen Waren (sortenreine Wareneingangseinheiten) Warenausgangseinheiten mit unterschiedlichen Waren gebildet werden.

Die Warenausgangseinheiten mit unterschiedlichen Waren sind beispielsweise bei der Versorgung von Einzelhandelsgeschäften beziehungsweise Filialen von Lebensmitteleinzelhändlern erforderlich, bei denen in einem Zentrallager in großen Wareneingangseinheiten angelieferte Waren in kleinere Verbrauchseinheiten geteilt und mit anderen Waren zur Auslieferung zusammengestellt werden.

Die Waren sind in Warenträgern (Behälter, Kartons) gelagert. Die Wareneingangseinheiten umfassen auf Ladehilfsmittel (Palette, Rollcontainer) abgestellte Warenträgerstapel aus mehreren übereinander angeordneten Warenträgern. Beispielweise sind auf einer Europaletten (1200mm x 800mm) vier Warenträgerstapel jeweils mit Warenträgern mit einer Grundfläche von 600mm x 400 mm oder sechs Warenträgerstapel jeweils mit Warenträgern mit einer Grundfläche von 300mm x 400mm gestapelt.

Das Kommissionierlager umfasst einen Anlieferbereich für die Wareneingangseinheiten, einen Lagerbereich, einen Auftragsbearbeitungsbereich und einen Auslieferbereich für die Warenausgangseinheiten. Im Anlieferbereich sind automatisiert betriebene Depalettiervorrichtungen vorgesehen, an denen Warenträgerstapel aus den Wareneingangseinheiten vereinzelt werden. Danach werden die Warenträgerstapel im Lagerbereich gelagert. Im Auftragsbearbeitungsbereich werden Kommissionieraufträge bearbeitet, indem die benötigten Warenträgerstapel aus dem Lagerbereich ausgelagert und zu Umladevorrichtungen (Palettiervorrichtungen) transportiert werden. An den Umladevorrichtungen werden einzelne Warenträger oder gesamte Warenträgerstapel gemäß Kommissionierauftrag auf ein Zielladehilfsmittel (Palette, Rollcontainer) geladen. Der Transport der einzulagernden Warenträgerstapel zwischen Anlieferbereich und Lagerbereich erfolgt durch eine Einlagerfördertechnik und der Transport der zu kommissionierenden Warenträgerstapel zwischen Lagerbereich und Auftragsbearbeitungsbereich erfolgt durch eine Auslagerfördertechnik. Ein solches Kommissionierlager ist beispielweise in der WO 2015/144139 A1 beschrieben. Dieses bekannte Kommissionierlager eignet sich vornehmlich zum Transport von Behältern, weniger zum Transport von Kartons. Es ist nämlich im Regelfall damit zu rechnen, dass die Kartons Feuchtigkeit aufnehmen und an Stabilität verlieren, sodass ein Stapel aus mehreren übereinander gestapelten Kartons droht umzufallen, insbesondere wenn Beschleunigungskräfte einwirken. Um dem entgegenzuwirken, können Kartons mehr oder weniger nur einzeln manipuliert werden, was die Leistung eines solchen Kommissionierlagers stark minimiert.

Die WO 2012/127102 A1 offenbart ein Kommissionierlager, welches einen Anlieferbereich für die Wareneingangseinheiten, einen Lagerbereich und einen Auslieferbereich für die Warenausgangseinheiten umfasst. Die Wareneingangseinheiten werden im Anlieferbereich bereitgestellt und aus diesen Behälterstapel vereinzelt. Die vereinzelten Behälterstapel werden durch eine Einlagerfördertechnik in den Lagerbereich transportiert und im Lagerbereich an verschiedenen Einlagerpufferbahnen bereitgestellt. Im Lagerbereich ist ein Portalroboter angeordnet, welcher von den Behälterstapeln einzelne Behälter oder Behälterteilstapel entnehmen und auf dem Boden an vorgegeben Lagerplätzen abstellen kann. An jedem Lagerplatz ist ein Stapel von mehreren übereinander angeordneten Behältern mit gleichen Waren abgestellt. Die Kommissionierung erfolgt durch den Portalroboter, indem von den Behälterstapeln einzelne Behälter oder Behälterteilstapel entnommen und im Lagerbereich auf freien Lagerplätzen zu auftragsbezogenen Behälterstapeln (Warenausgangseinheiten) zusammengestellt werden. Danach werden die auftragsbezogenen Behälterstapeln auf verschiedene Auslagerpufferbahnen abgegeben und von den Auslagerpufferbahnen und einer Auslagerfördertechnik aus dem Lagerbereich in den Auslieferbereich transportiert. Dieses Kommissionierlager ist ausschließlich zur Lagerung und Kommissionierung von Behältern, nicht jedoch von Kartons ausgelegt.

Bekannt sind auch Kommissionierlager, bei denen mobile Lagerregale von autonom verfahrbaren, fahrerlosen Transportfahrzeugen transportiert werden, beispielweise aus der US 2017/022010 A1 oder WO 2018/039423 A1. Die Lagerregale umfassen in übereinanderliegenden Lagerebenen angeordnete Fachböden, auf welchen Waren abgestellt sind. Die Aufnahme eines Warenträgerstapels aus mehreren übereinander gestapelten Warenträgern im jeweiligen Lagerregal ist nicht vorgesehen.

Schließlich offenbart die DE 10 2014 104 470 A1 ein Kommissionierlager und Verfahren zum Lagern und Kommissionieren von Waren enthaltenden und stapelbaren Behältern, bei dem in einem Lagerbereich ein Lagerbediengerät vorgesehen ist, welches ein oder mehrere Behälter aus einem Stapel von einem Lagerplatz entnehmen und auf einem Stapelbereich des Lagerbediengerätes zu mindestens einem Stapel stapeln kann, um entsprechendeinem Kommissionierauftrag mindestens einen kommissionierten Stapel auf dem Stapelbereich des Lagerbediengeräts zu bilden.

Eine Aufgabe der Erfindung ist es ein verbessertes Verfahren zum Lagern und Kommissionieren von Waren enthaltenden und stapelbaren Warenträgern und ein entsprechendes Kommissionierlager zu schaffen. Insbesondere soll unabhängig vom verwendeten Warenträger (Behälter aus Kunststoff oder Kartons) ein weitgehend störungsfreier Betrieb und ein schneller Warenumschlag möglich sein.

Die Aufgabe der Erfindung wird durch die folgenden Schritte gelöst:
i) Bereitstellung von autonom verfahrbaren, fahrerlosen Transportfahrzeugen im Kommissionierlager, welche jeweils ein Fahrgestell mit einer Antriebseinheit und eine auf dem Fahrgestell angeordnete Ladeplattform zur Aufnahme einer mobilen Transportladehilfe aufweist,
ii) Bereitstellung von Transportladehilfen jeweils zur Aufnahme und Lagestabilisierung wenigstens eines Warenträgerstapels aus mehreren übereinander angeordneten Warenträgern, wobei die Transportladehilfen mobile leere (erste) Transportladehilfen umfassen,
iii) Bereitstellung von Warenträgerstapeln aus mehreren übereinander angeordneten Warenträgern in einem Anlieferbereich des Kommissionierlagers,
iv) Transport von leeren (ersten) Transportladehilfen durch die autonom verfahrbaren, fahrerlosen Transportfahrzeuge zu einer Beladestation und Bereitstellung einer oder von mehreren leeren (ersten) Transportladehilfe(n) entweder an einer oder mehreren automatisiert betriebenen Beladevorrichtung(en) oder auf einer Pufferfläche nahe der Beladevorrichtung(en),
v) Beladen einer der leeren (ersten) Transportladehilfen, welche an der automatisiert betriebenen Beladevorrichtung bereitgestellt wird, mit zumindest einem Warenträgerstapel aus dem Anlieferbereich durch die automatisiert betriebene Beladevorrichtung,
vi) Transport der mit zumindest einem Warenträgerstapel im Schritt v) beladenen (ersten) Transportladehilfe mit dem autonom verfahrbaren, fahrerlosen Transportfahrzeug von der Beladestation zu einem Lagerbereich,
vii) Abstellen der mit zumindest einem Warenträgerstapel beladenen (ersten) Transportladehilfe auf einer Lagerfläche im Lagerbereich,
viii) Lagerung der mit zumindest einem Warenträgerstapel beladenen (ersten) Transportladehilfen oder mit einzelnen Warenträgern beladenen (ersten) Transportladehilfen im Lagerbereich,
ix) Bearbeitung eines Kommissionierauftrages umfassend die Schritte
   - Transport einer oder von mehreren die zu einem Kommissionierauftrag benötigten Warenträger enthaltenden (ersten) Transportladehilfe(n) vom Lagerbereich zu einer Entladestation und Bereitstellung genannter (erster) Transportladehilfe(n) entweder an einer oder mehreren automatisiert betriebenen Entladevorrichtung(en) oder auf einer Pufferfläche nahe der Entladevorrichtung(en) durch ein oder mehrere autonom verfahrbare(s), fahrerlose(s) Transportfahrzeug(e),
   - Entladen einer oder mehrerer der (ersten) Transportladehilfe(n), welche an der oder den automatisiert betriebenen Entladevorrichtung(en) bereitgestellt wird (werden), durch Entnahme der für die Bearbeitung des genannten Kommissionierauftrages benötigten Warenträger, und
   - Zusammenstellung der Warenträger zu einem Auftragsstapel auf einem oder zu je einen Auftragsstapel auf mehreren Zielladehilfsmitteln zum genannten Kommissionierauftrag in einem Auftragsbearbeitungsbereich.

Dabei ist von Vorteil, dass unabhängig davon welcher Warenträger verwendet wird, die Warenträger in höherer Anzahl direkt übereinander gestapelt werden können. Die Warenträger können aus unterschiedlichen Materialien hergestellt sein, beispielweise können Behälter aus Kunststoff oder Kartons verwendet werden. Im Kommissionierlager werden entweder Behälter oder Kartons kommissioniert. Jedoch ist auch eine Kombination aus Behältern und Kartons denkbar. Ebenso können die Warenträger unterschiedliche Dimensionen ausbilden. Üblicherweise ist eine Grundfläche der Warenträger 600mm x 400mm oder 300mm x 400mm. Die Transportfahrten können effizienter durchgeführt werden, da je Transportfahrt eine höhere Anzahl an Warenträgern transportiert werden kann.

Für den Transport der leeren Transportladehilfen und mit Warenträgerstapel beladenen Transportladehilfen werden autonom verfahrbare, lenkbare Transportfahrzeuge (eines fahrerlosen Transportsystems) eingesetzt, welche von einem übergeordneten Leitrechner automatisch gesteuert werden. Solche Transportfahrzeuge sind dem Fachmann unter "automated guided vehicle" bekannt. Ein solches Transportsystem umfasst die Transportfahrzeuge, Mittel zur Standortbestimmung und Lageerfassung der Transportfahrzeuge und Mittel zur Datenübertragung an und von den Transportfahrzeugen im Transportsystem. Jedes Transportfahrzeug umfasst ein Fahrgestell mit einer Antriebseinheit und eine auf dem Fahrgestell angeordnete Ladeplattform zur Aufnahme / Abgabe / Transport einer mobilen (ortsungebundenen) Transportladehilfe. Für die Navigation der Transportfahrzeuge sind unterschiedliche Technologien bekannt. So wird neben der spurgeführten, induktiven oder optischen Navigation auch eine Lasernavigation eingesetzt, bei welcher jedes Transportfahrzeug mit einem Laserscanner ausgerüstet ist, mit welchem stationäre Referenzpunkte in der Umgebung detektiert werden und anhand der detektierten Umgebungsmerkmale das Transportfahrzeug navigiert wird. Möglich ist die Navigation auch mittels GPS-System, insbesondere Differential Global Positioning System (dGPS).

Ein solches Transportsystem lässt sich problemlos in bereits bestehende Kommissionierlager integrieren und bestens an schwankende Leistungsanforderungen anpassen.

Auch wenn in vorteilhafter Weise die Transportfahrzeuge mit denselben Leistungsdaten (Fahrgeschwindigkeit, Beschleunigungswerte, Lastaufnahme, und dgl.) konfiguriert sind, können Gruppen von Transportfahrzeugen mit unterschiedlichen Leistungsdaten eingesetzt werden. Dies kann sich von Vorteil erweisen, wenn im Kommissionierlager unterschiedliche Temperaturzonen vorgesehen sind. In diesem Fall können die Transportfahrzeuge der ersten Gruppe und zweiten Gruppe eine unterschiedliche Steuerelektronik oder Räder mit unterschiedlichen Materialeigenschaften aufweisen.

Die Bereitstellung von Warenträgerstapeln umfasst die Bereitstellung von sortenreinen Warenträgerstapeln. Die Bereitstellung kann aber auch ausschließlich die Bereitstellung von sortenreinen Warenträgerstapeln umfassen. Ein sortenreiner Warenträgerstapel besteht aus mehreren übereinander gestapelten Warenträgern mit gleichen Waren. Auch wenn dies eher der Ausnahmefall ist, so kann die Bereitstellung auch die Bereitstellung von gemischten Warenträgerstapeln umfassen. Ein gemischter Warenträgerstapel besteht aus mehreren übereinander gestapelten Warenträgern mit unterschiedlichen Waren. Dabei können im Warenträgerstapel die unteren Warenträger eine erste Ware und die oberen Warenträger eine zweite Ware enthalten.

Um eine ausreichende Transportsicherheit hoher Warenträgerstapel und auch bei dynamischen Fahrbewegungen der Transportfahrzeuge zu gewährleisten, werden Transportladehilfen verwendet. Die Transportladehilfe kann zwischen Seitenwänden auf einem Boden einen oder mehrere Warenträgerstapel aufnehmen und während dem Transport durch ein Transportfahrzeug gegen seitliche Verlagerungen begrenzen. Erst durch die Verwendung von Transportladehilfen können Warenträger schlechter Qualität, beispielsweise durch Feuchtigkeitsaufnahme, Beschädigungen, und dgl., als Warenträgerstapel einerseits zwischen einem Anlieferbereich und einem Lagerbereich und andererseits zwischen einem Lagerbereich und einem Auftragsbearbeitungsbereich transportiert werden.

In einem der Verfahrensschritte ist es vorgesehen, dass leere (erste) Transportladehilfen durch die autonom verfahrbaren, fahrerlosen Transportfahrzeuge zu einer Beladestation transportiert und dort entweder an einer oder mehreren automatisiert betriebenen Beladevorrichtung(en) oder auf einer Pufferfläche nahe der Beladevorrichtung(en) bereitgestellt werden. Die Pufferfläche ist auf einem Boden ausgebildet.

Die (ersten) Transportladehilfen werden nach der Entnahme des letzten Warenträgers / Warenträgerstapels von der Entladestation zurück zur Beladestation transportiert und dort die leeren (ersten) Transportladehilfen entweder an einer automatisiert betriebenen Beladevorrichtung oder auf der Pufferfläche bereitgestellt. Grundsätzlich kann aber auch ein Lieferant leere (erste) Transportladehilfen anliefern, welche im Anlieferbereich übernommen und zur Beladestation transportiert werden. Es ist auch möglich, dass die Transportladehilfen mobile beladene (dritte) Transportladehilfen umfassen, welche im Anlieferbereich übernommen und unter Umgehung der Beladestation direkt in den Lagerbereich oder Auftragsbearbeitungsbereich transportiert und dort abgestellt werden. Die (dritte) Transportladehilfen können von einem Lieferanten angeliefert werden.

Das Beladen einer leeren (ersten) Transportladehilfe mit Warenträgern kann nach unterschiedlichen Beladeverfahren erfolgen. So kann nach einem ersten Beladeverfahren ein (gesamter) Warenträgerstapel aus mehreren übereinander gestapelten Warenträgern durch die Beladevorrichtung auf die leere (erste) Transportladehilfe umgeladen werden.

Der Warenträgerstapel wird von der Beladevorrichtung "unverändert" auf die leere (erste) Transportladehilfe umgeladen, nicht aber aus dem Warenträgerstapel einzelne Warenträger manipuliert. "Unverändert" bedeutet in diesem Zusammenhang, dass in der Beladestation kein zusätzlicher Kommissioniervorgang erfolgt, daher ein erster Warenträger mit einer ersten Ware und ein zweiter Warenträger mit einer zweiten Ware zu einem kommissionierten Warenträgerstapel zusammengestellt werden. Dies erweist sich in mehreren Aspekten von Vorteil:
- Erstens erweist es sich bei Warenträgern aus Karton von Vorteil, da die üblicherweise im Bereich der Behälterwände vorhandenen Stapelnasen und Stapelausnehmungen zur gegenseitigen Lagefixierung der übereinander gestapelten Warenträger im Eingriff bleiben und durch mehrmaliges Abheben und Aufsetzen von Warenträgern hervorgerufene Beschädigungen an den Stapelnasen und Stapelausnehmungen vermieden werden.
- Zweitens erweist es sich von Vorteil, wenn die Warenträger aus Kunststoff hergestellt sind, da die üblicherweise im Bereich der Behälterwände vorhandenen Stapelränder zur gegenseitigen Lagefixierung der übereinander gestapelten Warenträger im Eingriff bleiben und durch mehrmaliges Abheben und Aufsetzen von Warenträgern hervorgerufene Abnutzungen an den Stapelrändern vermieden werden.
- Drittens kann die Beladevorrichtung besonders einfach aufgebaut werden, beispielweise umfasst diese eine stationäre Aufnahmefläche und eine Abschiebevorrichtung (Pusher), mit welcher der Warenträgerstapel von der Aufnahmefläche auf die leere (erste) Transportladehilfe (ohne Heben) abgeschoben wird.
- Viertens kann die Beladung sehr rasch durchgeführt werden, was insbesondere dann von wesentlichem Vorteil ist, wenn eher weniger verschiedene Waren und eine hohe Menge an Waren kommissioniert werden, wie dies beispielweise im Lebensmittelbereich der Fall sein kann. Dabei werden innerhalb eines eingeschränkten Zeitfensters die Waren von verschiedensten Lieferanten und in Großmengen angeliefert. Die Waren müssen jedoch innerhalb kürzester Zeit in den Lagerbereich transportiert und danach kommissioniert werden. Nachdem die Warenträgerstapel "unverändert" aus dem Anlieferbereich zu der Beladestation transportiert und an einer oder mehreren Beladevorrichtungen auf die leere (erste) Transportladehilfen umgeladen werden, kommt es zu keinen Verzögerungen in der Abarbeitung der angelieferten Waren.

So kann nach einem zweiten Beladeverfahren ein "vorkommissionierter" Warenträgerstapel aus mehreren übereinander gestapelten Warenträgern durch die Beladevorrichtung auf die leere (erste) Transportladehilfe umgeladen werden. "Vorkommissioniert" bedeutet in diesem Zusammenhang, dass in der Beladestation ein zusätzlicher Kommissioniervorgang erfolgt, daher ein erster Warenträger mit einer ersten Ware und ein zweiter Warenträger mit einer zweiten Ware zu einem kommissionierten Warenträgerstapel zusammengestellt werden. Der Kommissioniervorgang kann das Zusammenstellen von Waren zu Warengruppen umfassen. Unter einer Warengruppe versteht man die Zusammenfassung einzelner Waren bzw. Warenträger anhand einer gemeinsamen Eigenschaft zu einer Gruppe. Die gemeinsame Eigenschaft kann beispielweise eine Lagertemperatur sein.

Die (erste) Transportladehilfe wird nach der Beladung mit einem der Transportfahrzeuge von der Beladestation im Anlieferbereich zum Lagerbereich transportiert und dort auf einen freien Lagerplatz abgestellt. Das Transportfahrzeug umfasst eine Ladeplattform, mit welcher die (erste) Transportladehilfe auf dem Transportfahrzeug übernommen und mit welcher die (erste) Transportladehilfe von dem Transportfahrzeug abgegeben sowie während der Fahrbewegung auf dem Transportfahrzeug abgestützt werden kann. Die Ladeplattform kann hierzu beispielweise relativ gegenüber dem Fahrgestell heb- und senkbar ausgebildet sein.

Die (ersten) Transportladehilfen werden im Lagerbereich auf Lagerplätzen abgestellt. Die Lagerplätze sind auf einer Lagerfläche bevorzugt auf einem Boden im Lagerbereich ausgebildet. Im Lagerbereich befinden sich (erste) Transportladehilfen, welche noch mit zumindest einem Warenträger, einen Teilstapel aus einem Warenträgerstapel oder einem vollständigen Warenträgerstapel beladen sind. Während einige der teilentladenen (ersten) Transportladehilfen nach einer Entladung aus dem Auftragsbearbeitungsbereich zurück in den Lagerbereich transportiert werden, werden die vollständig beladenen (ersten) Transportladehilfen direkt aus dem Anlieferbereich in den Lagebereich transportiert.

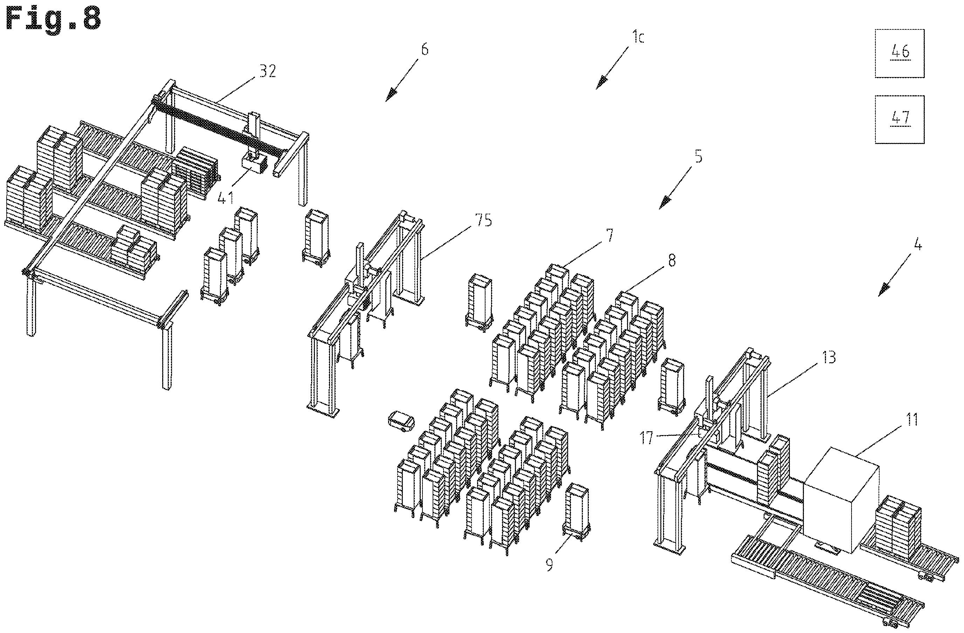

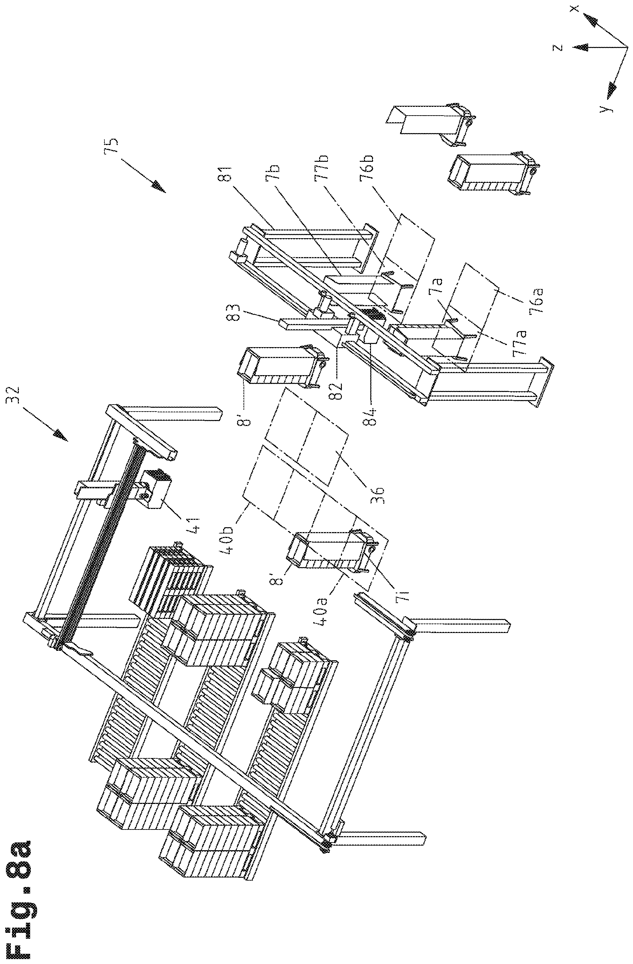

Der Lagerbereich ist über einige der Transportfahrzeuge des Transportsystems mit der Beladestation im Anlieferbereich und über einige der Transportfahrzeuge des Transportsystems mit der Entladestation im Auftragsbearbeitungsbereich fördertechnisch verbunden. Die Entladestation im Auftragsbearbeitungsbereich kann zusätzlich über einige der Transportfahrzeuge mit der Beladestation im Anlieferbereich fördertechnisch verbunden sein. In einer besonderen Ausführung des Kommissionierlagers (Fig.8) kann die Entladestation und die Umladestation im Auftragsbearbeitungsbereich über einige der Transportfahrzeuge mit der Beladestation im Anlieferbereich und/oder dem Lagerbereich fördertechnisch verbunden sein.

Schließlich wird zur Bearbeitung eines von mehreren Kommissionieraufträgen (welche an einem Auftragsrechner elektronisch erfasst werden) zumindest eine die benötigten (gleichen) Waren / Warenträger enthaltende (erste) Transportladehilfe mit einem der Transportfahrzeuge vom Lagerbereich zur Entladestation transportiert. Werden verschiedene Waren / Warenträger benötigt, so werden die diese Waren / Warenträger enthaltenden (ersten) Transportladehilfen mit mehreren Transportfahrzeugen vom Lagerbereich zur Entladestation transportiert. Die Entladestation umfasst eine oder mehrere automatisiert betriebene Entladevorrichtungen, mittels welcher das Entladen einer oder mehrerer der (ersten) Transportladehilfe(n) durch Entnahme der für die Bearbeitung des genannten Kommissionierauftrages benötigten Warenträger und die Zusammenstellung der Warenträger auf einem oder mehreren Zielladehilfsmitteln automatisch erfolgt, daher ohne manuelle Bearbeitungsschritte. Mit anderen Worten bildet nach dieser Ausführung die Entladestation eine vollautomatische Entladestation aus.

Beispielweise umfasst ein Kommissionierauftrag von einer ersten Ware 24 Warenträger, von einer zweiten Ware 18 Warenträger, von einer dritten Ware 3 Warenträger und von einer vierten Ware 3 Warenträger. Die erste Ware ist in 4 Warenträgerstapel zu je 6 Warenträger enthalten. Die zweite Ware ist in 3 Warenträgerstapel zu je 6 Warenträger enthalten. Die dritte Ware ist in einem Warenträgerstapel mit 6 Warenträgern enthalten. Die vierte Ware ist in einem Warenträgerstapel mit 6 Warenträgern enthalten.

Die (erste) Transportladehilfe kann einen Warenträgerstapel aus vorzugsweise bis zu zwanzig übereinander gestapelten (niedrigen) Warenträgern aufnehmen.

Im beschriebenen Ausführungsbeispiel kann die (erste) Transportladehilfe einen Warenträgerstapel aus bis zu sechs übereinander gestapelten (hohe) Warenträgern aufnehmen. Ein erstes Transportfahrzeug transportiert eine (erste) Transportladehilfe mit einem ersten Warenträgerstapel enthaltend die erste Ware vom Lagerbereich zur Entladestation, ein zweites Transportfahrzeug transportiert eine (erste) Transportladehilfe mit einem zweiten Warenträgerstapel enthaltend die erste Ware vom Lagerbereich zur Entladestation, ein drittes Transportfahrzeug transportiert eine (erste) Transportladehilfe mit einem dritten Warenträgerstapel enthaltend die erste Ware vom Lagerbereich zur Entladestation und ein viertes Transportfahrzeug transportiert eine (erste) Transportladehilfe mit einem vierten Warenträgerstapel enthaltend die erste Ware vom Lagerbereich zur Entladestation.

Die (ersten) Transportladehilfen werden nacheinander an einer einzigen Entladevorrichtung oder zumindest zwei der (ersten) Transportladehilfen nebeneinander an einer einzigen Entladevorrichtung oder jeweils zumindest zwei der (ersten) Transportladehilfen nebeneinander an mehreren Entladevorrichtungen bereitgestellt.

Wird an der oder den Entladevorrichtung(en) noch ein vorangegangener Kommissionierauftrag bearbeitet, so kann die oder können die (ersten) Transportladehilfen von dem oder den Transportfahrzeug(en) vorerst auf einer Pufferfläche nahe der Entladevorrichtung(en) abgestellt werden. Sobald die Entladevorrichtung eine (erste) Transportladehilfe des vorangegangenen Kommissionierauftrages entladen und die leere (erste) Transportladehilfe von dieser Entladevorrichtung abtransportiert wurde, kann eine (erste) Transportladehilfe des gegenwärtigen Kommissionierauftrages mit einem Transportfahrzeug von der Pufferfläche zur Entladevorrichtung transportiert und dort bereitgestellt werden.

Sodann wird die (erste) Transportladehilfe, welche an der oder den automatisiert betriebenen Entladevorrichtung(en) bereitgestellt wird (werden), von der Entladevorrichtung durch Entnahme der für die Bearbeitung eines Kommissionierauftrages benötigten Warenträger entladen.

Das Entladen einer oder mehrerer der (ersten) Transportladehilfe(n) kann die Entnahme eines einzelnen Warenträgers umfassen. Befindet sich der Warenträger in einem Warenträgerstapel, so wird der oberste Warenträger im Stapel entnommen. Das Entladen einer oder mehrerer der (ersten) Transportladehilfe(n) kann die Entnahme eines Warenträgerteilstapels aus zumindest zwei übereinander gestapelten Warenträgern umfassen. Befindet sich der Warenträger in einem Warenträgerstapel, so werden die oberen Warenträger im Stapel als Teilstapel entnommen. Das Entladen einer oder mehrerer der (ersten) Transportladehilfe(n) kann die Entnahme eines gesamten Warenträgerstapels aus sämtlichen übereinander gestapelten Warenträgern umfassen.

Nach letzterer Ausführung wird der Warenträgerstapel von der Entladevorrichtung "unverändert" von der (ersten) Transportladehilfe entladen, nicht aber aus dem Warenträgerstapel einzelne Warenträger manipuliert. Dies erweist sich in mehreren Aspekten von Vorteil:
- Erstens erweist es sich bei Warenträger aus Karton von Vorteil, da die üblicherweise im Bereich der Behälterwände vorhandenen Stapelnasen und Stapelausnehmungen zur gegenseitigen Lagefixierung der übereinander gestapelten Warenträger im Eingriff bleiben und durch mehrmaliges Abheben und Aufsetzen von Warenträgern hervorgerufene Beschädigungen an den Stapelnasen und Stapelausnehmungen vermieden werden.
- Zweitens erweist es sich von Vorteil, wenn die Warenträger aus Kunststoff hergestellt sind, die üblicherweise im Bereich der Behälterwände vorhandenen Stapelränder zur gegenseitigen Lagefixierung der übereinander gestapelten Warenträger im Eingriff bleiben und durch mehrmaliges Abheben und Aufsetzen von Warenträgern hervorgerufene Abnutzungen an den Stapelrändern vermieden werden.
- Drittens kann die Entladevorrichtung besonders einfach aufgebaut werden, beispielweise umfasst diese eine Aufnahmefläche und eine Abschiebevorrichtung (Pusher), mit welcher der Warenträgerstapel von der (ersten) Transportladehilfe auf die Aufnahmefläche (ohne Heben) abgeschoben wird.
- Viertens kann die Entladung sehr rasch durchgeführt werden, was insbesondere dann von wesentlichem Vorteil ist, wenn eher weniger verschiedene Waren und eine hohe Menge an Waren kommissioniert werden, wie dies beispielweise im Lebensmittelbereich der Fall sein kann.

Nach dem oder mit dem Entladen der (ersten) Transportladehilfe(n) werden die Warenträger auf einem oder mehreren Zielladehilfsmitteln zum genannten Kommissionierauftrag zusammengestellt.

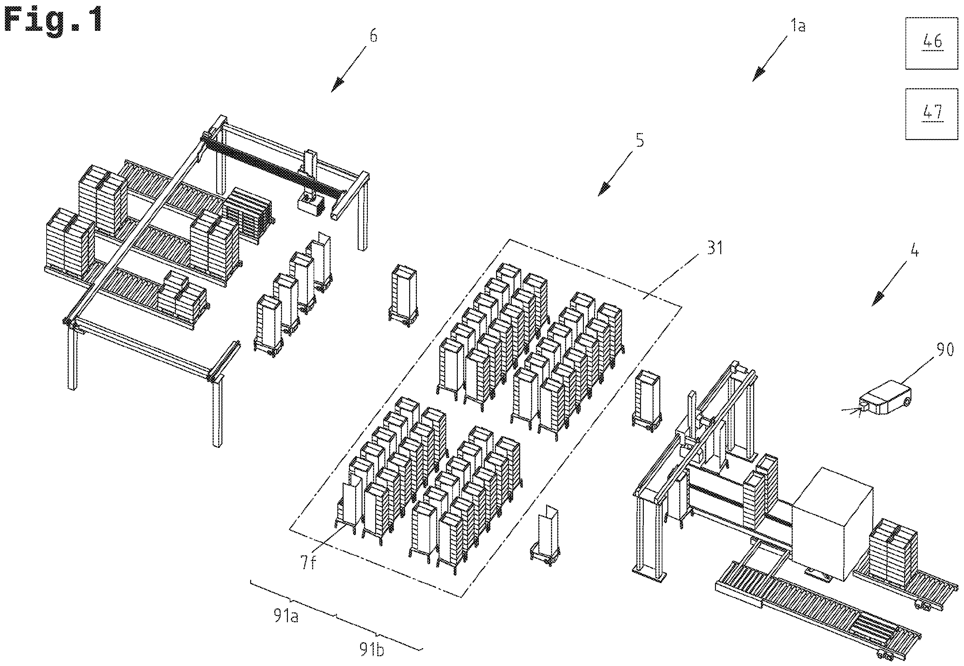

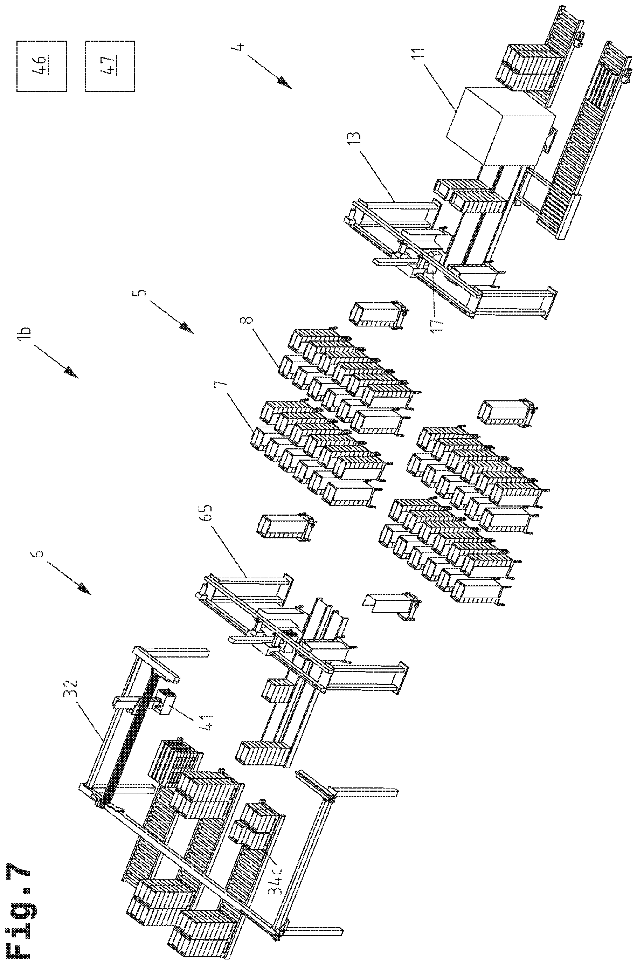

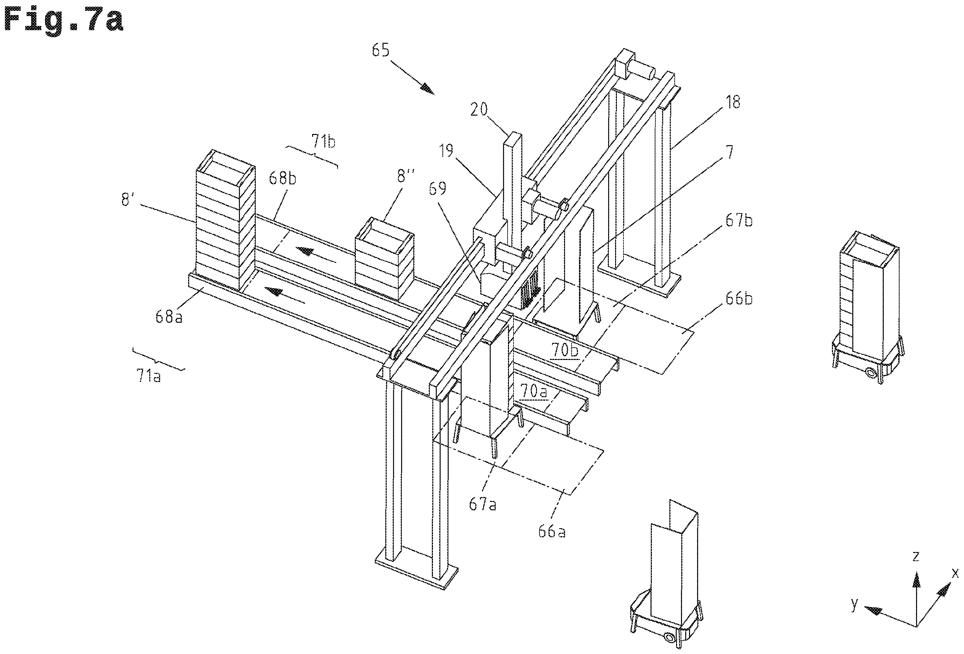

Das Entladen der (ersten) Transportladehilfen kann auch in einer durch das Steuerungssystem ermittelten Reihenfolge (Sequenz) erfolgen. Die Warenträger / Warenträgerstapel werden in dieser Reihenfolge an der Entladestation (Fig. 1) oder in dieser Reihenfolge an der Umladestation (Fig. 7) bereitgestellt und in dieser Reihenfolge auf das Zielladehilfsmittel umgeladen. Andererseits kann auch über die Transportfahrzeuge eine Reihenfolge in der Bereitstellung der (ersten) Transportladehilfe(n) an der Entladestation (Fig. 1) oder Bereitstellung der (zweiten) Transportladehilfe(n) an der Umladestation (Fig. 8) hergestellt werden.

Gemäß obigem Beispiel werden auf einem ersten Zielladehilfsmittel die (unveränderten) vier Warenträgerstapel zusammengestellt, daher die 24 Warenträger mit der ersten Ware. Auf einem zweiten Zielladehilfsmittel werden die (unveränderten) drei Warenträgerstapel zusammengestellt, daher die 18 Warenträger mit der zweiten Ware, und ein gemischter Warenträgerstapel zusammengestellt, daher in einem Warenträgerstapel 3 Warenträger mit der dritten Ware und 3 Warenträger mit der vierten Ware.

Wie dieses Beispiel zeigt, können auf einem Zielladehilfsmittel (Warenausgangseinheit) entsprechend einem Kommissionierauftrag entweder Warenträger einer einzigen Ware oder Warenträger verschiedener Waren zusammengestellt werden.

Auch wenn die Erfindung nicht auf die Anwendung im Frischebereich einschränkend zu verstehen ist, so ist dies das bevorzugte Einsatzgebiet. Dies vor allem deswegen, weil verderbliche Waren, wie beispielsweise frisches Obst und Gemüse, einen schnellen Warenumschlag erfordern und bei denen üblicherweise nur eine beschränkte Anzahl von unterschiedlichen Sorten gleichzeitig kommissioniert werden müssen. Grundsätzlich können die Vorteile dieser Anwendung auch im Bereich von "general merchandise" oder im Textilbereich gut umgesetzt werden.

Eine besonders einfache Ausgestaltung ergibt sich, wenn die Zusammenstellung der Warenträger zum genannten Kommissionierauftrag derart durchgeführt wird, dass die an der oder den Entladevorrichtung(en) aus dem (sortenreinen) Warenträgerstapel entnommenen Warenträger oder der wenigstens eine an der oder die an den Entladevorrichtung(en) entnommene(n) (sortenreine(n) Warenträgerstapel
- entweder auf eine ortsfeste Fördertechnik abgegeben, welche zwischen der Entladevorrichtung und wenigstens einer automatisiert betriebenen Umladevorrichtung (Palettierung) angeordnet ist, und der Warenträger oder Warenträgerstapel durch die Fördertechnik von der oder den Entladevorrichtung(en) zur Umladevorrichtung transportiert wird (werden),
- oder auf wenigstens eine die Transportladehilfen umfassende mobile leere (zweite) Transportladehilfe abgegeben, und die wenigstens eine beladene (zweite) Transportladehilfe mit dem Warenträger oder Warenträgerstapel mit einem autonom verfahrbaren, fahrerlosen Transportfahrzeug von der oder den Entladevorrichtung(en) zu wenigstens einer Umladevorrichtung transportiert wird (werden),
worauf die Warenträger oder der Warenträgerstapel durch die Umladevorrichtung auf ein Zielladehilfsmittel übergeben wird.

Dadurch kann der Warenumschlag im Kommissionierlager nochmals optimiert werden, da der Entladevorgang der Transportladehilfen und der Umladevorgang (Palettierung) voneinander entkoppelt werden. Grundsätzlich nimmt der Entladevorgang der Transportladehilfen im Vergleich zum Umladevorgang (Palettierung) weniger Zeit in Anspruch. Nachdem der Entladevorgang an der von der Umladestation getrennt angeordneten Entladestation erfolgt, stehen die Transportladehilfen frühzeitiger für andere Transportaufgaben zur Verfügung. Dadurch kann die Anzahl an Transportladehilfen im Kommissionierlager minimiert werden. Darüber hinaus werden an der Umladestation ausschließlich die zum betreffenden Kommissionierauftrag benötigten Warenträger und/oder Warenträgerstapel bereitgestellt, sodass ein Rücktransport von zum betreffenden Kommissionierauftrag nicht benötigten Warenträgern oder Warenträgerstapeln entfallen kann.

Gemäß einer Weiterbildung der Erfindung werden die an der oder den Entladevorrichtung(en) aus dem (sortenreinen) Warenträgerstapel entnommenen Warenträger oder die an der oder den Entladevorrichtung(en) entnommenen Warenträgerstapel nacheinander auf die ortsfeste Fördertechnik oder die wenigstens eine mobile leere (zweite) Transportladehilfe abgegeben und aufeinanderfolgend zur wenigstens einen Umladevorrichtung transportiert. Bevorzugt werden die Warenträger oder Warenträgerstapel in einer durch die Packordnung der Warenträger am Zielladehilfsmittel vorgesehenen Reihenfolge nacheinander auf die ortsfeste Fördertechnik oder die wenigstens eine mobile leere (zweite) Transportladehilfe abgegeben und in dieser Reihenfolge aufeinanderfolgend zur wenigstens einen Umladevorrichtung transportiert.

Von Vorteil ist auch, wenn die an der oder den Entladevorrichtung(en) aus dem (sortenreinen) Warenträgerstapel entnommenen Warenträger auf die ortsfeste Fördertechnik oder die wenigstens eine mobile leere (zweite) Transportladehilfe derart abgegeben wird, dass wenigstens ein (vorkommissionierter) Warenträgerstapel aus mehreren übereinander angeordneten Warenträgern zusammengestellt wird, welcher anschließend zur wenigstens einen Umladevorrichtung transportiert wird. Bevorzugt werden die Warenträger oder Warenträgerstapel in einer durch die Packordnung der Warenträger am Zielladehilfsmittel vorgesehenen Reihenfolge auf der ortsfesten Fördertechnik oder der wenigstens einen mobilen leeren (zweiten) Transportladehilfe zu (vorkommissionierten) Warenträgerstapel zusammengestellt und die (vorkommissionierten) Warenträgerstapel aufeinanderfolgend zur wenigstens einen Umladevorrichtung transportiert.

Das erfindungsgemäße Verfahren kann auch die Schritte umfassen
- Erfassen von Kommissionieraufträgen an einem Auftragsrechner,
- Bestimmen der zu einem der Kommissionieraufträge benötigten Waren (Bedarfsmenge),
- Analyse eines Lagerbestandes zu jenen Waren, welche für den genannten Kommissionierauftrag benötigt werden, welcher Kommissionierauftrag einen oder mehrere die Ware(n) enthaltenden ersten Warenträger und einen oder mehrere die Ware(n) enthaltenden zweiten Warenträger umfasst, und
- Zusammenstellung der Warenträger zum genannten Kommissionierauftrag in aufeinander folgenden Kommissionierschritten, sofern eine Bedarfsmenge zu einer Ware den Lagerbestand zu dieser Ware überschreitet, wobei
   i) in einem ersten Kommissionierschritt an der Entladevorrichtung die (zweite) Transportladehilfe mit einem oder mehreren ersten Warenträger(n) beladen wird, und anschließend diese (zweite) Transportladehilfe mit einem autonom verfahrbaren, fahrerlosen Transportfahrzeug von der Entladevorrichtung zu einer Pufferfläche transportiert und dort gepuffert wird, und
   ii) in einem zweiten Kommissionierschritt die (zweite) Transportladehilfe mit einem autonom verfahrbaren, fahrerlosen Transportfahrzeug von der Pufferfläche zu der Entladevorrichtung transportiert und dort bereitgestellt wird, sofern eine Bedarfsmenge zu einer Ware den Lagerbestand zu dieser Ware unterschreitet, und anschließend die (zweite) Transportladehilfe mit einem oder mehreren zweiten Warenträger(n) beladen wird, und

- Transport der (zweiten) Transportladehilfe nach Durchführung der Schritte i) und ii) mit einem autonom verfahrbaren, fahrerlosen Transportfahrzeug von der Entladevorrichtung zur Umladevorrichtung, und
- Übergabe des Warenträgerstapels durch die Umladevorrichtung auf ein Zielladehilfsmittel.

Der erste Warenträger und zweite Warenträger können jeweils dieselben Waren oder unterschiedliche Waren enthalten.

Ein Kommissionierauftrag kann mehrere die Waren enthaltende erste Warenträger und/oder zweite Warenträger umfassen, welche im ersten Kommissionierschritt und/oder zweiten Kommissionierschritt durch die Entladevorrichtung als Warenträgerteilstapel auf die (zweite) Transportladehilfe abgegeben werden. Um die Entladevorrichtung nicht unnötig zu blockieren, erweist es sich von Vorteil, wenn zwischen dem ersten Kommissionierschritt und zweiten Kommissionierschritt die (zweite) Transportladehilfe auf einer Pufferfläche kurzzeitig gepuffert wird.

Es ist in der Praxis nicht unüblich, dass bei der Anlieferung von Waren zeitliche Verzögerungen auftreten und im Kommissionierlager bestimmte Waren kurzzeitig nur in unzureichender Menge (wenn der Lagerbestand niedriger ist als die Bedarfsmenge, daher der Lagerbestand niedriger ist als der Kommissionierauftrag an Waren / Warenträger benötigt) oder gar nicht verfügbar sind, während jedoch andere Waren in ausreichend hoher Menge (wenn der Lagerbestand höher ist als die Bedarfsmenge, daher der Lagerbestand höher ist als der Kommissionierauftrag an Waren / Warenträger benötigt) vorhanden sind.

Nach dieser Verfahrensmaßnahme können Verzögerungen in der Nachschubversorgung von Waren kompensiert werden, denn es wird der Kommissionierauftrag auch bereits dann bearbeitet, wenn noch nicht sämtliche Warenträger im Lagerbestand verfügbar sind. Beispielweise kann ein Kommissionierauftrag einen oder mehrere Warenträger Salat und einen oder mehrere Warenträger Tomaten umfassen. Die Warenträger Tomaten sind in unzureichender Menge vorhanden (der Lagerbestand kann dabei auch Null sein). Die Warenträger Salat sind in zureichender Menge vorhanden (der Lagerbestand kann die Bedarfsmenge, daher jene Menge welche zur Abdeckung des Kommissionierauftrages benötigt wird). Die Warenträger Salat können an der Entladevorrichtung bereits in der (zweiten) Transportladehilfe zusammengestellt werden. Danach wird die mit dem oder den Warenträger(n) Salat beladene (zweite) Transportladehilfe kurzzeitig gepuffert. Sobald die Warenträger Tomaten in zureichender Menge vorhanden sind und der Lagerbestand die Bedarfsmenge abdeckt, kann die (zweite) Transportladehilfe an der Entladevorrichtung bereitgestellt und dort die Warenträger Tomaten zusammengestellt werden.

Der erste Kommissionierschritt und zweite Kommissionierschritt werden bevorzugt an einer Entladevorrichtung zeitlich aufeinander folgend durchgeführt. Sind mehrere Entladevorrichtungen in der Entladestation vorgesehen, so kann der erste Kommissionierschritt an einer ersten Entladevorrichtung und der zweite Kommissionierschritt an einer zweiten Entladevorrichtung zeitlich aufeinander folgend durchgeführt werden.

Es erweist sich auch als günstig, wenn die Zusammenstellung der Warenträger zum genannten Kommissionierauftrag derart durchgeführt wird, dass die an der Entladevorrichtung aus dem (sortenreinen) Warenträgerstapel entnommenen Warenträger oder der (sortenreine) Warenträgerstapel durch die Entladevorrichtung auf ein Zielladehilfsmittel übergeben wird. Ein solche Variante bietet sich vor allem an, wenn das Kommissionierlager besonders kompakt aufgebaut werden muss.

Günstig erweisen sich auch die Verfahrensschritte
- Rücktransport einer Transportladehilfe nach der Entnahme der Warenträger von der Entladestation zurück in den Lagerbereich, sollten nicht alle Warenträger aus der genannten Transportladehilfe entnommen worden sein, und/oder
- Transport einer Transportladehilfe nach der Entnahme der Warenträger von einer ersten Entladevorrichtung zu einer zweiten Entladevorrichtung, sollten nicht alle Warenträger aus der genannten Transportladehilfe entnommen worden sein und sollten diese Warenträger zu einem Kommissionierauftrag an der zweiten Entladevorrichtung benötigt werden, und/oder
- Transport einer Transportladehilfe nach der Entnahme der Warenträger von der Entladevorrichtung zu einer Wartezone in der Entladestation, sollten nicht alle Warenträger aus der genannten Transportladehilfe entnommen worden sein und sollten diese Warenträger zu einem bereits avisierten Kommissionierauftrag an der genannten Entladevorrichtung oder einer der Entladevorrichtungen benötigt werden, und/oder
- Rücktransport einer Transportladehilfe nach der Entnahme des Warenträgerstapels zu der Beladestation und Bereitstellung der Transportladehilfe entweder an der automatisiert betriebenen Beladevorrichtung oder auf der Pufferfläche, sollten alle Warenträger aus der genannten Transportladehilfe entnommen worden sein.

Der Leitrechner steuert die Transportfahrzeuge abhängig von den aktiv zu bearbeitenden Kommissionieraufträgen an. Werden nicht sämtliche Waren zu einem ersten Kommissionierauftrag benötigt und reichen die restlichen Waren zu einem zweiten Kommissionierauftrag aus, so kann ein Transportfahrzeug die diese Waren / Warenträger enthaltende Transportladehilfe von der betreffenden Entladevorrichtung oder Umladevorrichtung beispielweise zu einer anderen Entladevorrichtung oder Umladevorrichtung transportieren, wenn diese zeitnah benötigt werden. Andererseits ist auch eine Zwischenpufferung der Transportladehilfe einerseits auf einer Pufferfläche nahe der Entladevorrichtung oder Umladevorrichtung möglich und andererseits in einer die Entladestation aufweisenden Wartezone, welche in einer kürzeren Distanz zur Entladevorrichtung oder Umladevorrichtung liegt als der Lagerbereich. Leere Transportladehilfen werden stattdessen unmittelbar und auf kürzestem Wege zur Beladestation transportiert. Somit ergeben sich wegoptimierte Bewegungsfahrten der Transportfahrzeuge.

Besonders günstig erweisen sich auch die Verfahrensschritte
- Bereitstellung einer Depalettierstation im Anlieferbereich,
- Vereinzelung von Warenträgerstapeln aus einer Warenträgerstapelgruppe (Eingangseinheit) zusammengefasst aus Warenträgerstapeln jeweils aus mehreren übereinander angeordneten Warenträgern durch eine automatisiert betriebene Depalettiervorrichtung der Depalettierstation.

Üblicherweise werden die Warenträgerstapel als Warenträgerstapelgruppe auf Paletten oder Rollcontainern (Anlieferladungsträger) im Anlieferbereich angeliefert. In diesem Fall wird eine Warenträgerstapelgruppe einer Depalettierstation zugeführt, in welcher Warenträgerstapel aus mehreren übereinander angeordneten Warenträgern aus einer Warenträgerstapelgruppe vereinzelt werden. Solche Warenträgerstapelgruppen sind zumeist aus sortenreinen Warenträgerstapel zusammengestellt. Die sortenreinen Warenträgerstapel werden in weiterer Folge in der Beladestation auf die Transportladehilfen aufgeladen.

Günstig erweist sich auch der Verfahrensschritt
- Zusammenstellung von Warenträgerstapeln auf dem Zielladehilfsmittel (Ausgangseinheit) mit mehreren Warenträgerstapeln durch die automatisiert betriebene Umladevorrichtung (Palettierung) der Umladestation.

Es erweisen sich auch die Verfahrensschritte als besonders vorteilhaft
- Bereitstellung eines Reinigungssystems mit einem automatisiert betriebenen Reinigungsroboter,
- Reinigung der Transportladehilfen und/oder des Bodens in der Beladestation und/oder Entladestation und/oder Lagerfläche im Lagerbereich mit dem Reinigungsroboter.

Auch wenn die automatisierte Reinigung der Transportladehilfen und/oder des Bodens in der Beladestation und/oder Entladestation und/oder Lagerfläche im Lagerbereich mit dem Reinigungsroboter bevorzugt ist, ist zusätzlich auch eine manuelle Reinigung möglich. Beispielweise kann es sich von Vorteil erweisen, wenn die Transportladehilfen von den Transportfahrzeugen zu einen gesonderten Waschbereich transportiert werden. Im Waschbereich könnten alternativ oder zusätzlich zum Reinigungsroboter Waschautomaten bereitgestellt werden, wo die Transportladehilfen gereinigt werden. Das Kommissioniersystem kann zum Zwecke der Reinigung an den besagten Flächenbereichen freigeräumt werden, sodass eine gründliche Reinigung möglich ist. Grundsätzlich ist die Reinigung auch während des Betriebs der Beladestation, Entladestation, Umladestation und/oder Fahrbetrieb der Transportfahrzeuge möglich.

Es erweisen sich auch die nachfolgenden Schritte als günstig
- Bereitstellung einer ersten Temperaturzone im Lagerbereich, in welchem die Transportladehilfen mit dem zumindest einen Warenträgerstapel aus übereinander angeordneten Warenträgern enthaltend Waren einer ersten Warengruppe,
- Bereitstellung einer zweiten Temperaturzone im Lagerbereich, in welchem die Transportladehilfen mit dem zumindest einen Warenträgerstapel aus übereinander angeordneten Warenträgern enthaltend Waren einer zweiten Warengruppe,
- Definition einer ersten Warengruppe und einer zweiten Warengruppe, welcher ersten Warengruppe Waren einer ersten Lagertemperatur zugeordnet sind und welcher zweiten Warengruppe Waren einer zweiten Lagertemperatur zugeordnet sind, und Erfassen von Daten enthaltend Daten über die erste Warengruppe, insbesondere eine erste Lagertemperatur für die Waren, und die zweite Warengruppe, insbesondere eine zweite Lagertemperatur für die Waren, an einem Rechnersystem,
- Identifizierung der Warenträger und/oder Warenträgerstapel und/oder Transportladehilfen mittels einer Erfassungsvorrichtung durch Lesen eines Datenträgers (RFID, Barcode) im Anlieferbereich, welcher Datenträger jeweils auf den Warenträgern und/oder Warenträgerstapeln und/oder Transportladehilfen angebracht ist,
- Selektiver Transport der jeweils mit zumindest einem Warenträgerstapel beladenen (ersten) Transportladehilfen mit den autonom verfahrbaren, fahrerlosen Transportfahrzeugen entweder in die erste Temperaturzone oder zweite Temperaturzone,
- Lagerung der (ersten) Transportladehilfen mit dem zumindest einen Warenträgerstapel aus übereinander angeordneten Warenträgern enthaltend Waren der ersten Warengruppe in der ersten Temperaturzone,
- Lagerung der (ersten) Transportladehilfen mit dem zumindest einen Warenträgerstapel aus übereinander angeordneten Warenträgern enthaltend Waren der zweiten Warengruppe in der zweiten Temperaturzone.

Durch die selektive Lagerung der Waren abhängig von der Warengruppe wird dem hohen Qualitätsanspruch entsprochen. Beispielweise kann im Lebensmittelbereich (Frischebereich) die erste Temperaturzone einen Temperaturbereich von 2°C bis 7°C und die zweite Temperaturzone einen Temperaturbereich von 10°C bis 15°C aufweisen.

Von Vorteil sind auch die Schritte
- Transport einer oder von mehreren die zu einem ersten Kommissionierauftrag benötigten Warenträger enthaltenden (ersten) Transportladehilfe(n) von der ersten Temperaturzone und Transport einer oder von mehreren die zu einem zweiten Kommissionierauftrag benötigten Warenträger enthaltenden (ersten) Transportladehilfe(n) von der zweiten Temperaturzone zur Entladestation mit einer gemeinsam genutzten, automatisiert betriebenen Entladevorrichtung,
- Bereitstellung genannter (erster) Transportladehilfe(n) zum ersten Kommissionierauftrag entweder an der automatisiert betriebenen Entladevorrichtung oder auf einer Pufferfläche nahe der Entladevorrichtung durch das (die) autonom verfahrbare(n), fahrerlose(n) Transportfahrzeug(e),
- Bereitstellung genannter (erster) Transportladehilfe(n) zum zweiten Kommissionierauftrag entweder an der automatisiert betriebenen Entladevorrichtung oder auf einer Pufferfläche nahe der Entladevorrichtung durch das (die) autonom verfahrbare(n), fahrerlose(n) Transportfahrzeug(e),
- Sequentielle Zusammenstellung von Warenträgerstapeln auf einem ersten Zielladehilfsmittel (Ausgangseinheit) mit mehreren Warenträgerstapeln aus übereinander angeordneten Warenträgern enthaltend Waren einer ersten Warengruppe, und Zusammenstellung von Warenträgerstapeln auf einem zweiten Zielladehilfsmittel (Ausgangseinheit) mit mehreren Warenträgerstapeln aus übereinander angeordneten Warenträgern enthaltend Waren einer zweiten Warengruppe an der Entnahmestation mit einer gemeinsam genutzten, automatisiert betriebenen Entnahmevorrichtung oder Umladestation mit einer gemeinsam genutzten, automatisiert betriebenen Umladevorrichtung.

Unabhängig davon aus welcher Temperaturzone die Waren / Warenträger ausgelagert werden, können diese an derselben Entnahmestation oder Umladestation manipuliert werden. Dadurch vereinfacht sich die Komplexität des Kommissioniersystems und reduzieren sich auch die Anschaffungskosten.

Eine besonders rasche Beladung der Transportladehilfen wird erreicht, wenn die Warenträgerstapel, mit welchen die (ersten) Transportladehilfen in der Beladestation beladen werden, jeweils aus übereinander angeordneten Warenträgern mit gleichen Waren zusammengestellt sind. Auf diese Weise können die Waren umgehend nach deren Anlieferung aus dem Anlieferbereich in den Lagerbereich transportiert werden, sodass auch große Warenmengen sehr rasch abgearbeitet werden. Dadurch wird der Wareneingang beschleunigt.

Von Vorteil sind auch die Verfahrensmaßnahmen umfassend die Schritte
- Bereitstellung von Stapelladehilfen jeweils zur Lagestabilisierung eines aus den Warenträgern gemäß dem genannten Kommissionierauftrag zusammengestellten Auftragsstapels, wovon die Stapelladehilfen zumindest eine erste Stapelladehilfe und/oder zumindest eine zweite Stapelladehilfe umfassen, und welche ihrerseits einen Boden und mit diesem verbundene Stapelwände umfassen,
- Bestücken der ersten Stapelladehilfe mit einem Zielladehilfsmittel an einer Bestückungsstation mit einer oder mehreren automatisiert betriebenen Bestückungsvorrichtung(en), indem das Zielladehilfsmittel auf dem Boden abgestellt wird, sofern eine erste Stapelladehilfe im Kommissionierlager verwendet wird, und/oder
- Definition der zweiten Stapelladehilfe als Zielladehilfsmittel, sofern eine zweite Stapelladehilfe im Kommissionierlager verwendet wird.

Die Verwendung der ersten Stapelladehilfe oder zweiten Stapelladehilfe erlaubt den zuverlässigen Transport des Auftragsstapels unabhängig davon welche Warenträger gestapelt wurden. So können die Warenträger, insbesondere Behälter und Kartons gemischt gestapelt werden. Die Praxis hat gezeigt, dass es ausreichend ist, wenn die erste Stapelladehilfe / zweite Stapelladehilfe eine erste Stapelwand und eine zweite Stapelwand aufweisen. Eine Stapellage wird ausgehend von der Ecke von hinten nach vorne und von links nach rechts oder von rechts nach links aufgefüllt. Andererseits kann eine Stapellage ausgehend von der Ecke von links nach rechts oder von rechts nach links und hinten nach vorne aufgefüllt werden. Es kann ein Warenträger durch die Transfervorrichtung (insbesondere eine Klemmgreifeinheit) exakt in der Ecke positioniert und gestapelt werden. Der Auftragsstapel bekommt auf diese Weise eine hohe Stabilität.

Eine erste Stapelladehilfe kann im Kommissionierlager eingesetzt werden, wenn das Zielladehilfsmittel mit dem Auftragsstapel zum Kunden geliefert wird. Eine zweite Stapelladehilfe kann im Kommissionierlager eingesetzt werden, wenn das Zielladehilfsmittel durch einen Auslieferladungsträger, bevorzugt einen Rollcontainer, eine Palette und dgl. ausgewechselt werden soll. Der Auslieferladungsträger wird beispielweise in der Ladungssicherungsstation mit dem Auftragsstapel beladen und wird an den Kunden geliefert.

Es erweisen sich auch folgende Schritte von Vorteil
- Transport von Stapelladehilfen durch die autonom verfahrbaren, fahrerlosen Transportfahrzeuge zur Entladestation und Bereitstellung einer oder von mehreren Stapelladehilfe(n) entweder an einer oder mehreren automatisiert betriebenen Entladevorrichtung(en) oder auf einer Pufferfläche nahe der Entladevorrichtung(en), und
- Zusammenstellung der Warenträger gemäß dem genannten Kommissionierauftrag zum Auftragsstapel auf dem Zielladehilfsmittel in der ersten Stapelladehilfe oder auf dem Boden der zweiten Stapelladehilfe, welche erste Stapelladehilfe oder zweite Stapelladehilfe an der automatisiert betriebenen Entladevorrichtung(en) bereitgestellt wird.

Ebenso wie die Transportladehilfen können auch die Stapelladehilfen durch die autonom verfahrbaren, fahrerlosen Transportfahrzeugen zwischen der Beladestation und Entladestation transportiert werden. Es können entweder jene Transportfahrzeuge verwendet werden, welche auch die Transportladehilfen transportieren, oder es werden zusätzliche autonom verfahrbare, fahrerlose Transportfahrzeuge bereitgestellt, welche den Transport der Stapelladehilfen übernehmen.

Im Kommissionierlager können (nicht automatisch kommissionierbare) Warenträger, so genannte "ugly Warenträger" auch manuell kommissioniert werden. Während ein Großteil der Warenträger, nämlich mehr als 90% des gesamten Warenträgersortiments durch die automatisiert betriebene(n) Entladevorrichtung(en) automatisch kommissioniert werden, wird der verbleibende Anteil der Warenträger an der (den) teilautomatisiert betriebenen Entladevorrichtung(en) manuell kommissioniert. Ein automatisches Kommissionieren von Warenträgern ist insbesondere möglich, wenn diese eine erste Längenabmessung von etwa 600 mm oder zweite Längenabmessung von etwa 300 mm oder eine dritte Längenabmessung zwischen 600 mm und 300 mm aufweisen. Eine Breite kann zwischen von 300 mm und 400 mm aufweisen. Weisen die Warenträger eine Längenabmessung von weniger als 300 mm auf und/oder weisen die Warenträger eine geringe Formstabilität auf, werden diese manuell kommissioniert.

Dabei erweisen sich die folgenden Schritte von Vorteil
- Bereitstellung von einer oder mehreren automatisiert betriebenen zweiten Beladevorrichtung(en),
- Bereitstellung von Warenträgerstapelgruppe aus mehreren nebeneinander angeordneten Warenträgerstapeln mit übereinander angeordneten Warenträgern im Anlieferbereich des Kommissionierlagers,
- Bereitstellung von leeren (dritten) Transportladehilfen jeweils zur Aufnahme und Lagestabilisierung einer Warenträgerstapelgruppe,
- Transport von leeren (dritten) Transportladehilfen durch die autonom verfahrbaren, fahrerlosen Transportfahrzeuge zur Beladestation und Bereitstellung einer oder von mehreren leeren (dritten) Transportladehilfe(n) entweder an einer oder mehreren automatisiert betriebenen zweiten Beladevorrichtung(en) oder auf einer Pufferfläche nahe der zweiten Beladevorrichtung(en),
- Beladen einer der leeren (dritten) Transportladehilfen, welche an der automatisiert betriebenen zweiten Beladevorrichtung bereitgestellt wird, mit zumindest einer Warenträgerstapelgruppe aus dem Anlieferbereich durch die automatisiert betriebene zweite Beladevorrichtung,
- Transport der mit der Warenträgerstapelgruppebeladenen (dritten) Transportladehilfe mit dem autonom verfahrbaren, fahrerlosen Transportfahrzeug von der Beladestation zum Lagerbereich,
- Abstellen der mit zumindest einem Warenträgerstapel beladenen (dritten) Transportladehilfe auf der Lagerfläche im Lagerbereich, und
- Lagerung der mit der Warenträgerstapelgruppe beladenen (dritten) Transportladehilfe im Lagerbereich,

Bearbeitung eines Kommissionierauftrages umfassend die Schritte
- Transport von einer oder mehreren die zum Kommissionierauftrag benötigten Warenträger enthaltenden (dritten) Transportladehilfe(n) vom Lagerbereich zur Entladestation und Bereitstellung genannter (dritter) Transportladehilfe(n) entweder an einer oder mehreren teilautomatisiert betriebenen Entladevorrichtung(en) oder auf einer Pufferfläche nahe der Entladevorrichtung(en) durch ein oder mehrere autonom verfahrbare(s), fahrerlose(s) Transportfahrzeug(e),
- manuelles Entladen einer oder mehrerer der (dritten) Transportladehilfe(n), welche an der oder den teilautomatisiert betriebenen Entladevorrichtung(en) bereitgestellt wird (werden), durch Entnahme der für die Bearbeitung des genannten Kommissionierauftrages benötigten Warenträger, und
- manuelle Zusammenstellung der Warenträger auf einem oder mehreren Zielladehilfsmitteln zum genannten Kommissionierauftrag, wenn das oder die Zielladehilfsmitteln an der oder den teilautomatisiert betriebenen Entladevorrichtung(en) bereitgestellt wird (werden).

Die Bereitstellung genannter (dritter) Transportladehilfe(n) an einer oder mehreren teilautomatisiert betriebenen Entladevorrichtung(en) kann die Schritte umfassen
- Übernahme einer (dritten) Transportladehilfe von einem autonom verfahrbaren, fahrerlosen Transportfahrzeug auf eine Hubplattform der Entladevorrichtung(en), und
- Andienen der Warenträger auf einem Andienungsniveau durch Anheben der (dritten) Transportladehilfe, welche auf der Hubplattform abgestellt ist, um ein ergonomisches Entladen der Warenträger durch eine Kommissionierperson zu ermöglichen.

Dadurch ist auch bei einer manuellen Kommissionierung (Entladen der Warenträger von der Transportladehilfe und Beladen des Zielladehilfsmittels mit Warenträger) ein ergonomisches Arbeiten möglich.

Gemäß einer Ausführung der Erfindung umfasst das Verfahren die Schritte
- Transport von leeren Zielladehilfsmittel durch die autonom verfahrbaren, fahrerlosen Transportfahrzeuge zur Entladestation und Bereitstellung genannter leerer Zielladehilfsmittel entweder an einer oder mehreren teilautomatisiert betriebenen Entladevorrichtung(en) oder auf einer Pufferfläche nahe der Entladevorrichtung(en) durch ein oder mehrere autonom verfahrbare(s), fahrerlose(s) Transportfahrzeug(e), und
- manuelle Zusammenstellung der Warenträger auf einem oder mehreren leeren Zielladehilfsmitteln zum genannten Kommissionierauftrag, wenn das oder die leere(n) Zielladehilfsmitteln an der oder die teilautomatisiert betriebenen Entladevorrichtung(en) bereitgestellt wird (werden).

In diesem Fall werden verschiedene Warenträger (Waren) zu einem Kommissionierauftrag auf einem Zielladehilfsmittel zusammengestellt.

Gemäß einer Ausführung der Erfindung umfasst das Verfahren die Schritte
- Transport von teilbeladenen Zielladehilfsmittel durch die autonom verfahrbaren, fahrerlosen Transportfahrzeuge von der automatisiert betriebenen Entladevorrichtung zu der teilautomatisiert betriebenen Entladevorrichtung oder zu einer Pufferfläche nahe der teilautomatisiert betriebenen Entladevorrichtung(en), nachdem an der automatisiert betriebenen Entladevorrichtung die Warenträger auf dem teilbeladenen Zielladehilfsmittel zusammengestellt wurden und sofern zum genannten Kommissionierauftrag noch Warenträger benötigt werden, welche über die (dritten) Transportladehilfen an der teilautomatisiert betriebenen Entladevorrichtung(en) bereitgestellt werden, und
- manuelle Zusammenstellung der Warenträger auf einem oder mehreren teilbeladenen Zielladehilfsmitteln zum genannten Kommissionierauftrag, wenn das oder die teilbeladene(n) Zielladehilfsmitteln an der oder die teilautomatisiert betriebenen Entladevorrichtung(en) bereitgestellt wird (werden).

Der Kommissionierauftrag umfasst Warenträger (Waren), welche an einer automatisiert betriebenen Entladevorrichtung automatisch kommissioniert werden können, und Warenträger, welche an einer teilautomatisiert betriebenen Entladevorrichtung manuell kommissioniert werden müssen. Zuerst werden auf dem Zielladehilfsmittel die Warenträger (Waren) an der automatisiert betriebenen Entladevorrichtung kommissioniert. Danach wird das Zielladehilfsmittel mit dem Auftragsstapel durch ein autonom verfahrbares, fahrerloses Transportfahrzeug zu der teilautomatisiert betriebenen Entladevorrichtung transportiert. Sodann wird dort der Auftragsstapel manuell fertig kommissioniert.

Von Vorteil sind auch die verfahrensgemäßen Schritte
- Transport von Stapelladehilfen durch die autonom verfahrbaren, fahrerlosen Transportfahrzeuge zur Entladestation und Bereitstellung einer oder von mehreren Stapelladehilfe(n) entweder an einer oder mehreren teilautomatisiert betriebenen Entladevorrichtung(en) oder auf einer Pufferfläche nahe der Entladevorrichtung(en), und
- Zusammenstellung der Warenträger gemäß dem genannten Kommissionierauftrag zum Auftragsstapel auf dem Zielladehilfsmittel in der ersten Stapelladehilfe oder auf dem Boden der zweiten Stapelladehilfe, welche erste Stapelladehilfe oder zweite Stapelladehilfe an der teilautomatisiert betriebenen Entladevorrichtung(en) bereitgestellt wird.

Wie bereits oben beschrieben ist durch die erste Stapelladehilfe / zweite Stapelladehilfe ein zuverlässiger Transport des Auftragsstapels möglich, unabhängig davon welche Warenträger gestapelt wurden. Auch beim manuellen Kommissionieren wird eine Stapellage ausgehend von der Ecke von hinten nach vorne und von links nach rechts oder von rechts nach links aufgefüllt. Andererseits kann eine Stapellage ausgehend von der Ecke von links nach rechts oder von rechts nach links und hinten nach vorne aufgefüllt werden. Es kann ein Warenträger durch die Kommissionierperson exakt in der Ecke positioniert und gestapelt werden. Der Auftragsstapel bekommt auf diese Weise eine hohe Stabilität.

Es erweist sich auch von Vorteil, wenn das Verfahren die Schritte umfasst
- Bereitstellung einer Auftragsstapel-Ladungssicherungsstation entweder mit einer oder mehreren automatisiert betriebenen Ladungssicherungsvorrichtung(en) oder mit einer oder mehreren automatisiert betriebenen Ladungssicherungsvorrichtung(en) und einer Pufferfläche nahe der Ladungssicherungsvorrichtung(en), welche Ladungssicherungsvorrichtung zur Transportsicherung eines Auftragsstapels mit einem Sicherungsmittel ausgebildet ist,
- Transport von jeweils mit einem Auftragsstapel beladenen Stapelladehilfen durch die autonom verfahrbaren, fahrerlosen Transportfahrzeuge zu genannter Auftragsstapel-Ladungssicherungsstation und Bereitstellung einer oder von mehreren Stapelladehilfe(n) entweder an einer oder mehreren automatisiert betriebenen Ladungssicherungsvorrichtung(en) oder auf einer Pufferfläche nahe der Ladungssicherungsvorrichtung(en),
- Entfernen des Auftragsstapels von der Stapelladehilfe durch eine Hebevorrichtung, mit welcher das Zielladehilfsmittel mit dem Auftragsstapel von der ersten Stapelladehilfe abgehoben wird, wenn das Kommissionierlager die erste Stapelladehilfe umfasst, oder mit welcher der Auftragsstapel von der zweiten Stapelladehilfe abgehoben wird, wenn das Kommissionierlager die zweite Stapelladehilfe umfasst,
- Sicherung des Auftragsstapels mit dem Sicherungsmittel durch die automatisiert betriebene Ladungssicherungsvorrichtung, indem das Sicherungsmittel um den Auftragsstapel umfänglich angebracht wird, und
- Transport des gesicherten Auftragsstapels, insbesondere durch die autonom verfahrbaren, fahrerlosen Transportfahrzeuge, von der Ladungssicherungsstation zu einem Auslieferbereich,

Transport der entladenen Stapelladehilfen durch die autonom verfahrbaren, fahrerlosen Transportfahrzeuge, umfassend einen:
- Transport der ersten Stapelladehilfe von der Ladungssicherungsstation zur Bestückungsstation mit einer oder mehreren automatisiert betriebenen Bestückungsvorrichtung(en), sofern im Kommissionierlager eine erste Stapelladehilfe verwendet wird, und/oder
- Transport der zweiten Stapelladehilfe von der Ladungssicherungsstation zur Entladestation und Bereitstellung der zweiten Stapelladehilfe(n) entweder an einer automatisiert betriebenen Entladevorrichtung oder auf einer Pufferfläche nahe der Umladevorrichtung, sofern im Kommissionierlager eine zweite Stapelladehilfe verwendet wird.

Es wird eine "zentrale" Ladungssicherungsstation bereitgestellt, zu welcher die Auftragsstapel mit einer ersten Stapelladehilfe / zweiten Stapelladehilfe oder die Auftragsstapel ohne erste Stapelladehilfe / zweite Stapelladehilfe durch die autonom verfahrbaren, fahrerlosen Transportfahrzeuge transportiert werden. Dort wird der Auftragsstapel mit einem Sicherungsmittel, beispielweise einer Wickelfolie oder einem Verschlussband gesichert. Die "gesicherten" Auftragsstapel können bevorzugt durch die autonom verfahrbaren, fahrerlosen Transportfahrzeuge abtransportiert werden. Von Vorteil ist auch, wenn die (erste) Transportladehilfe (aus der Warenträger entnommen werden) und/oder die (zweite) Transportladehilfe (auf die Warenträger abgegeben werden) einen Boden und mit diesem verbundene Seitenwände, wenigstens einen durch die Seitenwände begrenzten (vertikal durchgängigen) Aufnahmeschacht zur Aufnahme wenigstens eines Warenträgerstapels und eine Belade- und Entladeöffnung aufweist, und dass die Seitenwände zur Lagestabilisierung des zumindest einen Warenträgerstapels, wenn dieser auf dem Boden abgestellt ist,
- ausschließlich parallel oder geneigt zueinander angeordnete erste Seitenwände umfassen, oder
- parallel oder geneigt zueinander angeordnete erste Seitenwände und eine zwischen diesen angeordnete zweite Seitenwand, umfassen.

Dabei kann der Boden eine Abstellfläche auf seiner oberen Seite umfassen, auf welchem zumindest ein Warenträgerstapel abgestellt werden kann, und eine Transportfläche auf seiner unteren Seite umfassen, gegen welche eine Ladeplattform des Transportfahrzeuges angestellt werden kann. Die (erste) Transportladehilfe kann einen oder mehrere Aufnahmeschächte ausbilden, wobei ein Aufnahmeschacht zumindest zweiseitig, bevorzugt dreiseitig durch Seitenwände begrenzt wird. Der Aufnahmeschacht ist über die Belade- und Entladeöffnung zumindest einseitig zugänglich. Das Beladen und Entladen der (ersten) Transportladehilfe erfolgt über die Belade- und Entladeöffnung und in der einfachsten Ausführung durch ein "Aufschieben" oder "Abschieben" eines Warenträgerstapels. Die Abstellfläche am Boden dient dabei als Gleitfläche / Schiebefläche.

Es kann sich auch von Vorteil erweisen, wenn die zweite Seitenwand einen Seitenwandteil umfasst, welcher um einen Neigungswinkel gegenüber einer zwischen den ersten Seitenwänden aufgespannten Vertikalebene derart geneigt ist, dass mit zunehmenden Vertikalabstand vom Boden der Seitenwandteil nach hinten geneigt verläuft.

Zudem kann es vorgesehen werden, dass der Boden einen Bodenwandteil umfasst, welcher um einen Neigungswinkel gegenüber einer zwischen den ersten Seitenwänden aufgespannten Horizontalebene in Richtung zur zweiten Seitenwand nach unten geneigt verläuft.

Die Warenträger sind gegen den / die Seitenwandteil(e) angelehnt und sind mit zunehmendem Höhenabstand zum Boden mit dem Schwerpunkt in Zentrumsrichtung der Transportladehilfe verlagert. Es können mit den Transportladehilfen besonders hohe Warenträgerstapel zuverlässig transportiert werden, selbst wenn die autonom verfahrbaren, fahrerlosen Transportfahrzeuge dynamisch angetrieben werden. Auch wird der Transfervorrichtung eine bessere Entnahme der Warenträger von der Transportladehilfe ermöglicht.

Es erweist sich von Vorteil, wenn das Kommissionierlager eine oder mehrere Stapelladehilfen jeweils zur Lagestabilisierung eines aus den Warenträgern gemäß dem genannten Kommissionierauftrag zusammengestellten Auftragsstapels verwendet, welche zumindest eine erste Stapelladehilfe und/oder zumindest eine zweite Stapelladehilfe umfassen, welche ihrerseits einen Boden und mit diesem verbundene Stapelwände umfassen.

Bevorzugt bildet die zumindest eine erste Stapelladehilfe am Boden auf seiner oberen Seite eine Abstellfläche aus, auf welcher ein Zielladehilfsmittel, insbesondere eine Palette, mit dem auf diesem gestapelten Auftragsstapel abgestellt werden kann.

Bevorzugt bildet die zumindest eine zweite Stapelladehilfe am Boden auf seiner oberen Seite vorragende und durch Aufnahmekanäle voneinander getrennte Abstellklötze aus, auf welcher die Warenträger des Auftragsstapels abgestellt werden können, sodass die zumindest eine zweite Stapelladehilfe das Zielladehilfsmittel bildet.

Gemäß einer Ausführung ist es vorgesehen, dass der Boden der ersten Stapelladehilfe / zweiten Stapelladehilfe eine Transportfläche auf seiner unteren Seite aufweist, gegen welche eine Ladeplattform des Transportfahrzeuges angestellt werden kann.

Von Vorteil ist auch, wenn das Kommissionierlager eine Auftragsstapel-Ladungssicherungsstation entweder mit einer oder mehreren automatisiert betriebenen Ladungssicherungsvorrichtung(en) oder mit einer oder mehreren automatisiert betriebenen Ladungssicherungsvorrichtung(en) und einer Pufferfläche nahe der Ladungssicherungsvorrichtung(en) aufweist,
- welche Ladungssicherungsvorrichtung zur Transportsicherung eines Auftragsstapels mit einem Sicherungsmittel ausgebildet ist, und
- welche eine Hebevorrichtung aufweist, mit welcher das Zielladehilfsmittel mit dem Auftragsstapel von der Stapelladehilfe abgehoben wird, wenn das Kommissionierlager die erste Stapelladehilfe umfasst, oder mit welcher der Auftragsstapel von der Stapelladehilfe abgehoben wird, wenn das Kommissionierlager die zweite Stapelladehilfe umfasst wird, um den Auftragsstapel mit dem Sicherungsmittel zu stabilisieren.

Es kann sich auch von Vorteil erweisen, wenn eine automatisiert betriebene Entladevorrichtung eine gegenüber einer Tragkonstruktion im Raum bewegbare Transfervorrichtung zum Entladen einer (ersten) Transportladehilfe und zum Beladen eines Zielladehilfsmittels mit Warenträgern gleicher und/oder unterschiedlicher Längenabmessungen durch Klemmgreifen aufweist. Die Transfervorrichtung umfasst insbesondere
- einen Grundrahmen,
- durch erste Antriebsvorrichtungen relativ gegenüber dem Grundrahmen und in einer ersten Richtung (y) unabhängig voneinander zwischen einer zurückgezogenen Ausgangsstellung und einer ausgefahrenen Aufnahmestellung bewegbare Beladezungen, welche in einer ausgefahrenen Aufnahmestellung zumindest einen Warenträger aufnehmen,
- durch zumindest eine zweite Antriebsvorrichtung in einer zweiten Richtung (x) relativ zueinander zwischen einer zurückgezogenen Öffnungsstellung und einer angestellten Klemmstellung bewegbare Klemmbacken zum Klemmgreifen zumindest eines Warenträgers,
- eine durch zumindest eine dritte Antriebsvorrichtung in einer dritten Richtung (z) relativ gegenüber dem Grundrahmen bewegbaren Hubrahmen (256), auf welchem die Klemmbacken gelagert und durch welchen die Klemmbacken zwischen einer unteren Höhenstellung und einer oberen Höhenstellung bewegbar sind, sodass zum Entladen der (ersten) Transportladehilfe
   - der zumindest eine Warenträger durch die gegen den zumindest einen Warenträger angestellten Klemmbacken anhebbar und
   - zumindest eine der Beladezungen zumindest teilweise unter den durch die Klemmbacken angehobenen zumindest einen Warenträger schiebbar ist, um den zumindest einen Warenträger in der ausgefahrenen Aufnahmestellung aufzunehmen.

Die Transfervorrichtung umfasst eine Klemmgreifeinheit mit einer ersten Klemmbacke und einer zweiten Klemmbacke, welche in der angestellten Klemmstellung gegen die einander abgewandten Warenträgerwände eines Warenträgers oder nebeneinander angeordneter Warenträger kraftschlüssig angelegt werden. Nahezu unabhängig davon wie die Warenträgerwände gestaltet sind, ist eine ausreichend hohe Klemmung möglich, um den zumindest einen Warenträger anzuheben, sodass zumindest eine der Beladezungen zumindest teilweise unter den durch die Klemmbacken angehobenen zumindest einen Warenträger schiebbar ist. Befindet sich der zumindest eine Warenträger auf der zumindest einen Beladzunge, welche in die Aufnahmestellung ausgefahren ist, lastet das Gewicht des zumindest eine Warenträgers auf der Beladezunge auf.

Gemäß einer Ausführung ist eine Anschlagvorrichtung mit einem oder mehreren Anschlagelementen vorgesehen, gegen welche(s) der zumindest eine Warenträger anlegbar ist.

Der zumindest eine Warenträger kann auf der Beladezunge und gegen die Anschlagelemente positioniert werden. Zusätzlich kann der zumindest eine Warenträger zwischen den Klemmbacken zentriert werden. Dadurch kann der zumindest eine Warenträger in einer exakten Positionslage auf ein Zielladehilfsmittel abgegeben werden.

Es erweist sich auch von Vorteil, wenn die erste Klemmbacke auf einem ersten Klemmbackenrahmen und die zweite Klemmbacke auf einem zweiten Klemmbackenrahmen angeordnet sind und einer der ersten und zweiten Klemmbackenrahmen durch zumindest eine vierte Antriebsvorrichtung in einer zweiten Richtung (x) zumindest zwischen einer ersten Konfigurationsbreite und einer zweiten Konfigurationsbreite verstellt werden kann, um in der ersten Konfigurationsbreite zwischen der ersten Klemmbacke und zweiten Klemmbacke einen Warenträger mit der ersten Längenabmessung und in der zweiten Konfigurationsbreite zwischen der ersten Klemmbacke und zweiten Klemmbacke einen Warenträger mit der zweiten Längenabmessung aufzunehmen.

Somit können mit der Transfervorrichtung erste Warenträger mit einer ersten Längenabmessung und/oder zweite Warenträger mit einer zweiten Längenabmessung von einer Transportladehilfe mit übereinander gestapelten Warenträgern entladen und auf ein Zielladehilfsmittel abgeladen werden. Die erste Längenabmessung und zweite Längenabmessung sind verschieden.

Ein besonders vorteilhafter Aufbau der Transfervorrichtung wird erreicht, wenn an dem durch die zumindest eine vierte Antriebsvorrichtung in einer zweiten Richtung (x) verstellbaren ersten oder zweiten Klemmbackenrahmen auch die zweite Antriebsvorrichtung und eines von mehreren Anschlagelementen der Anschlagvorrichtung gelagert sind.

Es kann sich auch von Vorteil erweisen, wenn zumindest eine der Klemmbacken zum Beladen des Zielladehilfsmittels zusätzlich durch eine fünfte Antriebsvorrichtung in der ersten Richtung (y) relativ gegenüber dem Rahmen in eine zurückgezogene Freigabestellung bewegbar ist.

In der zurückgezogenen Freigabestellung ragen das oder die Anschlagelement(e) gegenüber der genannten zumindest einen Klemmbacke vor, sodass der zumindest eine Warenträger zum Beladen des Zielladehilfsmittels ungehindert von der zumindest einen Beladezunge auf das Zielladehilfsmittel gestapelt werden kann. Somit hindert die genannte Klemmbacke auch nicht das Ablegen eines Warenträgers knapp neben einer Stapelwand einer Stapelladehilfe, wenn im Kommissionierlager Stapelladehilfen verwendet werden, und/oder einer Warenträgerwand eines bereits am Auftragsstapel abgestellten Warenträgers. Darüber hinaus kann die Klemmung des Warenträgers bis knapp vor der Abgabe des Warenträgers auf den Auftragsstapel aufrecht erhalten bleiben.

Zum besseren Verständnis der Erfindung wird diese anhand der nachfolgenden Figuren näher erläutert.

Es zeigen jeweils in stark vereinfachter, schematischer Darstellung:
- Fig.1: eine erste Ausführung eines Kommissionierlagers zum Lagern und Kommissionieren von Waren, in perspektivischer Ansicht;
- Fig. 2a: eine Entladestation (Umladestation) des Kommissionierlagers aus Fig. 1, in vergrößerter Darstellung;
- Fig. 2b: eine Beladestation des Kommissionierlagers aus Fig. 1, in vergrößerter Darstellung;
- Fig. 3: ein Transportfahrzeug (automated guided vehicle), in perspektivischer Ansicht;
- Fig. 4a, 4b: eine erste Ausführung einer (unbeladenen) Transportladehilfe ohne Warenträger, und einer (beladenen) Transportladehilfe mit Warenträgern, in perspektivischer Ansicht;
- Fig. 5a, 5b: eine zweite Ausführung einer (unbeladenen) Transportladehilfe ohne Warenträger, und einer (beladenen) Transportladehilfe mit Warenträgern, in perspektivischer Ansicht;
- Fig. 6a, 6b: eine dritte Ausführung einer (unbeladenen) Transportladehilfe ohne Warenträger, und einer (beladenen) Transportladehilfe mit Warenträgern, in perspektivischer Ansicht;
- Fig.7: eine zweite Ausführung eines Kommissionierlagers zum Lagern und Kommissionieren von Waren, in perspektivischer Ansicht;
- Fig. 7a: eine Entladestation des Kommissionierlagers aus Fig. 7, in vergrößerter Darstellung;
- Fig.8: eine dritte Ausführung eines Kommissionierlagers zum Lagern und Kommissionieren von Waren, in perspektivischer Ansicht;
- Fig. 8a: eine Entladestation des Kommissionierlagers aus Fig. 8, in vergrößerter Darstellung;
- Fig. 9a, 9b: eine vierte Ausführung eines Kommissionierlagers zum Lagern und Kommissionieren von Waren, in perspektivischer Ansicht;
- Fig. 10a: eine Beladestation des Kommissionierlagers aus Fig. 9a, 9b mit einer automatisiert betriebenen ersten Beladevorrichtung, in vergrößerter Darstellung;
- Fig. 10b: eine Entladestation (Umladestation) des Kommissionierlagers aus Fig. 9a, 9b mit einer automatisiert betriebenen Entladevorrichtung, in vergrößerter Darstellung;
- Fig. 10c: eine Entladestation (Umladestation) des Kommissionierlagers aus Fig. 9a, 9b mit einer teilautomatisiert betriebenen Entladevorrichtung, in vergrößerter Darstellung;
- Fig. 10d: eine Beladestation des Kommissionierlagers aus Fig. 9a, 9b mit einer automatisiert betriebenen zweiten Beladevorrichtung, einer Bestückungsstation und einer Ladungssicherungsstation, in vergrößerter Darstellung;
- Fig. 11a, 11b: eine vierte Ausführung einer (unbeladenen) Transportladehilfe ohne Warenträger, und einer (beladenen) Transportladehilfe mit Warenträgern, in perspektivischer Ansicht;
- Fig. 11c: die (unbeladene) Transportladehilfe nach Fig. 11a in einer Schnittdarstellung;
- Fig. 12a, 12b: eine (unbeladene) erste Stapelladehilfe und eine (mit einem Auftragsstapel beladene) erste Stapelladehilfe, in perspektivischer Ansicht;
- Fig. 12c: eine (unbeladene) zweite Stapelladehilfe, in perspektivischer Ansicht;
- Fig. 13a, 13b: eine Transfervorrichtung für eine automatisiert betriebene Entladevorrichtung, in perspektivischen Ansichten;
- Fig. 13c, 13d: die Transfervorrichtung nach Fig. 13a, 13b geschnitten, in perspektivischen Ansichten;
- Fig. 14a, 14b: die Transfervorrichtung nach Fig. 13a, 13b, gemäß Fig. 14a mit einem Warenträger einer (langen) ersten Längenabmessung und gemäß Fig. 14b mit einem Warenträger einer (kurzen) zweiten Längenabmessung, in perspektivischen Ansichten;
- Fig. 15a bis 15g: eine Sequenz zu einem Entladevorgang eines Warenträgers von einer Transportladehilfe, am Beispiel eines Warenträgers mit einer (langen) ersten Längenabmessung;
- Fig. 15h bis 15n: eine Sequenz zu einem Beladevorgang eines Warenträgers auf ein Zieladehilfsmittel, am Beispiel eines Warenträgers mit einer (langen) ersten Längenabmessung;
- Fig. 16a bis 16n: eine Sequenz zu einem Entladevorgang eines Warenträgers aus einer Stapellage von einer Transportladehilfe, am Beispiel von Warenträgern mit jeweils einer zweiten Längenabmessung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

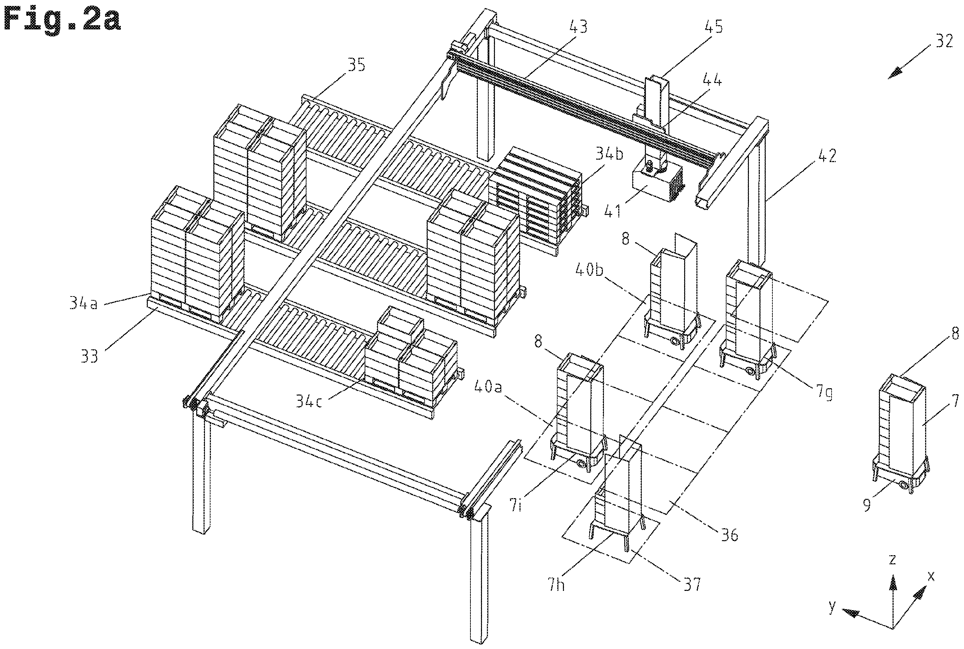

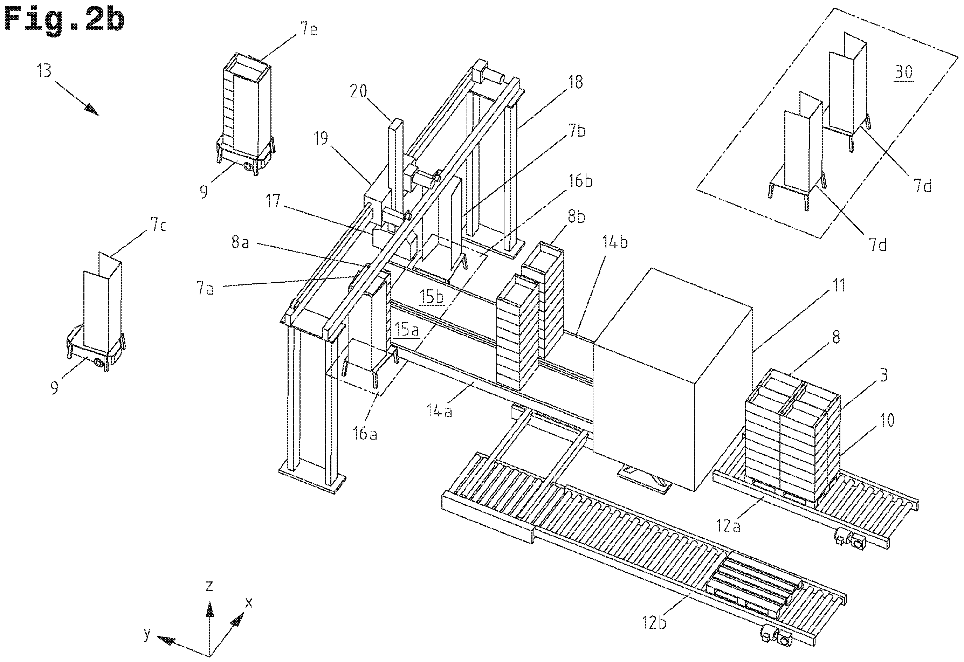

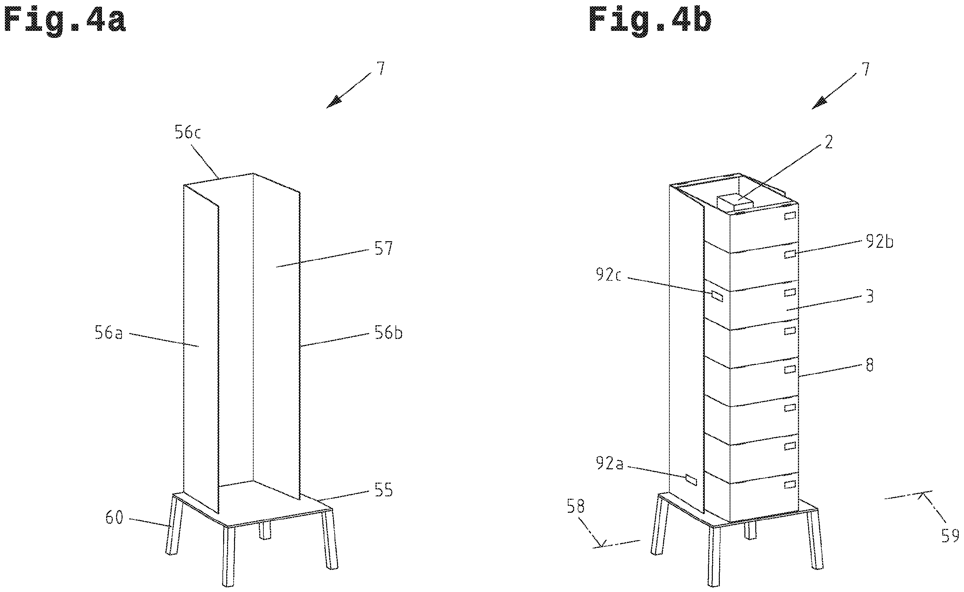

In den Fig. 1, 2a und 2b ist eine erste Ausführung eines Kommissionierlagers 1a zum Lagern und Kommissionieren von Waren 2 (wie aus Gründen der besseren Übersicht ausschließlich in Fig. 4b eingetragen) enthaltenden und stapelbaren Warenträgern 3 gezeigt. Das Kommissionierlager 1a umfasst einen Anlieferbereich 4, einen Lagerbereich 5, einen Auftragsbearbeitungsbereich 6, eine Vielzahl an Transportladehilfen 7 jeweils zur Aufnahme und Lagestabilisierung wenigstens eines Warenträgerstapels 8 und eine Vielzahl an autonom verfahrbaren, fahrerlosen Transportfahrzeugen 9 zum Transport von Transportladehilfen 7. Der Warenträgerstapel 8 ist aus mehreren übereinander angeordneten (gestapelten) Warenträgern 3 gebildet.

Im Anlieferbereich 4 ist die Bereitstellung von Warenträgerstapeln 8 vorgesehen. Die Warenträgerstapel 8 können als vereinzelte Warenträgerstapel 8 und/oder als Warenträgerstapelgruppe 10 zusammengefasst aus nebeneinander angeordneten Warenträgerstapeln 8 bereitgestellt werden. Grundsätzlich wäre auch die Bereitstellung von einzelnen Warenträgern 3 möglich.

Üblicherweise werden die Warenträgerstapeln 8 als Warenträgerstapelgruppe 10 auf Paletten oder Rollcontainern (Anlieferladungsträger) in den Anlieferbereich 4 angeliefert. In diesem Fall wird eine Warenträgerstapelgruppe 10 einer Depalettierstation zugeführt, in welcher Warenträgerstapel 8 aus mehreren übereinander angeordneten Warenträgern 3 aus einer Warenträgerstapelgruppe 10 vereinzelt werden. Solche Warenträgerstapelgruppe 10 sind zumeist aus sortenreinen Warenträgerstapel 8 zusammengestellt.

Hingegen werden die vereinzelten Warenträgerstapel 8 ohne Paletten oder Rollcontainern (Anlieferladungsträger) in den Anlieferbereich 4 angeliefert. In diesem Fall brauchen die Warenträgerstapel 8 einer Depalettierstation nicht zugeführt werden und kann auf eine Depalettierstation verzichtet werden.

Fig. 1 und Fig. 2b zeigen eine mögliche Ausführung, bei der im Anlieferbereich 4 eine Depalettierstation mit zumindest einer automatisiert betriebenen (schematisch angedeuteten) Depalettiervorrichtung 11, eine an die Depalettiervorrichtung 11 anschließende erste Fördervorrichtung 12a zum Antransport von Warenträgerstapelgruppen 10 (Wareneingangseinheiten), eine an die Depalettiervorrichtung 11 anschließende zweite Fördervorrichtung 12b zum Abtransport von Anlieferladungsträgern, eine Beladestation mit zumindest einer automatisiert betriebenen (schematisch angedeuteten) Beladevorrichtung 13, eine die Depalettiervorrichtung 11 mit der Beladevorrichtung 13 fördertechnisch verbindende dritte Fördervorrichtung 14a zum Antransport von Warenträgerstapeln 8 und/oder eine die Depalettiervorrichtung 11 mit der Beladevorrichtung 13 fördertechnisch verbindende vierte Fördervorrichtung 14b zum Antransport von Warenträgerstapeln 8 vorgesehen sind. Die vierte Fördervorrichtung 14b zum Antransport von Warenträgerstapeln 8 ist optional und kann auch entfallen.

Wie nicht näher dargestellt, kann beispielsweise die Depalettiervorrichtung 11 die Warenträgerstapel 8 entlang des Umfangs auf zumindest zwei Seiten drehen, klemmen und anheben bzw. den Anlieferladungsträger (Palette) senken und durch die zweite Fördervorrichtung 12b abführen und die Warenträgerstapel 8 an die dritte Fördervorrichtung 14a und die vierte Fördervorrichtung 14b abgeben, mit welchen jeweils die Warenträgerstapel 8 einzeln bzw. paarweise weitertransportiert werden können. Die Warenträgerstapel 8 werden "unverändert" an der Beladevorrichtung 13 und jeweils in einer Übergabeposition bereitgestellt. Der erste Übergabeplatz 15a ist vorzugsweise auf der dritten Fördervorrichtung 14a und der zweite Übergabeplatz 15b ist vorzugsweise auf der vierten Fördervorrichtung 14b ausgebildet. Ist die vierte Fördervorrichtung 14b nicht vorgesehen, so ist lediglich die Übergabeplatz 15a vorgesehen.

Wie im Nachfolgenden beschrieben, umfasst die Beladestation die zumindest eine automatisiert betriebene (schematisch angedeutete) Beladevorrichtung 13 und zusätzlich eine Pufferfläche 30 nahe dieser Beladevorrichtung 13.

Die schematisch gezeigte Beladevorrichtung 13 umfasst einen ersten Andienungsplatz 16a für die erste Transportladehilfe 7a, einen (optionalen) zweiten Andienungsplatz 16b für die zweite Transportladehilfe 7b und eine Transfervorrichtung 17 zur Übergabe eines ersten Warenträgerstapels 8 vom ersten Übergabeplatz 15a auf die erste Transportladehilfe 7a und gegebenenfalls zur Übergabe eines zweiten Warenträgerstapels 8 vom zweiten Übergabeplatz 15b auf die zweite Transportladehilfe 7b. Der erste Andienungsplatz 16a und der ersten Übergabeplatz 15a sind einander gegenüberliegend angeordnet. Der optionale (zweite) Andienungsplatz 16b und der optionale (zweite) Übergabeplatz 15b sind einander gegenüberliegend angeordnet.

Konkret umfasst die automatisiert betriebene Beladevorrichtung 13 eine relativ gegenüber dem Übergabeplatz 15a, 15b bewegbare Transfervorrichtung 17, um einen in einer Übergabeposition auf dem Übergabeplatz 15a, 15b bereitgestellten Warenträgerstapel 8 (oder gegebenenfalls einzelnen Warenträger 3) auf die Transportladehilfe 7a, 7b zu bewegen. Die Transfervorrichtung 17 kann beispielweise durch einen mittels eines Stellantriebes betätigbaren Schieber (Pusher) gebildet sein. Die Transfervorrichtung 17 ist oberhalb der Fördervorrichtung 14a, 14b angeordnet.

Die Beladevorrichtung 13 kann nach einer ersten Ausführung einen Portalroboter umfassen. Unter Portalroboter versteht man Industrieroboter, die in ihren Grundachsen aus Linearachsen aufgebaut sind. Bei der Beladung genügt die Verwendung eines Linienportales.

Der Portalroboter umfasst Vertikalsteher, Längsträger und Querträger, die zu einer Tragkonstruktion 18 miteinander verbunden sind. Zusätzlich umfasst der Portalroboter einen über eine erste Antriebsvorrichtung entlang einer Führungsanordnung in einer ersten Richtung (x-Richtung - Horizontalbewegung) bewegbaren Portalschlitten 19 und einen am Portalschlitten 19 angeordneten Portalarm 20. Am Portalarm 20 ist die Transfervorrichtung 17 angeordnet. Die erste Antriebsvorrichtung umfasst einen mit dem Portalschlitten 19 verbundenen Zugmitteltrieb. Der Zugmitteltrieb umfasst ein endlos umlaufendes Zugmittel, welches um ein Umlenkrad und ein mit einem elektrischen Stellmotor gekuppeltes Antriebsrad geführt ist. Durch Drehbewegung des Antriebsrades im Uhrzeigersinn oder im Gegenuhrzeigersinn wird der Portalschlitten 19 und die auf diesem gelagerte Transfervorrichtung 17 relativ zum Übergabeplatz 15a, 15b entweder in einer ersten Abschieberichtung oder zweiten Abschieberichtung (x-Richtung) bewegt werden. Der Portalroboter kann eine nicht dargestellte Wegmessvorrichtung umfassen, mittels welchem die Verstellbewegungen des Portalschlittens 19 (bzw. der Transfervorrichtung 17) erfasst werden. Dabei macht man sich das Messverfahren der absoluten und inkrementalen Wegmessung zu Nutze.

Es kann sich zweckdienlich erweisen, wenn auch der Portalarm 20 über eine zweite Antriebsvorrichtung entlang einer Führungsanordnung in einer zweiten Richtung (z-Richtung - Vertikalbewegung) bewegbar ist.

Auf der Abschiebebewegung wird der erste Warenträgerstapel 8a vom ersten Übergabeplatz 15a auf die leere erste Transportladehilfe 7a, welche am ersten Andienungsplatz 16a bereitgestellt wird, oder der zweite Warenträgerstapel 8b vom zweiten Übergabeplatz 15b auf die leere zweite Transportladehilfe 7b, welche am zweiten Andienungsplatz 16b bereitgestellt wird, bewegt. In Fig. 2b ist der erste Warenträgerstapel 8a bereits auf die erste Transportladehilfe 7a abgegeben worden, während der zweite Warenträgerstapel 8b noch zur Beladevorrichtung 13 transportiert wird und die zweite Transportladehilfe 7b noch leer ist.

Die beschriebene Beladevorrichtung 13 kann besonders einfach aufgebaut werden und benötigt prinzipiell nur eine stationäre Aufnahmefläche (Übergabeplatz 15a, 15b) und eine Abschiebevorrichtung (Schieber), mit welcher der "unveränderte" Warenträgerstapel 8 von der Aufnahmefläche auf die leere (erste) Transportladehilfe abgeschoben wird.

Nach einer nicht gezeigten Ausführung kann die Beladevorrichtung 13 einen Gelenkarmroboter umfassen. Der Gelenkarmroboter weist ein relativ gegenüber einer Roboterbasis bewegbares Greifersystem auf, mittels welcher ein "unveränderter" Warenträgerstapel 8 (oder gegebenenfalls einzelne Warenträger 3) von der Übergabeposition auf dem ersten / zweiten Übergabeplatz 15a, 15b an die erste Transportladehilfe 7a / zweite Transportladehilfe 7b übergeben werden kann. Dabei kann der "unveränderte" Warenträgerstapel 8 von der Aufnahmefläche (Übergabeplatz 15a, 15b) auf die leere (erste) Transportladehilfe abgeschoben oder einzelne Warenträger 3 vom Warenträgerstapel 8 abgehoben und auf die leere (erste) Transportladehilfe 7a, 7b abgestellt werden.

Wie in Fig. 2b eingetragen, kann eine leere (erste) Transportladehilfe 7c durch ein autonom verfahrbares, fahrerloses Transportfahrzeug 9 zum Andienungsplatz 16a, 16b transportiert und dort abgestellt werden. Während der Beladung der (ersten) Transportladehilfe 7, 7a..7c kann dieses Transportfahrzeug 9 zu anderen Transportzwecken genutzt werden.

Grundsätzlich ist es aber auch möglich, dass das autonom verfahrbare, fahrerlose Transportfahrzeug 9 zum Andienungsplatz 16a, 16b transportiert und dort abgestellt werden, jedoch während der Beladung der (ersten) Transportladehilfe 7a, 7b am Andienungsplatz 16a, 16b verweilt. Dies ist insbesondere von Vorteil, wenn die Beladung der (ersten) Transportladehilfe 7, 7a..7c mit einem "unveränderten" Warenträgerstapel 8, 8a..8c erfolgt, da die Beladung besonders rasch erfolgen kann und das Transportfahrzeug 9 nur kurze Zeit "unproduktiv" ist.

Ist an dem Andienungsplatz 16a bereits eine (erste) Transportladehilfe 7a, 7b oder sind an den Andienungsplätzen 16a, 16b bereits (erste) Transportladehilfen 7a, 7b abgestellt oder wird die (erste) Transportladehilfe 7a oder werden die (ersten) Transportladehilfen 7a, 7b gerade beladen, so können die leeren (ersten) Transportladehilfe 7c, 7d auf der nahe der Beladevorrichtung 13 vorgesehenen Pufferfläche 30 gepuffert werden.

Auch wenn in der gezeigten Ausführung aus Gründen der besseren Übersicht die Beladestation mit einer einzigen Beladevorrichtung 13 dargestellt ist, so kann die Anzahl an Beladevorrichtungen 13 abhängig von der geforderten Kommissionierleistung variieren. Beispielweise kann die Beladestation bzw. das Kommissionierlager 1a eine zweite Beladevorrichtung 13, dritte Beladevorrichtung 13 usw. aufweisen. Vorzugsweise sind diese Beladevorrichtungen 13 identisch aufgebaut. Es erweist sich auch von Vorteil, wenn nahe jeder Beladevorrichtung 13 eine separate Pufferfläche 30 angeordnet ist. Grundsätzlich kann die Beladestation aber auch nur eine Pufferfläche 30 umfassen. Die Pufferfläche 30 ist vorzugsweise auf einem Boden des Kommissionierlagers 1a ausgebildet.

Auf diese Weise ist es möglich, dass die leere(n) (erste(n) Transportladehilfe(n) 7d nahe zur Beladevorrichtung(en) 13 auf der Pufferfläche 30 gepuffert und nach Bedarf von den Transportfahrzeugen 9 zu dem jeweiligen Andienungsplatz 16a, 16b der Beladevorrichtung (en) 13 auf kurzem Wege transportiert werden.

Die (ersten) Transportladehilfen 7e werden nach deren Beladung (mit zumindest einem Warenträgerstapel 8) durch die autonom verfahrbaren, fahrerlosen Transportfahrzeuge 9 von der Beladestation, insbesondere von der Beladevorrichtung 13 oder von den Beladevorrichtungen 13 zu dem Lagerbereich 5 transportiert und im Lagerbereich 5 auf einer Lagerfläche 31 abgestellt. Die Lagerfläche 31 ist vorzugsweise auf einem Boden des Kommissionierlagers 1a ausgebildet. Wie im Nachfolgenden noch beschrieben wird, werden durch die autonom verfahrbaren, fahrerlosen Transportfahrzeuge 9 auch an der Entladestation nicht vollständig entladene (teilbeladene) "angebrochene" (erste) Transportladehilfen 7f von der Entladestation zurück in den Lagerbereich 5 transportiert und im Lagerbereich 5 auf der Lagerfläche 31 abgestellt.

Wie in den Fig. 1 und 2a ersichtlich, ist im Auftragsbearbeitungsbereich 6 eine Entladestation mit zumindest einer automatisiert betriebenen (schematisch angedeuteten) Entladevorrichtung 32, eine an die Entladevorrichtung 32 anschließende erste Fördervorrichtung 33 zum Abtransport von fertig beladenen Zielladehilfsmitteln 34a (Warenausgangseinheiten) und optional eine an die Entladevorrichtung 32 anschließende zweite Fördervorrichtung 35 zum Antransport von leeren Zielladehilfsmitteln 34b angeordnet. Nach dieser Ausführung bildet die Entladestation mit der einen automatisiert betriebenen Entladevorrichtung 32 oder den mehreren automatisiert betriebenen Entladevorrichtungen 32 gleichzeitig eine Umladestation mit der einen automatisiert betriebenen Umladevorrichtung (Palettiervorrichtung) oder den mehreren automatisiert betriebenen Umladevorrichtungen (Palettiervorrichtungen), mittels welcher die Warenträger 3 oder Warenträgerstapel 8 von der Transportladehilfe 7 auf das Zielladehilfsmittel 34c oder die Zielladehilfsmittel 34c umgeladen werden. Es kann daher der Begriff "Entladevorrichtung" synonym als "Umladevorrichtung" verwendet werden.

Wie im Nachfolgenden beschrieben, umfasst die Entladestation die zumindest eine automatisiert betriebene (schematisch angedeutete) Entladevorrichtung 32. Auch wenn in der gezeigten Ausführung aus Gründen der besseren Übersicht die Entladestation mit einer einzigen Entladevorrichtung 32 dargestellt ist, so kann die Anzahl an Entladevorrichtungen 32 abhängig von der geforderten Kommissionierleistung variieren. Beispielweise kann die Entladestation bzw. das Kommissionierlager 1a eine zweite Entladevorrichtung 32, dritte Entladevorrichtung 32 usw. aufweisen. Vorzugsweise sind diese Entladevorrichtungen 32 identisch aufgebaut.

Es erweist sich auch von Vorteil, wenn die Entladestation nahe der Entladevorrichtung 32 oder nahe jeder Entladevorrichtung 32 zumindest eine separate Pufferfläche 36 aufweist. In gezeigter Ausführung ist der Entladevorrichtung 32 je Andienungsplatz 40a..40b eine Pufferfläche 36 zugeordnet. Grundsätzlich kann die Entladestation aber auch nur eine Pufferfläche 36 umfassen. Die Pufferfläche 36 ist vorzugsweise auf einem Boden des Kommissionierlagers 1a ausgebildet. Auf diese Weise ist es möglich, dass die beladene(n) (ersten) Transportladehilfe(n) 7g nahe zur Entladevorrichtung(en) 32 auf der Pufferfläche 36 gepuffert und nach Bedarf von den Transportfahrzeugen 9 zu dem jeweiligen Andienungsplatz 40a..40b der Entladevorrichtung(en) 32 auf kurzem Wege transportiert werden.

Von Vorteil ist auch, wenn die Entladestation eine oder mehrere Wartezone(n) 37 aufweist. An der Wartezone 37 oder an den Wartezonen 37 kann eine Transportladehilfe 7h nach der Entnahme von zumindest einem Warenträger 3 abgestellt werden, sollten nicht alle Warenträger 3 aus der genannten Transportladehilfe 7h entnommen worden sein und sollten diese Warenträger 3 zu einem bereits avisierten Kommissionierauftrag an der genannten Entladevorrichtung 32 oder einer der Entladevorrichtungen 32 benötigt werden. Grundsätzlich kann die Beladestation zu diesem Zweck aber auch nur eine Wartezone 37 umfassen. Auf diese Weise ist es möglich, dass die teilentladene(n) (ersten) Transportladehilfe(n) 7h nahe zur Entladevorrichtung(en) 32 in der Wartezone 37 gepuffert und nach Bedarf von den Transportfahrzeugen 9 zu dem jeweiligen Andienungsplatz 40a..40b der Entladevorrichtung(en) 32 auf kurzem Wege transportiert werden.

Die schematisch gezeigte Ausführung der automatisiert betriebenen Entladevorrichtung 32 umfasst einen ersten Andienungsplatz 40a für die beladene erste Transportladehilfe 7i, (optional) einen zweiten Andienungsplatz 40b für die beladene zweite Transportladehilfe 7i und eine relativ gegenüber dem Andienungsplatz 40a..40b bewegbare Transfervorrichtung 41 zum Entladen der auf dem Andienungsplatz 40a..40b bereitgestellten Transportladehilfe 7i. Weist die Entladestation mehr als eine automatisiert betriebene Entladevorrichtung 32 auf, so umfasst jede Entladevorrichtung 32 einen ersten Andienungsplatz 40a für die beladene erste Transportladehilfe 7i und (optional) einen zweiten Andienungsplatz 40b für die beladene zweite Transportladehilfe 7i und eine relativ gegenüber dem Andienungsplatz 40a..40b bewegbare Transfervorrichtung 41 zum Entladen der auf dem Andienungsplatz 40a, 40b bereitgestellten Transportladehilfe 7i.

Die Transfervorrichtung 41 kann beispielweise durch ein Greifersystem gebildet sein. Das Greifersystem kann beispielweise einen Grundkörper, eine Vakuum-Saugeinheit mit zumindest einem Sauggreifer oder mehreren übereinander (und/oder nebeneinander) angeordneten Sauggreifern und einen am Grundkörper beweglich gelagerten Tragboden umfassen. Das Entladen der Transportladehilfe 7i mit diesem Greifersystem erfolgt derart, dass vorerst mit der Saugeinheit ein Warenträger 3 oder ein Warenträgerteilstapel einseitig angehoben wird, sodass sich ein Spalt zwischen dem oberen und dem darunter liegenden Warenträger 3 öffnet und danach der Tragboden unabhängig von der Saugeinheit in horizontaler Richtung unter den einseitig angehobenen Warenträger 3 oder einseitig angehobenen Warenträgerteilstapel eingeschoben wird, um diesen Warenträger 3 oder Warenträgerteilstapel aufzunehmen. Ein derartiges Greifersystem ermöglicht somit das Entladen eines einzelnen Warenträgers 3 oder aber auch Warenträgerteilstapel. Grundsätzlich ist es auch denkbar, dass die Anzahl der übereinander angeordneten Sauggreifern so gewählt wird, dass der gesamte Warenträgerstapel 8 einseitig angehoben werden kann und der Tragboden den gesamten Warenträgerstapel 8 aufnehmen kann.

Andererseits kann das Greifersystem auch derart ausgelegt werden, dass eine Greifereinheit nach dem Formschlussprinzip und/oder Reibschlussprinzip wirkt und diese einen einzelnen Warenträger 3, Warenträgerteilstapel oder Warenträgerstapel 8 formschlüssig und/oder reibschlüssig greift.

Konkret kann die Entladevorrichtung 32 nach einer ersten Ausführung einen Portalroboter umfassen. Unter Portalroboter versteht man Industrieroboter, die in ihren Grundachsen aus Linearachsen aufgebaut sind. Bei der Beladung wird ein Flächenportal verwendet.

### Der Portalroboter umfasst

i) Vertikalsteher, Längsträger und Querträger, die zu einer Tragkonstruktion 42 miteinander verbunden sind,
ii) einen an der Tragkonstruktion 42 gelagerten und über eine erste Antriebsvorrichtung entlang einer Führungsanordnung (welche an den Längsträgern angeordnet sind) in einer ersten Richtung (x-Richtung) horizontal bewegbaren ersten Portalschlitten 43,
iii) einen an dem ersten Portalschlitten 43 gelagerten und über eine zweite Antriebsvorrichtung entlang einer Führungsanordnung in einer zweiten Richtung (y-Richtung) horizontal bewegbaren zweiten Portalschlitten 44, und
iv) einen an dem zweiten Portalschlitten 44 gelagerten und über eine dritte Antriebsvorrichtung entlang einer Führungsanordnung in einer dritten Richtung (z-Richtung) vertikal bewegbaren Portalarm 45, und
v) die Transfervorrichtung 41, welche am Portalarm 45 angeordnet und um eine Vertikalachse drehbar am Portalarm 45 gelagert ist.

Die erste Antriebsvorrichtung umfasst einen mit dem ersten Portalschlitten 43 verbundenen ersten Zugmitteltrieb. Der erste Zugmitteltrieb umfasst endlos umlaufende Zugmittel, welche jeweils um ein Umlenkrad und ein Antriebsrad geführt ist. Die Antriebsräder sind mit einem elektrischen Stellmotor gekuppelt. Durch Drehbewegung der Antriebsräder im Uhrzeigersinn oder im Gegenuhrzeigersinn wird der erste Portalschlitten 43 und die auf diesem gelagerte Transfervorrichtung 41 in x-Richtung relativ zum Andienungsplatz 40a..40b bewegt.

Die zweite Antriebsvorrichtung umfasst einen mit dem zweiten Portalschlitten 44 verbundenen zweiten Zugmitteltrieb. Der Zugmitteltrieb umfasst ein endlos umlaufendes Zugmittel, welches um ein Umlenkrad und ein mit einem elektrischen Stellmotor gekuppeltes Antriebsrad geführt ist. Durch Drehbewegung des Antriebsrades im Uhrzeigersinn oder im Gegenuhrzeigersinn wird der zweite Portalschlitten 44 und die auf diesem gelagerte Transfervorrichtung 41 in y-Richtung relativ zum Andienungsplatz 40a..40b bewegt.

Die dritte Antriebsvorrichtung umfasst einen mit dem zweiten Portalschlitten 44 verbundenen (nicht dargestellten) Zugmitteltrieb. Der Zugmitteltrieb umfasst ein endlos umlaufendes Zugmittel, welches um ein Umlenkrad und ein mit einem elektrischen Stellmotor gekuppeltes Antriebsrad geführt ist. Durch Drehbewegung des Antriebsrades im Uhrzeigersinn oder im Gegenuhrzeigersinn wird der Portalarm 45 und die auf diesem gelagerte Transfervorrichtung 41 in z-Richtung relativ zum Andienungsplatz 40a..40b bewegt.

Durch nicht dargestellte Wegmessvorrichtungen können die Verstellbewegungen des ersten Portalschlittens 43, zweiten Portalschlittens 44, Portalarm 45 bzw. der Transfervorrichtung 41 erfasst werden. Dabei macht man sich das Messverfahren der absoluten und inkrementalen Wegmessung zu Nutze.

Auf der Entladebewegung wird der Warenträger 3, Warenträgerteilstapel oder Warenträgerstapel 8 von der Transportladehilfe 7i, welche am Andienungsplatz 40a..40b bereitgestellt wird, von dem Greifersystem aufgenommen und danach auf ein Zielladehilfsmittel 34c umgeladen.

Nach einer nicht gezeigten Ausführung kann die Entladevorrichtung 32 (Umladevorrichtung) einen Gelenkarmroboter umfassen. Der Gelenkarmroboter weist das oben beschriebene und relativ gegenüber einer Roboterbasis bewegbare Greifersystem auf, mittels welcher einzelne Warenträger 3, Warenträgerteilstapel oder "unveränderte" Warenträgerstapel 8 von der ersten Transportladehilfe 7i / zweiten Transportladehilfe 7i auf das Zielladehilfsmittel 34c übergeben werden kann.

Wie in Fig. 1 schematisch eingetragen, umfasst das Kommissionierlager 1a einen Auftragsrechner 46 zum Erfassen von Kommissionieraufträgen und zum Bestimmen von Waren 2, welche für den Kommissionierauftrag benötigt werden. Dabei umfasst ein Kommissionierauftrag eine Auftragszeile (beispielweise sechs Warenträger 3 mit einer ersten Ware 2) oder mehrere Auftragszeilen (beispielweise drei Warenträger 3 mit einer ersten Ware 2 und drei Warenträger 3 mit einer zweiten Ware 2). Eine Kundenbestellung umfasst zumindest einen Kommissionierauftrag. Die Kommissionieraufträge liegen als Datensätze vor und werden an dem Auftragsrechner 46 elektronisch erfasst und einem Steuerungssystem 47 übermittelt. Jeder Kommissionierauftrag umfasst eine oder mehrere Auftragszeilen. Spezifiziert der Kommissionierauftrag mehrere Auftragszeilen, so werden unterschiedliche Waren 2 benötigt. Jede Auftragszeile weist zumindest Angaben über eine Stückzahl einer bestellten Ware 2 und über einen Warentyp auf.

Für den Transport der leeren Transportladehilfen 7 und mit Warenträgerstapel beladenen Transportladehilfen 7 werden autonom verfahrbare, lenkbare Transportfahrzeuge 9 (eines fahrerlosen Transportsystems) eingesetzt, welche von einem übergeordneten Leitrechner automatisch gesteuert werden. Das Steuerungssystem 47 kann diesen Leitrechner umfassen.

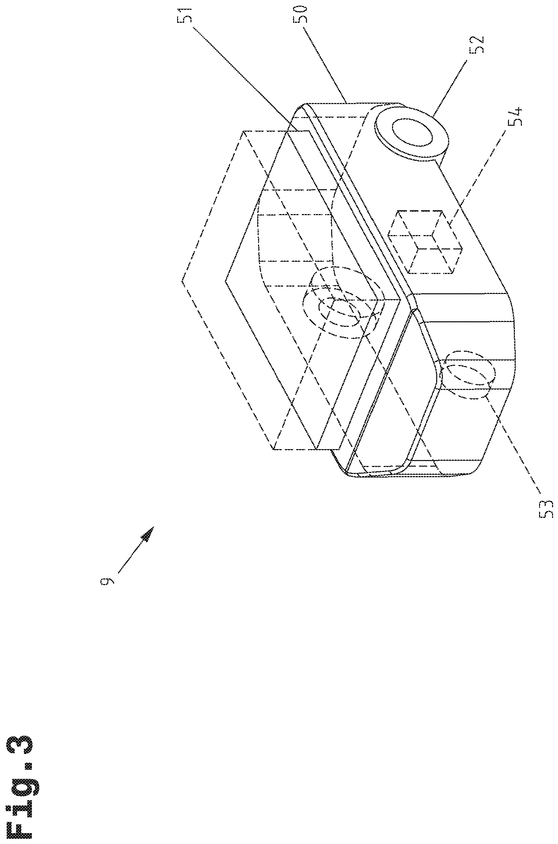

Fig. 3 zeigt eine mögliche Ausführung eines der autonom verfahrbaren, lenkbaren Transportfahrzeuge 9. Das Transportfahrzeug 9 ist als Flurförderfahrzeug ausgebildet.

Das Transportfahrzeug 9 umfasst ein Fahrgestell 50 mit einer Antriebseinheit und eine auf dem Fahrgestell 50 angeordnete Ladeplattform 51 zur Aufnahme / Abgabe / Transport einer mobilen (ortsungebundenen) Transportladehilfe 7 und/oder einer mobilen (ortsungebundenen) Transportladehilfe 107 und/oder einer mobilen (ortsungebundenen) Transportladehilfe 150 und/oder einer mobilen (ortsungebundenen) Stapelladehilfe 100a und/oder einer mobilen (ortsungebundenen) Stapelladehilfe 100b. Die Antriebseinheit umfasst an dem Fahrgestell 50 drehbar gelagerte Räder 52, 53, wovon zumindest eines der Räder 52 mit einem (nicht dargestellten) Antrieb gekuppelt ist, und zumindest eines der Räder 53 lenkbar ist. Es können auch beide Räder 52 mit dem Antrieb gekuppelt und durch diesen angetrieben werden. Das Transportfahrzeug 9 kann aber auch vier Räder umfassen, wovon zwei Räder lenkbar sind.

Nach gezeigter Ausführung ist die Ladeplattform 51 zwischen einer (in festen Linien eingetragenen) Ausgangsstellung und einer (in strichlierte Linien eingetragenen) Transportstellung verstellbar am Fahrgestell 50 gelagert. In der Ausgangsstellung kann eine auf dem Boden des Kommissionierlagers 1a, insbesondere auf der Pufferfläche 30, 36, der Lagerfläche 31, in der Wartezone 37 oder auf dem Andienungsplatz 16a, 16b, 40a, 40b, abgestellte Transportladehilfe 7, 7a..7i unterfahren werden, um diese Transportladehilfe 7, 7a..7i auf der Ladeplattform 51 aufzunehmen. Wird die Ladeplattform 51 aus der Ausgangsstellung in Richtung der Transportstellung verstellt, kann eine auf dem Boden abgestellte Transportladehilfe 7, 7a..7i angehoben und danach transportiert werden. In der Transportstellung ist die Transportladehilfe 7, 7a..7i von dem Boden des Kommissionierlagers 1a abgehoben und kann diese zwischen dem Anlieferbereich 4, Lagerbereich 5 und dem Auftragsbearbeitungsbereich 6 transportiert werden. Wird die Ladeplattform 51 aus der Transportstellung in Richtung der Ausgangsstellung verstellt, kann die Transportladehilfe 7, 7a..7i auf dem Boden abgestellt werden.

Das Transportfahrzeug 9 umfasst ferner eine schematisch in strichlierte Linien dargestellte Fahrsteuerung 54 zum Empfang von Befehlen von dem übergeordneten Leitrechner und zum Steuern/Regeln der Bewegungen des autonomen Transportfahrzeuges 9. Die Fahrsteuerung 54 kann auch Mittel zur (drahtlosen) Datenübertragung an und von dem Transportfahrzeug 9 umfassen. Schließlich umfasst das Transportfahrzeug 9 nicht dargestellte Sensoren zum Erfassen der Umgebung des autonomen Transportfahrzeuges 9 und zur Orientierung im Raum. Der Antrieb der Antriebseinheit und die Sensoren sind mit der Fahrsteuerung 54 verbunden.

In den Fig. 4a und 4b ist eine erste Ausführung einer Transportladehilfe 7 dargestellt. Fig. 4a zeigt die unbeladene leere Transportladehilfe 7 und Fig. 4b die beladene Transportladehilfe 7. Die Transportladehilfe 7 umfasst einen Boden 55 und mit diesem verbundene Seitenwände 56a, 56b, 56c zur Lagestabilisierung des Warenträgerstapels 8 sowie eine der Seitenwand 56c gegenüberliegende Belade- und Entladeöffnung 57. Die Seitenwände 56a, 56b, 56c sind vorzugsweise im Wesentlichen in der Höhe des Warenträgerstapels 8 ausgebildet, jedoch zumindest so hoch, dass auch der oberste Warenträger 3 im Warenträgerstapel 8 zumindest bereichsweise von den Seitenwänden 56a, 56b, 56c umgeben ist. Bevorzugt erstreckt sich die Belade- und Entladeöffnung 57 über die gesamte Höhe der Seitenwände 56a, 56b.

Die Transportladehilfe 7 kann parallel zueinander verlaufende erste Seitenwände 56a, 56b oder (wie gezeigt) in Richtung zur Belade- und Entladeöffnung 57 divergierende erste Seitenwände 56a, 56b umfassen. Letztere Ausführung erlaubt ein einfaches Beladen und/oder Entladen der Transportladehilfe 7. Die zweite Seitenwand 56c erstreckt sich zwischen den ersten Seitenwände 56a, 56b und ist im Randbereich des Bodens 55 derart angeordnet, dass die Seitenwände 56a, 56b, 56c einen einzigen Aufnahmeschacht begrenzen, in welchem der Warenträgerstapel 8 zum Transport / zur Lagerung aufgenommen werden kann.

Der Boden 55 umfasst auf seiner oberen Seite eine Abstellfläche 58, auf welchem der Warenträgerstapel 8 abgestellt werden kann, und auf seiner unteren Seite eine Transportfläche 59, gegen welche die Ladeplattform 51 des Transportfahrzeuges 9 angestellt werden kann.

Zusätzlich kann die Transportladehilfe 7 Stellfüße 60 umfassen, welche am Boden 55 befestigt sind. Die Transportladehilfe 7 wird über die Stellfüße 60 am Boden abgestellt. In einer nicht gezeigten Ausführung können anstatt der Stellfüße 60 auch Räder am Boden 55 vorgesehen werden.

In den unterschiedlichen Ausführungen der Kommissionierlager 1a, 1b, 1c wird die in den Fig. 4a und 4b beschrieben Transportladehilfe 7 eingesetzt. Es versteht sich, dass in den Kommissionierlagern 1a, 1b, 1c auch die nachfolgende beschriebenen Ausführungen der Transportladehilfen 7', 7"; 107 eingesetzt werden können.

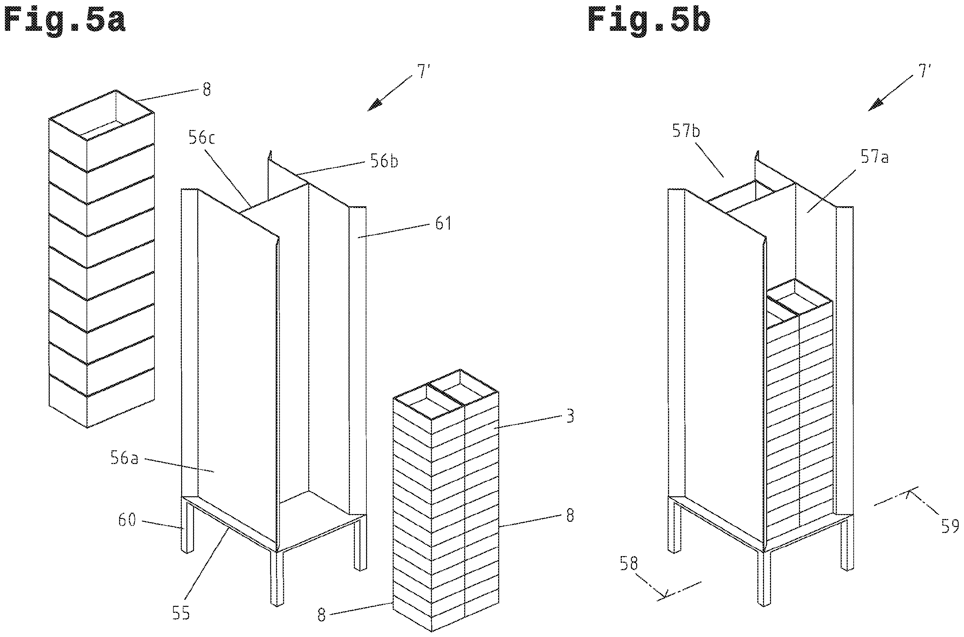

In den Fig. 5a und 5b ist eine zweite Ausführung einer Transportladehilfe 7' dargestellt. Fig. 5a zeigt die unbeladene leere Transportladehilfe 7' und Fig. 5b die beladene Transportladehilfe 7'. Eine derartige Transportladehilfe 7' kann an den Andienungsplätzen 16a, 16b, 40a, 40b, 67a, 67b, 77a, 77b durch eine "Drehbewegung" um die Vertikalachse aufeinander folgend mehrere Warenträgerstapel 8; 8'; 8" bereitstellen. Die "Drehbewegung" wird vorzugsweise durch ein Transportfahrzeug 9 ausgeführt.

Die Transportladehilfe 7' umfasst wiederum den Boden 55 und mit diesem verbundene Seitenwände 56a, 56b, 56c jeweils zur Lagestabilisierung von Warenträgerstapeln 8 und eine der Seitenwand 56c auf einer ersten Seite gegenüberliegende erste Belade- und Entladeöffnung 57a und eine der Seitenwand 56c auf einer zweiten Seite gegenüberliegende zweite Belade- und Entladeöffnung 57b. Die Seitenwände 56a, 56b, 56c sind vorzugsweise im Wesentlichen in der Höhe des Warenträgerstapels 8 ausgebildet, jedoch zumindest so hoch, dass auch der oberste Warenträger 3 im Warenträgerstapel 8 zumindest bereichsweise von den Seitenwänden 56a, 56b, 56c umgeben ist. Bevorzugt erstreckt sich die erste / zweite Belade- und Entladeöffnung 57 jeweils über die gesamte Höhe der Seitenwände 56a, 56b.

Die Transportladehilfe 7' kann parallel zueinander verlaufende erste Seitenwände 56a, 56b umfassen. Es erweist sich von Vorteil, wenn die ersten Seitenwände 56a, 56b mit Einführschrägen 61 ausgebildet sind, um ein einfaches Beladen und/oder Entladen der Transportladehilfe 7' zu ermöglichen. Die zweite Seitenwand 56c erstreckt sich zwischen den ersten Seitenwände 56a, 56b und ist im Mittenbereich des Bodens 55 derart angeordnet, dass die Seitenwände 56a, 56b, 56c zwei Aufnahmeschächte begrenzen, in welchen jeweils zumindest ein Warenträgerstapel 8 zum Transport / zur Lagerung aufgenommen werden kann. In gezeigter Ausführung wird im ersten Aufnahmeschacht ein Warenträgerstapel 8 mit einer Grundfläche der Warenträger 600mm x 400mm und im zweiten Aufnahmeschacht zwei Warenträgerstapel 8 jeweils mit einer Grundfläche der Warenträger 300mm x 400mm aufgenommen. Diese Transportladehilfe 7' kann gleichzeitig mehrere Warenträgerstapeln 8 transportieren. Grundsätzlich könnte die Seitenwand 56c aber auch entfallen, sodass ausschließlich ein Aufnahmeschacht vorhanden ist, in welchem ein oder mehrere Warenträgerstapeln 8 aufgenommen werden.

Der Boden 55 umfasst wiederum auf seiner oberen Seite eine Abstellfläche 58, auf welchem die Warenträgerstapeln 8 abgestellt werden können, und auf seiner unteren Seite eine Transportfläche 59, gegen welche die Ladeplattform 51 des Transportfahrzeuges 9 angestellt werden kann.

Zusätzlich kann die Transportladehilfe 7' Stellfüße 60 umfassen, welche am Boden 55 befestigt sind. Die Transportladehilfe 7' wird über die Stellfüße 60 am Boden abgestellt. In einer nicht gezeigten Ausführung können anstatt der Stellfüße 60 auch Räder am Boden 55 vorgesehen werden.

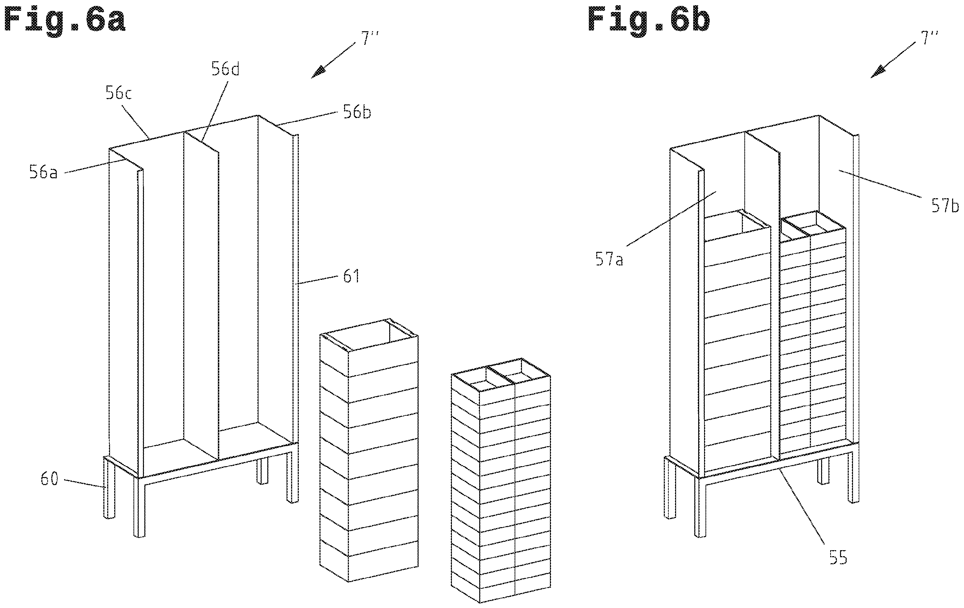

In den Fig. 6a und 6b ist eine dritte Ausführung einer Transportladehilfe 7" dargestellt. Fig. 6a zeigt die unbeladene leere Transportladehilfe 7" und Fig. 6b die beladene Transportladehilfe 7". Eine derartige Transportladehilfe 7" kann an den Andienungsplätzen 16a, 16b, 40a, 40b, 67a, 67b, 77a, 77b durch eine kurze "Versatzbewegung" aufeinander folgend mehrere Warenträgerstapel 8; 8'; 8" bereitstellen. Die "Versatzbewegung" wird vorzugsweise durch ein Transportfahrzeug 9 ausgeführt.

Die Transportladehilfe 7" umfasst wiederum den Boden 55 und mit diesem verbundene Seitenwände 56a, 56b, 56c, 56d jeweils zur Lagestabilisierung von Warenträgerstapeln 8 und der Seitenwand 56c auf einer einzigen Seite gegenüberliegende Belade- und Entladeöffnungen 57a, 57b. Die Seitenwände 56a, 56b, 56c, 56d sind vorzugsweise im Wesentlichen in der Höhe des Warenträgerstapels 8 ausgebildet, jedoch zumindest so hoch, dass auch der oberste Warenträger 3 im Warenträgerstapel 8 zumindest bereichsweise von den Seitenwänden 56a, 56b, 56c, 56d umgeben ist. Bevorzugt erstreckt sich die erste / zweite Belade- und Entladeöffnung 57 jeweils über die gesamte Höhe der Seitenwände 56a, 56b, 56d.

Die Transportladehilfe 7" kann parallel zueinander verlaufende äußere erste Seitenwände 56a, 56b und eine parallele innere Seitenwand 56d umfassen. Die zweite Seitenwand 56c erstreckt sich zwischen den ersten Seitenwänden 56a, 56b, 56d. Die innere erste Seitenwand 56d ist im Mittenbereich des Bodens 55 derart angeordnet, dass die Seitenwände 56a, 56b, 56c, 56d zwei Aufnahmeschächte begrenzen, in welchen jeweils zumindest ein Warenträgerstapel 8 zum Transport / zur Lagerung aufgenommen werden kann. In gezeigter Ausführung wird im ersten Aufnahmeschacht ein Warenträgerstapel 8 mit einer Grundfläche der Warenträger 600mm x 400mm und im zweiten Aufnahmeschacht zwei Warenträgerstapel 8 jeweils mit einer Grundfläche der Warenträger 300mm x 400mm aufgenommen. Diese Transportladehilfe 7" kann gleichzeitig mehrere Warenträgerstapeln 8 transportieren.

Es erweist sich von Vorteil, wenn die äußeren ersten Seitenwände 56a, 56b und gegebenenfalls auch die innere erste Seitenwand 56d mit (nicht eingetragenen) Einführschrägen ausgebildet sind, um ein einfaches Beladen und/oder Entladen der Transportladehilfe 7" zu ermöglichen.

Der Boden 55 umfasst wiederum auf seiner oberen Seite eine Abstellfläche 58, auf welchem die Warenträgerstapeln 8 abgestellt werden können, und auf seiner unteren Seite eine Transportfläche 59, gegen welche die Ladeplattform 51 des Transportfahrzeuges 9 angestellt werden kann.

Es sei an dieser Stelle auch hingewiesen, dass die Transportladehilfe 7, 7 ', 7" an den ersten Seitenwänden 56a, 56b, 56d oder an den ersten Seitenwände 56a, 56b, 56d und der zweiten Seitenwand 56c und dem jeweiligen Aufnahmeschacht zugewandt (nicht dargestellte) Zentrierelemente aufweisen können, welche der Zentrierung der Warenträger 3 / Warenträgerstapel 8 und Lagestabilisierung der Warenträger 3 / Warenträgerstapel 8 dienen können.

Fig. 7 zeigt eine zweite Ausführung eines Kommissionierlagers 1b zum Lagern und Kommissionieren von Waren 2 enthaltenden und stapelbaren Warenträgern 3. Das Kommissionierlager 1b umfasst wiederum den Anlieferbereich 4, den Lagerbereich 5, den Auftragsbearbeitungsbereich 6, eine Vielzahl an Transportladehilfen 7 jeweils zur Aufnahme und Lagestabilisierung wenigstens eines Warenträgerstapels 8 und eine Vielzahl an autonom verfahrbaren, fahrerlosen Transportfahrzeugen 9 zum Transport von Transportladehilfen 7.

Diese Ausführung unterscheidet sich gegenüber dem Kommissionierlager 1a dadurch, dass im Auftragsbearbeitungsbereich 6 eine von einer Umladestation getrennte Entladestation vorgesehen ist.

Die in Fig. 7a vergrößert dargestellte Entladestation umfasst die zumindest eine automatisiert betriebene (schematisch angedeutete) Entladevorrichtung 65. Auch wenn in der gezeigten Ausführung aus Gründen der besseren Übersicht die Entladestation mit einer einzigen Entladevorrichtung 65 dargestellt ist, so kann die Anzahl an Entladevorrichtungen 65 abhängig von der geforderten Kommissionierleistung variieren. Beispielweise kann die Entladestation bzw. das Kommissionierlager 1b eine zweite Entladevorrichtung 65, dritte Entladevorrichtung 65 usw. aufweisen. Vorzugsweise sind diese Entladevorrichtungen 65 identisch aufgebaut. Es erweist sich auch von Vorteil, wenn die Entladestation nahe der Entladevorrichtung 65 oder nahe jeder Entladevorrichtung 65 zumindest eine separate Pufferfläche 66 aufweist. In gezeigter Ausführung ist der Entladevorrichtung 66 je Andienungsplatz 67a, 67b eine Pufferfläche 66a, 66b zugeordnet. Grundsätzlich kann die Entladestation aber auch nur eine Pufferfläche 66 umfassen. Die Pufferfläche 66 ist vorzugsweise auf einem Boden des Kommissionierlagers 1b ausgebildet. Auf diese Weise ist es möglich, dass die hier nicht dargestellte, beladene(n) (ersten) Transportladehilfe(n) 7g nahe zur Entladevorrichtung(en) 65 auf der Pufferfläche 66 gepuffert und nach Bedarf von den Transportfahrzeugen 9 zu dem jeweiligen Andienungsplatz 67a, 67b der Entladevorrichtung(en) 65 auf kurzem Wege transportiert werden.

Die Umladestation umfasst die zumindest eine automatisiert betriebene (schematisch angedeutete) Umladevorrichtung 32, wie oben beschrieben. Auch wenn in der gezeigten Ausführung aus Gründen der besseren Übersicht die Entladestation mit einer einzigen Umladevorrichtung 32 dargestellt ist, so kann die Anzahl an Umladevorrichtungen 32 abhängig von der geforderten Kommissionierleistung variieren. Beispielweise kann die Umladestation bzw. das Kommissionierlager 1b eine zweite Umladevorrichtung 32, dritte Umladevorrichtung 32 usw. aufweisen. Vorzugsweise sind diese Umladevorrichtungen 32 identisch aufgebaut.

Nach dieser Ausführung ist zwischen der Entladestation und der Umladestation eine ortsfeste Fördertechnik angeordnet, mittels welcher Warenträger 3, Warenträgerteilstapel oder Warenträgerstapel 8 von der Entladevorrichtung 65 oder den Entladevorrichtungen 65 zur Umladevorrichtung 32 oder Umladevorrichtungen 32 transportiert werden. Dabei werden durch die Entladevorrichtung 65 die zu einem Kommissionierauftrag benötigten Warenträger 3 auf der ortsfesten Fördertechnik zusammengestellt.

Wie in der Fig. 7a ersichtlich, umfasst die ortsfeste Fördertechnik eine erste Fördervorrichtung 68a zum Antransport von Warenträgern 3, Warenträgerteilstapeln oder Warenträgerstapeln 8 und/oder eine zweite Fördervorrichtung 68b zum Antransport von Warenträgern 3, Warenträgerteilstapeln oder Warenträgerstapeln 8. Die zweite Fördervorrichtung 68b zum Antransport von Warenträgern 3, Warenträgerteilstapeln oder Warenträgerstapeln 8 ist optional und kann auch entfallen.

Die schematisch gezeigte Entladevorrichtung 65 umfasst einen ersten Andienungsplatz 67a für die beladene erste Transportladehilfe 7, einen (optionalen) zweiten Andienungsplatz 67b für die beladene zweite Transportladehilfe 7 und eine relativ gegenüber dem Andienungsplatz 67a, 67b bewegbare Transfervorrichtung 69 zum Entladen der auf dem Andienungsplatz 67a, 67b bereitgestellten Transportladehilfe 7. Die Transportladehilfe 7 am Andienungsplatz 67a ist noch zu entladen, während die Transportladehilfe 7 am Andienungsplatz 67b bereits entladen wurde. Beim Entladen wird ein Warenträger 3, Warenträgerteilstapel oder der Warenträgerstapel 8 von der ersten Transportladehilfe 7 auf einen ersten Übernahmeplatz 70a und gegebenenfalls ein Warenträger 3, Warenträgerteilstapel oder der Warenträgerstapel 8 von der zweiten Transportladehilfe 7 auf einen zweiten Übernahmeplatz 70b übergeben.

Der erste Übernahmeplatz 70a und der zweite Übernahmeplatz 70b sind auf der ortsfesten Fördertechnik ausgebildet. Konkret ist der erste Übernahmeplatz 70a auf der ersten Fördervorrichtung 68a und der zweite Übernahmeplatz 70b auf der zweiten Fördervorrichtung 68b ausgebildet. Ist die zweite Fördervorrichtung 70b nicht vorgesehen, so ist lediglich der erste Übernahmeplatz 70a vorgesehen. Der erste Andienungsplatz 67a und der ersten Übernahmeplatz 70a sind einander gegenüberliegend angeordnet. Der optionale (zweite) Andienungsplatz 70b und der optionale (zweite) Übernahmeplatz 70b sind einander gegenüberliegend angeordnet. Die Transfervorrichtung 69 ist oberhalb der Fördervorrichtung 68a, 68b angeordnet.

Die Transfervorrichtung 69 kann beispielweise durch ein Greifersystem gebildet sein. Das Greifersystem kann beispielweise einen Grundkörper, eine Vakuum-Saugeinheit mit zumindest einem Sauggreifer oder mehreren übereinander angeordneten Sauggreifern und einen am Grundkörper beweglich gelagerten Tragboden umfassen, wie oben beschrieben und auf die Entladevorrichtung 65 übertragbar.

Andererseits kann das Greifersystem auch derart ausgelegt werden, dass eine Greifereinheit nach dem Formschlussprinzip und/oder Reibschlussprinzip wirkt und diese einen einzelnen Warenträger 3, Warenträgerteilstapel oder Warenträgerstapel 8 formschlüssig und/oder reibschlüssig greift.

Konkret kann die Entladevorrichtung 65 nach einer ersten Ausführung einen Portalroboter umfassen, welcher konstruktiv dem der Beladevorrichtung 13 entspricht. Unter Portalroboter versteht man Industrieroboter, die in ihren Grundachsen aus Linearachsen aufgebaut sind. Bei der Beladung genügt die Verwendung eines Linienportales.

Der Portalroboter umfasst Vertikalsteher, Längsträger und Querträger, die zu einer Tragkonstruktion 18 miteinander verbunden sind. Zusätzlich umfasst der Portalroboter einen über eine erste Antriebsvorrichtung entlang einer Führungsanordnung in einer ersten Richtung (x-Richtung - Horizontalbewegung) bewegbaren Portalschlitten 19 und einen am Portalschlitten 19 angeordneten Portalarm 20. Am Portalarm 20 ist die Transfervorrichtung 69 angeordnet. Die erste Antriebsvorrichtung umfasst einen mit dem Portalschlitten 19 verbundenen Zugmitteltrieb. Der Zugmitteltrieb umfasst ein endlos umlaufendes Zugmittel, welches um ein Umlenkrad und ein mit einem elektrischen Stellmotor gekuppeltes Antriebsrad geführt ist. Durch Drehbewegung des Antriebsrades im Uhrzeigersinn oder im Gegenuhrzeigersinn wird der Portalschlitten 19 und die auf diesem gelagerte Transfervorrichtung 69 relativ zum Andienungsplatz 67a, 67b entweder in einer ersten Endladerichtung oder zweiten Endladerichtung (x-Richtung) bewegt werden.

Der Portalarm 20 ist über eine zweite Antriebsvorrichtung entlang einer Führungsanordnung in einer zweiten Richtung (z-Richtung - Vertikalbewegung) bewegbar. Die Transfervorrichtung 69 (Greifersystem) ist um eine Vertikalachse drehbar am Portalarm 20 gelagert.

Durch nicht dargestellte Wegmessvorrichtungen können die Verstellbewegungen des Portalschlittens 19, Portalarms 20 bzw. der Transfervorrichtung 69 erfasst werden. Dabei macht man sich das Messverfahren der absoluten und inkrementalen Wegmessung zu Nutze.

Auf der Entladebewegung wird der Warenträger 3, Warenträgerteilstapel oder Warenträgerstapel 8 von der Transportladehilfe 7, welche am Andienungsplatz 67a, 67b bereitgestellt wird, von dem Greifersystem aufgenommen und danach auf den Übernahmeplatz 70a, 70b abgegeben.

Nach einer nicht gezeigten Ausführung kann die Entladevorrichtung 65 einen Gelenkarmroboter umfassen. Der Gelenkarmroboter weist ein relativ gegenüber einer Roboterbasis bewegbares Greifersystem auf, mittels welcher ein Warenträger 3, Warenträgerteilstapel oder ein "unveränderter" Warenträgerstapel 8 von der ersten Transportladehilfe 7 / zweite Transportladehilfe 7 auf den Übernahmeplatz 70a, 70b übergeben werden kann.

Nach dem Entladen werden die Warenträger 3, Warenträgerteilstapel oder Warenträgerstapel 8 durch die ortsfeste Fördertechnik, insbesondere der ersten Fördervorrichtung 68a und/oder zweiten Fördervorrichtung 68b, von der Entladevorrichtung(en) 65 zu der / den automatisiert betriebenen Umladevorrichtung(en) 32 (Palettiervorrichtung(en) transportiert und an einem oder mehreren Andienungsplätzen 71a, 71b auf der ortsfesten Fördertechnik bereitgestellt. Die Umladevorrichtung 32 kann die Warenträger 3, Warenträgerteilstapel oder Warenträgerstapel 8 nacheinander von dem Andienungsplatz / den Andienungsplätzen 70a..70b in oben beschriebener Weise mit der Transfervorrichtung 41 (Greifersystem) übernehmen und anschließend auf das Zielladehilfsmittel 34c ablegen.

Es sei an dieser Stelle hingewiesen, dass die Umladevorrichtung 32 auch nach dieser Ausführung beispielweise durch den oben beschriebenen Portalroboter oder Gelenkarmroboter gebildet sein kann. Um Wiederholungen zu vermeiden wird auf die obige Offenbarung hingewiesen.

Fig. 8 zeigt eine dritte Ausführung eines Kommissionierlager 1c zum Lagern und Kommissionieren von Waren 2 enthaltenden und stapelbaren Warenträgern 3. Das Kommissionierlager 1c umfasst wiederum den Anlieferbereich 4, den Lagerbereich 5, den Auftragsbearbeitungsbereich 6, eine Vielzahl an Transportladehilfen 7 jeweils zur Aufnahme und Lagestabilisierung wenigstens eines Warenträgerstapels 8 und eine Vielzahl an autonom verfahrbaren, fahrerlosen Transportfahrzeugen 9 zum Transport von Transportladehilfen 7.

Diese Ausführung unterscheidet sich gegenüber dem Kommissionierlager 1a dadurch, dass im Auftragsbearbeitungsbereich 6 eine von einer Umladestation getrennte Entladestation vorgesehen ist.

Die Entladestation umfasst die zumindest eine automatisiert betriebene (schematisch angedeutete) Entladevorrichtung 75. Auch wenn in der gezeigten Ausführung aus Gründen der besseren Übersicht die Entladestation mit einer einzigen Entladevorrichtung 75 dargestellt ist, so kann die Anzahl an Entladevorrichtungen 75 abhängig von der geforderten Kommissionierleistung variieren. Beispielweise kann die Entladestation bzw. das Kommissionierlager 1c eine zweite Entladevorrichtung 75, dritte Entladevorrichtung 75 usw. aufweisen. Vorzugsweise sind diese Entladevorrichtungen 75 identisch aufgebaut.

Es erweist sich auch von Vorteil, wenn die Entladestation nahe der Entladevorrichtung 75 oder nahe jeder Entladevorrichtung 75 zumindest eine separate Pufferfläche 76 aufweist. In gezeigter Ausführung ist der Entladevorrichtung 75 einem Andienungsplatz 77a eine Pufferfläche 76a und einem Andienungsplatz 77b eine Pufferfläche 76b zugeordnet. Die Pufferfläche 76, 76a, 76b ist vorzugsweise auf einem Boden des Kommissionierlagers 1c ausgebildet. Auf diese Weise ist es einerseits möglich, dass eine hier nicht dargestellte, beladene Transportladehilfe 7g nahe zur Entladevorrichtung(en) 75 auf der Pufferfläche 76a gepuffert und nach Bedarf von einem Transportfahrzeug 9 zu dem jeweiligen Andienungsplatz 77a der Entladevorrichtung(en) 65 auf kurzem Wege transportiert werden. Andererseits ist es möglich, dass eine hier nicht dargestellte leere Transportladehilfe 7d nahe zur Entladevorrichtung(en) 75 auf der Pufferfläche 76b gepuffert und nach Bedarf von einem Transportfahrzeug 9 zu dem jeweiligen Andienungsplatz 77b der Entladevorrichtung(en) 75 auf kurzem Wege transportiert werden.

Die Umladestation umfasst zumindest eine automatisiert betriebene (schematisch angedeutete) Umladevorrichtung 32. Auch wenn in der gezeigten Ausführung aus Gründen der besseren Übersicht die Entladestation mit einer einzigen Umladevorrichtung 32 dargestellt ist, so kann die Anzahl an Umladevorrichtungen 32 abhängig von der geforderten Kommissionierleistung variieren. Beispielweise kann die Umladestation bzw. das Kommissionierlager 1c eine zweite Umladevorrichtung 32, dritte Umladevorrichtung 32 usw. aufweisen. Vorzugsweise sind diese Umladevorrichtungen 32 identisch aufgebaut.

Um Wiederholungen zu vermeiden wird im Hinblick auf die Offenbarung der Umladestation auf die obige Beschreibung verwiesen.

Es besteht lediglich ein Unterschied in der Bereitstellung der Warenträgerstapel mit den Transportladehilfen 7 auf dem ersten Andienungsplatz 40a und gegebenenfalls zweiten Andienungsplatz 40b. Während nach der ersten Ausführung (Fig. 1) am ersten Andienungsplatz 40a und gegebenenfalls zweiten Andienungsplatz 40b die Warenträgerstapel als sortenreine Warenträgerstapel 8 bereitgestellt werden, wird nach gezeigter Ausführung (Fig. 8) am ersten Andienungsplatz 40a eine erste Transportladehilfe 7i mit einem ersten vorkommissionierten Warenträgerstapel 8' und gegebenenfalls am zweiten Andienungsplatz 40b eine nicht gezeigte zweite Transportladehilfe 7i mit einem zweiten vorkommissionierten Warenträgerstapel 8' bereitgestellt.

Die Kommissionierung von Warenträgern 3 gemäß Kommissionierauftrag zu einem Warenträgerstapel 8' erfolgt in der Entladestation mit zumindest einer automatisiert betriebene Entladevorrichtung 75.

Die schematisch gezeigte Entladevorrichtung 75 umfasst zumindest einen ersten Andienungsplatz 77a für die erste Transportladehilfe 7a, welche Warenträger 3 sortenrein enthält und aus welcher Warenträger 3 gemäß einem Kommissionierauftrag entnommen werden, und zumindest einen zweiten Andienungsplatz 77b für die zweite Transportladehilfe 7b, auf welchen Warenträger 3 gemäß einem Kommissionierauftrag abgegeben werden, und eine relativ gegenüber dem Andienungsplatz 77a, 77b bewegbare Transfervorrichtung 84 zum Entladen der auf dem Andienungsplatz 77a bereitgestellten Transportladehilfe 7a und zum Beladen der auf dem Andienungsplatz 77b bereitgestellten Transportladehilfe 7b. Der erste Andienungsplatz 77a und der zweite Andienungsplatz 77b sind einander gegenüberliegend angeordnet. Die Transfervorrichtung 84 ist oberhalb der Andienungsplätze 77a, 77b angeordnet.

Umfasst ein Kommissionierauftrag verschiedene Waren 2, werden Warenträger 3 nacheinander aus verschiedenen Transportladehilfen 7a entnommen. Hierzu können die Transportladehilfen 7a nacheinander am Andienungsplatz 77a bereitgestellt und die benötigten Warenträger 3 nacheinander entladen und an die Transportladehilfen 7b abgegeben werden. Es können dabei einzelne Warenträger 3 oder Warenträgerteilstapel von der ersten Transportladehilfe 7a entnommen und an die zweite Transportladehilfe 7b abgegeben werden. Benötigt ein Kommissionierauftrag einen gesamten Warenträgerstapel 8 so wird dieser wie oben beschrieben, durch ein Transportfahrzeug 9 vom Lagerbereich 5 entnommen und zum Auftragsbearbeitungsbereich 6 transportiert und an einem Andienungsplatz 40a..40b bereitgestellt.

Die Transfervorrichtung 84 kann beispielweise durch ein Greifersystem gebildet sein. Das Greifersystem kann beispielweise einen Grundkörper, eine Vakuum-Saugeinheit mit zumindest einem Sauggreifer oder mehreren übereinander angeordneten Sauggreifern und einen am Grundkörper beweglich gelagerten Tragboden umfassen, wie oben beschrieben und auf die Entladevorrichtung 75 übertragbar.

Andererseits kann das Greifersystem auch derart ausgelegt werden, dass eine Greifereinheit nach dem Formschlussprinzip und/oder Reibschlussprinzip wirkt und diese einen einzelnen Warenträger 3 oder Warenträgerteilstapel formschlüssig und/oder reibschlüssig greift.

Konkret kann die Entladevorrichtung 75 nach einer ersten Ausführung einen Portalroboter umfassen.

Der Portalroboter umfasst Vertikalsteher, Längsträger und Querträger, die zu einer Tragkonstruktion 81 miteinander verbunden sind. Zusätzlich umfasst der Portalroboter einen über eine erste Antriebsvorrichtung entlang einer Führungsanordnung in einer ersten Richtung (x-Richtung - Horizontalbewegung) bewegbaren Portalschlitten 82 und einen am Portalschlitten 82 angeordneten Portalarm 83. Am Portalarm 83 ist die Transfervorrichtung 84 angeordnet. Die erste Antriebsvorrichtung umfasst einen mit dem Portalschlitten 82 verbundenen Zugmitteltrieb. Der Zugmitteltrieb umfasst ein endlos umlaufendes Zugmittel, welches um ein Umlenkrad und ein mit einem elektrischen Stellmotor gekuppeltes Antriebsrad geführt ist. Durch Drehbewegung des Antriebsrades im Uhrzeigersinn oder im Gegenuhrzeigersinn wird der Portalschlitten 82 und die auf diesem gelagerte Transfervorrichtung 84 relativ zum Andienungsplatz 77 in einer Endladerichtung (x-Richtung) bewegt werden.

Der Portalarm 83 ist über eine zweite Antriebsvorrichtung entlang einer Führungsanordnung in einer zweiten Richtung (z-Richtung - Vertikalbewegung) bewegbar. Die Transfervorrichtung 84 (Greifersystem) ist um eine Vertikalachse drehbar am Portalarm 83 gelagert.

Der Portalroboter kann eine nicht dargestellte Wegmessvorrichtung umfassen, mittels welchem die Verstellbewegungen des Portalschlittens 82, Portalarms 83 bzw. der Transfervorrichtung 84 erfasst werden. Dabei macht man sich das Messverfahren der absoluten und inkrementalen Wegmessung zu Nutze.

Auf der Entladebewegung wird der Warenträger 3 oder Warenträgerteilstapel von der Transportladehilfe 7a, welche am Andienungsplatz 77a bereitgestellt wird und einen sortenreinen Warenträgerstapel 8 enthält, von dem Greifersystem aufgenommen und danach auf der Beladebewegung der Warenträger 3 oder Warenträgerteilstapel auf die Transportladehilfe 7b, welche am Andienungsplatz 77b bereitgestellt wird und in welche Warenträger 3 kommissioniert werden, abgegeben.

Nach der Beladung wird die Transportladehilfe 7b mit dem vorkommissionierten Warenträgerstapel 8' durch ein Transportfahrzeug 9 zur Umladestation transportiert und an der zumindest einen Umladevorrichtung 32 bereitgestellt.

Nach einer nicht gezeigten Ausführung kann die Entladevorrichtung 75 einen Gelenkarmroboter umfassen. Der Gelenkarmroboter weist ein relativ gegenüber einer Roboterbasis bewegbares Greifersystem auf, mittels welcher ein Warenträger 3 oder Warenträgerteilstapel von der ersten Transportladehilfe 7a entnommen und an die zweite Transportladehilfe 7b übergeben werden kann.

Im Nachfolgenden wird das Verfahren zum Lagern und Kommissionieren von Waren 2 enthaltenden und stapelbaren Warenträgern 3 im Kommissionierlager 1a (erste Ausführung) beschrieben.

Das Verfahren umfasst die Schritte:
i) Bereitstellung von autonom verfahrbaren, fahrerlosen Transportfahrzeugen 9,
ii) Bereitstellung von Transportladehilfen 7 jeweils zur Aufnahme und Lagestabilisierung wenigstens eines Warenträgerstapels 8 aus mehreren übereinander angeordneten Warenträgern 3, wobei die Transportladehilfen 7 mobile leere Transportladehilfen 7 umfassen,
iii) Bereitstellung von Warenträgerstapeln 8 aus mehreren übereinander angeordneten Warenträgern 3 in einem Anlieferbereich 4,
iv) Transport von leeren Transportladehilfen 7 durch die autonom verfahrbaren, fahrerlosen Transportfahrzeuge 9 zu einer Beladestation und Bereitstellung einer leeren Transportladehilfe 7 entweder an einer oder mehreren automatisiert betriebenen Beladevorrichtung(en) 13 oder auf einer Pufferfläche 30 nahe der Beladevorrichtung(en) 13,
v) Beladen einer der leeren Transportladehilfen 7, welche an der automatisiert betriebenen Beladevorrichtung 13 bereitgestellt wird, mit zumindest einem Warenträgerstapel 8 aus dem Anlieferbereich 4 durch die automatisiert betriebene Beladevorrichtung 13,
vi) Transport der mit zumindest einem Warenträgerstapel 8 beladenen Transportladehilfe 7 mit dem autonom verfahrbaren, fahrerlosen Transportfahrzeug 9 von der Beladestation zu einem Lagerbereich 5,
vii) Abstellen der mit zumindest einem Warenträgerstapel 7 beladenen Transportladehilfe 7 auf einer Lagerfläche 31 im Lagerbereich 5,
viii) Lagerung der mit zumindest einem Warenträgerstapel 8 beladenen Transportladehilfen 7 oder mit einzelnen Warenträgern 3 beladenen Transportladehilfen 7 im Lagerbereich 5,
ix) Bearbeitung eines Kommissionierauftrages umfassend die Schritte
   - Transport einer oder von mehreren die zu einem Kommissionierauftrag benötigten Warenträger 3 enthaltenden Transportladehilfe(n) 7 vom Lagerbereich 5 zu einer Entladestation und Bereitstellung genannter Transportladehilfe(n) 7 entweder an einer oder mehreren automatisiert betriebenen Entladevorrichtung(en) 32 oder auf einer Pufferfläche 36 nahe der Entladevorrichtung(en) 32 durch ein oder mehrere autonom verfahrbare(s), fahrerlose(s) Transportfahrzeug(e) 9,
   - Entladen einer oder mehrerer der Transportladehilfe(n) 7, welche an der oder den automatisiert betriebenen Entladevorrichtung(en) 32 bereitgestellt wird (werden), durch Entnahme der für die Bearbeitung des genannten Kommissionierauftrages benötigten Warenträger 3, und
   - Zusammenstellung der Warenträger 3 auf einem oder mehreren Zielladehilfsmitteln 34 durch die Entladevorrichtung(en) 32 zum genannten Kommissionierauftrag, indem die Warenträger 3 oder der zumindest eine Warenträgerstapel 8 von der bereitgestellten Transportladehilfe(n) 7 durch die Entladevorrichtung 32 entnommen und von dieser auf das oder die Zielladehilfsmittel 34 übergeben wird / werden.

Die Bereitstellung von autonom verfahrbaren, fahrerlosen Transportfahrzeugen 9 gemäß Schritt i) kann die Bereitstellung von Transportfahrzeugen 9 umfassen, welche ausschließlich zum Transport der Transportladehilfe(n) 7 zwischen dem Anlieferbereich 4 (Beladestation) und dem Lagerbereich 5 verwendet werden, und die Bereitstellung von Transportfahrzeugen 9 umfassen, welche ausschließlich zum Transport der Transportladehilfe(n) 7 zwischen dem Lagerbereich 5 und dem Auftragsbearbeitungsbereich 6 (Entnahmestation) verwendet werden. Genauso gut kann Schritt i) aber auch die Bereitstellung von Transportfahrzeugen 9 umfassen, welche sowohl zum Transport der Transportladehilfe(n) 7 zwischen dem Anlieferbereich 4 (Beladestation) und dem Lagerbereich 5 als auch zum Transport der Transportladehilfe(n) 7 zwischen dem Lagerbereich 5 und dem Auftragsbearbeitungsbereich (Entnahmestation) verwendet werden.

Die Bereitstellung von Transportladehilfen 7 gemäß Schritt ii) kann die Bereitstellung von baugleichen Transportladehilfen 7 oder baulich unterschiedlichen Transportladehilfen 7 umfassen. Ebenso können im Kommissionierlager 1a baulich unterschiedliche Transportladehilfen 7 verwendet werden.

Der Schritt iii) kann einerseits die Bereitstellung vereinzelter Warenträgerstapel 8 ohne Paletten oder Rollcontainern (Anlieferladungsträger) umfassen.

Andererseits kann der Schritt iii) die Bereitstellung von Warenträgerstapeln 8 als Warenträgerstapelgruppen 10 auf Paletten oder Rollcontainern (Anlieferladungsträger) umfassen, welche zuvor einer Depalettierstation zugeführt werden, um die Warenträgerstapeln 8 aus einer Warenträgerstapelgruppe 10 zu vereinzeln.

Beispielsweise kann es sich um Warenträger 3 mit Obst oder Gemüse handeln, wobei eine erste Warenträgerstapelgruppe 10 eine erste Gemüsesorte und eine zweite Warenträgerstapelgruppe 10 eine zweite Gemüsesorte enthält.

Der Schritt iv) kann den Transport von leeren Transportladehilfen 7 durch die autonom verfahrbaren, fahrerlosen Transportfahrzeuge 9 zu einer Beladestation und unmittelbar die Bereitstellung einer leeren / von leeren Transportladehilfe(n) 7 an einer oder mehreren automatisiert betriebenen Beladevorrichtung(en) 13 umfassen.

Der Schritt iv) kann aber auch den Transport von leeren Transportladehilfen 7 durch die autonom verfahrbaren, fahrerlosen Transportfahrzeuge 9 zu einer Beladestation auf eine Pufferfläche 30 nahe der Beladevorrichtung(en) 13 und den Transport genannter leerer Transportladehilfe(n) 7 durch die autonom verfahrbaren, fahrerlosen Transportfahrzeuge 9 zu der / den Beladevorrichtung(en) 13 und Bereitstellung genannter leerer Transportladehilfe(n) 7 an einer oder mehreren automatisiert betriebenen Beladevorrichtung(en) 13 umfassen.

Die Bereitstellung einer leeren Transportladehilfe 7 an einer oder mehreren automatisiert betriebenen Beladevorrichtung(en) 13 gemäß Schritt iv) kann die Schritte umfassen:
- Abstellen der leeren Transportladehilfe 7 auf einem die betreffende Beladevorrichtung 13 aufweisenden Andienungsplatz 16a, 16b und Verweilen des Transportfahrzeuges 9 auf dem Andienungsplatz 16a, 16b während des Beladevorgangs der leeren Transportladehilfe 7 gemäß Schritt v), oder
- Abstellen der leeren Transportladehilfe 7 auf einem die betreffende Beladevorrichtung 13 aufweisenden Andienungsplatz 16a, 16b und danach Weiterfahrt des Transportfahrzeuges 9 vom Andienungsplatz 16a, 16b, daher noch vor dem Beginn oder noch während des Beladevorgangs der leeren Transportladehilfe 7 gemäß Schritt v).

Das Beladen der leeren Transportladehilfen 7 gemäß Schritt v) kann das Beladen einer der leeren Transportladehilfen 7 mit zumindest einem Warenträgerstapel 8 und/oder das Beladen einer der leeren Transportladehilfen 7 mit zumindest einem Warenträgerteilstapel 8 und/oder das Beladen einer der leeren Transportladehilfen 7 mit einzelnen Warenträgern 3 und/oder eine Kombination daraus umfassen.

Der Schritt ix) kann den Transport von beladenen Transportladehilfen 7 durch die autonom verfahrbaren, fahrerlosen Transportfahrzeuge 9 vom Lagerbereich 5 (gegebenenfalls aber auch von der Beladestation im Andienungsbereich 4) zu einer Entladestation und unmittelbar die Bereitstellung einer beladenen / von beladenen Transportladehilfe(n) 7 an einer oder mehreren automatisiert betriebenen Entladevorrichtung(en) 32 umfassen.

Der Schritt ix) kann aber auch den Transport von beladenen Transportladehilfen 7 durch die autonom verfahrbaren, fahrerlosen Transportfahrzeuge 9 vom Lagerbereich 5 (gegebenenfalls aber auch von der Beladestation im Andienungsbereich 4) zu einer Entladestation auf eine Pufferfläche 36 nahe der Entladevorrichtung(en) 32 und den Transport genannter beladener Transportladehilfe(n) 7 durch die autonom verfahrbaren, fahrerlosen Transportfahrzeuge 9 von der Pufferfläche 36 zu der / den Entladevorrichtung(en) 32 und Bereitstellung genannter beladener Transportladehilfe(n) 7 an einer oder mehreren automatisiert betriebenen Entladevorrichtung(en) 32 umfassen.

Die Transportfahrzeuge 9 können vom Leitrechner derart angesteuert, dass dieses an der Entladestation in einer durch die Packordnung der Warenträger 3 am Zielladehilfsmittel 34 vorgesehenen Reihenfolge ankommen. Dadurch wird eine Sequenzierung der Transportladehilfen 7 bzw. Warenträgerstapel 8 erreicht.

Die Bereitstellung einer beladenen Transportladehilfe(n) 7 an einer oder mehreren automatisiert betriebenen Entladevorrichtung(en) 32 gemäß Schritt ix) kann die Schritte umfassen:
- Abstellen der beladenen Transportladehilfe(n) 7 auf einem die betreffende Entladevorrichtung 32 aufweisenden Andienungsplatz 40a..40b und Verweilen des Transportfahrzeuges 9 auf dem Andienungsplatz 40a..40b während des Entladungsvorgangs der beladenen Transportladehilfe(n) 7 gemäß Schritt ix), oder
- Abstellen der beladenen Transportladehilfe(n) 7 auf einem die betreffende Entladevorrichtung 32 aufweisenden Andienungsplatz 40a..40b und danach Weiterfahrt des Transportfahrzeuges 9 vom Andienungsplatz 40a..40b, daher noch vor dem Beginn oder noch während des Entladungsvorgangs der beladenen Transportladehilfe(n) 7 gemäß Schritt ix).

Im Nachfolgenden wird das Verfahren zum Lagern und Kommissionieren von Waren 2 enthaltenden und stapelbaren Warenträgern 3 im Kommissionierlager 1b (zweite Ausführung) beschrieben.

Das Verfahren umfasst die Schritte i) bis viii), wie oben beschrieben und den Schritt:
ix) Bearbeitung eines Kommissionierauftrages umfassend die Schritte
- Transport einer oder von mehreren die zu einem Kommissionierauftrag benötigten Warenträger 3 enthaltenden Transportladehilfe(n) 7 vom Lagerbereich 5 zu einer Entladestation und Bereitstellung genannter Transportladehilfe(n) 7 entweder an einer oder mehreren automatisiert betriebenen Entladevorrichtung(en) 65 oder auf einer Pufferfläche 66 nahe der Entladevorrichtung(en) 65 durch ein oder mehrere autonom verfahrbare(s), fahrerlose(s) Transportfahrzeug(e) 9,
- Entladen einer oder mehrerer der Transportladehilfe(n) 7, welche an der oder den automatisiert betriebenen Entladevorrichtung(en) 65 bereitgestellt wird (werden), durch Entnahme der für die Bearbeitung des genannten Kommissionierauftrages benötigten Warenträger 3, und
- Zusammenstellung der Warenträger 3 auf einem oder mehreren Zielladehilfsmitteln 34 durch die Entladevorrichtung(en) 32 zum genannten Kommissionierauftrag, indem die Zusammenstellung der Warenträger 3 zum genannten Kommissionierauftrag derart durchgeführt wird, dass die an der oder den Entladevorrichtung(en) 65 aus dem Warenträgerstapel 8 entnommenen Warenträger 3 oder der wenigstens eine an der oder die an den Entladevorrichtung(en) 65 entnommene(n) Warenträgerstapel 8 von der bereitgestellten Transportladehilfe(n) 7 auf eine ortsfeste Fördertechnik abgegeben und der Warenträger 3 oder Warenträgerstapel 8 durch die Fördertechnik von der oder den Entladevorrichtung(en) 65 zu der / den Umladevorrichtung(en) 32 transportiert wird (werden) und anschließend durch die Umladevorrichtung(en) 32 von der ortsfesten Fördertechnik übernommen und von dieser / diesen auf das oder die Zielladehilfsmittel 34 übergeben wird / werden.
   Die ortsfeste Fördertechnik ist dabei zwischen der Entladestation mit der wenigstens einen automatisiert betriebenen Entladevorrichtung 65 und der Umladestation mit der wenigstens einen automatisiert betriebenen Umladevorrichtung 32 (Palettierung) angeordnet ist.
   Beim Entladen durch die betreffende Entladevorrichtung 65 werden aus dem Warenträgerstapel 8 einzelne Warenträger 3 oder ein (sortenreiner) Warenträgerteilstapel entnommen.
   Die Warenträger 3 können nacheinander auf die ortsfeste Fördertechnik abgegeben und als vereinzelte Warenträger 3 transportiert werden. Dabei können in vorteilhafter Weise die Warenträger 3 in einer durch die Packordnung der Warenträger 3 am Zielladehilfsmittel 34 vorgesehenen Reihenfolge nacheinander auf die ortsfeste Fördertechnik abgegeben und in dieser Reihenfolge aufeinanderfolgend zur wenigstens einen Umladevorrichtung 32 transportiert werden.
   Hingegen können zu einem Kommissionierauftrag benötigte Warenträger 3 auch auf der ortsfesten Fördertechnik gestapelt und vorkommissionierte Warenträgerteilstapel 8" oder Warenträgerstapel 8' von der Entladevorrichtung 65 oder den Entladevorrichtungen 65 zur Umladevorrichtung 32 oder Umladevorrichtungen 32 transportiert werden, wie in Fig. 7a beispielhaft eingetragen. Dabei können in vorteilhafter Weise die Warenträger 3 in einer durch die Packordnung der Warenträger 3 am Zielladehilfsmittel 34 vorgesehenen Reihenfolge auf die ortsfeste Fördertechnik derart abgegeben werden, dass wenigstens ein (vorkommissionierter) Warenträgerteilstapel 8" oder Warenträgerstapel 8' aus mehreren übereinander angeordneten Warenträgern 3 zusammengestellt wird, welcher anschließend zur wenigstens einen Umladevorrichtung 32 transportiert wird.
   Diese Packordnung kann durch einen Rechner festgelegt werden und berücksichtigt beispielweise die Stabilität des Warenträgers 3 und/oder die Abmessungen der Warenträger und/oder das Gewicht der Waren 2 / Warenträger 3. Schwere Warenträger 3 werden am Zielladehilfsmittel 34 unten im Stapel untergebracht, leichte Warenträger 3 hingegen oben im Stapel. Behälter werden im Stapel unten angeordnet, Kartons oben im Stapel. Das Steuerungssystem 47 kann diesen Rechner umfassen.

Der Schritt ix) kann den Transport von beladenen Transportladehilfen 7 durch die autonom verfahrbaren, fahrerlosen Transportfahrzeuge 9 vom Lagerbereich 5 (gegebenenfalls aber auch von der Beladestation im Andienungsbereich 4) zu einer Entladestation und unmittelbar die Bereitstellung einer beladenen / von beladenen Transportladehilfe(n) 7 an einer oder mehreren automatisiert betriebenen Entladevorrichtung(en) 65 umfassen.

Der Schritt ix) kann aber auch den Transport von beladenen Transportladehilfen 7 durch die autonom verfahrbaren, fahrerlosen Transportfahrzeuge 9 vom Lagerbereich 5 (gegebenenfalls aber auch von der Beladestation im Andienungsbereich 4) zu einer Entladestation auf eine Pufferfläche 66 nahe der Entladevorrichtung(en) 65 und den Transport genannter beladener Transportladehilfe(n) 7 durch die autonom verfahrbaren, fahrerlosen Transportfahrzeuge 9 zu der / den Entladevorrichtung(en) 65 und Bereitstellung genannter beladener Transportladehilfe(n) 7 an einer oder mehreren automatisiert betriebenen Entladevorrichtung(en) 65 umfassen.

Die Bereitstellung einer beladenen Transportladehilfe(n) 7 an einer oder mehreren automatisiert betriebenen Entladevorrichtung(en) 65 gemäß Schritt ix) kann die Schritte umfassen:
- Abstellen der beladenen Transportladehilfe(n) 7 auf einem die betreffende Entladevorrichtung 65 aufweisenden Andienungsplatz 67a, 67b und Verweilen des Transportfahrzeuges 9 auf dem Andienungsplatz 67a, 67b während des Entladungsvorgangs der beladenen Transportladehilfe(n) 7 gemäß Schritt ix), oder
- Abstellen der beladenen Transportladehilfe(n) 7 auf einem die betreffende Entladevorrichtung 65 aufweisenden Andienungsplatz 67a, 67b und danach Weiterfahrt des Transportfahrzeuges 9 vom Andienungsplatz 67a, 67b, daher noch vor dem Beginn oder noch während des Entladungsvorgangs der beladenen Transportladehilfe(n) 7 gemäß Schritt ix).

Im Nachfolgenden wird das Verfahren zum Lagern und Kommissionieren von Waren 2 enthaltenden und stapelbaren Warenträgern 3 im Kommissionierlager 1c (dritte Ausführung) beschrieben.

Das Verfahren umfasst die Schritte i) bis viii), wie oben beschrieben und den Schritt:
ix) Bearbeitung eines Kommissionierauftrages umfassend die Schritte
- Transport einer oder von mehreren die zu einem Kommissionierauftrag benötigten Warenträger 3 enthaltenden Transportladehilfe(n) 7 vom Lagerbereich 5 zu einer Entladestation und Bereitstellung genannter Transportladehilfe(n) 7 entweder an einer oder mehreren automatisiert betriebenen Entladevorrichtung(en) 75 oder auf einer Pufferfläche 66 nahe der Entladevorrichtung(en) 75 durch ein oder mehrere autonom verfahrbare(s), fahrerlose(s) Transportfahrzeug(e) 9,
- Entladen einer oder mehrerer der Transportladehilfe(n) 7, welche an der oder den automatisiert betriebenen Entladevorrichtung(en) 75 bereitgestellt wird (werden), durch Entnahme der für die Bearbeitung des genannten Kommissionierauftrages benötigten Warenträger 3, und
- Zusammenstellung der Warenträger 3 auf einem oder mehreren Zielladehilfsmitteln 34 durch die Entladevorrichtung(en) 32 zum genannten Kommissionierauftrag, indem die Zusammenstellung der Warenträger 3 zum genannten Kommissionierauftrag derart durchgeführt wird, dass die an der oder den Entladevorrichtung(en) 75 aus dem Warenträgerstapel 8 entnommenen Warenträger 3 oder der wenigstens eine an der oder die an den Entladevorrichtung(en) 75 entnommene(n) Warenträgerstapel 8 von der bereitgestellten (ersten) Transportladehilfe(n) 7 auf wenigstens eine die Transportladehilfen 7 umfassende mobile leere (zweite) Transportladehilfe 7 abgegeben, und die wenigstens eine beladene (zweite) Transportladehilfe 7k mit dem Warenträger 3 oder (vorkommissionierten) Warenträgerstapel 8' mit einem autonom verfahrbaren, fahrerlosen Transportfahrzeug 9 von der oder den Entladevorrichtung(en) 75 zu der / den Umladevorrichtung(en) 32 transportiert wird (werden) und anschließend durch die Umladevorrichtung(en) 32 von der / den (zweiten) Transportladehilfe(n) 7 übernommen und von dieser / diesen auf das oder die Zielladehilfsmittel 34 übergeben wird / werden.
   Die zu einem Kommissionierauftrag benötigten Warenträger 3 können auch auf der (zweiten) Transportladehilfe(n) 7 gestapelt und die (zweite) Transportladehilfe(n) 7 mit dem vorkommissionierten Warenträgerstapel 8' von der Entladevorrichtung 75 oder den Entladevorrichtungen 75 zur Umladevorrichtung 32 oder Umladevorrichtungen 32 transportiert werden. Dabei können in vorteilhafter Weise die Warenträger 3 in einer durch die Packordnung der Warenträger 3 am Zielladehilfsmittel 34 vorgesehenen Reihenfolge auf die (zweite) Transportladehilfe(n) 7 abgegeben werden.
   Diese Packordnung kann durch einen Rechner festgelegt werden und berücksichtigt beispielweise die Stabilität des Warenträgers 3 und/oder die Abmessungen der Warenträger und/oder das Gewicht der Waren 2 / Warenträger 3. Schwere Warenträger 3 werden am Zielladehilfsmittel 34 unten im Stapel untergebracht, leichte Warenträger 3 hingegen oben im Stapel. Behälter werden im Stapel unten angeordnet, Kartons oben im Stapel. Das Steuerungssystem 47 kann diesen Rechner umfassen.

Der Schritt ix) kann den Transport von beladenen (ersten) Transportladehilfen 7 durch die autonom verfahrbaren, fahrerlosen Transportfahrzeuge 9 zu einer Entladestation und unmittelbar die Bereitstellung einer beladenen / von beladenen (ersten) Transportladehilfe(n) 7 an einer oder mehreren automatisiert betriebenen Entladevorrichtung(en) 75 umfassen.

Der Schritt ix) kann aber auch den Transport von beladenen (ersten) Transportladehilfen 7 durch die autonom verfahrbaren, fahrerlosen Transportfahrzeuge 9 zu einer Entladestation auf eine Pufferfläche 76 nahe der Entladevorrichtung(en) 75 und den Transport genannter beladener (erster) Transportladehilfe(n) 7j durch die autonom verfahrbaren, fahrerlosen Transportfahrzeuge 9 von der Pufferfläche 76 zu der / den Entladevorrichtung(en) 75 und Bereitstellung genannter beladener Transportladehilfe(n) 7 an einer oder mehreren automatisiert betriebenen Entladevorrichtung(en) 75 umfassen.

Die Transportfahrzeuge 9 können vom Leitrechner derart angesteuert, dass dieses an der Entladestation in einer durch die Packordnung der Warenträger 3 am Zielladehilfsmittel 34 vorgesehenen Reihenfolge ankommen. Dadurch wird eine Sequenzierung der (zweiten) Transportladehilfen 7 bzw. Warenträgerstapel 8' erreicht.

Die Bereitstellung einer beladenen (ersten) Transportladehilfe(n) 7 an einer oder mehreren automatisiert betriebenen Entladevorrichtung(en) 75 gemäß Schritt ix) kann die Schritte umfassen:
- Abstellen der beladenen (ersten) Transportladehilfe(n) 7 auf einem die betreffende Entladevorrichtung 75 aufweisenden Andienungsplatz 77a, 77b und Verweilen des Transportfahrzeuges 9 auf dem Andienungsplatz 77a, 77b während des Entladungsvorgangs der beladenen (ersten) Transportladehilfe(n) 7 gemäß Schritt ix), oder
- Abstellen der beladenen (ersten) Transportladehilfe(n) 7 auf einem die betreffende Entladevorrichtung 75 aufweisenden Andienungsplatz 77a, 77b und danach Weiterfahrt des Transportfahrzeuges 9 vom Andienungsplatz 77a, 77b, daher noch vor dem Beginn oder noch während des Entladungsvorgangs der beladenen (ersten) Transportladehilfe(n) 7 gemäß Schritt ix).

Die Bereitstellung einer leeren (zweiten) Transportladehilfe(n) 7 an einer oder mehreren automatisiert betriebenen Entladevorrichtung(en) 75 gemäß Schritt ix) kann die Schritte umfassen:
- Abstellen der leeren (zweiten) Transportladehilfe(n) 7 auf einem die betreffende Entladevorrichtung 75 aufweisenden Andienungsplatz 77a, 77b und Verweilen des Transportfahrzeuges 9 auf dem Andienungsplatz 77a, 77b während des Beladevorgangs der leeren (zweiten) Transportladehilfe(n) 7 gemäß Schritt ix), oder
- Abstellen der leeren (zweiten) Transportladehilfe(n) 7 auf einem die betreffende Entladevorrichtung 75 aufweisenden Andienungsplatz 77a, 77b und danach Weiterfahrt des Transportfahrzeuges 9 vom Andienungsplatz 77a, 77b, daher noch vor dem Beginn oder noch während des Entladungsvorgangs der leeren (zweiten) Transportladehilfe(n) 7 gemäß Schritt ix).

Die Bereitstellung einer beladenen (zweiten) Transportladehilfe(n) 7 an einer oder mehreren automatisiert betriebenen Entladevorrichtung(en) 32 gemäß Schritt ix) kann die Schritte umfassen:
- Abstellen der beladenen (zweiten) Transportladehilfe(n) 7 auf einem die betreffende Entladevorrichtung 32 aufweisenden Andienungsplatz 40a..40b und Verweilen des Transportfahrzeuges 9 auf dem Andienungsplatz 40a..40b während des Entladungsvorgangs der beladenen (zweiten) Transportladehilfe(n) 7 gemäß Schritt ix), oder
- Abstellen der beladenen (zweiten) Transportladehilfe(n) 7 auf einem die betreffende Entladevorrichtung 32 aufweisenden Andienungsplatz 40a..40b und danach Weiterfahrt des Transportfahrzeuges 9 vom Andienungsplatz 40a..40b, daher noch vor dem Beginn oder noch während des Entladungsvorgangs der beladenen (zweiten) Transportladehilfe(n) 7 gemäß Schritt ix).

Das Verfahren zum Lagern und Kommissionieren von Waren 2 im Kommissionierlager 1c kann zusätzlich die Schritte umfassen
- Erfassen von Kommissionieraufträgen an einem Auftragsrechner 46,
- Bestimmen der zu einem der Kommissionieraufträge benötigten Waren (Bedarf),
- Analyse eines Lagerbestandes zu jenen Waren 2, welche für den genannten Kommissionierauftrag benötigt werden, welcher Kommissionierauftrag einen oder mehrere die Ware 2 enthaltenden ersten Warenträger 3 und einen oder mehrere die Ware enthaltenden zweiten Warenträger 3 umfasst, und
- Zusammenstellung der Warenträger 3 zum genannten Kommissionierauftrag in aufeinander folgenden Kommissionierschritten, sofern eine Bedarfsmenge zu einer Ware 2 den Lagerbestand zu dieser Ware 2 überschreitet, wobei
   i) in einem ersten Kommissionierschritt an der Entladevorrichtung 75 die (zweite) Transportladehilfe 7 mit einem oder mehreren ersten Warenträger 3 beladen wird, und anschließend diese (zweite) Transportladehilfe 7 mit einem autonom verfahrbaren, fahrerlosen Transportfahrzeug 9 von der Entladevorrichtung 75 zu einer Pufferfläche 76 transportiert und dort gepuffert wird, und
   ii) in einem zweiten Kommissionierschritt die (zweite) Transportladehilfe 7 mit einem autonom verfahrbaren, fahrerlosen Transportfahrzeug 9 von der Pufferfläche 76 zu der Entladevorrichtung 75 transportiert und dort bereitgestellt wird, sofern eine Bedarfsmenge zu einer Ware 2 den Lagerbestand zu dieser Ware 2 unterschreitet, und anschließend die (zweite) Transportladehilfe 7 mit einem oder mehreren zweiten Warenträger 3 beladen wird, und
- Transport der (zweiten) Transportladehilfe 7 nach Durchführung der Schritte i) und ii) mit einem autonom verfahrbaren, fahrerlosen Transportfahrzeug 9 von der Entladevorrichtung 75 zur Umladevorrichtung 32, und
- Übergabe des Warenträgerstapels 8, 8' durch die Umladevorrichtung 32 auf ein Zielladehilfsmittel 34.

Das Verfahren zum Lagern und Kommissionieren von Waren 2 im Kommissionierlager 1a, 1b, 1c kann zusätzlich einen der Schritte x) umfassen
- Rücktransport einer Transportladehilfe 7 nach der Entnahme der Warenträger 3 von der Entladestation zurück in den Lagerbereich 5, sollten nicht alle Warenträger 3 aus der genannten Transportladehilfe 7 entnommen worden sein, oder
- Transport einer Transportladehilfe 7 nach der Entnahme der Warenträger 3 von einer ersten Entladevorrichtung 32; 65; 75 zu einer zweiten Entladevorrichtung 32; 65; 75, sollten nicht alle Warenträger 3 aus der genannten Transportladehilfe 7 entnommen worden sein und sollten diese Warenträger 3 zu einem Kommissionierauftrag an der zweiten Entladevorrichtung 32; 65; 75 benötigt werden, oder
- Transport einer Transportladehilfe 7 nach der Entnahme der Warenträger 3 von der Entladevorrichtung 32; 65; 75 zu einer Wartezone 37 in der Entladestation 32; 65; 75, sollten nicht alle Warenträger 3 aus der genannten Transportladehilfe 7 entnommen worden sein und sollten diese Warenträger 3 zu einem bereits avisierten Kommissionierauftrag an der genannten Entladevorrichtung 32; 65; 75 oder einer der Entladevorrichtungen 32; 65; 75 benötigt werden, oder
- Rücktransport einer (leeren) Transportladehilfe 7 nach der Entnahme des Warenträgerstapels 8; 8' zu der Beladestation und Bereitstellung der Transportladehilfe 7 entweder an der automatisiert betriebenen Beladevorrichtung 13 oder auf der Pufferfläche 30, sollten alle Warenträger 3 aus der genannten Transportladehilfe 7 entnommen worden sein.

Das Verfahren zum Lagern und Kommissionieren von Waren 2 im Kommissionierlager 1a, 1b, 1c kann zusätzlich die Schritte umfassen
- Bereitstellung eines Reinigungssystems mit einem automatisiert betriebenen Reinigungsroboter 90 (wie schematisch in Fig. 1 eingetragen),
- Reinigung der Transportladehilfen 7 und/oder des Bodens in der Beladestation und/oder Entladestation (daher der Andienungsplätze 16a, 16b, 40a, 40b, 71a, 71b, 77a, 77b, die Pufferfläche 36, 67, 76 und gemäß der ersten Ausführung der Wartezone 37) und Lagerfläche 31 im Lagerbereich 5 mit dem Reinigungsroboter 90.

Wie ausschließlich in Fig. 1 eingetragen und am Beispiel des ersten Kommissioniersystems 1a erläutert, kann das Verfahren zum Lagern und Kommissionieren von Waren 2 zusätzlich die Schritte umfassen
- Bereitstellung einer ersten Temperaturzone 91a im Lagerbereich 5, in welchem die Transportladehilfen 7 mit dem zumindest einen Warenträgerstapel 8 aus übereinander angeordneten Warenträgern 3 enthaltend Waren 2 einer ersten Warengruppe,
- Bereitstellung einer zweiten Temperaturzone 91b im Lagerbereich 5, in welchem die Transportladehilfen 7 mit dem zumindest einen Warenträgerstapel 8 aus übereinander angeordneten Warenträgern 6 enthaltend Waren 2 einer zweiten Warengruppe,
- Definition einer ersten Warengruppe und einer zweiten Warengruppe, welcher ersten Warengruppe Waren 2 einer ersten Lagertemperatur zugeordnet sind und welcher zweiten Warengruppe Waren 2 einer zweiten Lagertemperatur zugeordnet sind, und Erfassen von Daten enthaltend Daten über die erste Warengruppe, insbesondere eine erste Lagertemperatur für die Waren 2, und die zweite Warengruppe, insbesondere eine zweite Lagertemperatur für die Waren 2, an einem Rechner (welcher mit dem Steuerungssystem 47 verbunden ist),
- Identifizierung der Warenträger 3 und/oder Warenträgerstapel 8 und/oder Transportladehilfen 7 mittels einer (nicht dargestellten) im Anlieferbereich 4 vorgesehenen Erfassungsvorrichtung durch Lesen eines (ausschließlich in Fig. 4b eingetragenen) Datenträgers 92a, 92b, 92c (RFID, Barcode), welcher Datenträger 92a, 92b, 92c jeweils auf den Warenträgern 3 und/oder Warenträgerstapeln 8 und/oder Transportladehilfen 7 angebracht ist,
- Selektiver Transport der jeweils mit zumindest einem Warenträgerstapel 8 an der Beladestation im Schritt v) beladenen (ersten) Transportladehilfen 7 mit den autonom verfahrbaren, fahrerlosen Transportfahrzeugen 9 entweder in die erste Temperaturzone 91a oder zweite Temperaturzone 91b,
- Lagerung der (ersten) Transportladehilfen 7 mit dem zumindest einen Warenträgerstapel 8 aus übereinander angeordneten Warenträgern 3 enthaltend Waren 2 der ersten Warengruppe in der ersten Temperaturzone 91a,
- Lagerung der (ersten) Transportladehilfen 7 mit dem zumindest einen Warenträgerstapel 8 aus übereinander angeordneten Warenträgern 3 enthaltend Waren 2 der zweiten Warengruppe in der zweiten Temperaturzone 91b.

Das Verfahren zum Lagern und Kommissionieren von Waren 2 kann zusätzlich die Schritte umfassen
- Transport einer oder von mehreren die zu einem ersten Kommissionierauftrag benötigten Warenträger 3 enthaltenden Transportladehilfe(n) 7 von der ersten Temperaturzone 91a und Transport einer oder von mehreren die zu einem zweiten Kommissionierauftrag benötigten Warenträger 3 enthaltenden Transportladehilfe(n) 7 von der zweiten Temperaturzone 91b zur Entladestation mit einer gemeinsam genutzten, automatisiert betriebenen Entladevorrichtung 32; 65; 75,
- Bereitstellung genannter Transportladehilfe(n) 7 zum ersten Kommissionierauftrag entweder an der automatisiert betriebenen Entladevorrichtung 32; 65; 75 oder auf einer Pufferfläche 36; 66; 76 nahe der Entladevorrichtung 32; 65; 75 durch das (die) autonom verfahrbare(n), fahrerlose(n) Transportfahrzeug(e) 9,
- Bereitstellung genannter Transportladehilfe(n) 7 zum zweiten Kommissionierauftrag entweder an der automatisiert betriebenen Entladevorrichtung 32; 65; 75 oder auf einer Pufferfläche 36; 66; 76 nahe der Entladevorrichtung 32; 65; 75 durch das (die) autonom verfahrbare(n), fahrerlose(n) Transportfahrzeug(e) 9,
- Sequentielle Zusammenstellung von Warenträgerstapeln 8 auf einem ersten Zielladehilfsmittel 34 (Ausgangseinheit) mit mehreren Warenträgerstapeln 8 aus übereinander angeordneten Warenträgern 3 enthaltend Waren 2 einer ersten Warengruppe, und Zusammenstellung von Warenträgerstapeln 8 auf einem zweiten Zielladehilfsmittel 34 (Ausgangseinheit) mit mehreren Warenträgerstapeln 8 aus übereinander angeordneten Warenträgern 3 enthaltend Waren 2 einer zweiten Warengruppe an der Entnahmestation mit einer gemeinsam genutzten, automatisiert betriebenen Entnahmevorrichtung 65; 75 und/oder Umladestation mit einer gemeinsam genutzten, automatisiert betriebenen Umladevorrichtung 32.

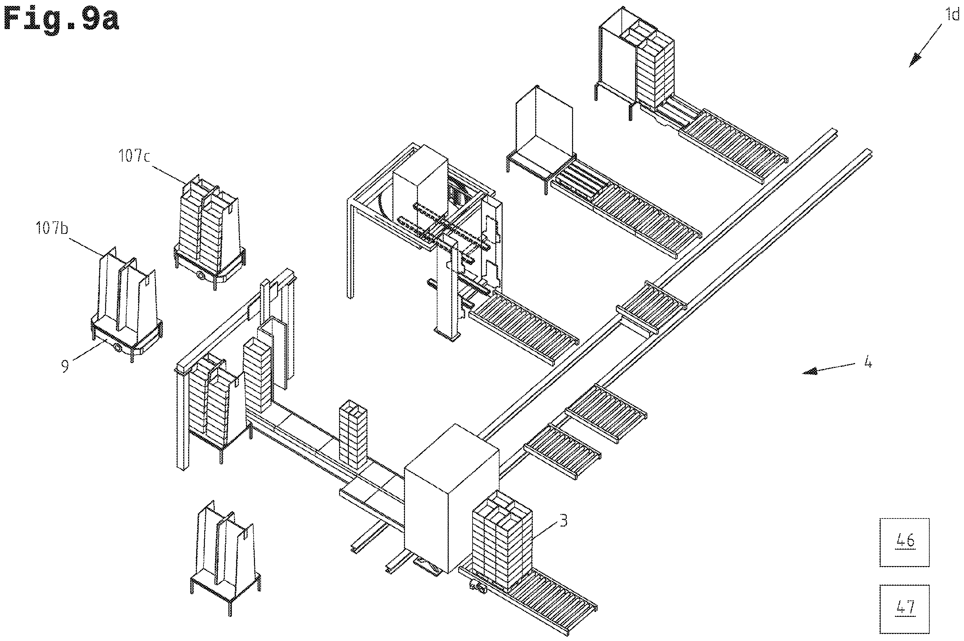

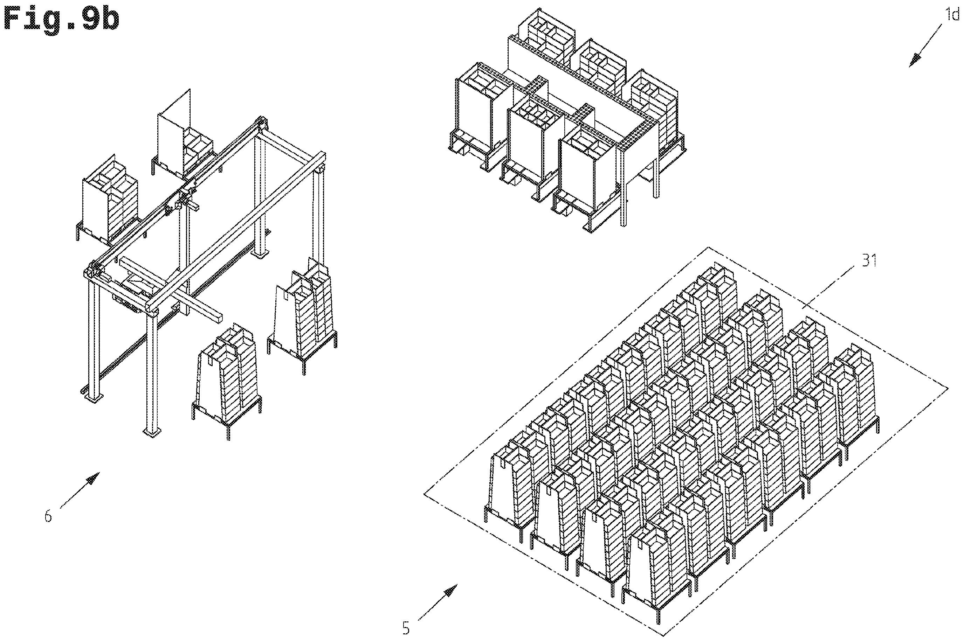

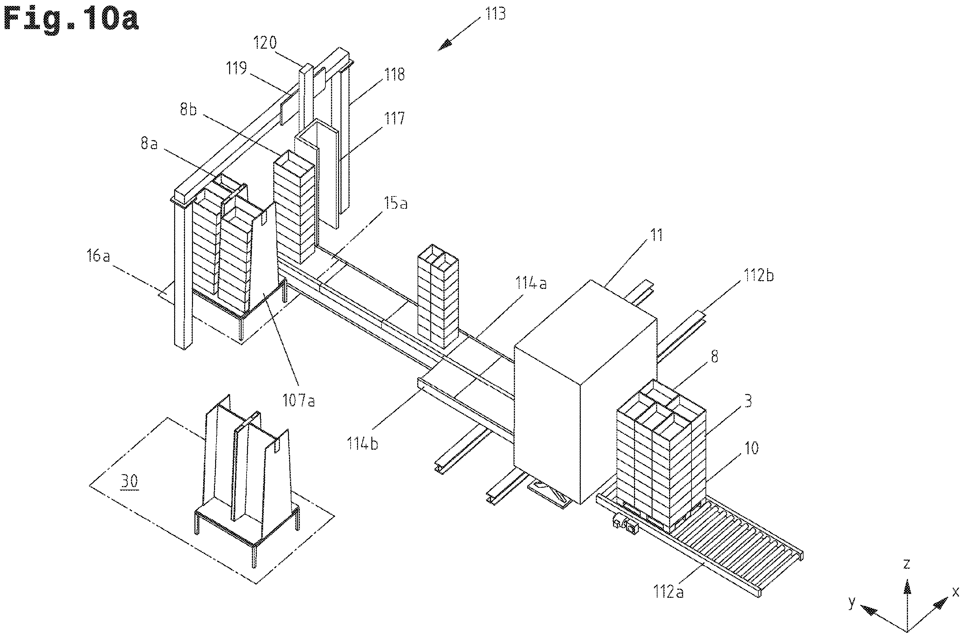

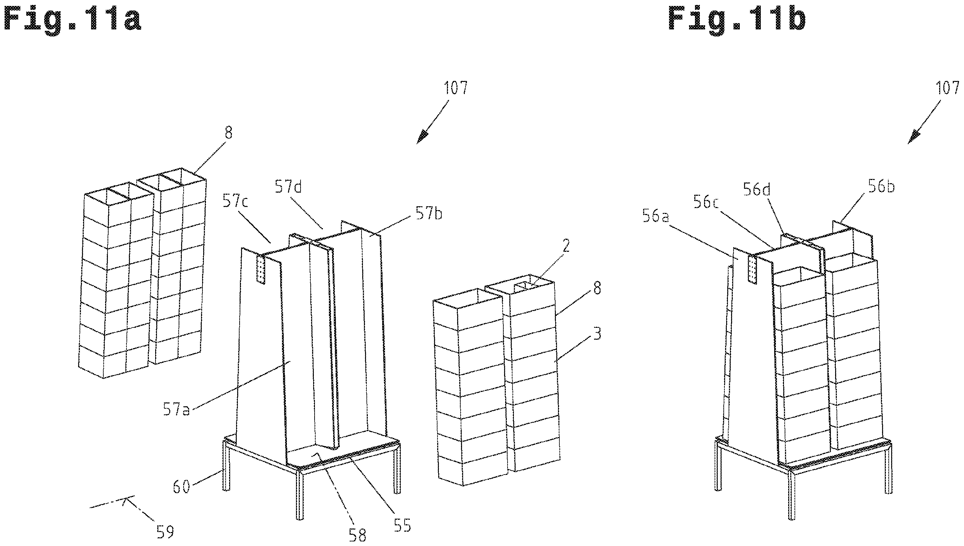

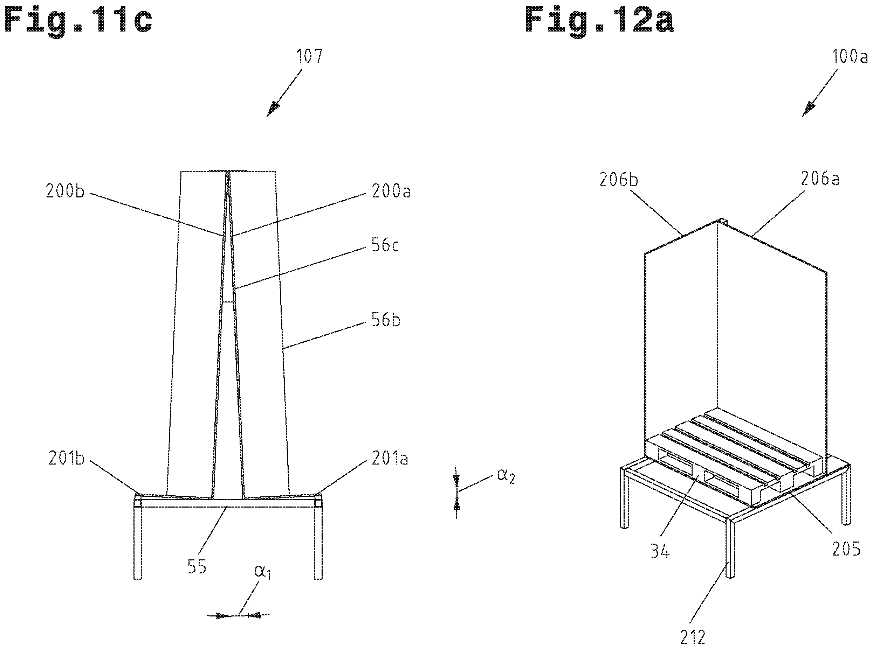

In den Fig. 9a und 9b ist eine vierte Ausführung eines Kommissionierlagers 1d zum Lagern und Kommissionieren von Waren 2 (wie aus Gründen der besseren Übersicht ausschließlich in Fig. 11a eingetragen) enthaltenden und stapelbaren Warenträgern 3 gezeigt. Die Fig. 10a bis 10d zeigen einzelne Ausschnitte aus dem Kommissionierlager 1d. Das Kommissionierlager 1d umfasst ebenso einen Anlieferbereich 4, einen Lagerbereich 5, einen Auftragsbearbeitungsbereich 6, eine Vielzahl an Transportladehilfen 107 jeweils zur Aufnahme und Lagestabilisierung wenigstens eines Warenträgerstapels 8 und eine Vielzahl an autonom verfahrbaren, fahrerlosen Transportfahrzeugen 9 zum Transport von Transportladehilfen 107. Der Warenträgerstapel 8 ist aus mehreren übereinander angeordneten (gestapelten) Warenträgern 3 gebildet. Im Gegensatz zur ersten, zweiten und dritten Ausführung nach den Fig. 1 bis 8, 8a umfasst das Kommissionierlager 1d zusätzlich Stapelladehilfen jeweils zur Lagestabilisierung eines aus den Warenträgern 3 gemäß einem Kommissionierauftrag zusammengestellten Auftragsstapels 101, wie sie in Fig. 12a bis 12c näher gezeigt sind. Es sei erwähnt, dass auch die erste, zweite und dritte Ausführung des Kommissionierlagers 1a, 1b, 1c derartige Stapelladehilfen umfassen können.

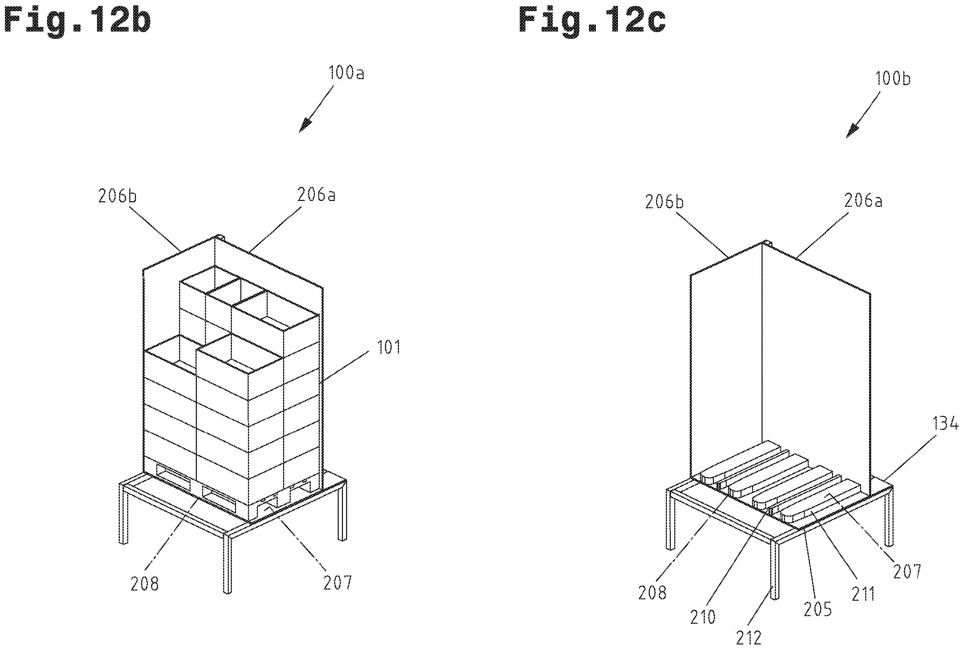

Die Stapelladehilfen umfassen entweder erste Stapelladehilfen 100a (Fig. 12a - zeigt eine unbeladene Stapelladehilfe und Fig. 12b - zeigt eine beladene Stapelladehilfe) oder zweite Stapelladehilfen 100b (Fig. 12c - zeigt eine unbeladene Stapelladehilfe). Möglich ist auch, dass die Stapelladehilfen sowohl erste Stapelladehilfen 100a und zweite Stapelladehilfen 100b umfassen.

In dem in den Fig. 9a, 9b, 10a bis 10d gezeigten Kommissionierlager 1d werden Stapelladehilfen verwendet, welche die ersten Stapelladehilfen 100a (siehe Fig. Fig. 12a) umfassen, welche mit dem Zielladehilfsmittel 34, beispielweise einer Palette, beladen werden.

Werden anstatt der ersten Stapelladehilfen 100a im Kommissionierlager 1d die zweiten Stapelladehilfen 100b (siehe Fig. Fig. 12c) eingesetzt, bildet die zweite Stapelladehilfe 100b das Zielladehilfsmittel 134. In diesem Fall kann die nachfolgend beschriebene Bestückungsstation entfallen. Im Gegensatz zu oben genannten Ausführung, wo die erste Stapelladehilfe 100a mit dem Zielladehilfsmittel 34 ausgestattet wird, ist nach dieser Ausführung ein zusätzliches Zielladehilfsmittel 34 nicht vorgesehen.

Auch erweist sich die Transportladehilfe 107 von Vorteil, wie sie in Fig. 11a bis 11c näher gezeigt ist.

Wie in Fig. 9a schematisch eingetragen, umfasst das Kommissionierlager 1d ebenso den Auftragsrechner 46 zum Erfassen von Kommissionieraufträgen und zum Bestimmen von Waren 2, welche für den Kommissionierauftrag benötigt werden. Dabei umfasst ein Kommissionierauftrag eine Auftragszeile (beispielweise sechs Warenträger 3 mit einer ersten Ware 2) oder mehrere Auftragszeilen (beispielweise drei Warenträger 3 mit einer ersten Ware 2 und drei Warenträger 3 mit einer zweiten Ware 2), wie oben beschrieben.

Im Anlieferbereich 4 ist die Bereitstellung von Warenträgerstapeln 8 vorgesehen, wie oben umfassend beschrieben. Nach gezeigter Ausführung werden die Warenträgerstapeln 8 als Warenträgerstapelgruppe 10 auf Paletten (Anlieferladungsträger) in den Anlieferbereich 4 angeliefert. In diesem Fall wird eine Warenträgerstapelgruppe 10 einer Depalettierstation zugeführt, in welcher Warenträgerstapel 8 aus mehreren übereinander angeordneten Warenträgern 3 aus einer Warenträgerstapelgruppe 10 vereinzelt werden. Solche Warenträgerstapelgruppe 10 sind zumeist aus sortenreinen Warenträgerstapel 8 zusammengestellt.

Fig. 9a und 10a zeigen eine mögliche Ausführung, bei der im Anlieferbereich 4 eine Depalettierstation mit zumindest einer automatisiert betriebenen (schematisch angedeuteten) Depalettiervorrichtung 11, eine an die Depalettiervorrichtung 11 anschließende erste Fördervorrichtung 112a zum Antransport von Warenträgerstapelgruppen 10 (Wareneingangseinheiten), eine an die Depalettiervorrichtung 11 anschließende zweite Fördervorrichtung 112b zum Abtransport von Anlieferladungsträgern, eine Beladestation mit zumindest einer automatisiert betriebenen (schematisch angedeuteten) ersten Beladevorrichtung 113, eine die Depalettiervorrichtung 11 mit der ersten Beladevorrichtung 113 fördertechnisch verbindende dritte Fördervorrichtung 114a zum Antransport von Warenträgerstapeln 8 und/oder eine die Depalettiervorrichtung 11 mit der Beladevorrichtung 113 fördertechnisch verbindende vierte Fördervorrichtung 114b zum Antransport von Warenträgerstapeln 8 vorgesehen sind. Die vierte Fördervorrichtung 114b zum Antransport von Warenträgerstapeln 8 ist optional und kann auch entfallen.

Wie nicht näher dargestellt, kann zwischen der Depalettiervorrichtung 11 und der Beladevorrichtung 113 eine Drehvorrichtung vorgesehen werden, welche die Warenträgerstapel 8 um 90° dreht, damit die Warenträgerstapel 8 an der Beladevorrichtung 113 stets in derselben Ausrichtung bereitgestellt werden, unabhängig davon wie die Warenträgerstapel 8 bzw. Warenträger 3 angeliefert werden.

Die Warenträgerstapel 8 werden "unverändert" an der Beladevorrichtung 113 in einer Übergabeposition bereitgestellt. Der Übergabeplatz 15a ist vorzugsweise auf der dritten Fördervorrichtung 114a ausgebildet.

Wie im Nachfolgenden beschrieben, umfasst die Beladestation eine oder mehrere automatisiert betriebene (schematisch angedeutete) erste Beladevorrichtung(en) 113.

Die schematisch gezeigte erste Beladevorrichtung 113 umfasst zumindest einen ersten Andienungsplatz 16a für die erste Transportladehilfe 107a und eine Transfervorrichtung 117 zur Übergabe eines zweiten Warenträgerstapels 8b vom ersten Übergabeplatz 15a auf die erste Transportladehilfe 107a. Der erste Andienungsplatz 16a und der ersten Übergabeplatz 15a sind einander gegenüberliegend angeordnet.

Es erweist sich auch von Vorteil, wenn die Beladestation nahe der ersten Beladevorrichtung 113 oder nahe jeder ersten Beladevorrichtung 113 zumindest eine separate Pufferfläche 30 aufweist. Bevorzugt ist der ersten Beladevorrichtung 113 je Andienungsplatz 16a eine Pufferfläche 30 zugeordnet. Grundsätzlich kann die Beladestation aber auch nur eine Pufferfläche 30 umfassen. Die Pufferfläche 30 ist vorzugsweise auf einem Boden des Kommissionierlagers 1d ausgebildet.

Konkret umfasst die automatisiert betriebene Beladevorrichtung 113 eine relativ gegenüber dem Übergabeplatz 15a bewegbare Transfervorrichtung 117, um einen in einer Übergabeposition auf dem Übergabeplatz 15a bereitgestellten Warenträgerstapel 8b (oder gegebenenfalls einzelnen Warenträger 3) auf die Transportladehilfe 107a zu bewegen. Die Transfervorrichtung 117 kann beispielweise durch einen mittels eines Stellantriebes betätigbaren Schieber (Pusher) gebildet sein. Die Transfervorrichtung 117 ist oberhalb der Fördervorrichtung 114a angeordnet.

Die Beladevorrichtung 113 kann nach einer ersten Ausführung einen Portalroboter umfassen. Unter Portalroboter versteht man Industrieroboter, die in ihren Grundachsen aus Linearachsen aufgebaut sind. Bei der Beladung genügt die Verwendung eines Linienportales.

Der Portalroboter umfasst Vertikalsteher und einen Längsträger, die zu einer Tragkonstruktion 118 miteinander verbunden sind. Zusätzlich umfasst der Portalroboter einen über eine (nicht dargestellte) erste Antriebsvorrichtung entlang einer Führungsanordnung in einer ersten Richtung (x-Richtung - Horizontalbewegung) bewegbaren Portalschlitten 119 und einen am Portalschlitten 119 angeordneten Portalarm 120. Am Portalarm 120 ist die Transfervorrichtung 117 angeordnet.

Es kann sich zweckdienlich erweisen, wenn auch der Portalarm 120 über eine zweite Antriebsvorrichtung entlang einer Führungsanordnung in einer zweiten Richtung (z-Richtung - Vertikalbewegung) bewegbar ist.

In der Fig. 9a, 10a ist der erste Warenträgerstapel 8a bereits auf die erste Transportladehilfe 107a abgegeben worden, während sich der zweite Warenträgerstapel 8b noch am Übergabeplatz 15a befindet. Auf der Abschiebebewegung wird der Warenträgerstapel 8b vom Übergabeplatz 15a auf die erste Transportladehilfe 107a, welche am ersten Andienungsplatz 16a bereitgestellt wird, bewegt.

Wie oben beschrieben, kann auch an dieser Beladevorrichtung 113 der erste Übergabeplatz 15a, zweite Übergabeplatz 15b, erste Andienungsplatz 16a und der zweite Andienungsplatz 16b vorgesehen werden, wie jedoch nicht näher dargestellt.

Auch wenn in der gezeigten Ausführung aus Gründen der besseren Übersicht die Beladestation mit einer einzigen ersten Beladevorrichtung 113 dargestellt ist, so kann die Anzahl an ersten Beladevorrichtungen 113 abhängig von der geforderten Kommissionierleistung variieren, wie bereits oben in den Ausführungen beschrieben.

Nach einer nicht gezeigten Ausführung kann die Beladevorrichtung 113 einen Gelenkarmroboter umfassen, wie oben für die Beladevorrichtung 13 beschrieben.

Wie in Fig. 9a eingetragen, kann eine leere (erste) Transportladehilfe 107b durch ein autonom verfahrbares, fahrerloses Transportfahrzeug 9 zum Andienungsplatz 16a (16b) transportiert und dort abgestellt werden. Während der Beladung der (ersten) Transportladehilfe 107a kann dieses Transportfahrzeug 9 zu anderen Transportzwecken genutzt werden. Grundsätzlich ist es aber auch möglich, dass das autonom verfahrbare, fahrerlose Transportfahrzeug 9 zum Andienungsplatz 16a (16b) transportiert und dort abgestellt werden, jedoch während der Beladung der (ersten) Transportladehilfe 107a am Andienungsplatz 16a (16b) verweilt. Ist an dem Andienungsplatz 16a bereits eine (erste) Transportladehilfe 107a abgestellt oder wird die (erste) Transportladehilfe 107a gerade beladen, so kann die leere (ersten) Transportladehilfe 107b auf der nahe der Beladevorrichtung 113 vorgesehenen Pufferfläche 30 gepuffert werden.

Eine (erste) Transportladehilfen 107c wird nach deren Beladung (mit zumindest einem Warenträgerstapel 8) durch ein autonom verfahrbares, fahrerloses Transportfahrzeuge 9 von der Beladestation, insbesondere von der ersten Beladevorrichtung 113 oder von den ersten Beladevorrichtungen 113 zu dem Lagerbereich 5 transportiert und im Lagerbereich 5 auf der Lagerfläche 31 abgestellt.

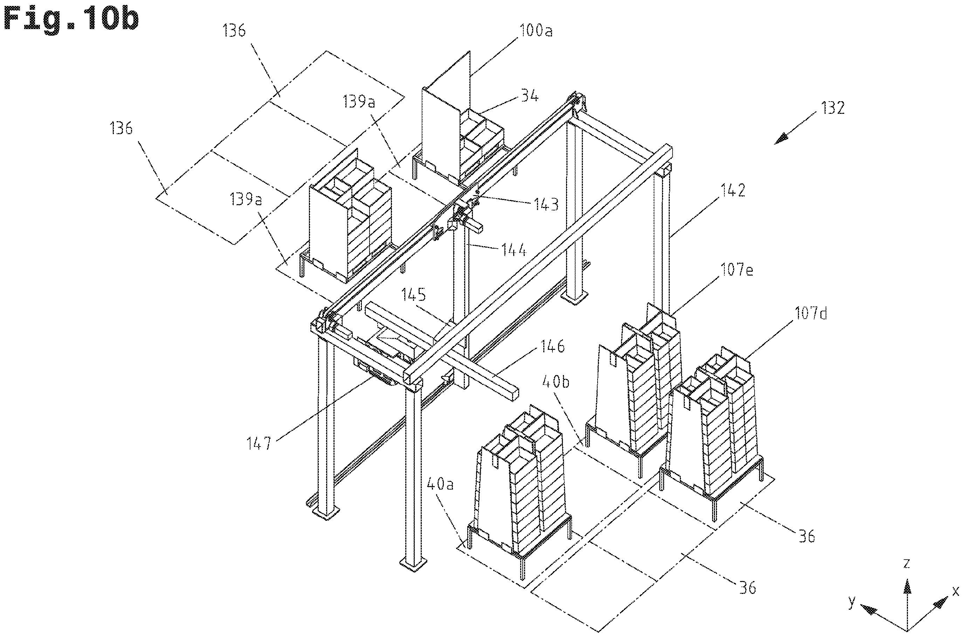

Wie in den Fig. 9b und 10b ersichtlich, ist im Auftragsbearbeitungsbereich 6 eine Entladestation mit zumindest einer automatisiert betriebenen (schematisch angedeuteten) Entladevorrichtung 132 angeordnet. Nach dieser Ausführung bildet die Entladestation mit der einen automatisiert betriebenen Entladevorrichtung 132 oder den mehreren automatisiert betriebenen Entladevorrichtungen 132 gleichzeitig eine Umladestation mit der einen automatisiert betriebenen Umladevorrichtung (Palettiervorrichtung) oder den mehreren automatisiert betriebenen Umladevorrichtungen (Palettiervorrichtungen), mittels welcher die Warenträger 3 oder Warenträgerstapel 8 von der Transportladehilfe 107 auf das Zielladehilfsmittel 34 umgeladen werden. Es kann daher der Begriff "Entladevorrichtung" synonym als "Umladevorrichtung" verwendet werden.

Wie im Nachfolgenden beschrieben, umfasst die Entladestation die zumindest eine automatisiert betriebene (schematisch angedeutete) Entladevorrichtung 132. Auch wenn in der gezeigten Ausführung aus Gründen der besseren Übersicht die Entladestation mit einer einzigen Entladevorrichtung 132 dargestellt ist, so kann die Anzahl an Entladevorrichtungen 132 abhängig von der geforderten Kommissionierleistung variieren. Beispielweise kann die Entladestation bzw. das Kommissionierlager 1d eine zweite Entladevorrichtung 132, dritte Entladevorrichtung 132 usw. aufweisen. Vorzugsweise sind diese Entladevorrichtungen 132 identisch aufgebaut.

Die schematisch gezeigte Ausführung der automatisiert betriebenen Entladevorrichtung 132 umfasst einen ersten Andienungsplatz 40a für die beladene erste Transportladehilfe 107e, (optional) einen zweiten Andienungsplatz 40b für die beladene zweite Transportladehilfe 107e und eine relativ gegenüber dem Andienungsplatz 40a..40b bewegbare Transfervorrichtung 147 zum Entladen der auf dem Andienungsplatz 40a..40b bereitgestellten Transportladehilfe 107e. Weist die Entladestation mehr als eine automatisiert betriebene Entladevorrichtung 132 auf, so umfasst jede Entladevorrichtung 132 einen ersten Andienungsplatz 40a für die beladene erste Transportladehilfe 107e, (optional) einen zweiten Andienungsplatz 40b für die beladene zweite Transportladehilfe 107e und eine relativ gegenüber dem Andienungsplatz 40a..40b bewegbare Transfervorrichtung 147 zum Entladen der auf dem Andienungsplatz 40a, 40b bereitgestellten Transportladehilfe 107e.

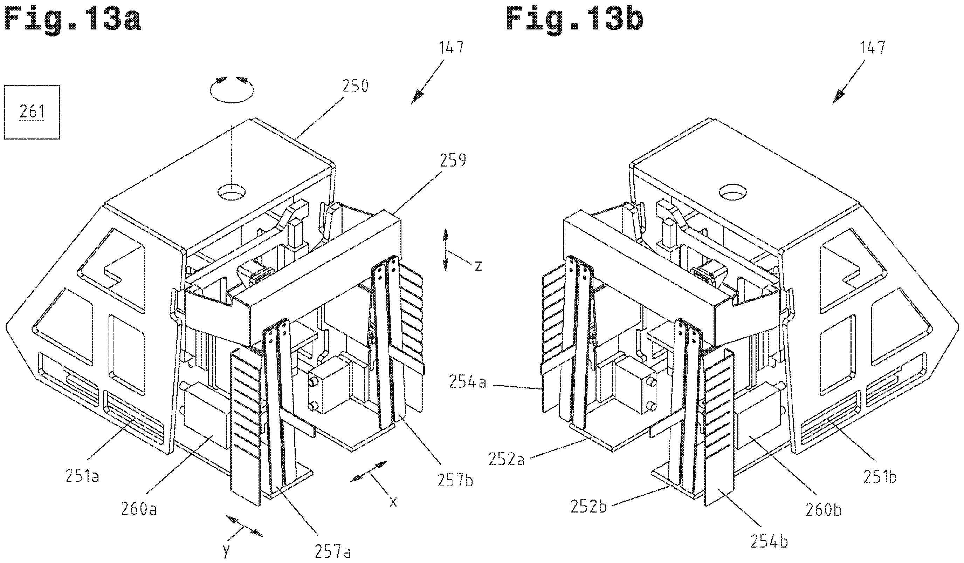

Die Transfervorrichtung 147 kann beispielweise durch ein Greifersystem gebildet sein, wie es in Fig. 13a bis 13d, 14a, 14b, 15a bis 15n und 16a bis 16n detailliert beschrieben wird.

Es erweist sich auch von Vorteil, wenn die Entladestation nahe der Entladevorrichtung 132 oder nahe jeder Entladevorrichtung 132 zumindest eine separate Pufferfläche 36 aufweist. In gezeigter Ausführung ist der Entladevorrichtung 132 je Andienungsplatz 40a..40b eine Pufferfläche 36 zugeordnet. Grundsätzlich kann die Entladestation aber auch nur eine Pufferfläche 36 umfassen. Die Pufferfläche 36 ist vorzugsweise auf einem Boden des Kommissionierlagers 1d ausgebildet. Auf diese Weise ist es möglich, dass die beladene(n) (erste(n)) Transportladehilfe(n) 107d nahe zur Entladevorrichtung(en) 132 auf der Pufferfläche 36 gepuffert und nach Bedarf von den Transportfahrzeugen 9 zu dem jeweiligen Andienungsplatz 40a..40b der Entladevorrichtung(en) 132 auf kurzem Wege transportiert werden.

Auch kann die Entladestation eine oder mehrere (nicht eingetragene) Wartezone(n) 37 aufweisen, wie oben ausführlich beschrieben.

Konkret kann die Entladevorrichtung 132 nach einer ersten Ausführung einen Portalroboter umfassen. Unter Portalroboter versteht man Industrieroboter, die in ihren Grundachsen aus Linearachsen aufgebaut sind. Bei der Beladung wird ein Flächenportal verwendet.

### Der Portalroboter umfasst

i) Vertikalsteher, Längsträger und Querträger, die zu einer Tragkonstruktion 142 miteinander verbunden sind,
ii) einen an der Tragkonstruktion 142 gelagerten und über eine erste Antriebsvorrichtung entlang einer Führungsanordnung (welche an einem der Längsträger angeordnet ist) in einer ersten Richtung (x-Richtung) horizontal bewegbaren ersten Portalschlitten 143,
iii) einen an dem ersten Portalschlitten 143 befestigten und mit diesem in der ersten Richtung (x-Richtung) bewegbaren Portalarm 144, und
iv) einen an dem Portalarm 144 gelagerten und über eine zweite Antriebsvorrichtung entlang einer Führungsanordnung in einer zweiten Richtung (z-Richtung) vertikal bewegbaren zweiten Portalschlitten 145, und
v) einen an dem zweiten Portalschlitten 145 angeordneten und über eine dritte Antriebsvorrichtung entlang einer Führungsanordnung in einer dritten Richtung (y-Richtung) horizontal bewegbaren dritten Portalschlitten 146, und
vi) die Transfervorrichtung 147, welche am dritten Portalschlitten 146 angeordnet und um eine Vertikalachse drehbar am dritten Portalschlitten 146 gelagert ist.

Auf der Entladebewegung wird der Warenträger 3, Warenträgerteilstapel oder Warenträgerstapel 8 von der Transportladehilfe 107e, welche am Andienungsplatz 40a..40b bereitgestellt wird, von der Transfervorrichtung 147 bzw. dem Greifersystem aufgenommen und danach entsprechend der gezeigten Ausführung mit der ersten Stapelladehilfe 100a auf ein Zielladehilfsmittel 34 umgeladen. Umfasst das Kommissionierlager 1d die zweite Stapelladehilfen 100a, so wird der Warenträger 3, Warenträgerteilstapel oder Warenträgerstapel 8 von der Transportladehilfe 107e, welche am Andienungsplatz 40a..40b bereitgestellt wird, von dem Greifersystem aufgenommen und danach auf das Zielladehilfsmittel 134 umgeladen.

Der gezeigte Portalroboter erweist sich von Vorteil, wenn die zur Verfügung stehende Raumhöhe gering ist.

Nach einer nicht gezeigten Ausführung kann die Entladevorrichtung 132 (Umladevorrichtung) einen Gelenkarmroboter umfassen, wie oben beschrieben.

Die schematisch gezeigte Ausführung der automatisiert betriebenen Entladevorrichtung 132 umfasst einen Andienungsplatz 139a für eine erste Stapelladehilfe 100a (oder zweite Stapelladehilfe 100b) oder mehrere Andienungsplätze 139a..139b für erste Stapelladehilfen 100a (oder zweite Stapelladehilfen 100b) und die relativ gegenüber dem Andienungsplatz 139a..139b bewegbare Transfervorrichtung 147 zum Beladen des auf dem Andienungsplatz 139a..139b bereitgestellten Zielladehilfsmittels 34, 134.

Weist die Entladestation mehr als eine automatisiert betriebene Entladevorrichtung 132 auf, so umfasst jede Entladevorrichtung 132 einen Andienungsplatz 139a für ein Zielladehilfsmittel 34, 134 oder mehrere Andienungsplätze 139a..139b für Zielladehilfsmittel 34, 134 und die relativ gegenüber dem Andienungsplatz 139a..139b bewegbare Transfervorrichtung 147 zum Beladen des auf dem Andienungsplatz 139a..139b bereitgestellten Zielladehilfsmittels 34, 134.

Wie oben beschrieben, kann das (zusätzliche) Zielladehilfsmittel 34 am Andienungsplatz 139a..139b mit der ersten Stapelladehilfe 100a oder das Zielladehilfsmittel 134 (welche durch die zweite Stapelladehilfe 100b gebildet ist) am Andienungsplatz 139a..139b bereitgestellt werden.

Es erweist sich auch von Vorteil, wenn die Entladestation nahe der Entladevorrichtung 132 oder nahe jeder Entladevorrichtung 132 zumindest eine separate Pufferfläche 136 aufweist. In gezeigter Ausführung ist der Entladevorrichtung 132 je Andienungsplatz 139a..139b eine Pufferfläche 136 zugeordnet. Grundsätzlich kann die Entladestation aber auch nur eine Pufferfläche 136 umfassen. Die Pufferfläche 136 ist vorzugsweise auf einem Boden des Kommissionierlagers 1d ausgebildet. Auf diese Weise ist es möglich, dass die leeren Zielladehilfsmittel 34 mit der ersten Stapelladehilfe 100a und das Zielladehilfsmittel 134 mit der zweiten Stapelladehilfe 100b nahe zur Entladevorrichtung(en) 132 auf der Pufferfläche 136 gepuffert und nach Bedarf von den Transportfahrzeugen 9 zu dem jeweiligen Andienungsplatz 139a..139b der Entladevorrichtung(en) 132 auf kurzem Wege transportiert werden.

Nach gezeigter Ausführung, werden die Zielladehilfsmittel 34 mit der ersten Stapelladehilfe 100a und das Zielladehilfsmittel 134 mit der zweiten Stapelladehilfe 100b mit den Transportfahrzeugen 9 zu dem jeweiligen Andienungsplatz 139a..139b der Entladevorrichtung(en) 132 antransportiert und von dem jeweiligen Andienungsplatz 139a..139b der Entladevorrichtung(en) 132 abtransportiert. Die oben beschriebene ortsfeste erste Fördervorrichtung 33 zum Abtransport von fertig beladenen Zielladehilfsmitteln und ortsfesten zweiten Fördervorrichtung 35 zum Antransport von leeren Zielladehilfsmitteln sind nach dieser Ausführung nicht vorgesehen.

Für den Transport der leeren Transportladehilfen 107 und mit Warenträgerstapel beladenen Transportladehilfen 107 sowie der leeren Zielladehilfsmittel 34 mit der ersten Stapelladehilfe 100a und leeren Zielladehilfsmittel 134 mit der zweiten Stapelladehilfe 100b und mit den Auftragsstapeln 101 beladenen Zielladehilfsmittel mit der ersten Stapelladehilfe 100a und beladenen Zielladehilfsmittel 134 mit der zweiten Stapelladehilfe 100b werden autonom verfahrbare, lenkbare Transportfahrzeuge 9 (eines fahrerlosen Transportsystems) eingesetzt, welche von dem übergeordneten Leitrechner automatisch gesteuert werden. Das Steuerungssystem 47 kann diesen Leitrechner umfassen.

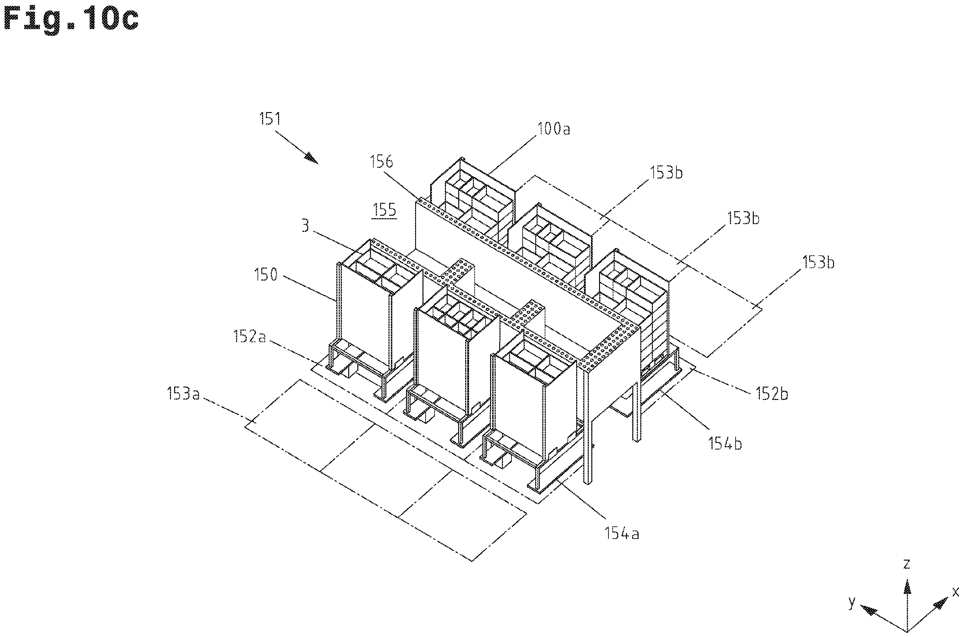

Wie in den Fig. 9b und 10c ersichtlich, kann die Entladestation zusätzlich eine oder mehrere teilautomatisiert betriebene (schematisch angedeutete) Entladevorrichtung(en) 151 umfassen, an welcher die Warenträger 3 oder Warenträgerstapel 8 von einer dritten Transportladehilfe 150 auf ein oder mehrere Zielladehilfsmittel 34, 134 umgeladen werden. Es kann eine einzige Entladevorrichtung 151 vorgesehen werden, an welcher die Warenträger 3 oder Warenträgerstapel 8 von einer dritten Transportladehilfe 150 auf ein oder mehrere Zielladehilfsmittel 34, 134 umgeladen werden. Die Anzahl an Entladevorrichtungen 151 kann abhängig von der geforderten Kommissionierleistung variieren. Vorzugsweise sind diese Entladevorrichtungen 151 identisch aufgebaut.

An der(n) Entladevorrichtung(en) 151 werden Warenträger 3 kommissioniert, welche nicht an der(n) Entladevorrichtung(en) 132 automatisch kommissioniert werden können, weil die Grundfläche der Warenträger kleiner sind als 300mm x 400mm oder die Warenträger 3 eine zu geringe Formstabilität aufweisen, um automatisch manipuliert werden zu können.

Die teilautomatisiert betriebene(n) Entladevorrichtung(en) 151 umfassen jeweils einen ersten Andienungsplatz 152a für eine dritte Transportladehilfe 150, einen zweiten Andienungsplatz 152b für eine erste Stapelladehilfe 100a (oder zweite Stapelladehilfe 100b) und einen Arbeitsplatz 155 für eine Kommissionierperson (aus Gründen der besseren Übersicht nicht dargestellt). Der Arbeitsplatz 155 kann auch eine Arbeitsfläche 156 mit Rollen und dgl. umfassen, um eine ergonomische Manipulation der Warenträger 3 zu ermöglichen. Der erste Andienungsplatz 152a und der zweite Andienungsplatz 152b sind einander gegenüberliegend angeordnet.

Zusätzlich kann die Entladevorrichtung 151 eine (nicht dargestellte) Eingabe- und/oder Ausgabevorrichtung umfassen, mittels welcher Kommissionieranweisungen für die Kommissionierperson ausgegebenen und an welcher Kommissionierbefehle (Quittierung) durch die Kommissionierperson eingegeben werden.

Wie oben beschrieben, kann das (zusätzliche) Zielladehilfsmittel 34 am Andienungsplatz 152 mit der ersten Stapelladehilfe 100a oder das Zielladehilfsmittel 134 (welche durch die zweite Stapelladehilfe 100b gebildet ist) am Andienungsplatz 152b bereitgestellt werden.

Es sei an dieser Stelle hingewiesen, dass die teilautomatisiert betriebene(n) Entladevorrichtung(en) 151 auch in den oben beschriebenen Kommissionierlagem 1a..1c (ohne zusätzlichen Stapelladehilfen) eingesetzt werden kann. In diesem Fall werden am ersten Andienungsplatz 152a die dritten Transportladehilfen 150 und am zweiten Andienungsplatz 152b die Zielladehilfsmittel 34 (ohne Stapelladehilfen) bereitgestellt.

Während nach den oben beschriebenen Ausführungen an den Entladevorrichtungen 32; 65; 75; 132 ein automatischer Kommissioniervorgang durchgeführt wird, wird an der(den) Entladevorrichtung(en) 151 ein manueller Kommissioniervorgang durchgeführt.

"Teilautomatisiert" bedeutet in genanntem Zusammenhang, dass der Antransport von dritten Transportladehilfen 150 (oder die ersten / zweiten Transportladehilfen 7) zur Entladevorrichtung 151, Abtransport von dritten Transportladehilfen 150 von der Entladevorrichtung 151, der Antransport von ersten Stapelladehilfen 100a (oder zweiten Stapelladehilfe 100b oder der Zielladehilfsmitteln 34) zur Entladevorrichtung 151, der Abtransport von ersten Stapelladehilfen 100a (oder zweiten Stapelladehilfe 100b oder der Zielladehilfsmitteln 34) von der Entladevorrichtung 151 automatisch und die Kommissionierung durch eine Kommissionierperson manuell erfolgt.

Die dritte Transportladehilfe 150 wird vom Transportfahrzeug 9 zu dem ersten Andienungsplatz 152a antransportiert und auf diesen übergeben, um die dritte Transportladehilfe 150 am Andienungsplatz 152a bereitzustellen, oder vom ersten Andienungsplatz 152a auf das Transportfahrzeug 9 übergeben, um die dritte Transportladehilfe 150 vom Andienungsplatz 152a abzutransportieren.

Ebenso wird die erste Stapelladehilfe 100a (oder zweite Stapelladehilfe 100b oder das Zielladehilfsmittel 34) vom Transportfahrzeug 9 zu dem zweiten Andienungsplatz 152b antransportiert und auf diesen übergeben, um die erste Stapelladehilfe 100a (oder zweite Stapelladehilfe 100b oder das Zielladehilfsmittel 34) am Andienungsplatz 152b bereitzustellen, oder vom zweiten Andienungsplatz 152b auf das Transportfahrzeug 9 übergeben, um die erste Stapelladehilfe 100a (oder zweite Stapelladehilfe 100b oder das Zielladehilfsmittel 34) vom Andienungsplatz 152b abzutransportieren.

Es erweist sich auch von Vorteil, wenn die Entladestation nahe der Entladevorrichtung 151 oder nahe jeder Entladevorrichtung 151 zumindest eine separate Pufferfläche 153a für die dritte Transportladehilfe 150 und zumindest eine separate Pufferfläche 153b für die erste Stapelladehilfe 100a (oder zweite Stapelladehilfe 100b oder das Zielladehilfsmittel 34) aufweist. In gezeigter Ausführung ist der Entladevorrichtung 132 je Andienungsplatz 152a eine Pufferfläche 153a und je Andienungsplatz 152b eine Pufferfläche 153b zugeordnet. Grundsätzlich kann die Entladestation aber auch nur eine Pufferfläche 153a oder Pufferfläche 153b umfassen. Die Pufferfläche 153a, 153b ist vorzugsweise auf einem Boden des Kommissionierlagers 1d ausgebildet. Auf diese Weise ist es möglich, dass die beladene(n) (dritte(n) Transportladehilfe(n) 150 und die erste Stapelladehilfe 100a (die zweite Stapelladehilfe 100b oder das Zielladehilfsmittel 34) nahe zur Entladevorrichtung(en) 151 auf der Pufferfläche 153a, 153b gepuffert und nach Bedarf von den Transportfahrzeugen 9 zu dem jeweiligen Andienungsplatz 153a, 153b der Entladevorrichtung(en) 151 auf kurzem Wege transportiert werden.

Nach gezeigter Ausführung ist der erste Andienungsplatz 152a auf einer Hubplattform 154a ausgebildet, auf welcher die dritte Transportladehilfe 150 abgestellt und der Warenträgerstapel 8 auf ein Andienungsniveau angehoben werden kann, um ein ergonomisches Arbeiten zu ermöglichen, und der zweite Andienungsplatz 152b auf einer Hubplattform 154b ausgebildet, auf welcher die erste Stapelladehilfe 100a (oder zweite Stapelladehilfe 100b oder das Zielladehilfsmittel 34) abgestellt und das Zielladehilfsmittel 34, 134 (wenn das Zielladehilfsmittel 34, 134 noch unbeladen ist) oder einen Auftragsstapel 101 (wenn das Zielladehilfsmittel 34, 134 an der Entladestation mit einer oder mehreren automatisiert betriebene(n) Beladevorrichtung(en) 132 bereits beladen wurde) auf ein Andienungsniveau angehoben werden kann, um ein ergonomisches Arbeiten zu ermöglichen.

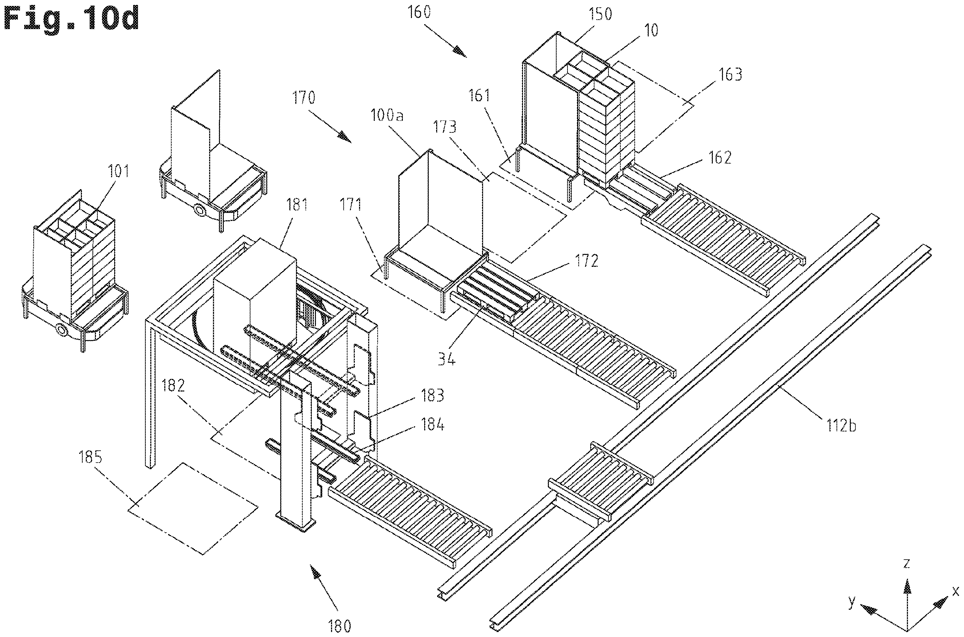

In den Fig. 9a und 10d ist zum Beladen von dritten Transportladehilfsmitteln 150 eine Beladestation gezeigt, welche eine oder mehrere automatisiert betriebene (schematisch angedeutete) zweite Beladevorrichtung(en) 160 umfasst. Das Kommissionierlager 1d umfasst diese Beladestation. Die zweite Beladevorrichtung 160 umfasst einen Andienungsplatz 161 für ein leeres (drittes) Transportladehilfsmittel 150 und eine relativ gegenüber dem Andienungsplatz 161 bewegbare Transfervorrichtung 162 zum Beladen des auf dem Andienungsplatz 161 bereitgestellten Transportladehilfsmittels 150.

Es erweist sich auch von Vorteil, wenn die Beladestation nahe der zweiten Beladevorrichtung 160 oder nahe jeder zweiten Beladevorrichtung 160 zumindest eine separate Pufferfläche 163 aufweist. In gezeigter Ausführung ist der zweiten Beladevorrichtung 160 je Andienungsplatz 161 eine Pufferfläche 163 zugeordnet. Grundsätzlich kann die Beladestation aber auch nur eine Pufferfläche 160 umfassen. Die Pufferfläche 160 ist vorzugsweise auf einem Boden des Kommissionierlagers 1d ausgebildet.

Wie in den Figuren ersichtlich, kann sich das dritte Transportladehilfsmittel 150 von den vorher genannten Transportladehilfsmittel 7, 107 unterscheiden. Dies ist aber nicht zwingenderweise notwendig.

Die dritten Transportladehilfsmittel 150 werden im Anlieferbereich 4 an der Beladestation mit einer automatisiert betriebene n(schematisch angedeuteten) zweiten Beladevorrichtung 160 beladen. Bevorzugt wird an der zweiten Beladevorrichtung 160 die Warenträgerstapelgruppe 10 mit der Palette (Anlieferladungsträger) auf das dritte Transportladehilfsmittel 150 unverändert umgeladen, wie in den Fig. 9a, 10d ersichtlich. Daher erfolgt zuvor keine Depalettierung. Solche Warenträgerstapelgruppe 10 sind zumeist aus sortenreinen Warenträgerstapel 8 zusammengestellt. Nach gezeigter Ausführung werden die Warenträgerstapeln 8 als Warenträgerstapelgruppe 10 auf Paletten (Anlieferladungsträger) in den Anlieferbereich 4 angeliefert und von der Fördervorrichtung 112b zur Beladevorrichtung 160 gefördert.

Eine leere (dritte) Transportladehilfe 150 wird durch ein autonom verfahrbares, fahrerloses Transportfahrzeug 9 zur Beladestation transportiert und an der zweiten Beladevorrichtung 160 oder auf einer Pufferfläche 163 bereitgestellt. Die (dritte) Transportladehilfe 150 wird nach deren Beladung (mit der Warenträgerstapelgruppe 10) durch die autonom verfahrbaren, fahrerlosen Transportfahrzeuge 9 von der Beladestation, insbesondere von der zweiten Beladevorrichtung 160 zu dem Lagerbereich 5 transportiert und im Lagerbereich 5 auf der Lagerfläche 31 abgestellt.

In Fig. 9a und 10d ist auch eine Bestückungsstation mit einer oder mehreren automatisiert betriebenen Bestückungsvorrichtung(en) 170 gezeigt, welche das Kommissionierlager 1d umfassen kann, durch welche ein Bestücken der ersten Stapelladehilfe 100a mit einem Zielladehilfsmittel 34 möglich ist, sofern eine erste Stapelladehilfe 100a im Kommissionierlager 1d verwendet wird. Das Zielladehilfsmittel 34 wird auf dem Boden (Fig. 12a) der ersten Stapelladehilfe 100a abgestellt.

Die Bestückungsvorrichtung(en) 170 umfassen jeweils einen Andienungsplatz 171 für eine leere erste Stapelladehilfe 100a und eine relativ gegenüber dem Andienungsplatz 171 bewegbare Transfervorrichtung 172 zum Beladen der auf dem Andienungsplatz 171 bereitgestellten ersten Stapelladehilfe 100a.

Es erweist sich auch von Vorteil, wenn die Bestückungsstation nahe der Bestückungsvorrichtung 170 oder nahe jeder Bestückungsvorrichtung 170 zumindest eine separate Pufferfläche 173 aufweist. In gezeigter Ausführung ist der Bestückungsvorrichtung 170 je Andienungsplatz 171 eine Pufferfläche 173 zugeordnet. Grundsätzlich kann die Bestückungsstation aber auch nur eine Pufferfläche 173 umfassen. Die Pufferfläche 173 ist vorzugsweise auf einem Boden des Kommissionierlagers 1d ausgebildet.

Eine leere erste Stapelladehilfe 100a wird durch ein autonom verfahrbares, fahrerloses Transportfahrzeug 9 zur Bestückungsstation transportiert und an der Bestückungsvorrichtung 170 oder auf einer Pufferfläche 173 bereitgestellt. Die Stapelladehilfe 100a wird nach deren Bestückung mit einem Zielladehilfsmittel 34 durch ein autonom verfahrbares, fahrerloses Transportfahrzeuge 9 von der Bestückungsstation, insbesondere von der Bestückungsvorrichtung 170 zu der Entladestation (Umladestation) transportiert.

In Fig. 9a und 10d ist auch eine Auftragsstapel-Ladungssicherungsstation mit einer oder mehreren automatisiert betriebenen Ladungssicherungsvorrichtung(en) 180 gezeigt, welche das Kommissionierlager 1d umfassen kann, durch welche eine Ladungssicherung eines Auftragsstapels 101 mit einem Sicherungsmittel 181 möglich ist.

Die Ladungssicherungsvorrichtung(en) 180 umfassen jeweils einen Andienungsplatz 182 für eine beladene erste Stapelladehilfe 100a (oder eine beladene zweite Stapelladehilfe 100b), eine Zielladehilfsmittel-Hebevorrichtung und ein Sicherungsmittel-Umwicklungsgerät oder Sicherungsmittel-Umreifungsgerät. Die Zielladehilfsmittel-Hebevorrichtung umfasst einen vertikal verstellbaren Hubrahmen 183 und auf diesem gelagerte Teleskopgabeln 184, letztere zwischen einer zurückgezogenen Ausgangsstellung und einer vorragenden Aufnahmestellung bewegbar sind.

Es sei erwähnt, dass die Teleskopgabeln 184 in der Aufnahmestellung einerseits das Zielladehilfsmittel 34 gemeinsam mit dem Auftragsstapel 101, wenn keine Stapelladehilfen eingesetzt werden, wie in den Fig. 1a bis 1c gezeigt, oder wenn erste Stapelladehilfe 100a eingesetzt werden, wie in den Fig. 12a gezeigt, und andererseits ausschließlich den Auftragsstapel 101, wenn zweite Stapelladehilfe 100b eingesetzt werden, wie in den Fig. 12c gezeigt, aufnehmen, wobei das Zielladehilfsmittel 34 gemeinsam mit dem Auftragsstapel 101 oder der Auftragsstapel 101 durch eine Hubbewegung des Hubrahmens 183 angehoben/abgesenkt werden kann.

Es erweist sich auch von Vorteil, wenn die Auftragsstapel-Ladungssicherungsstation nahe der Ladungssicherungsvorrichtung 180 oder nahe jeder Ladungssicherungsvorrichtung 180 zumindest eine separate Pufferfläche 185 aufweist. In gezeigter Ausführung ist der Ladungssicherungsvorrichtung 180 je Andienungsplatz 182 eine Pufferfläche 185 zugeordnet. Grundsätzlich kann die Auftragsstapel-Ladungssicherungsstation aber auch nur eine Pufferfläche 185 umfassen. Die Pufferfläche 185 ist vorzugsweise auf einem Boden des Kommissionierlagers 1d ausgebildet.

Die Ladungssicherungsvorrichtung 180 umfasst nach gezeigter Ausführung ein Umwicklungsgerät, welches eine thermoplastische Folie kraftschlüssig in Umfangsrichtung um den Auftragsstapel 101 wickelt, während der Auftragsstapel 101 durch die Zielladehilfsmittel-Hebevorrichtung aus der ersten Stapelladehilfe 100a oder zweiten Stapelladehilfe 100b herausgehoben wird. Die thermoplastische Folie bildet das Sicherungsmittel 181.

Die Ladungssicherungsvorrichtung 180 kann alternativ auch ein Umreifungsgerät verwendet werden, welches dazu eingerichtet ist, zumindest ein Verschlussband in einer im Wesentlichen horizontalen Richtung umfänglich am Auftragsstapel 101 zu befestigen, während sich der Auftragsstapel 101 in der Ladungssicherungsvorrichtung 180 befindet. Das Verschlussband bildet das Sicherungsmittel 181.

Eine beladene erste Stapelladehilfe 100a (oder zweite Stapelladehilfe 100b) wird durch ein autonom verfahrbares, fahrerloses Transportfahrzeug 9 zur Auftragsstapel-Ladungssicherungsstation transportiert und an der Ladungssicherungsvorrichtung 180 oder auf einer Pufferfläche 185 bereitgestellt.

Nach dem Entfernen des Auftragsstapels 101 von der ersten Stapelladehilfe 100a kann die leere erste Stapelladehilfe 100a durch ein autonom verfahrbares, fahrerloses Transportfahrzeug 9 von der Auftragsstapel-Ladungssicherungsstation, insbesondere von der Ladungssicherungsvorrichtung 180 zu der Bestückungsstation transportiert werden.

Umfassen die Stapelladehilfen die zweiten Stapelladehilfe 100b, kann nach dem Entfernen des Auftragsstapels 101 von der zweiten Stapelladehilfe 100b, die leere zweite Stapelladehilfe 100b durch ein autonom verfahrbares, fahrerloses Transportfahrzeug 9 von der Auftragsstapel-Ladungssicherungsstation, insbesondere von der Ladungssicherungsvorrichtung 180 zu der Entladestation transportiert werden.

Es sei erwähnt, dass auch die erste, zweite und dritte Ausführung des Kommissionierlagers 1a, 1b, 1c die automatisiert betrieben zweite(n) Beladevorrichtung(en), die optionale Bestückungsstation und die Auftragsstapel-Ladungssicherungsstation umfassen können.

In den Fig. 11a bis 11c ist eine vierte Ausführung einer Transportladehilfe 107 dargestellt. Fig. 11a zeigt die unbeladene leere Transportladehilfe 107 und Fig. 11b die beladene Transportladehilfe 107. Eine derartige Transportladehilfe 107 kann an oben beschriebenen Andienungsplätzen durch eine kurze "Versatzbewegung" aufeinander folgend mehrere Warenträgerstapel 8 bereitstellen. Die "Versatzbewegung" wird vorzugsweise durch ein Transportfahrzeug 9 ausgeführt. Eine derartige Transportladehilfe 107 kann an den Andienungsplätzen auch durch eine "Drehbewegung" um die Vertikalachse aufeinander folgend mehrere Warenträgerstapel 8 bereitstellen. Die "Drehbewegung" wird vorzugsweise durch ein Transportfahrzeug 9 ausgeführt.

Die Transportladehilfe 107 umfasst wiederum den Boden 55 und mit diesem verbundene Seitenwände 56a, 56b, 56c, 56d jeweils zur Lagestabilisierung von Warenträgerstapeln 8, eine der Seitenwand 56c auf einer ersten Seite gegenüberliegende erste Belade- und Entladeöffnung 57a und zweite Belade- und Entladeöffnung 57b und eine der Seitenwand 56c auf einer zweiten Seite gegenüberliegende dritte Belade- und Entladeöffnung 57c und vierte Belade- und Entladeöffnung 57d.

Die Seitenwände 56a, 56b, 56c, 56d sind vorzugsweise im Wesentlichen in der Höhe des Warenträgerstapels 8 ausgebildet, jedoch zumindest so hoch, dass auch der oberste Warenträger 3 im Warenträgerstapel 8 zumindest bereichsweise von den Seitenwänden 56a, 56b, 56c, 56d umgeben ist. Bevorzugt erstreckt sich die erste / zweite / dritte / vierte Belade- und Entladeöffnung 57a, 57b, 57c, 57d jeweils über die gesamte Höhe der Seitenwände 56a, 56b, 56c, 56d.

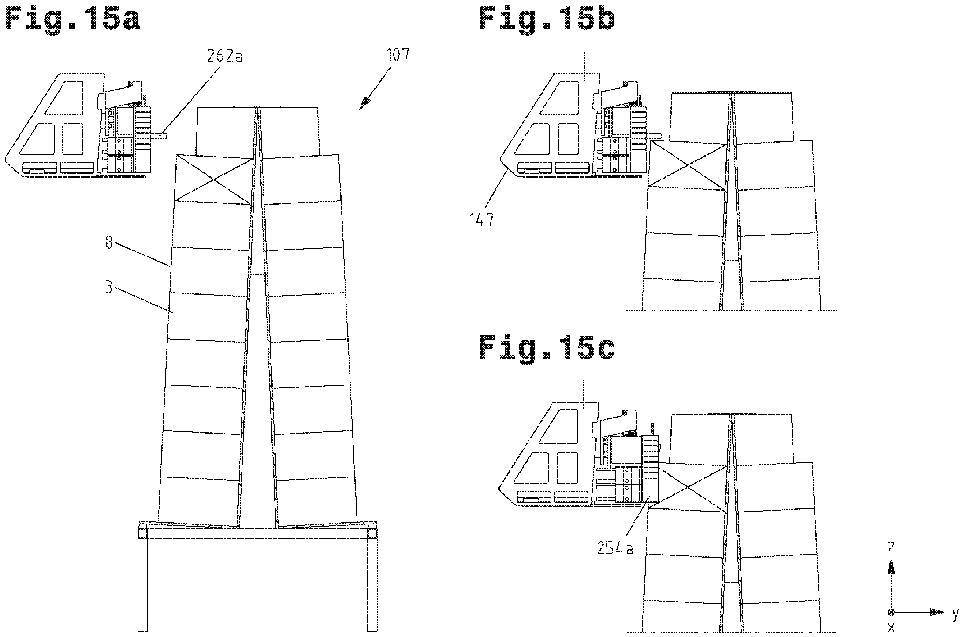

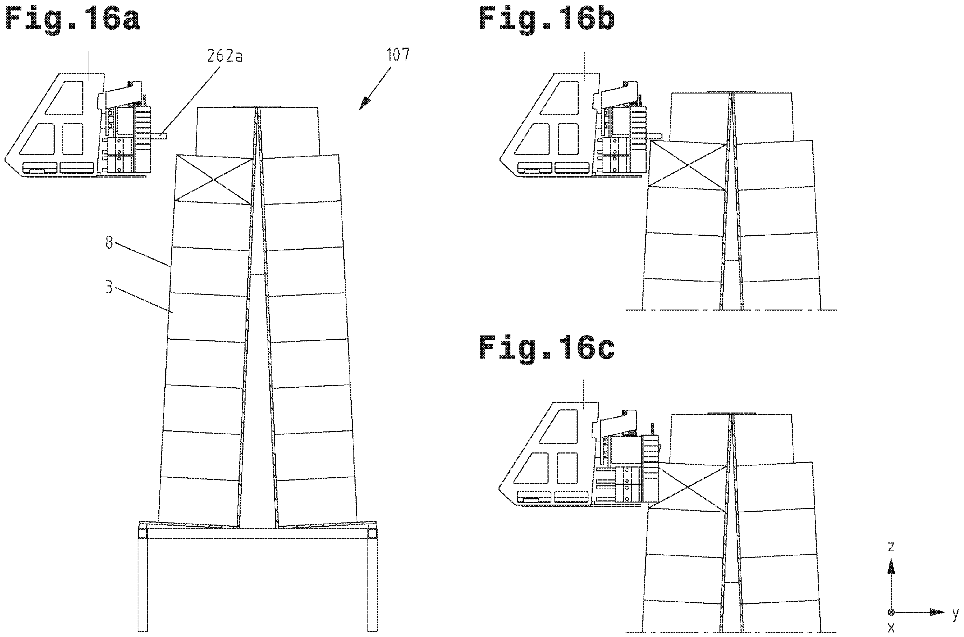

Es erweist sich von Vorteil, wenn die Tiefe des einen Aufnahmeschachtes oder der mehreren Aufnahmeschächte, welcher zwischen den ersten Seitenwänden 56a, 56b, 56d begrenzt ist oder sind, geringer ist als eine minimale Breite der Warenträger 3, sodass die Warenträger 3 stets an der Vorderkante der ersten Seitenwände 56a, 56b, 56d vorragen, wenn die Warenträger 3 im entsprechenden Aufnahmeschacht gelagert sind, wie in Fig. 11b und beispielweise Fig. 15a bis Fig. 15f oder Fig. 16a bis Fig. 16k ersichtlich. Auf diese Weise ist eine zuverlässige Klemmgreiffunktion möglich.

Die Transportladehilfe 107 kann parallel zueinander verlaufende äußere erste Seitenwände 56a, 56b und eine parallele innere Seitenwand 56d umfassen. Die zweite Seitenwand 56c erstreckt sich zwischen den ersten Seitenwänden 56a, 56b, 56d. Die innere erste Seitenwand 56d ist im Mittenbereich des Bodens 55 derart angeordnet, dass die Seitenwände 56a, 56b, 56c, 56d auf einer ersten Seite relativ zur Seitenwand 56c zwei Aufnahmeschächte und auf einer zweiten Seite relativ zur Seitenwand 56c zwei Aufnahmeschächte begrenzen.

In den Aufnahmeschächten kann jeweils zumindest ein Warenträgerstapel 8 zum Transport / zur Lagerung aufgenommen werden. In gezeigter Ausführung werden im ersten Aufnahmeschacht und zweiten Aufnahmeschacht jeweils ein Warenträgerstapel 8 mit einer Grundfläche der Warenträger 600mm x 400mm, und im dritten Aufnahmeschacht und vierten Aufnahmeschacht jeweils zwei Warenträgerstapel 8 jeweils mit einer Grundfläche der Warenträger 300mm x 400mm aufgenommen. Diese Transportladehilfe 107 kann gleichzeitig mehrere Warenträgerstapeln 8 transportieren.

Es erweist sich von Vorteil, wenn die äußeren ersten Seitenwände 56a, 56b und gegebenenfalls auch die innere erste Seitenwand 56d mit (nicht eingetragenen) Einführschrägen ausgebildet sind, um ein einfaches Beladen und/oder Entladen der Transportladehilfe 107 zu ermöglichen.

Wie insbesondere in Fig. 11c erkennbar, kann die zweite Seitenwand 56c einen ersten Seitenwandteil 200a und einen zweiten Seitenwandteil 200b umfassen. Der erste Seitenwandteil 200a ist um einen Neigungswinkel gegenüber einer zwischen den ersten Seitenwänden 56a, 56b, 56d aufgespannten Vertikalebene derart geneigt ist, dass mit zunehmenden Vertikalabstand vom Boden 55 der erste Seitenwandteil 200a nach hinten geneigt verläuft. Der zweite Seitenwandteil 200b ist um einen Neigungswinkel gegenüber einer zwischen den ersten Seitenwänden 56a, 56b, 56d aufgespannten Vertikalebene derart geneigt ist, dass mit zunehmenden Vertikalabstand vom Boden 55 der zweite Seitenwandteil 200b nach hinten geneigt verläuft.

Der Neigungswinkel α₁ beträgt zwischen 2° und 5°.

Wie in Fig. 11c auch erkennbar, umfasst der Boden 55 einen ersten Bodenteil 201a und einen zweiten Bodenteil 201b. Der erste Bodenteil 201a ist um einen Neigungswinkel gegenüber einer zwischen den ersten Seitenwänden 56a, 56b, 56d aufgespannten Horizontalebene in Richtung zur zweiten Seitenwand 56c nach unten geneigt verläuft. Der zweite Bodenteil 201b ist um einen Neigungswinkel gegenüber einer zwischen den ersten Seitenwänden 56a, 56b, 56d aufgespannten Horizontalebene in Richtung zur zweiten Seitenwand 56c nach unten geneigt verläuft.

Der Neigungswinkel α₂ ist vorzugsweise größer als der Neigungswinkel α₁ und beträgt zwischen 3° und 6°.

Der Boden 55 bildet wiederum auf seiner oberen Seite eine Abstellfläche 58, auf welchem die Warenträgerstapeln 8 abgestellt werden können, und auf seiner unteren Seite eine Transportfläche 59, gegen welche die Ladeplattform 51 des Transportfahrzeuges 9 angestellt werden kann. Konkret wird die Abstellfläche 58 an den Bodenwandteilen 201a, 201b ausgebildet. Zusätzlich kann die Transportladehilfe 107 Stellfüße 60 umfassen, welche am Boden 55 befestigt sind. Die Transportladehilfe 107 wird über die Stellfüße 60 am Boden abgestellt. In einer nicht gezeigten Ausführung können anstatt der Stellfüße 60 auch Räder am Boden 55 vorgesehen werden.

Es sei an dieser Stelle auch hingewiesen, dass die Transportladehilfe 107 auch entsprechend den oben beschriebenen Ausführungen ausgebildet sein kann und die Seitenwände 56a, 56b, 56d dementsprechend angeordnet sind und zwischen denen ein einziger Aufnahmeschacht (Fig. 4a, 4b) oder durch die Seitenwand 56c getrennte Aufnahmeschächte (Fig. 5a, 5b) oder die Seitenwand 56d getrennte Aufnahmeschächte (Fig. 6a, 6b) ausbildet.

Es sei an dieser Stelle auch hingewiesen, dass die Transportladehilfe 7, 7', 7" auch entsprechend der in den Fig. 11a bis 11c beschriebenen Ausführung ausgebildet sein kann und die Seitenwand 56c einen ersten Seitenwandteil 200a umfasst, der um einen Neigungswinkel gegenüber einer zwischen den ersten Seitenwänden 56a, 56b bzw. 56a, 56b, 56d aufgespannten Vertikalebene derart geneigt ist, dass mit zunehmenden Vertikalabstand vom Boden 55 der erste Seitenwandteil 200a nach hinten geneigt verläuft.

Ebenso kann der Boden 55 einen ersten Bodenteil 201a umfassen, der um einen Neigungswinkel gegenüber einer zwischen den ersten Seitenwänden 56a, 56b bzw. 56a, 56b, 56d aufgespannten Horizontalebene in Richtung zur zweiten Seitenwand 56c nach unten geneigt verläuft.

Wie oben beschrieben, kann das Kommissionierlager 1a, 1b, 1c, 1d eine oder mehrere Stapelladehilfen jeweils zur Lagestabilisierung eines aus den Warenträgern 3 gemäß einem Kommissionierauftrag zusammengestellten Auftragsstapels 101 umfassen.

In den Fig. 12a und 12b ist die erste Stapelladehilfe 100a und in der Fig. 12c die zweite Stapelladehilfe 100b dargestellt.

Die erste Stapelladehilfe 100a umfasst einen Boden 205 und mit diesem verbundene Stapelwände 206a, 206b. Bevorzugt sind eine erste Stapelwand 206a und zweite Stapelwand 206b vorgesehen, welche senkrecht am Boden 205 vorragen und einen rechten Winkel einschließen.

Der Boden 205 kann eine Abstellfläche 207 auf seiner oberen Seite umfassen, auf welchem ein Zieladehilfsmittel 34 mit dem Auftragsstapel 101 abgestellt werden kann, und eine Transportfläche 208 auf seiner unteren Seite umfassen, gegen welche eine Ladeplattform des Transportfahrzeuges 9 angestellt werden kann.

Die zweite Stapelladehilfe 100b umfasst ebenso einen Boden 205 und mit diesem verbundene Stapelwände 206a, 206b. Bevorzugt sind eine erste Stapelwand 206a und zweite Stapelwand 206b vorgesehen, welche senkrecht am Boden 205 vorragen und einen rechten Winkel einschließen.

Im Unterschied zur ersten Stapelladehilfe 100a umfasst der Boden auf seiner oberen Seite vorragende und durch Aufnahmekanäle 210 voneinander getrennte Abstellklötze 211 ausbildet, auf welcher die Warenträger 3 des Auftragsstapels 101 (nicht dargestellt) abgestellt werden können, sodass die zumindest eine zweite Stapelladehilfe 100b das Zielladehilfsmittel 134 bildet.

Zudem umfasst der Boden 205 auf seiner unteren Seite eine Transportfläche 208, gegen welche eine Ladeplattform des Transportfahrzeuges 9 angestellt werden kann.

Selbst wenn nur die erste Stapelwand 206a und zweite Stapelwand 206b vorgesehen sind, wird mit der ersten Stapelladehilfe 100a und zweiten Stapelladehilfe 100b eine ausreichende Lagestabilisierung und ein sicherer Transport des Auftragsstapels 101 ermöglicht. Zudem kann die Ladungssicherungsvorrichtung 180 mit hoher Leistung betrieben werden, da die erste / zweite Stapelladehilfe 100a, 100b bereits wieder von der Ladungssicherungsvorrichtung 180 abtransportiert werden kann, sobald das Zielladehilfsmittel 34 mit dem Auftragsstapel 101 geringfügig vom Boden 205 der ersten Stapelladehilfe 100a oder der Auftragsstapel 101 geringfügig vom Boden 205 der zweiten Stapelladehilfe 100b abgehoben wurde. Es ist also nicht notwendig, den Auftragsstapel 101 vollständig und über die gesamte Höhe der ersten / zweiten Stapelladehilfe 100a, 100b anzuheben, ehe der Abtransport der ersten / zweiten Stapelladehilfe 100a, 100b erfolgen kann.

Zusätzlich kann die erste Stapelladehilfe 100a / zweite Stapelladehilfe 100b Stellfüße 212 umfassen, welche am Boden 205 befestigt sind. Die erste Stapelladehilfe 100a / zweite Stapelladehilfe 100b wird über die Stellfüße 212 am Boden abgestellt. In einer nicht gezeigten Ausführung können anstatt der Stellfüße 212 auch Räder am Boden 55 vorgesehen werden.

Wie nicht näher dargestellt, kann auch die Transportladehilfe 107 mit einem Datenträger 92a versehen werden, wie oben beschrieben. Ebenso kann die erste Stapelladehilfe 100a / zweite Stapelladehilfe 100b mit einem Datenträger versehen werden, um eine Identifizierung der ersten Stapelladehilfe 100a / zweiten Stapelladehilfe 100b mittels einer Erfassungsvorrichtung durch Lesen eines Datenträgers durchzuführen.

Das oben beschriebene Verfahren zum Lagern und Kommissionieren von Waren 2 im Kommissionierlager 1a, 1b, 1c, 1d kann zusätzlich die Schritte umfassen:
- Bereitstellung von Stapelladehilfen 100a, 100b jeweils zur Lagestabilisierung eines aus den Warenträgern 3 gemäß einem Kommissionierauftrag zusammengestellten Auftragsstapels 101.

Die Bereitstellung der Stapelladehilfen im Kommissionierlager 1a, 1b, 1c, 1d kann das Bereitstellen von einer oder mehreren ersten Stapelladehilfe(n) 100a und/oder einer oder mehreren zweiten Stapelladehilfe(n) 100b umfassen.

Werden im Kommissionierlager 1a, 1b, 1c, 1d die ersten Stapelladehilfen 100a eingesetzt, kann das Verfahren zusätzlich die Schritte umfassen:
- Bestücken der ersten Stapelladehilfe 100a mit einem Zielladehilfsmittel 34 an der Bestückungsstation mit einer oder mehreren automatisiert betriebenen Bestückungsvorrichtung(en) 170, indem das Zielladehilfsmittel 34 auf dem Boden 205 abgestellt wird.

Werden im Kommissionierlager 1a, 1b, 1c, 1d die zweiten Stapelladehilfen 100b eingesetzt, kann das Verfahren zusätzlich die Schritte umfassen:
- Definition der zweiten Stapelladehilfe 100b als Zielladehilfsmittel 134, indem die zweiten Stapelladehilfen 100b die Zielladehilfsmittel 134 bilden.

Werden im Kommissionierlager 1a, 1b, 1c, 1d die ersten Stapelladehilfen 100a und zweiten Stapelladehilfen 100b eingesetzt, kann das Verfahren zusätzlich die Schritte umfassen:
- Bestücken der ersten Stapelladehilfe 100a mit einem Zielladehilfsmittel 34 an der Bestückungsstation mit einer oder mehreren automatisiert betriebenen Bestückungsvorrichtung(en) 170, indem das Zielladehilfsmittel 34 auf dem Boden 205 abgestellt wird, und
- Definition der zweiten Stapelladehilfe 100b als Zielladehilfsmittel 134.

Das oben beschriebene Verfahren zum Lagern und Kommissionieren von Waren 2 im Kommissionierlager 1a, 1b, 1c, 1d kann zusätzlich die Schritte umfassen:
- Bereitstellung von einer oder mehreren automatisiert betriebenen zweiten Beladevorrichtung(en) 160,
- Bereitstellung von einer Warenträgerstapelgruppe 10 aus mehreren nebeneinander angeordneten Warenträgerstapeln 8 mit übereinander angeordneten Warenträgern 3 im Anlieferbereich 4 des Kommissionierlagers 1a, 1b, 1c, 1d,
- Bereitstellung von leeren (dritten) Transportladehilfen 150 jeweils zur Aufnahme und Lagestabilisierung einer Warenträgerstapelgruppe 10,
- Transport von leeren (dritten) Transportladehilfen 150 durch die autonom verfahrbaren, fahrerlosen Transportfahrzeuge 9 zur Beladestation und Bereitstellung von einer oder mehreren leeren (dritten) Transportladehilfe(n) 150 entweder an einer oder mehreren automatisiert betriebenen zweiten Beladevorrichtung(en) 160 oder auf einer Pufferfläche 163 nahe der zweiten Beladevorrichtung(en) 160,
- Beladen einer der leeren (dritten) Transportladehilfen 160, welche an der automatisiert betriebenen zweiten Beladevorrichtung 160 bereitgestellt wird, mit zumindest einer Warenträgerstapelgruppe 10 aus dem Anlieferbereich 4 durch die automatisiert betriebene zweite Beladevorrichtung 160,
- Transport der mit der Warenträgerstapelgruppe 10 beladenen (dritten) Transportladehilfe 150 mit dem autonom verfahrbaren, fahrerlosen Transportfahrzeug 9 von der Beladestation zum Lagerbereich 5,
- Abstellen der mit zumindest einem Warenträgerstapel 8 beladenen (dritten) Transportladehilfe 150 auf der Lagerfläche 31 im Lagerbereich 5,
- Lagerung der mit der Warenträgerstapelgruppe 10 beladenen (dritten) Transportladehilfe 150 im Lagerbereich 5.

Das Verfahren kann ferner die Schritte umfassen:
- einen Transport von leeren Zielladehilfsmittel 34; 134 durch die autonom verfahrbaren, fahrerlosen Transportfahrzeuge 9 zur Entladestation und Bereitstellung genannter leerer Zielladehilfsmittel 34; 134 entweder an einer oder mehreren teilautomatisiert betriebenen Entladevorrichtung(en) 151 oder auf einer Pufferfläche 152b nahe der Entladevorrichtung(en) 151 durch ein oder mehrere autonom verfahrbare(s), fahrerlose(s) Transportfahrzeug(e) 9, und/oder
- einen Transport von teilbeladenen Zielladehilfsmittel 34; 134 durch die autonom verfahrbaren, fahrerlosen Transportfahrzeuge 9 von der automatisiert betriebenen Entladevorrichtung 32; 65; 75; 132 zu der teilautomatisiert betriebenen Entladevorrichtung 151 oder auf einer Pufferfläche 152b nahe der teilautomatisiert betriebenen Entladevorrichtung(en) 151, nachdem an der automatisiert betriebenen Entladevorrichtung 32; 65; 75; 132 die Warenträger 3 auf dem teilbeladenen Zielladehilfsmittel 34; 134 zusammengestellt wurden und sofern zum genannten Kommissionierauftrag noch Warenträger 3 benötigt werden, welche über die (dritten) Transportladehilfen 150 an der teilautomatisiert betriebenen Entladevorrichtung(en) 151 bereitgestellt werden.

Die Bearbeitung eines Kommissionierauftrages, welcher Warenträger 3 von der (dritten) Transportladehilfe 150 benötigt, kann folgende Schritte umfassen:
- Transport von einer oder mehreren die zum Kommissionierauftrag benötigten Warenträger 3 enthaltenden (dritten) Transportladehilfe(n) 150 vom Lagerbereich 5 zur Entladestation und Bereitstellung genannter (dritter) Transportladehilfe(n) 150 entweder an einer oder mehreren teilautomatisiert betriebenen Entladevorrichtung(en) 151 oder auf einer Pufferfläche 153a nahe der Entladevorrichtung(en) 151 durch ein oder mehrere autonom verfahrbare(s), fahrerlose(s) Transportfahrzeug(e) (9),
- manuelles Entladen einer oder mehrerer der (dritten) Transportladehilfe(n) 150, welche an der oder den teilautomatisiert betriebenen Entladevorrichtung(en) 151 bereitgestellt wird (werden), durch Entnahme der für die Bearbeitung des genannten Kommissionierauftrages benötigten Warenträger 3 durch eine Kommissionierperson, und
- manuelle Zusammenstellung der Warenträger 3 auf einem oder mehreren (leeren oder teilbeladenen) Zielladehilfsmitteln 34, 134 zum genannten Kommissionierauftrag durch eine Kommissionierperson, wenn das oder die Zielladehilfsmitteln 34, 134 an der oder die teilautomatisiert betriebenen Entladevorrichtung(en) 151 bereitgestellt wird (werden).

Die Zusammenstellung der Warenträger 3 kann folgende Schritte umfassen:
- Zusammenstellung der Warenträger 3 gemäß dem genannten Kommissionierauftrag zum Auftragsstapel 101 auf dem Zielladehilfsmittel 34 in der ersten Stapelladehilfe 100a oder auf dem Boden 205 der zweiten Stapelladehilfe 100b, welche erste Stapelladehilfe 100a oder zweite Stapelladehilfe 100b an der teilautomatisiert betriebenen Entladevorrichtung(en) 151 bereitgestellt wird.

Das oben beschriebene Verfahren zum Lagern und Kommissionieren von Waren 2 im Kommissionierlager 1a, 1b, 1c, 1d kann zusätzlich die Schritte umfassen
- Bereitstellung einer Auftragsstapel-Ladungssicherungsstation entweder mit einer oder mehreren automatisiert betriebenen Ladungssicherungsvorrichtung(en) 180 oder mit einer oder mehreren automatisiert betriebenen Ladungssicherungsvorrichtung(en) 180 und einer Pufferfläche 185 nahe der Ladungssicherungsvorrichtung(en) 180, welche Ladungssicherungsvorrichtung 180 zur Transportsicherung eines Auftragsstapels 101 mit einem Sicherungsmittel 181 ausgebildet ist,
- Transport von jeweils mit einem Auftragsstapel 101 beladenen Stapelladehilfen 100a, 100b durch die autonom verfahrbaren, fahrerlosen Transportfahrzeuge 9 zu genannter Auftragsstapel-Ladungssicherungsstation und Bereitstellung einer oder von mehreren Stapelladehilfe(n) 100a, 100b entweder an einer oder mehreren automatisiert betriebenen Ladungssicherungsvorrichtung (en) 180 oder auf einer Pufferfläche 185 nahe der Ladungssicherungsvorrichtung(en) 180,
- Entfernen des Auftragsstapels 101 von der Stapelladehilfe 100a, 100b durch eine Hebevorrichtung (Hubrahmen 183 und Teleskopgabeln 184), mit welcher das Zielladehilfsmittel 34 mit dem Auftragsstapel 101 von der ersten Stapelladehilfe 100a abgehoben wird, wenn das Kommissionierlager 1a; 1b; 1c; 1d die erste Stapelladehilfe 100a umfasst, oder mit welcher der Auftragsstapel 101 von der zweiten Stapelladehilfe 100b abgehoben wird, wenn das Kommissionierlager 1a; 1b; 1c; 1d die zweite Stapelladehilfe 100b umfasst,
- Sicherung des Auftragsstapels 101 mit dem Sicherungsmittel 181 durch die automatisiert betriebene Ladungssicherungsvorrichtung 180, indem das Sicherungsmittel 181 um den Auftrags stapel 101 umfänglich angebracht wird,
- Transport des gesicherten Auftragsstapels 101, insbesondere durch die autonom verfahrbaren, fahrerlosen Transportfahrzeuge 9, von der Ladungssicherungsstation zu einem Auslieferbereich.

Nach der ersten Ausführung wird das Zielladehilfsmittel 34 mit dem Auftragsstapel 101 relativ zur ersten Stapelladehilfe 100a angehoben und gleichzeitig der aus der ersten Stapelladehilfe 100a herausgehobene Auftragsstapel 101 zur Stabilisierung mit dem Sicherungsmittel 181 umwickelt. Danach wird der gesicherte Auftragsstapel 101 durch die Hebevorrichtung wieder abgesenkt und an eine (nicht gezeigte) stationäre Fördertechnik oder an ein autonom verfahrbares, fahrerloses Transportfahrzeug 9 übergeben. Der nunmehr gesicherte Auftragsstapel 101 kann von der Ladungssicherungsstation zu einem Auslieferbereich (Konsolidierungsbereich bzw. Warenausgang) transportiert werden. In diesem Fall bildet das Zielladehilfsmittel 34 den Auslieferladungsträger.

Nach der zweiten Ausführung wird der Auftragsstapel 101 relativ zur zweiten Stapelladehilfe 100a angehoben und gleichzeitig der aus der zweiten Stapelladehilfe 100a herausgehobene Auftragsstapel 101 zur Stabilisierung mit dem Sicherungsmittel 181 umwickelt. Danach wird der gesicherte Auftragsstapel 101 durch die Hebevorrichtung wieder abgesenkt und auf einen Auslieferladungsträger, bevorzugt ein Rollcontainer, eine Palette und dgl. abgegeben. Der Auslieferladungsträger wird durch eine (nicht gezeigte) stationäre Fördertechnik oder ein autonom verfahrbares, fahrerloses Transportfahrzeug 9 von der Ladungssicherungsstation zu einem Auslieferbereich (Konsolidierungsbereich bzw. Warenausgang) transportiert.

Der Transport der entladenen Stapelladehilfen 100a, 100b durch die autonom verfahrbaren, fahrerlosen Transportfahrzeuge 9 umfasst die Schritte:
- Transport der ersten Stapelladehilfe 100a von der Ladungssicherungsstation zur Bestückungsstation mit einer oder mehreren automatisiert betriebenen Bestückungsvorrichtung(en) 170, sofern im Kommissionierlager 1a; 1b; 1c; 1d eine erste Stapelladehilfe 100a verwendet wird, und/oder
- Transport der zweiten Stapelladehilfe 100b von der Ladungssicherungsstation zur Entladestation und Bereitstellung der zweiten Stapelladehilfe(n) 100b entweder an einer automatisiert betriebenen Entladevorrichtung 32; 65; 75; 132 oder auf einer Pufferfläche 136 nahe der Umladevorrichtung 32; 65; 75; 132, sofern im Kommissionierlager 1a; 1b; 1c; 1d eine zweite Stapelladehilfe 100b verwendet wird, und/oder
- Transport der zweiten Stapelladehilfe 100b von der Ladungssicherungsstation zur Entladestation und Bereitstellung der zweiten Stapelladehilfe(n) 100b entweder an einer teilautomatisiert betriebenen Entladevorrichtung 151 oder auf einer Pufferfläche 153b nahe der Entladevorrichtung 151, sofern im Kommissionierlager 1a; 1b; 1c; 1d eine zweite Stapelladehilfe 100b verwendet wird.

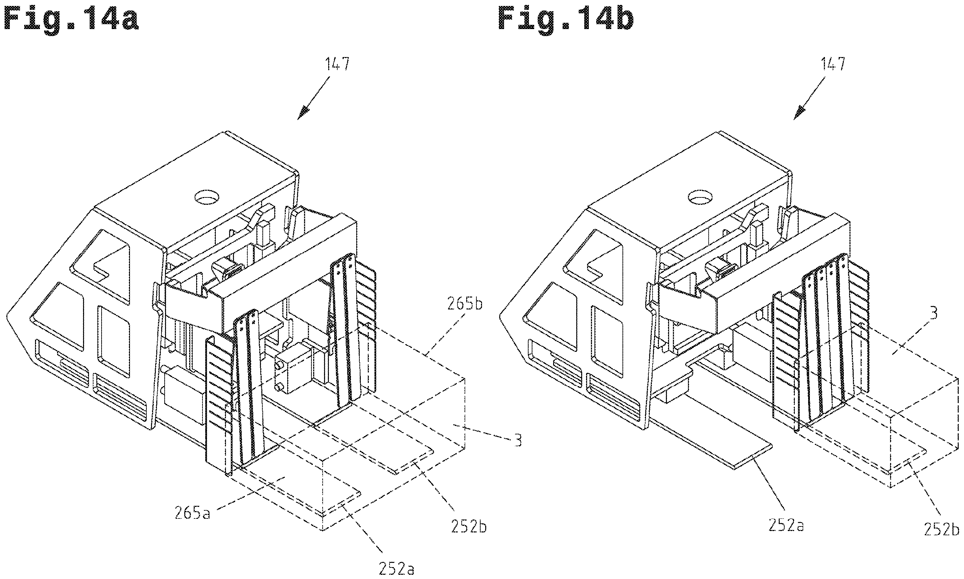

In den Fig. 13a bis 13d und 14a und 14b ist die Transfervorrichtung 147 zum automatischen Entladen einer Transportladehilfe 7, 107 mit übereinander gestapelten Warenträgern 3 und zum Beladen eines Zielladehilfsmittels 34, 134 mit Warenträgern 3 durch Klemmgreifen. Es ist also kein Sauggreifen vorgesehen, welches das Spektrum an verschiedenen Warenträgern 3 stark einschränken würde. Die Transfervorrichtung 147 umfasst eine Klemmgreifeinheit, insbesondere die Klemmbacken 254a, 254b.

Eine solche Transfervorrichtung 147 kann an einer oben beschriebenen automatisiert betriebenen Entladevorrichtung 32, 65, 75, 132 der Entladestation (Umladestation) für ein Kommissionierlager 1a, 1b, 1c, 1d eingesetzt werden. Die Entladevorrichtung 32, 65, 75, 132 (Umladevorrichtung) umfasst die gegenüber einer Tragkonstruktion 42, 142 im Raum bewegbare Transfervorrichtung 147. Die Transfervorrichtung 147 kann in einer x-y-z-Richtung bewegt und um eine Vertikalachse (z-Achse) gedreht werden.

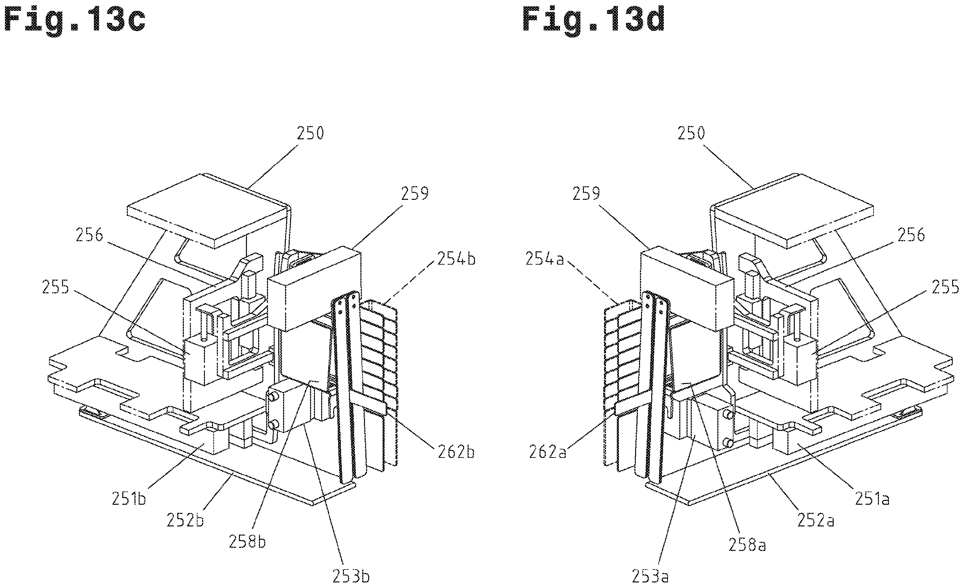

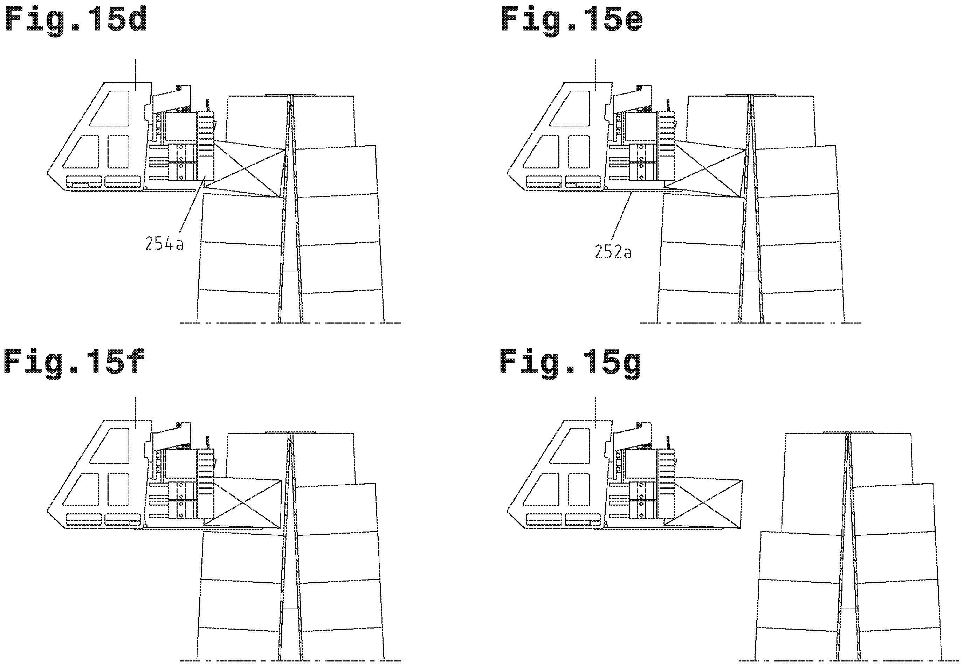

Die Transfervorrichtung 147 umfasst:
- einen Grundrahmen 250,
- durch erste Antriebsvorrichtungen 251a, 251b relativ gegenüber dem Grundrahmen 250 und in einer ersten Richtung (y) unabhängig voneinander zwischen einer zurückgezogenen Ausgangsstellung (wie in den Fig. 13a, 13b in vollen Linien dargestellt) und einer ausgefahrenen Aufnahmestellung (wie in den Fig. 14a, 14b in strichlierte Linien dargestellt) bewegbare Beladezungen 252a, 252b, welche in einer ausgefahrenen Aufnahmestellung zumindest einen Warenträger 3 aufnehmen,
- durch zumindest eine zweite Antriebsvorrichtung 253a, 253b in einer zweiten Richtung (x) relativ zueinander zwischen einer zurückgezogenen Öffnungsstellung (wie in den Fig. 13c, 13d in strichlierten Linien dargestellt) und einer angestellten Klemmstellung (wie in den Fig. 13c, 13d und in den Fig. 14a, 14b in vollen Linien dargestellt) bewegbare Klemmbacken 254a, 254b, und
- einen durch zumindest eine dritte Antriebsvorrichtung 255 in einer dritten Richtung (z) relativ gegenüber dem Grundrahmen 250 bewegbaren Hubrahmen 256, auf welchem die Klemmbacken 254a, 254b gelagert und durch welchen die Klemmbacken 254a, 254b zwischen einer unteren Höhenstellung (wie in Fig. 15c dargestellt) und einer oberen Höhenstellung (wie in Fig. 15d dargestellt) bewegbar sind, sodass zum Entladen der Transportladehilfe 7, 107
- der zumindest eine Warenträger 3 durch die gegen den zumindest einen Warenträger 3 angestellten Klemmbacken 254a, 254b anhebbar (Fig. 15d) und
- zumindest eine der Beladezungen 252a, 252b zumindest teilweise unter den durch die Klemmbacken 254a, 254b angehobenen zumindest einen Warenträger 3 schiebbar ist, um den zumindest einen Warenträger 3 in der ausgefahrenen Aufnahmestellung aufzunehmen (Fig. 15e und 15f).

In der gezeigten Ausführung sind die Klemmbacken 254a, 254b durch zweite Antriebsvorrichtungen 253a, 253b zwischen der zurückgezogenen Öffnungsstellung und der angestellten Klemmstellung bewegbar. Es kann aber auch nur eine der Klemmbacken 254a, 254b, beispielweise die erste Klemmbacke 254a durch eine einzige zweite Antriebsvorrichtung 253a relativ zur zweiten Klemmbacke 254b bewegbar sein.

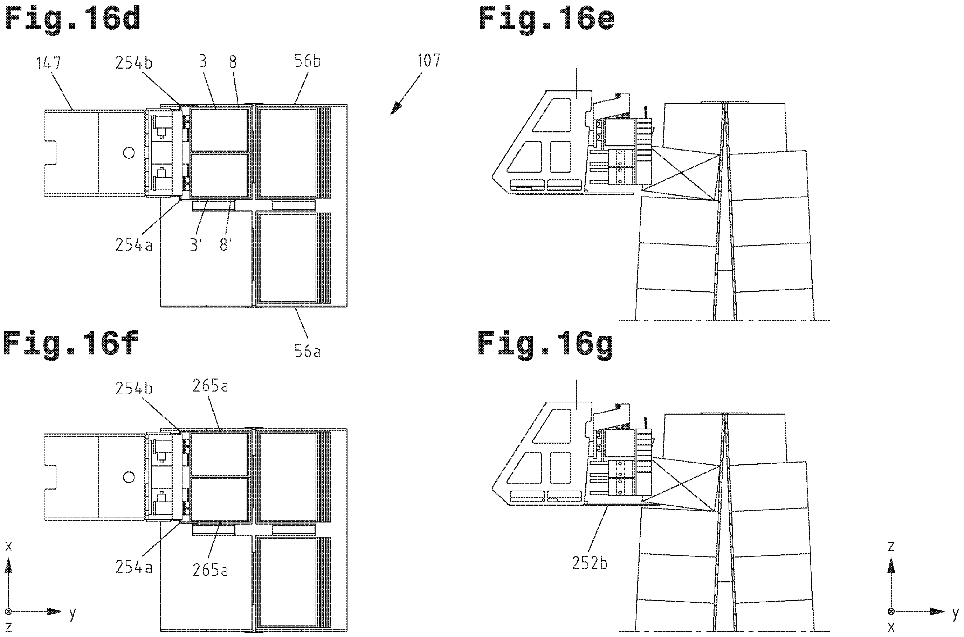

Wie in Fig. 13c eingetragen, bilden die erste Klemmbacke 254a und zweite Klemmbacke 254b jeweils parallel zueinander verlaufende Klemmbackenstege ausbilden, welche in der angestellten Klemmstellung der Klemmbacken 254a, 254b mit den einander abgewandten Warenträgerwänden 265a, 265b eines Warenträgers 3 oder den einander abgewandten Warenträgerwänden 265a (Fig. 14a) nebeneinander angeordneter Warenträger 3 (Fig. 16f) in Kontakt gebracht werden. Die Klemmbackenstege können auch durch Schlitze getrennte Federzungen ausbilden, welche auch besonders gut an unebene Warenträgerwände 265a, 265b angelegt werden können.

Die Transfervorrichtung 147 kann auch eine Anschlagvorrichtung mit einem oder mehreren Anschlagelementen 257a, 257b umfassen, gegen welche(s) der zumindest eine Warenträger 3 anlegbar ist, insbesondere wenn sich dieser auf den in die ausgefahrene Aufnahmestellung bewegten Beladezungen 252a, 252b (Fig. 14a) befindet oder auf der in die ausgefahrene Aufnahmestellung bewegte Beladezunge 252b (Fig. 14b) befindet.

Nach einer möglichen Ausführung sind die erste Klemmbacke 254a auf einem ersten Klemmbackenrahmen 258a und die zweite Klemmbacke 254b auf einem zweiten Klemmbackenrahmen 258b angeordnet, wobei einer der ersten und zweiten Klemmbackenrahmen 258a, 258b durch zumindest eine vierte Antriebsvorrichtung 259 in einer zweiten Richtung (x) zumindest zwischen einer ersten Konfigurationsbreite und einer zweiten Konfigurationsbreite verstellt werden kann, um in der ersten Konfigurationsbreite zwischen der ersten Klemmbacke 254a und zweiten Klemmbacke 254b einen Warenträger 3 mit einer ersten Längenabmessung (wie in Fig. 14a dargestellt - beispielweise 600 mm) und in der zweiten Konfigurationsbreite zwischen der ersten Klemmbacke 254a und zweiten Klemmbacke 254b einen Warenträger 3 mit einer zweiten Längenabmessung (wie in Fig. 14b dargestellt - beispielweise 300 mm).

Durch die Breitenveränderung kann die Transfervorrichtung 147 auch Warenträger 3 mit unterschiedlichen Längenabmessungen manipulieren. Auch wenn bloß eine ersten Konfigurationsbreite und zweite Konfigurationsbreite gezeigt ist, können natürlich zusätzliche Konfigurationsbreiten eingestellt werden.

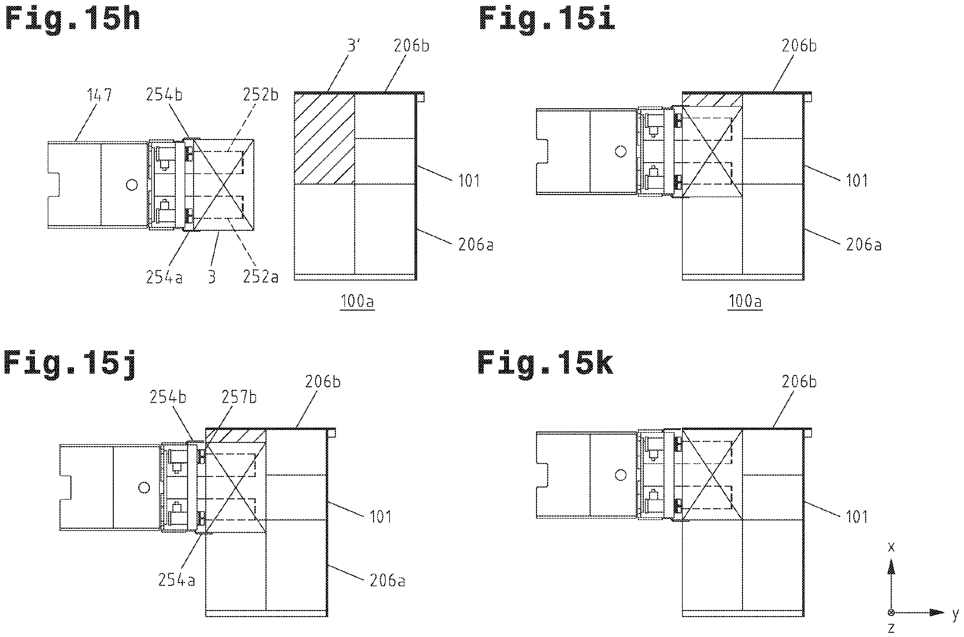

Es kann sich auch von Vorteil erweisen, wenn zumindest eine der Klemmbacken 254a, 254b, beispielweise die Klemmbacken 254a, wie in Fig. 13a eingetragen, zum Beladen des Zielladehilfsmittels 34, 134 zusätzlich durch eine fünfte Antriebsvorrichtung 260a, 260b in der ersten Richtung (y) relativ gegenüber dem Rahmen 250 in eine zurückgezogene Freigabestellung bewegbar ist. In der zurückgezogenen Freigabestellung ragen das oder die Anschlagelement(e) 257a, 257b gegenüber der genannten zumindest einen Klemmbacke 254a, 254b vor, sodass der zumindest eine Warenträger 3 zum Beladen des Zielladehilfsmittels 34, 134 ungehindert von der zumindest einen Beladezunge 252a, 252b auf das Zielladehilfsmittel 34, 134 gestapelt werden kann. Dies ist in Fig. 15j) bis 15k) dargestellt. Diese Ausführung ist von Vorteil, da die Klemmung des Warenträgers 3 bis knapp vor der Abgabe des Warenträgers 3 aufrecht erhalten bleiben kann.

Grundsätzlich ist es auch denkbar, dass die erste Klemmbacke 254a und zweite Klemmbacke 254b jeweils zusätzlich durch eine fünfte Antriebsvorrichtung 260a, 260b in der ersten Richtung (y) relativ gegenüber dem Rahmen 250 in eine zurückgezogene Freigabestellung bewegbar sind.

Wie in den Figuren ersichtlich, ist am ersten oder zweiten Klemmbackenrahmen 258a, 258b auch die zweite Antriebsvorrichtung 253a, 253b und eines von mehreren Anschlagelementen 257a, 257b der Anschlagvorrichtung gelagert. Ist auch die fünfte Antriebsvorrichtung 260a, 260b vorhanden, so ist diese ebenfalls am ersten oder zweiten Klemmbackenrahmen 258a, 258b gelagert.

Die Entladevorrichtung 32; 65; 75; 132 umfasst eine Steuerungsvorrichtung 261, wie schematisch in Fig. 13a angedeutet, welche mit der ersten Antriebsvorrichtung 251a, 251b, zweiten Antriebsvorrichtung 253a, 253b, dritten Antriebsvorrichtung 255 und gegebenenfalls der vierten Antriebsvorrichtung 259 und gegebenenfalls der fünften Antriebsvorrichtung 260a, 260b verbunden ist. Die ersten, zweiten, dritten und gegebenenfalls die vierten, fünften Antriebsvorrichtungen 251a, 251b, 253a, 253b, 255, (259), (260a, 260b) umfassen beispielweise elektrisch und/oder fluidisch betätigte Linearantriebe.

Die Transfervorrichtung 147 kann auch mit einer ersten Sensorik ausgestattet sein, durch welche bei der Entnahme zumindest eines Warenträgers 3 von der Transportladehilfe 7, 107 der Entnahmevorgang überwacht werden kann. Beispielweise wird eine Stapelhöhe des Warenträgerstapels 8 erfasst. Basierend auf der Stapelhöhe und durch Erfassen der Warenträger 3, welche an der Entladevorrichtung 32; 65; 75; 132 entladen werden sollen, kann das exakte Aufnahmeniveau ermittelt werden, in welcher die Beladezunge(n) 252a, 252b in die Aufnahmestellung ausgefahren werden sollen. Die erste Sensorik umfasst nach gezeigter Ausführung am ersten oder zweiten Klemmbackenrahmen 258a, 258b schwenkbar gelagerte Tastfinger 262a, 262b, welche in ihrer Ausgangsstellung (Fig. 13a, 13b) ausgeschwenkt sind und in ihrer Betätigungsstellung (Fig. 14a, 14b) eingeschwenkt sind. Die Ausgangsstellung und Betätigungsstellung können über einen nicht dargestellten induktiven Näherungsschalter (Initiator) erfasst werden. Bevorzugt werden die Tastfinger 262a, 262b selbstständig in die Ausgangsstellung ausgeschwenkt. Die erste Sensorik kann alternativ aber auch einen oder mehrere berührungslos wirkende Sensoren, beispielsweise optische Sensoren, umfassen, welche denselben Zweck erfüllen können.

Andererseits kann die Entladevorrichtung 32; 65; 75; 132 mit der ersten Sensorik ausgestattet werden, durch welche bei der Entnahme zumindest eines Warenträgers 3 aus der Transportladehilfe 7, 107 eine Stapelhöhe des Warenträgerstapels 8 erfassen kann, wie nicht näher dargestellt. Die erste Sensorik umfasst beispielweise ein Bilderfassungssystem mit zumindest einer Kamera und einer Bildauswerteeinheit.

Die Transfervorrichtung 147 kann auch mit einer zweiten Sensorik ausgestattet sein, durch welche bei dem Beladen des Zielladehilfsmittels 34, 134 der Beladevorgang überwacht werden kann. Beispielweise wird eine Stapelhöhe des Auftragsstapels 101 und/oder die ordnungsgemäße Beladung eines Warenträgers 3 auf dem Auftragsstapel 101, wie die Positionierung / Ausrichtung / Neigung der Warenträger 3 im Auftragsstapel 101, erfasst. Auch ist eine Kollisionsüberwachung vor dem Beladen des Zielladehilfsmittels 34, 134 möglich.

Die zweite Sensorik kann einen oder mehrere berührungslos wirkende Sensoren, beispielsweise optische Sensoren umfassen. Andererseits kann die Transfervorrichtung 147 und/oder die Entladevorrichtung 32; 65; 75; 132 mit der zweiten Sensorik ausgestattet werden, welche denselben Zweck erfüllen kann. Die zweite Sensorik umfasst beispielweise ein Bilderfassungssystem mit zumindest einer Kamera und einer Bildauswerteeinheit.

Die Steuerungsvorrichtung 261 kann auch mit der ersten Sensorik und zweiten Sensorik verbunden sein.

In den gemeinsam beschriebenen Fig. 15a bis 15g ist ein Verfahren bzw. eine Sequenz zum Entladen einer Transportladehilfe, beispielweise einer Transportladehilfe 107 mit in einem Aufnahmeschacht übereinander gestapelten Warenträgern 3 durch Klemmgreifen gezeigt. Die Warenträgern 3 weisen eine erste Längenabmessung, beispielweise 600 mm auf. Eine Breite beträgt beispielweise 400 mm. Die Entladevorrichtung 32; 65; 75; 132 ist in diesen Figuren aus Gründen der besseren Übersicht nicht dargestellt.

Fig. 15a (Schritt i) zeigt die Bewegung der Transfervorrichtung 147 relativ zu der Transportladehilfe 107, indem die Steuerungsvorrichtung 261 die im Raum bewegbare Transfervorrichtung 147 ansteuert. Erkennbar ist, dass die Tastfinger 262a, 262b noch oberhalb des obersten Warenträgers 3 positioniert sind.

Fig. 15b (Schritt ii) zeigt die Positionierung der Transfervorrichtung 147 relativ zum Warenträgerstapel 8, insbesondere unter Zuhilfenahme der ersten Sensorik. Umfasst die erste Sensorik die Tastfinger 262a, 262b, werden durch eine Absenkbewegung der Transfervorrichtung 147 die Tastfinger 262a, 262b betätigt, sodass diese in die Betätigungsstellung bewegt werden. Wie bereits oben beschrieben, kann die Positionierung der Transfervorrichtung 147 relativ zum Warenträgerstapel 8 auch durch einen optischen Sensor oder ein Bildverarbeitungssystem (erste Sensorik) erfolgen.

Wie in Fig. 15c (Schritt iii) gezeigt, hat die Transfervorrichtung 147 die gewünschte Relativposition (Höhenposition (z), Breitenposition (x) und Tiefenposition (y)) erreicht, in welcher die Klemmbacken 254a, 254b seitlich neben Warenträgerwänden 265a, 265b (siehe auch Fig. 14a) eines Warenträgers 3 positioniert sind. Die Klemmbacken 254a, 254b sind in der zurückgezogenen Öffnungsstellung. Die Transfervorrichtung 147 verharrt solange in der Relativposition, bis die Schritte gemäß Fig. 15d bis 15f (Schritte iv) bis vii) durchgeführt wurden.

Fig. 15d (Schritt iv) zeigt die Klemmung des Warenträgers 3 durch Betätigung der zumindest einen zweiten Antriebsvorrichtung 253a, 253b, um die Klemmbacken 254a, 254b in der zweiten Richtung (x) relativ zueinander und aus einer zurückgezogenen Öffnungsstellung in die angestellte Klemmstellung zu bewegen, und das Anheben des Warenträgers 3 zumindest einer Stapellage durch die gegen den Warenträger 3 angestellten Klemmbacken 254a, 254b durch Betätigung der zumindest einen dritten Antriebsvorrichtung 255, um den Hubrahmen 256 in der dritten Richtung (z) relativ gegenüber dem Grundrahmen 250 und die Klemmbacken 254a, 254b aus der unteren Höhenstellung in die oberen Höhenstellung zu bewegen.

Fig. 15e (Schritt v) zeigt das Einschieben beider Beladezungen 252a, 252b unter den angehobenen Warenträger 3 durch Betätigung der ersten Antriebsvorrichtungen 251a, 251b relativ gegenüber dem Grundrahmen 250, um in der ausgefahrenen Aufnahmestellung den Warenträger 3 aufzunehmen.

Fig. 15f (Schritt vi) und Fig. 14a zeigen noch die Aufnahmestellung der Beladezungen 252a, 252b, in welcher die Beladezungen 252a, 252b vollständig ausgefahren sind und der Warenträger 3 auf den Beladezungen 252a, 252b auflastet. Es kann sich in einem optionalen Schritt vii) von Vorteil erweisen, wenn die Klemmung des Warenträgers 3 durch Betätigung der zumindest einen zweiten Antriebsvorrichtung 253a, 253b kurzzeitig gelöst wird, indem zumindest eine der Klemmbacken 254a, 254b in der zweiten Richtung (x) aus der angestellten Klemmstellung in die zurückgezogene Öffnungsstellung bewegt wird, sodass der Warenträger 3 auf die Beladezungen 252a, 252b kippt.

Wird der optionale Schritt vii) ausgeführt, wird danach wieder der Warenträger 3 durch Betätigung der zumindest einen zweiten Antriebsvorrichtung 253a, 253b geklemmt, indem die Klemmbacken 254a, 254b in der zweiten Richtung (x) relativ zueinander und aus einer zurückgezogenen Öffnungsstellung in die angestellte Klemmstellung bewegt werden.

Fig. 15g zeigt noch die Bewegung der Transfervorrichtung 147 relativ zu der Transportladehilfe 107, indem die Steuerungsvorrichtung 261 die im Raum bewegbare Transfervorrichtung 147 ansteuert.

Die Steuerungsvorrichtung 261 ist dazu eingerichtet, die Transfervorrichtung 147 und die / den ersten / zweiten / dritten Antriebsvorrichtung(en) 251a, 251b, 253a, 253b, 255 zum Entladen eines Warenträgers 3 derart anzusteuern, um die Verfahrensschritte i) bis vii) auszuführen.

In den gemeinsam beschriebenen Fig. 15h bis 15n ist ein Verfahren bzw. eine Sequenz zum Beladen eines Zielladehilfsmittels, beispielweise eines Zielladehilfsmittels 34 in einer Stapelladehilfe 100a gezeigt. Aus Gründen der besseren Übersicht, ist die Stapelladehilfe 100a nur abschnittsweise dargestellt.

Nach dem Schritt vi) oder gegebenenfalls Schritt vii) wird die Transfervorrichtung 147 mit dem zwischen den Klemmbacken 254a, 254b gehaltenen Warenträger 3 relativ zum Zielladehilfsmittel 34 bewegt, indem die Steuerungsvorrichtung 261 die im Raum bewegbare Transfervorrichtung 147 ansteuert, wie in Fig. 15h (Schritt i) gezeigt.

Fig. 15h zeigt, dass das Zielladehilfsmittel 34 bereits mit einigen Warenträger 3 beladen wurde. Der zusätzliche Warenträger 3 soll auf dem schraffiert dargestellten und bereits am Zielladehilfsmittel 34 befindlichen Warenträger 3' abgestellt werden. Der Warenträger 3' befindet sich im Randbereich der Stapelwand 206b.

Fig. 15i (Schritt ii) zeigt die Positionierung der Transfervorrichtung 147 (mit dem zusätzlichen Warenträger 3) relativ zum Auftragsstapel 101, insbesondere unter Zuhilfenahme der zweiten Sensorik. In Fig. 15i befindet sich die Transfervorrichtung 147 und/oder der Warenträger 3 in einer Zwischenposition (Höhenposition (z), Breitenposition (x) und/oder Tiefenposition (y)).

Fig. 15j) (Schritt iii) zeigt, wie zum Beladen des Zielladehilfsmittels 34 die Klemmbacke 254b, welche der Stapelwand 206b zugewandt ist, durch die fünfte Antriebsvorrichtung 260b in der ersten Richtung (y) relativ gegenüber dem Rahmen 250 und in die zurückgezogenen Freigabestellung bewegt wird. Wie man erkennen kann, ragen die Anschlagelement(e) 257a, 257b gegenüber der genannten Klemmbacke 254b vor, nachdem diese in die Freigabestellung bewegt wurde.

Fig. 15k (Schritt iv) zeigt die Positionierung der Transfervorrichtung 147 und/oder des Warenträgers 3 aus der Zwischenposition (Höhenposition (z), Breitenposition (x) und/oder Tiefenposition (y)) in die Endposition (Höhenposition (z), Breitenposition (x) und Tiefenposition (y)), in welcher der zusätzliche Warenträger 3 auf den bereits am Zielladehilfsmittel 34 befindlichen Warenträger 3' abgeladen werden kann. Die Positionierung des Warenträgers 3 in die Endposition kann durch eine Bewegung der Transfervorrichtung 147 erfolgen.

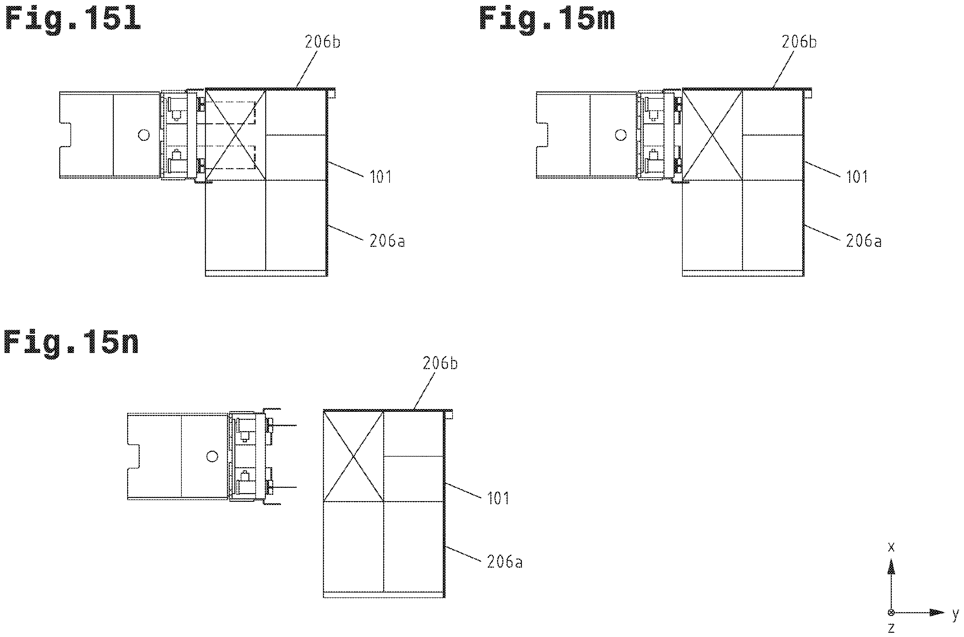

Fig. 15l (Schritt v) zeigt die Bewegung der Klemmbacke 254a aus der angestellten Klemmstellung in die zurückgezogene Öffnungsstellung. Der Warenträger 3 steht noch auf den Beladezungen 252a, 252b, wenn beide Beladezungen 252a, 252b in die Aufnahmestellung bewegt wurden, oder auf einer der Beladezungen 252a, 252b, wenn ausschließlich eine der Beladezungen 252a, 252b in die Aufnahmestellung bewegt wurde.

Fig. 15m (Schritt vi) zeigt das Beladen / die Abgabe des Warenträgers 3 auf den Warenträger 3'. Hierzu werden beide Beladezungen 252a, 252b in die zurückgezogene Ausgangsstellung bewegt, wenn beide Beladezungen 252a, 252b in die Aufnahmestellung bewegt wurden, oder die eine Beladezunge 252a, 252b in die zurückgezogene Ausgangsstellung bewegt, wenn ausschließlich eine der Beladezungen 252a, 252b in die Aufnahmestellung bewegt wurde.

Fig. 15n zeigt noch die Bewegung der Transfervorrichtung 147 relativ zu der Transportladehilfe 107, indem die Steuerungsvorrichtung 261 die im Raum bewegbare Transfervorrichtung 147 ansteuert.

Es sei an dieser Stelle hingewiesen, dass von der Transfervorrichtung 147, entweder ein einzelner Warenträger 3 oder ein Warenträgerteilstapel von der Transportladehilfe 7, 107 entnommen und auf das Zielladehilfsmittel 34, 134 abgeladen werden kann. Auch können anstatt einem Warenträger 3 mit der ersten Längenabmessung (beispielsweise 600 mm) gleichzeitig zwei Warenträger 3 mit der zweiten Längenabmessung (beispielsweise 300 mm) von der Transportladehilfe 7, 107 entnommen und auf das Zielladehilfsmittel 34, 134 abgeladen werden. Die Breitenabmessungen sind bevorzugt gleich, beispielsweise 400 mm.

Auch ist es möglich, dass zur Stapelstabilisierung des Auftragsstapels 101 zwischen Stapellagen in einer Stapelebene eine oder mehrere leere Warenträger 3 gestapelt werden. Sind die Warenträger zusammenklappbare Behälter, so wird in einer Stapelebene ein zusammengeklappter Behälter oder werden mehrere zusammengeklappte Behälter zwischen Stapellagen gestapelt. Dies erfolgt ebenso automatisch durch die Transfervorrichtung 147.

In den gemeinsam beschriebenen Fig. 16a bis 16n ist ein Verfahren bzw. eine Sequenz zum Entladen einer Transportladehilfe, beispielweise einer Transportladehilfe 107 mit in einem Aufnahmeschacht übereinander gestapelten und in einer Stapellage nebeneinander angeordneten Warenträgern 3,3' durch Klemmgreifen gezeigt. Die Warenträgern 3,3' weisen eine zweite Längenabmessung, beispielweise 300 mm auf. Eine Breite beträgt beispielweise 400 mm. Die Entladevorrichtung 32; 65; 75; 132 ist in diesen Figuren aus Gründen der besseren Übersicht nicht dargestellt.

Fig. 16a (Schritt i) zeigt die Bewegung der Transfervorrichtung 147 relativ zu der Transportladehilfe 107, indem die Steuerungsvorrichtung 261 die im Raum bewegbare Transfervorrichtung 147 ansteuert. Erkennbar ist, dass die Tastfinger 262a, 262b noch oberhalb der obersten Warenträger 3, 3' positioniert sind.

Fig. 16b (Schritt ii) zeigt die Positionierung der Transfervorrichtung 147 relativ zu den Warenträgerstapeln 8, 8', insbesondere unter Zuhilfenahme der zweiten Sensorik. Umfasst die erste Sensorik die Tastfinger 262a, 262b, werden durch eine Absenkbewegung der Transfervorrichtung 147 die Tastfinger 262a, 262b betätigt, sodass diese in die Betätigungsstellung bewegt werden. Wie bereits oben beschrieben, kann die Positionierung der Transfervorrichtung 147 relativ zu den Warenträgerstapeln 8, 8' auch durch einen oder mehrere optischen Sensor(en) oder ein Bildverarbeitungssystem (erste Sensorik) erfolgen.

Wie in den Fig. 16c und Fig. 16d (Schritt iii) gezeigt, hat die Transfervorrichtung 147 die gewünschte Relativposition (Höhenposition (z), Breitenposition (x) und Tiefenposition (y)) erreicht, in welcher die Klemmbacken 254a, 254b seitlich neben voneinander abgewandten Warenträgerwänden 265a nebeneinander angeordneter Warenträger 3,3' positioniert sind. Die Klemmbacken 254a, 254b sind in der zurückgezogenen Öffnungsstellung. Die Transfervorrichtung 147 verharrt solange in der Relativposition, bis die Schritte gemäß Fig. 16d bis 16n (Schritte iv) bis ix) durchgeführt wurden.

Fig. 16e und Fig. 16f (Schritt iv) zeigen die Klemmung der nebeneinander angeordneten Warenträger 3, 3' durch Betätigung der zumindest einen zweiten Antriebsvorrichtung 253a, 253b, um die Klemmbacken 254a, 254b in der zweiten Richtung (x) relativ zueinander und aus einer zurückgezogenen Öffnungsstellung in die angestellte Klemmstellung zu bewegen, und gleichzeitiges Anheben der nebeneinander angeordneten Warenträger 3, 3' zumindest einer Stapellage durch die gegen die Warenträger 3,3' angestellten Klemmbacken 254a, 254b durch Betätigung der zumindest einen dritten Antriebsvorrichtung 255, um den Hubrahmen 256 in der dritten Richtung (z) relativ gegenüber dem Grundrahmen 250 und die Klemmbacken 254a, 254b aus der unteren Höhenstellung in die obere Höhenstellung zu bewegen.

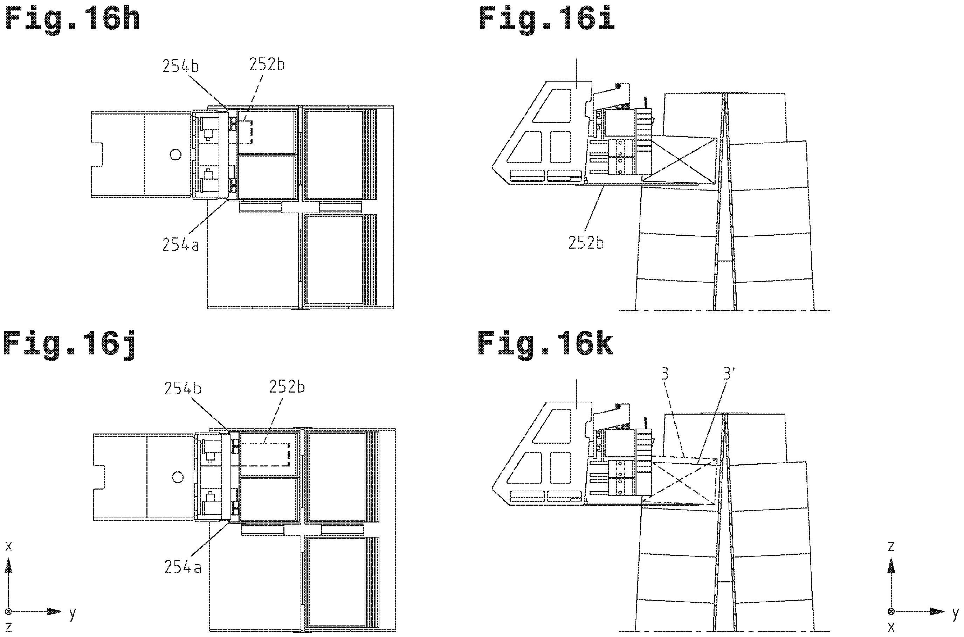

Fig. 16g und Fig. 16h (Schritt v) zeigen das Einschieben einer der Beladezungen 252a, 252b, nämlich konkret der Beladezunge 252b, unter einen der nebeneinander angeordneten und angehobenen Warenträger 3 durch Betätigung einer der ersten Antriebsvorrichtungen 251a, 251b, nämlich konkret der ersten Antriebsvorrichtung 251b, relativ gegenüber dem Grundrahmen 250, um in der ausgefahrenen Aufnahmestellung den einen der Warenträger 3 aufzunehmen.

Fig. 16i und Fig. 16j (Schritt vi) zeigen noch die Aufnahmestellung der Beladezunge 252b, in welcher die Beladezunge 252b vollständig ausgefahren ist und der Warenträger 3 auf der Beladezunge 252b auflastet.

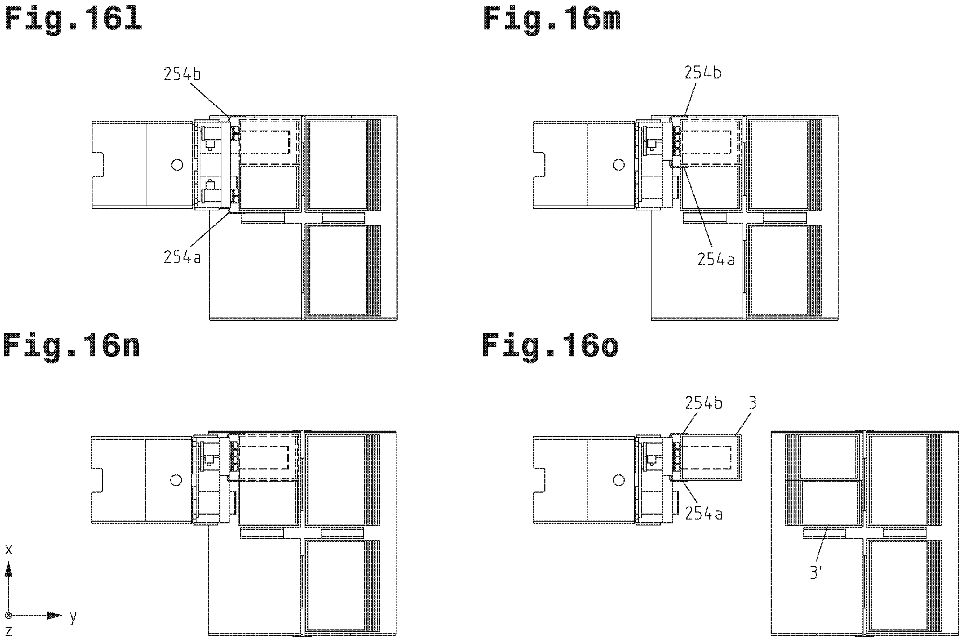

Fig. 16k und Fig. 16l (Schritt vii) zeigen das kurzzeitige Lösen der Klemmung der Warenträger 3, 3' durch Betätigung der zumindest einen zweiten Antriebsvorrichtung 253a, 253b, um zumindest eine der Klemmbacken 254a, 254b in der zweiten Richtung (x) aus der angestellten Klemmstellung in die zurückgezogene Öffnungsstellung zu bewegen, sodass der nicht von unten unterstütze Warenträger 3' auf den Warenstapel 8' in der Transportladehilfe 107 zurückkippt.

Fig. 16m (Schritt viii) zeigt die Änderung der Konfigurationsbreite aus der ersten Konfigurationsbreite (siehe Fig. 16k, 16l) in die zweite Konfigurationsbreite (Fig. 16m) durch die zumindest eine vierte Antriebsvorrichtung 259 in der zweiten Richtung (x).

Fig. 16n (Schritt ix) zeigt die Klemmung des Warenträgers 3, welcher auf der in die ausgefahrene Aufnahmestellung bewegte Beladezunge 252a aufgenommen ist, durch Betätigung der zumindest einen zweiten Antriebsvorrichtung 253a, 253b, um die Klemmbacken 254a, 254b in der zweiten Richtung (x) relativ zueinander und aus einer zurückgezogenen Öffnungsstellung in die angestellte Klemmstellung zu bewegen.

Fig. 16o zeigt noch die Bewegung der Transfervorrichtung 147 relativ zu der Transportladehilfe 107, indem die Steuerungsvorrichtung 261 die im Raum bewegbare Transfervorrichtung 147 ansteuert.

Die Steuerungsvorrichtung 261 ist dazu eingerichtet, die Transfervorrichtung 147 und die / den ersten / zweiten / dritten / vierte Antriebsvorrichtung(en) 251a, 251b, 253a, 253b, 255, 259 zum Entladen eines Warenträgers 3 derart anzusteuern, um die Verfahrensschritte i) bis ix) auszuführen.

Soll nach dem Beladen eines Zielladehilfsmittels 34, 134 mit dem Warenträger 3, anschließend auch der Warenträger 3' auf das Zielladehilfsmittel 34, 134 geladen werden, wird zum Entladen entsprechend den Verfahrensschritten i) bis vii), gemäß den Fig. 15a bis 15f vorgegangen, lediglich mit dem Unterschied, dass die zweite Konfigurationsbreite eingestellt bleibt oder eingestellt wird, in welcher zwischen der ersten Klemmbacke 254a und zweiten Klemmbacke 254b der Warenträger 3' mit der zweiten Längenabmessung aufgenommen ist.

In Bezug auf das Beladen eines Zielladehilfsmittels wird auf die Offenbarung zu den Fig. 15h bis 15m hingewiesen und erfolgt auf dieselbe Weise, lediglich mit dem Unterschied, dass der Warenträger 3 von einer der Beladezungen 252a, 252b abgeladen wird.

Es sei an dieser Stelle hingewiesen, dass von der Transfervorrichtung 147, entweder ein einzelner Warenträger 3, 3' oder ein Warenträgerteilstapel von der Transportladehilfe 7, 107 entnommen und auf das Zielladehilfsmittel 34, 134 abgeladen werden kann.

Das beschriebene Kommissionierlager und Verfahren zum Lagern und Kommissionieren eignet sich insbesondere im Frischebereich von Lebensmitteln, wo verderbliche Waren, wie beispielsweise frischem Obst und Gemüse, einen schnellen Warenumschlag erfordern und bei denen üblicherweise nur eine beschränkte Anzahl von unterschiedlichen Sorten gleichzeitig kommissioniert werden müssen. Es ist eine besonders effiziente Handhabung der Waren 2 / Warenträger 3 mit hoher Kommissionierleistung in kurzen Zeiträumen möglich.

Abschließend wird auch festgehalten, dass der Schutzbereich durch die Patentansprüche bestimmt ist. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen.

Insbesondere wird auch festgehalten, dass die dargestellten Vorrichtungen in der Realität auch mehr oder auch weniger Bestandteile als dargestellt umfassen können. Teilweise können die dargestellten Vorrichtungen beziehungsweise deren Bestandteile auch unmaßstäblich und/oder vergrößert und/oder verkleinert dargestellt sein.

### Bezugszeichenaufstellung

- 1a..1d: Kommissionierlager
- 2: Ware
- 3: Warenträger
- 4: Anlieferbereich
- 5: Lagerbereich

- 6: Auftragsbearbeitungsbereich
- 7, 7a..7f: Transportladehilfe
- 8: Warenträgerstapel
- 8': (vor)kommissionierter Warenträgerstapel
- 8": (vor)kommissionierter Warenträgerteilstapel

- 9: Transportfahrzeug (Flurförderfahrzeug)
- 10: Warenträgerstapelgruppe
- 11: Depalettiervorrichtung
- 12a, 12b: Fördervorrichtung
- 13: Beladevorrichtung

- 14a, 14b: Fördervorrichtung
- 15a, 15b: Übergabeplatz
- 16a, 16b: Andienungsplatz
- 17: Transfervorrichtung Beladevorrichtung
- 18: Tragkonstruktion

- 19: Portalschlitten
- 20: Portalarm
- 30: Pufferfläche Beladestation
- 31: Lagerfläche
- 32: Entladevorrichtung
- 33: Fördervorrichtung
- 34a..34c: Zielladehilfsmittel
- 35: Fördervorrichtung
- 36: Pufferfläche Entladestation / Umladestation
- 37: Wartezone

- 40a..40b: Andienungsplatz
- 41: Transfervorrichtung Entladevorrichtung / Umladevorrichtung
- 42: Tragkonstruktion
- 43: Portalschlitten
- 44: Portalschlitten

- 45: Portalarm
- 46: Auftragsrechner
- 47: Steuerungssystem
- 50: Fahrgestell
- 51: Ladeplattform
- 52: Rad
- 53: lenkbares Rad
- 54: Fahrsteuerung

- 55: Boden
- 56a: erste Seitenwand
- 56b, 56d: erste Seitenwand
- 56c: zweite Seitenwand
- 57: Belade- und Entladeöffnung

- 57a, 57b: Belade- und Entladeöffnung
- 58: Abstellfläche
- 59: Transportfläche
- 60: Stellfuß
- 61: Einführschräge

- 65: Entladevorrichtung
- 66: Pufferfläche
- 66a, 66b: Pufferfläche
- 67a, 67b: Andienungsplatz
- 68a, 68b: Fördervorrichtung

- 69: Transfervorrichtung
- 70a, 70b: Übernahmeplatz
- 71a, 71b: Andienungsplatz
- 75: Entladevorrichtung
- 76: Pufferfläche

- 76a, 76b: Pufferfläche
- 77a, 77b: Andienungsplatz
- 81: Tragkonstruktion
- 82: Portalschlitten
- 83: Portalarm

- 84: Transfervorrichtung
- 90: Reinigungsroboter
- 91a, 91b: Temperaturzone
- 92a, 92b: Datenträger
- 92c: Datenträger

- 100a, 100b: Stapelladehilfe
- 101: Auftragsstapel
- 107: Transportladehilfe
- 112a, 112b: Fördervorrichtung
- 113: Beladevorrichtung

- 114a, 114b: Fördervorrichtung
- 117: Transfervorrichtung
- 118: Tragkonstruktion
- 119: Portalschlitten
- 120: Portalarm

- 132: Entladevorrichtung
- 134: Zieladehilfsmittel
- 136: Pufferfläche Stapelladehilfe
- 139a..139b: Andienungsplatz Stapelladehilfe automatische Entladevorrichtung
- 142: Tragkonstruktion

- 143: Portalschlitten
- 144: Portalarm
- 145: Portalschlitten
- 146: Portalschlitten
- 147: Transfervorrichtung Entladevorrichtung / Umladevorrichtung

- 150: Transportladehilfe
- 151: Entladevorrichtung
- 152a: Andienungsplatz Transportladehilfe automatische Entladevorrichtung
- 152b: Andienungsplatz Stapelladehilfe automatische Entladevorrichtung

- 153a: Pufferfläche Transportladehilfe
- 153b: Pufferfläche Stapelladehilfe
- 154a, 154b: Hubplattform
- 155: Arbeitsplatz
- 156: Arbeitsfläche

- 160: Beladevorrichtung
- 161: Andienungsplatz zweite Beladevorrichtung
- 162: Transfervorrichtung
- 163: Pufferfläche
- 170: Bestückungsvorrichtung

- 171: Andienungsplatz Bestückungsvorrichtung
- 172: Transfervorrichtung
- 173: Pufferfläche
- 180: Ladungssicherungsvorrichtung
- 181: Sicherungsmittel

- 182: Andienungsplatz
- 183: Hubrahmen
- 184: Teleskopgabel
- 185: Pufferfläche
- 200a, 200b: Seitenwandteil

- 201a, 201b: Bodenwandteil
- 205: Boden
- 206a, 206b: Stapelwand
- 207: Abstellfläche
- 208: Transportfläche

- 210: Aufnahmekanal
- 211: Abstellklotz
- 212: Stellfuß
- 250: Grundrahmen
- 251a, 251b: erste Antriebsvorrichtung Beladezunge
- 252a, 252b: Beladezunge

- 253a, 253b: zweite Antriebsvorrichtung Klemmbacke
- 254a, 254b: Klemmbacke
- 255: dritte Antriebsvorrichtung Hubrahmen
- 256: Hubrahmen
- 257a, 257b: Anschlagelement

- 258a, 258b: Klemmbackenrahmen
- 259: vierte Antriebsvorrichtung Verstellung Breitenkonfiguration
- 260a, 260b: fünfte Antriebsvorrichtung Klemmbacke Freigabestellung
- 261: Steuerungsvorrichtung
- 262a, 262b: Tastfinger

- 265a, 265b: Warenträgerwand

## Patentansprüche

1. Verfahren zum Lagern und Kommissionieren von Waren (2), insbesondere Lebensmittel aus dem Frischebereich, enthaltenden und stapelbaren Warenträgern (3) in einem Kommissionierlager (1a; 1b; 1c; 1d), umfassend die Schritte
Bereitstellung von autonom verfahrbaren, fahrerlosen Transportfahrzeugen (9) im Kommissionierlager (1a; 1b; 1c; 1d), welche jeweils ein Fahrgestell (50) mit einer Antriebseinheit und eine auf dem Fahrgestell (50) angeordnete Ladeplattform (21) zur Aufnahme einer mobilen Transportladehilfe (7; 107) aufweist,
Bereitstellung von Warenträgerstapeln (8) aus mehreren übereinander angeordneten Warenträgern (3) in einem Anlieferbereich (4) des Kommissionierlagers (1a; 1b; 1c; 1d),
**gekennzeichnet durch** die zusätzlichen Schritte
Bereitstellung von Transportladehilfen (7; 107) jeweils zur Aufnahme und Lagestabilisierung wenigstens eines Warenträgerstapels (8; 8') aus mehreren übereinander angeordneten Warenträgern (3) im Kommissionierlager (1a; 1b; 1c; 1d), wobei die Transportladehilfen (7; 107) mobile leere (erste) Transportladehilfen (7; 107) umfassen,
Transport von leeren (ersten) Transportladehilfen (7; 107) durch die autonom verfahrbaren, fahrerlosen Transportfahrzeuge (9) zu einer Beladestation und Bereitstellung einer oder von mehreren leeren (ersten) Transportladehilfe(n) (7; 107) entweder an einer oder mehreren automatisiert betriebenen ersten Beladevorrichtung(en) (13; 113) oder auf einer Pufferfläche (30) nahe der ersten Beladevorrichtung(en) (13; 113),
Beladen einer der leeren (ersten) Transportladehilfen (7; 107), welche an der automatisiert betriebenen ersten Beladevorrichtung (13; 113) bereitgestellt wird, mit zumindest einem Warenträgerstapel (8) aus dem Anlieferbereich (4) durch die automatisiert betriebene erste Beladevorrichtung (13; 113),
Transport der mit zumindest einem Warenträgerstapel (8) beladenen (ersten) Transportladehilfe (7; 107) mit dem autonom verfahrbaren, fahrerlosen Transportfahrzeug (9) von der Beladestation zu einem Lagerbereich (5),
Abstellen der mit zumindest einem Warenträgerstapel (8) beladenen (ersten) Transportladehilfe (7; 107) auf einer Lagerfläche (31) im Lagerbereich (5),
Lagerung der mit zumindest einem Warenträgerstapel (8) beladenen (ersten) Transportladehilfen (7; 107) oder mit einzelnen Warenträgern (3) beladenen (ersten) Transportladehilfen (7; 107) im Lagerbereich (5),
Bearbeitung eines Kommissionierauftrages umfassend die Schritte
- Transport einer oder von mehreren die zu einem Kommissionierauftrag benötigten Warenträger (3) enthaltenden (ersten) Transportladehilfe(n) (7; 107) vom Lagerbereich (5) zu einer Entladestation und Bereitstellung genannter (erster) Transportladehilfe(n) (7; 107) entweder an einer oder mehreren automatisiert betriebenen Entladevorrichtung(en) (32; 65; 75; 132) oder auf einer Pufferfläche (36; 66; 76) nahe der Entladevorrichtung(en) (32; 65; 75; 132) durch ein oder mehrere autonom verfahrbare(s), fahrerlose(s) Transportfahrzeug(e) (9),
- Entladen einer oder mehrerer der (ersten) Transportladehilfe(n) (7; 107), welche an der oder den automatisiert betriebenen Entladevorrichtung(en) (32; 65; 75; 132) bereitgestellt wird (werden), durch Entnahme der für die Bearbeitung des genannten Kommissionierauftrages benötigten Warenträger (3), und
- Zusammenstellung der Warenträger (3) auf einem oder mehreren Zielladehilfsmitteln (34; 134) zum genannten Kommissionierauftrag in einem Auftragsbearbeitungsbereich (6).

2. Verfahren zum Lagern und Kommissionieren von Waren nach Anspruch 1, **dadurch gekennzeichnet, dass** die Zusammenstellung der Warenträger (3) zum genannten Kommissionierauftrag derart durchgeführt wird, dass die an der oder den Entladevorrichtung(en) (65; 75) aus dem Warenträgerstapel (8) entnommenen Warenträger (3) oder der wenigstens eine an der oder die an den Entladevorrichtung(en) entnommene(n) Warenträgerstapel (8)
- entweder auf eine ortsfeste Fördertechnik abgegeben, welche zwischen der Entladestation mit der oder den Entladevorrichtung(en) (65) und einer Umladestation mit einer oder mehreren automatisiert betriebenen Umladevorrichtung(en) (32) angeordnet ist, und der Warenträger (3) oder Warenträgerstapel (8; 8') durch die Fördertechnik von der oder den Entladevorrichtung(en) zu der oder den Umladevorrichtung (32) transportiert wird (werden),
- oder auf wenigstens eine die Transportladehilfen (7; 107) umfassende mobile leere (zweite) Transportladehilfe (7; 107) abgegeben, und die wenigstens eine beladene (zweite) Transportladehilfe (7; 107) mit dem Warenträger (3) oder Warenträgerstapel (8'; 8") mit einem autonom verfahrbaren, fahrerlosen Transportfahrzeug (9) von der oder den Entladevorrichtung(en) (75) zu wenigstens einer Umladevorrichtung transportiert wird (werden),
worauf die Warenträger (3) oder der Warenträgerstapel (8; 8'; 8") durch die Umladevorrichtung (32) auf ein Zielladehilfsmittel (34; 134) übergeben wird.

3. Verfahren zum Lagern und Kommissionieren von Waren nach Anspruch 2, **dadurch gekennzeichnet, dass** die an der oder den Entladevorrichtung(en) (65; 75) aus dem Warenträgerstapel (8) entnommenen Warenträger (3) oder die an der oder den Entladevorrichtung(en) (65; 75) entnommenen Warenträgerstapel (8), bevorzugt in einer durch die Packordnung der Warenträger (3) am Zielladehilfsmittel (34; 134) vorgesehenen Reihenfolge, nacheinander auf die ortsfeste Fördertechnik oder die wenigstens eine mobile leere (zweite) Transportladehilfe (7; 107) abgegeben und, bevorzugt in dieser Reihenfolge, aufeinanderfolgend zur wenigstens einen Umladevorrichtung (32) transportiert werden.

4. Verfahren zum Lagern und Kommissionieren von Waren nach Anspruch 2, **dadurch gekennzeichnet, dass** die an der oder den Entladevorrichtung(en) (65; 75) aus dem Warenträgerstapel (8) entnommenen Warenträger (3), bevorzugt in einer durch die Packordnung der Warenträger (3) am Zielladehilfsmittel (34; 134) vorgesehenen Reihenfolge, auf die ortsfeste Fördertechnik oder die wenigstens eine mobile leere (zweite) Transportladehilfe (7; 107) derart abgegeben wird, dass wenigstens ein (vorkommissionierter) Warenträgerstapel (8") aus mehreren übereinander angeordneten Warenträgern (3) zusammengestellt wird, welcher anschließend zur wenigstens einen Umladevorrichtung transportiert wird.

5. Verfahren zum Lagern und Kommissionieren von Waren nach Anspruch 1 oder 2, umfassend die Schritte
- Erfassen von Kommissionieraufträgen an einem Auftragsrechner (46),
- Bestimmen der zu einem der Kommissionieraufträge benötigten Waren (Bedarf),
- Analyse eines Lagerbestandes zu jenen Waren (2), welche für den genannten Kommissionierauftrag benötigt werden, welcher Kommissionierauftrag einen oder mehrere die Ware (2) enthaltenden ersten Warenträger (3) und einen oder mehrere die Ware (2) enthaltenden zweiten Warenträger (3) umfasst, und
- Zusammenstellung der Warenträger (3) zum genannten Kommissionierauftrag in aufeinander folgenden Kommissionierschritten, sofern eine Bedarfsmenge zu einer Ware (2) den Lagerbestand zu dieser Ware (2) überschreitet, wobei
i) in einem ersten Kommissionierschritt an der Entladevorrichtung (75) die (zweite) Transportladehilfe (7; 107) mit einem oder mehreren ersten Warenträger (3) beladen wird, und anschließend diese (zweite) Transportladehilfe (7; 107) mit einem autonom verfahrbaren, fahrerlosen Transportfahrzeug (9) von der Entladevorrichtung (75) zu einer Pufferfläche (76) transportiert und dort gepuffert wird, und
ii) in einem zweiten Kommissionierschritt die (zweite) Transportladehilfe (7; 107) mit einem autonom verfahrbaren, fahrerlosen Transportfahrzeug (9) von der Pufferfläche (76) zu der Entladevorrichtung (75) transportiert und dort bereitgestellt wird, sofern eine Bedarfsmenge zu einer Ware (2) den Lagerbestand zu dieser Ware (2) unterschreitet, und anschließend die (zweite) Transportladehilfe (7; 107) mit einem oder mehreren zweiten Warenträger(n) (3) beladen wird, und
- Transport der (zweiten) Transportladehilfe (7; 107) nach Durchführung der Schritte i) und ii) mit einem autonom verfahrbaren, fahrerlosen Transportfahrzeug (9) von der Entladevorrichtung (75) zur Umladevorrichtung (32), und
- Übergabe des Warenträgerstapels (8'; 8") durch die Umladevorrichtung (32) auf ein Zielladehilfsmittel (34; 134).

6. Verfahren zum Lagern und Kommissionieren von Waren nach Anspruch 1, **dadurch gekennzeichnet, dass** die Zusammenstellung der Warenträger (3) zum genannten Kommissionierauftrag derart durchgeführt wird, dass die an der Entladevorrichtung (32) aus dem Warenträgerstapel (8) entnommenen Warenträger (3) oder der Warenträgerstapel (8) durch die Entladevorrichtung (32) auf ein Zielladehilfsmittel (34; 134) übergeben wird.

7. Verfahren zum Lagern und Kommissionieren von Waren nach einem der Ansprüche 2 bis 6, **gekennzeichnet durch** die zusätzlichen Schritte
- Rücktransport einer Transportladehilfe (7; 107) nach der Entnahme der Warenträger (3) von der Entladestation zurück in den Lagerbereich (5), sollten nicht alle Warenträger (3) aus der genannten Transportladehilfe (7; 107) entnommen worden sein, oder
- Transport einer Transportladehilfe (7; 107) nach der Entnahme der Warenträger (3) von einer ersten Entladevorrichtung (32) zu einer zweiten Entladevorrichtung (32), sollten nicht alle Warenträger (3) aus der genannten Transportladehilfe (7; 107) entnommen worden sein und sollten diese Warenträger (3) zu einem Kommissionierauftrag an der zweiten Entladevorrichtung (32) benötigt werden, oder
- Transport einer Transportladehilfe (7; 107) nach der Entnahme der Warenträger (3) von der Entladevorrichtung (32) zu einer Wartezone (37) in der Entladestation, sollten nicht alle Warenträger (3) aus der genannten Transportladehilfe (7; 107) entnommen worden sein und sollten diese Warenträger (3) zu einem bereits avisierten Kommissionierauftrag an der genannten Entladevorrichtung (32) oder einer der Entladevorrichtungen (32) benötigt werden, oder
- Rücktransport einer Transportladehilfe (7; 107) nach der Entnahme des Warenträgerstapels (8; 8'; 8") zu der Beladestation und Bereitstellung der Transportladehilfe (7; 107) entweder an der automatisiert betriebenen ersten Beladevorrichtung (13; 113) oder auf der Pufferfläche (30), sollten alle Warenträger (3) aus der genannten Transportladehilfe (7; 107) entnommen worden sein.

8. Verfahren zum Lagern und Kommissionieren von Waren nach Anspruch 1, **gekennzeichnet durch** die zusätzlichen Schritte
- Bereitstellung einer Depalettierstation im Anlieferbereich (4),
- Vereinzelung von Warenträgerstapeln (8) aus einer Warenträgerstapelgruppe (10) zusammengefasst aus Warenträgerstapeln (8) jeweils aus mehreren übereinander angeordneten Warenträgern (3) durch zumindest eine automatisiert betriebene Depalettiervorrichtung (11) der Depalettierstation,
- Transport der Warenträgerstapel (8) von der zumindest einen automatisiert betriebenen Depalettiervorrichtung (11) zu einer oder mehreren automatisiert betriebenen ersten Beladevorrichtung(en) (13; 113).

9. Verfahren zum Lagern und Kommissionieren von Waren nach einem der Ansprüche 2 bis 5, **gekennzeichnet durch** den Schritt
- Zusammenstellung von Warenträgerstapeln (8) auf dem Zielladehilfsmittel (34; 134) mit mehreren Warenträgerstapeln (8) durch die automatisiert betriebene Umladevorrichtung (32) der Umladestation.

10. Verfahren zum Lagern und Kommissionieren von Waren nach einem der Ansprüche 1 bis 9, ferner umfassend die Schritte
- Bereitstellung von Stapelladehilfen (100a, 100b) jeweils zur Lagestabilisierung eines aus den Warenträgern (3) gemäß dem genannten Kommissionierauftrag zusammengestellten Auftragsstapels (101), wovon die Stapelladehilfen (100a, 100b) zumindest eine erste Stapelladehilfe (100a) und/oder zumindest eine zweite Stapelladehilfe (100b) umfassen, und welche ihrerseits einen Boden (205) und mit diesem verbundene Stapelwände (206a, 206b) umfassen,
- Bestücken der ersten Stapelladehilfe (100a) mit einem Zielladehilfsmittel (34) an einer Bestückungsstation mit einer oder mehreren automatisiert betriebenen Bestückungsvorrichtung(en) (170), indem das Zielladehilfsmittel (34) auf dem Boden (205) abgestellt wird, sofern eine erste Stapelladehilfe (100a) im Kommissionierlager (1a; 1b; 1c; 1d) verwendet wird, und/oder
- Definition der zweiten Stapelladehilfe (100b) als Zielladehilfsmittel (134), sofern eine zweite Stapelladehilfe (100b) im Kommissionierlager (1a; 1b; 1c; 1d) verwendet wird.

11. Verfahren zum Lagern und Kommissionieren von Waren nach Anspruch 10, **gekennzeichnet durch** die Schritte
- Transport von Stapelladehilfen (100a, 100b) durch die autonom verfahrbaren, fahrerlosen Transportfahrzeuge (9) zur Entladestation und Bereitstellung von einer oder mehreren Stapelladehilfe(n) (100a, 100b) entweder an einer oder mehreren automatisiert betriebenen Entladevorrichtung(en) (32; 65; 75; 132) oder auf einer Pufferfläche (136) nahe der Entladevorrichtung(en) (32; 65; 75; 132),
- Zusammenstellung der Warenträger (3) gemäß dem genannten Kommissionierauftrag zum Auftragsstapel (101) auf dem Zielladehilfsmittel (34; 134) in der ersten Stapelladehilfe (100a) oder auf dem Boden (205) der zweiten Stapelladehilfe (100b), welche erste Stapelladehilfe (100a) oder zweite Stapelladehilfe (100b) an der automatisiert betriebenen Entladevorrichtung(en) (32; 65; 75; 132) bereitgestellt wird.

12. Verfahren zum Lagern und Kommissionieren von Waren nach einem der Ansprüche 1 bis 10, **gekennzeichnet durch** die Schritte
- Bereitstellung von einer oder mehreren automatisiert betriebenen zweiten Beladevorrichtung(en) (160),
- Bereitstellung von Warenträgerstapelgruppe (10) aus mehreren nebeneinander angeordneten Warenträgerstapeln (8) mit übereinander angeordneten Warenträgern (3) im Anlieferbereich (4) des Kommissionierlagers (1a; 1b; 1c; 1d),
- Bereitstellung von leeren (dritten) Transportladehilfen (150) jeweils zur Aufnahme und Lagestabilisierung einer Warenträgerstapelgruppe (10),
- Transport von leeren (dritten) Transportladehilfen (150) durch die autonom verfahrbaren, fahrerlosen Transportfahrzeuge (9) zur Beladestation und Bereitstellung von einer oder mehreren leeren (dritten) Transportladehilfe(n) (150) entweder an einer oder mehreren automatisiert betriebenen zweiten Beladevorrichtung(en) (160) oder auf einer Pufferfläche (163) nahe der zweiten Beladevorrichtung(en) (160),
- Beladen einer der leeren (dritten) Transportladehilfen (150), welche an der automatisiert betriebenen zweiten Beladevorrichtung (160) bereitgestellt wird, mit zumindest einer Warenträgerstapelgruppe (10) aus dem Anlieferbereich (4) durch die automatisiert betriebene zweite Beladevorrichtung (160),
- Transport der mit der Warenträgerstapelgruppe (10) beladenen (dritten) Transportladehilfe (150) mit dem autonom verfahrbaren, fahrerlosen Transportfahrzeug (9) von der Beladestation zum Lagerbereich (5),
- Abstellen der mit zumindest einem Warenträgerstapel (8) beladenen (dritten) Transportladehilfe (150) auf der Lagerfläche (31) im Lagerbereich (5),
- Lagerung der mit der Warenträgerstapelgruppe (10) beladenen (dritten) Transportladehilfe (150) im Lagerbereich (5),
Bearbeitung eines Kommissionierauftrages umfassend die Schritte
- Transport einer oder von mehreren die zum Kommissionierauftrag benötigten Warenträger (3) enthaltenden (dritten) Transportladehilfe(n) (150) vom Lagerbereich (5) zur Entladestation und Bereitstellung genannter (dritter) Transportladehilfe(n) (150) entweder an einer oder mehreren teilautomatisiert betriebenen Entladevorrichtung(en) (151) oder auf einer Pufferfläche (153a) nahe der Entladevorrichtung(en) (151) durch ein oder mehrere autonom verfahrbare(s), fahrerlose(s) Transportfahrzeug(e) (9),
- manuelles Entladen einer oder mehrerer der (dritten) Transportladehilfe(n) (150), welche an der oder den teilautomatisiert betriebenen Entladevorrichtung(en) (151) bereitgestellt wird (werden), durch Entnahme der für die Bearbeitung des genannten Kommissionierauftrages benötigten Warenträger (3), und
- manuelle Zusammenstellung der Warenträger (3) auf einem oder mehreren Zielladehilfsmitteln (34; 134) zum genannten Kommissionierauftrag, wenn das oder die Zielladehilfsmitteln (34; 134) an der oder die teilautomatisiert betriebenen Entladevorrichtung(en) (151) bereitgestellt wird (werden).

13. Verfahren zum Lagern und Kommissionieren von Waren nach Anspruch 12, ferner umfassend die Schritte
- Transport von teilbeladenen Zielladehilfsmitteln (34; 134) durch die autonom verfahrbaren, fahrerlosen Transportfahrzeuge (9) von der automatisiert betriebenen Entladevorrichtung (32; 65; 75; 132) zu der teilautomatisiert betriebenen Entladevorrichtung (151) oder zu einer Pufferfläche (153b) nahe der teilautomatisiert betriebenen Entladevorrichtung(en) (151), nachdem an der automatisiert betriebenen Entladevorrichtung (32; 65; 75; 132) die Warenträger (3) auf dem teilbeladenen Zielladehilfsmittel (34; 134) zusammengestellt wurden und sofern zum genannten Kommissionierauftrag noch Warenträger (3) benötigt werden, welche über die (dritten) Transportladehilfen (150) an der teilautomatisiert betriebenen Entladevorrichtung(en) (151) bereitgestellt werden,
- manuelle Zusammenstellung der Warenträger (3) auf einem oder mehreren teilbeladenen Zielladehilfsmitteln (34; 134) zum genannten Kommissionierauftrag, wenn das oder die teilbeladene(n) Zielladehilfsmitteln (34; 134) an der oder die teilautomatisiert betriebenen Entladevorrichtung(en) (151) bereitgestellt wird (werden).

14. Verfahren zum Lagern und Kommissionieren von Waren nach Anspruch 12 oder 13, **gekennzeichnet durch** die Schritte
- Transport von Stapelladehilfen (100a, 100b) durch die autonom verfahrbaren, fahrerlosen Transportfahrzeuge (9) zur Entladestation und Bereitstellung von einer oder mehreren Stapelladehilfe(n) (100a, 100b) entweder an einer oder mehreren teilautomatisiert betriebenen Entladevorrichtung(en) (151) oder auf einer Pufferfläche (153b) nahe der Entladevorrichtung(en) (151),
- Zusammenstellung der Warenträger (3) gemäß dem genannten Kommissionierauftrag zum Auftragsstapel (101) auf dem Zielladehilfsmittel (34) in der ersten Stapelladehilfe (100a) oder auf dem Boden (205) der zweiten Stapelladehilfe (100b), welche erste Stapelladehilfe (100a) oder zweite Stapelladehilfe (100b) an der teilautomatisiert betriebenen Entladevorrichtung(en) (151) bereitgestellt wird.

15. Verfahren zum Lagern und Kommissionieren von Waren nach einem der Ansprüche 10 bis 14, ferner umfassend die Schritte
- Bereitstellung einer Auftragsstapel-Ladungssicherungsstation entweder mit einer oder mehreren automatisiert betriebenen Ladungssicherungsvorrichtung(en) (180) oder mit einer oder mehreren automatisiert betriebenen Ladungssicherungsvorrichtung(en) (180) und einer Pufferfläche (185) nahe der Ladungssicherungsvorrichtung(en) (180), welche Ladungssicherungsvorrichtung (180) zur Transportsicherung eines Auftragsstapels (101) mit einem Sicherungsmittel (181) ausgebildet ist,
- Transport von jeweils mit einem Auftragsstapel (101) beladenen Stapelladehilfen (100a, 100b) durch die autonom verfahrbaren, fahrerlosen Transportfahrzeuge (9) zu genannter Auftragsstapel-Ladungssicherungsstation und Bereitstellung von einer oder mehreren Stapelladehilfe(n) (100a, 100b) entweder an einer oder mehreren automatisiert betriebenen Ladungssicherungsvorrichtung (en) (180) oder auf einer Pufferfläche (185) nahe der Ladungssicherungsvorrichtung(en) (180),
- Entfernen des Auftragsstapels (101) von der Stapelladehilfe (100a, 100b) durch eine Hebevorrichtung (183, 184), mit welcher das Zielladehilfsmittel (34) mit dem Auftragsstapel (101) von der ersten Stapelladehilfe (100a) abgehoben wird, wenn das Kommissionierlager (1a; 1b; 1c; 1d) die erste Stapelladehilfe (100a) umfasst, oder mit welcher der Auftragsstapel (101) von der zweiten Stapelladehilfe (100b) abgehoben wird, wenn das Kommissionierlager (1a; 1b; 1c; 1d) die zweite Stapelladehilfe (100b) umfasst,
- Sicherung des Auftragsstapels (101) mit dem Sicherungsmittel (181) durch die automatisiert betriebene Ladungssicherungsvorrichtung (180), indem das Sicherungsmittel (181) um den Auftragsstapel (101) umfänglich angebracht wird,
- Transport des gesicherten Auftragsstapels (101), insbesondere durch die autonom verfahrbaren, fahrerlosen Transportfahrzeuge (9), von der Ladungssicherungsstation zu einem Auslieferbereich,
Transport der entladenen Stapelladehilfen (100a, 100b) durch die autonom verfahrbaren, fahrerlosen Transportfahrzeuge (9), umfassend
- Transport der ersten Stapelladehilfe (100a) von der Ladungssicherungsstation zur Bestückungsstation mit einer oder mehreren automatisiert betriebenen Bestückungsvorrichtung(en) (170), sofern im Kommissionierlager (1a; 1b; 1c; 1d) eine erste Stapelladehilfe (100a) verwendet wird, und/oder
- Transport der zweiten Stapelladehilfe (100b) von der Ladungssicherungsstation zur Entladestation und Bereitstellung der zweiten Stapelladehilfe(n) (100b) entweder an einer automatisiert betriebenen Entladevorrichtung (32; 65; 75; 132) oder auf einer Pufferfläche (136) nahe der Umladevorrichtung (32; 65; 75; 132), sofern im Kommissionierlager (1a; 1b; 1c; 1d) eine zweite Stapelladehilfe (100b) verwendet wird.

16. Kommissionierlager (1a; 1b; 1c; 1d) zum Lagern und Kommissionieren von Waren (2), insbesondere zur Durchführung des Verfahrens nach einem der Ansprüche 1 bis 15, enthaltenden und stapelbaren Warenträgern (3), umfassend
einen Auftragsrechner (46) zum Erfassen eines Kommissionierauftrages und zum Bestimmen von Waren (2), welche für den Kommissionierauftrag benötigt werden,
eine Vielzahl an Warenträgerstapeln (8) aus mehreren übereinander angeordneten Warenträgern (3),
einen Anlieferbereich (4) zur Bereitstellung von Warenträgerstapeln (8) aus mehreren übereinander angeordneten Warenträgern (3),
**gekennzeichnet durch**
eine Vielzahl an Transportladehilfen (7; 107) jeweils zur Aufnahme und Lagestabilisierung wenigstens eines Warenträgerstapels (8) aus mehreren übereinander angeordneten Warenträgern (3), wobei die Transportladehilfen (7; 107) mobile leere (erste) Transportladehilfen (7; 107) umfassen,
eine Beladestation entweder mit einer oder mehreren automatisiert betriebenen ersten Beladevorrichtung(en) (13; 113) oder mit einer oder mehreren automatisiert betriebenen ersten Beladevorrichtung(en) (13; 113) und einer Pufferfläche (30) nahe der ersten Beladevorrichtung(en) (13; 113), welche erste Beladevorrichtung (13; 113) zum Beladen einer der leeren (ersten) Transportladehilfen (7; 107) mit zumindest einem Warenträgerstapel (8) ausgebildet ist, wobei die leere (erste) Transportladehilfe (7; 107) zum Beladen an der automatisiert betriebenen ersten Beladevorrichtung (13; 113) bereitgestellt wird,
einen Lagerbereich (5) zur Lagerung der mit zumindest einem Warenträgerstapel (8) beladenen (ersten) Transportladehilfen (7; 107) oder mit einzelnen Warenträgern (3) beladenen (ersten) Transportladehilfen (7; 107) auf einer Lagerfläche (31),
eine Entladestation mit einer oder mehreren automatisiert betriebenen Entladevorrichtung(en) (32; 65; 75; 132) zum Entladen einer oder mehrerer der (ersten) Transportladehilfe(n) (7; 107), durch Entnahme der für die Bearbeitung eines Kommissionierauftrages benötigten Warenträger (3), wobei die Transportladehilfe(n) (7; 107) zum Entladen an der(n) automatisiert betriebenen Entladevorrichtung(en) (32; 65; 75; 132) bereitgestellt wird (werden), und
eine Vielzahl an autonom verfahrbaren, fahrerlosen Transportfahrzeugen (9), welche von einem Steuerungssystem (47) angesteuert werden und jeweils ein Fahrgestell (50) mit einer Antriebseinheit und eine auf dem Fahrgestell (50) angeordnete Ladeplattform (51) zur Aufnahme einer Transportladehilfe (7; 107) aufweisen,
- um leere (erste) Transportladehilfen (7; 107) zur Beladestation zu transportieren und eine der leeren (ersten) Transportladehilfen (7; 107) entweder an der automatisiert betriebenen ersten Beladevorrichtung (13; 113) oder auf der Pufferfläche (30) nahe der ersten Beladevorrichtung (13; 113) bereitzustellen, und
- um die mit zumindest einem Warenträgerstapel (8) beladene (erste) Transportladehilfe (7; 107) von der Beladestation zu einem Lagerbereich (5) zu transportieren, und
- um eine oder mehrere die zu einem Kommissionierauftrag benötigten Warenträger (3) enthaltende(n) (ersten) Transportladehilfe(n) (7; 107) vom Lagerbereich (5) zu einer Entladestation zu transportieren und genannte (erste) Transportladehilfe(n) (7; 107) entweder an einer oder mehreren automatisiert betriebenen Entladevorrichtung(en) (32; 65; 75; 132) oder auf einer Pufferfläche (36; 66; 76) nahe der Entladevorrichtung(en) (32; 65; 75; 132) bereitzustellen,
eine Umladestation zur Zusammenstellung der Warenträger (3) zum genannten Kommissionierauftrag.

17. Kommissionierlager nach Anspruch 16, **dadurch gekennzeichnet, dass** die (erste) Transportladehilfe (7; 107) und/oder (zweite) Transportladehilfe (7; 107) einen Boden (55) und mit diesem verbundene Seitenwände (56a, 56b, 56c, 56d), wenigstens einen durch die Seitenwände (56a, 56b, 56c, 56d) begrenzten Aufnahmeschacht zur Aufnahme wenigstens eines Warenträgerstapels (8) und eine Belade- und Entladeöffnung (57, 57a, 57b) aufweist, und dass die Seitenwände (56a, 56b, 56c, 56d) zur Lagestabilisierung des zumindest einen Warenträgerstapels (8), wenn dieser auf dem Boden (55) abgestellt ist,
- ausschließlich parallel oder geneigt zueinander angeordnete erste Seitenwände (56a, 56b, 56d) umfassen, oder
- parallel oder geneigt zueinander angeordnete erste Seitenwände (56a, 56b, 56d) und eine zwischen diesen angeordnete zweite Seitenwand (56c) umfassen.

18. Kommissionierlager nach Anspruch 17, **dadurch gekennzeichnet, dass** die zweite Seitenwand (56c) einen Seitenwandteil (200a, 200b) umfasst, welcher um einen Neigungswinkel (α₁) gegenüber einer zwischen den ersten Seitenwänden (56a, 56b, 56d) aufgespannten Vertikalebene derart geneigt ist, dass mit zunehmenden Vertikalabstand vom Boden (55) der Seitenwandteil (200a, 200b) nach hinten geneigt verläuft.

19. Kommissionierlager nach Anspruch 17 oder 18, **dadurch gekennzeichnet, dass** der Boden (55) einen Bodenwandteil (201a, 201b) umfasst, welcher um einen Neigungswinkel (α₂) gegenüber einer zwischen den ersten Seitenwänden (56a, 56b, 56d) aufgespannten Horizontalebene in Richtung zur zweiten Seitenwand (56c) nach unten geneigt verläuft.

20. Kommissionierlager nach Anspruch 16, **gekennzeichnet durch** eine oder mehrere Stapelladehilfen (100a, 100b) jeweils zur Lagestabilisierung eines aus den Warenträgern (3) gemäß dem genannten Kommissionierauftrag zusammengestellten Auftragsstapels (101), welche zumindest eine erste Stapelladehilfe (100a) und/oder zumindest eine zweite Stapelladehilfe (100b) umfassen, welche ihrerseits einen Boden (205) und mit diesem verbundene Stapelwände (206a, 206b) umfassen.

21. Kommissionierlager nach Anspruch 20, **dadurch gekennzeichnet, dass** die zumindest eine erste Stapelladehilfe (100a) am Boden (205) auf seiner oberen Seite eine Abstellfläche (207) ausbildet, auf welcher ein Zielladehilfsmittel (34), insbesondere eine Palette, mit dem auf diesem gestapelten Auftragsstapel (101) abgestellt werden kann.

22. Kommissionierlager nach Anspruch 20, **dadurch gekennzeichnet, dass** die zumindest eine zweite Stapelladehilfe (100b) am Boden (205) auf seiner oberen Seite vorragende und durch Aufnahmekanäle (210) voneinander getrennte Abstellklötze (211) ausbildet, auf welcher die Warenträger (3) des Auftragsstapels (101) abgestellt werden können, sodass die zumindest eine zweite Stapelladehilfe (100b) das Zielladehilfsmittel (134) bildet.

23. Kommissionierlager nach einem der Ansprüche 16 bis 22, **gekennzeichnet durch** eine Auftragsstapel-Ladungssicherungsstation entweder mit einer oder mehreren automatisiert betriebenen Ladungssicherungsvorrichtung(en) (180) oder mit einer oder mehreren automatisiert betriebenen Ladungssicherungsvorrichtung(en) (180) und einer Pufferfläche (185) nahe der Ladungssicherungsvorrichtung(en) (180),
- welche Ladungssicherungsvorrichtung (180) zur Transportsicherung eines Auftragsstapels (101) mit einem Sicherungsmittel (181) ausgebildet ist, und
- welche eine Hebevorrichtung (183, 184) aufweist, mit welcher das Zielladehilfsmittel (34) mit dem Auftragsstapel (101) von der Stapelladehilfe (100a) abgehoben wird, wenn das Kommissionierlager (1a; 1b; 1c; 1d) die erste Stapelladehilfe (100a) umfasst, oder mit welcher der Auftragsstapel (101) von der Stapelladehilfe (100b) abgehoben wird, wenn das Kommissionierlager (1a; 1b; 1c; 1d) die zweite Stapelladehilfe (100b) umfasst wird, um den Auftragsstapel (101) mit dem Sicherungsmittel (181) zu stabilisieren.

24. Kommissionierlager nach Anspruch 16, **dadurch gekennzeichnet, dass** eine automatisiert betriebene Entladevorrichtung (32; 65; 75; 132) eine gegenüber einer Tragkonstruktion (42; 142) im Raum bewegbare Transfervorrichtung (147) zum Entladen einer (ersten) Transportladehilfe (7; 107) und zum Beladen eines Zielladehilfsmittels (34, 134) mit Warenträgern (3) gleicher und/oder unterschiedlicher Längenabmessungen durch Klemmgreifen aufweist, wobei die Transfervorrichtung (147) umfasst
- einen Grundrahmen (250),
- durch erste Antriebsvorrichtungen (251a, 251b) relativ gegenüber dem Grundrahmen (250) und in einer ersten Richtung (y) unabhängig voneinander zwischen einer zurückgezogenen Ausgangsstellung und einer ausgefahrenen Aufnahmestellung bewegbare Beladezungen (252a, 252b), welche in der ausgefahrenen Aufnahmestellung zumindest einen Warenträger (3) aufnehmen,
- durch zumindest eine zweite Antriebsvorrichtung (253a, 253b) in einer zweiten Richtung (x) relativ zueinander zwischen einer zurückgezogenen Öffnungsstellung und einer angestellten Klemmstellung bewegbare Klemmbacken (254a, 254b) zum Klemmgreifen zumindest eines Warenträgers (3),
- einen durch zumindest eine dritte Antriebsvorrichtung (255) in einer dritten Richtung (z) relativ gegenüber dem Grundrahmen (250) bewegbaren Hubrahmen (256), auf welchem die Klemmbacken (254a, 254b) gelagert und durch welchen die Klemmbacken (254a, 254b) zwischen einer unteren Höhenstellung und einer oberen Höhenstellung bewegbar sind, sodass zum Entladen der (ersten) Transportladehilfe (7; 107)
- der zumindest eine Warenträger (3) durch die gegen den zumindest einen Warenträger (3) angestellten Klemmbacken (254a, 254b) anhebbar und
- zumindest eine der Beladezungen (252a, 252b) zumindest teilweise unter den durch die Klemmbacken (254a, 254b) angehobenen zumindest einen Warenträger (3) schiebbar ist, um den zumindest einen Warenträger (3) in der ausgefahrenen Aufnahmestellung aufzunehmen.

## Claims

1. A method for storing and picking article carriers (3) that contain articles (2), in particular groceries from the fresh food sector, and are stackable in an order fulfillment facility (1a; 1b; 1c; 1d), comprising the steps
providing autonomously movable, driverless transport vehicles (9) in the order fulfillment facility (1a; 1b; 1c; 1d), said transport vehicles (9) each having a chassis (50) with a drive unit and a loading platform (21) arranged on the chassis (50) for receiving a mobile transport loading aid (7; 107),
providing article carrier stacks (8) of multiple article carriers (3) arranged on top of one another in a delivery zone (4) of the order fulfillment facility (1a; 1b; 1c; 1d), **characterized by** the additional steps
providing transport loading aids (7; 107) each for receiving and stabilizing the position of at least one article carrier stack (8; 8') of multiple article carriers (3) arranged on top of one another in the order fulfillment facility (1a; 1b; 1c; 1d), wherein the transport loading aids (7; 107) comprise mobile, empty (first) transport loading aids (7; 107), transporting empty (first) transport loading aids (7; 107) by means of the autonomously movable, driverless transport vehicles (9) to a loading station and providing one or multiple empty (first) transport loading aid(s) (7;107) either on one or on multiple automatically operated first loading device(s) (13; 113) or on a buffer surface (30) close to the loading device(s) (13; 113),
loading one of the empty (first) transport loading aids (7; 107), which is provided at the automatically operated first loading device (13; 113), with at least one article carrier stack (8) from the delivery zone (4) by means of the automatically operated first loading device (13; 113),
transporting the (first) transport loading aid (7; 107) loaded with at least one article carrier stack (8) from the loading station to a storage zone (5) by means of the autonomously movable, driverless transport vehicle (9),
placing the (first) transport loading aid (7; 107) loaded with at least one article carrier stack (8) on a storage surface (31) in the storage zone (5),
storing the (first) transport loading aids (7; 107) loaded with at least one article carrier stack (8) or the (first) transport loading aids (7; 107) loaded with individual article carriers (3) in the storage zone (5),
processing a picking order comprises the following steps
- transporting one or multiple (first) transport loading aid(s) (7; 107) containing the article carriers (3) required for a picking order from the storage zone (5) to an unloading station and providing said (first) transport loading aid(s) (7; 107) either at one or at multiple automatically operated unloading device(s) (32; 65; 75; 132) or on a buffer surface (36; 66; 76) close the unloading device(s) (32; 65; 75; 132) by means of one or multiple autonomously movable, driverless transport vehicle(s) (9),
- unloading one or multiple ones of the (first) transport loading aid(s) (7; 107), which is (are) provided at the automatically operated unloading device(s) (32; 65; 75; 132), by removing the article carriers (3) required for processing the mentioned picking order, and
- assembling the article carriers (3) on one or multiple target loading aids (34; 134) for the mentioned picking order in an order processing zone (6).

2. The method for storing and picking articles according to claim 1, **characterized in that** assembling the article carriers (3) for the mentioned picking order is carried out in such a way that the article carriers (3) removed from the article carrier stack (8) at the unloading device(s) (65; 75) or the at least one article carrier stack (8) removed at the unloading device(s)
- is/are either discharged onto a stationary conveyor system, which is arranged between the unloading station with the unloading device(s) (65) and a reloading station with one or multiple automatically operated reloading device(s) (32), and the article carrier (3) or article carrier stack (8; 8') is (are) transported by the conveyor system from the unloading device(s) to the reloading device(s) (32) device,
- or is/are discharged onto at least one mobile empty (second) transport loading aid (7; 107) comprising the transport loading aids (7; 107), and the at least one loaded (second) transport loading aid (7; 107) with the article carrier (3) or article carrier stack (8'; 8") is (are) transported by an autonomously movable, driverless transport vehicle (9) from the unloading device(s) (75) to at least one reloading device,
whereupon the article carrier (3) or the article carrier stack (8; 8'; 8") is transferred to a target loading aid (34; 134) by the reloading device (32).

3. The method for storing and picking articles according to claim 2, **characterized in that** the article carriers (3) removed from the article carrier stack (8) at the unloading device(s) (65; 75) or the article carrier stacks (8) removed at the unloading device(s) (65; 75) are consecutively discharged, preferably in an order provided by the packing order of the article carriers (3) at the target loading aid (34; 134), onto the stationary conveying system or the at least one mobile, empty (second) transport loading aid (7; 107) and, preferably in said order, subsequently transported to the at least one reloading device (32).

4. The method for storing and picking articles according to claim 2, **characterized in that** the article carriers (3) removed from the article carrier stack (8) at the unloading device(s) (65; 75) is discharged, preferably in an order provided by the packing order of the article carriers (3) at the target loading aid (34; 134), onto the stationary conveying system or the at least one mobile, empty (second) transport loading aid (7; 107) such that at least one (pre-picked) article carrier stack (8") of multiple article carriers (3) arranged on top of one another is assembled, which is subsequently transported to the at least one reloading device.

5. The method for storing and picking articles according to claim 1 or 2, comprising the steps
- acquiring picking orders on an order-processing computer (46),
- determining the articles required for one of the picking orders (demand),
- analysis of a stock of those articles (2) which are required for the mentioned picking order, which picking order comprises one or multiple first article carrier(s) (3) containing the article(s) (2) and one or multiple second article carrier(s) (3) containing the article(s) (2), and
- assembling the article carriers (3) for the mentioned picking order in consecutive picking steps if a required quantity of an article (2) exceeds the stock of said article (2), wherein
i) in a first picking step, the (second) transport loading aid (7; 107) is loaded with one or multiple first article carrier(s) (3) at the unloading device (75), and subsequently said (second) transport loading aid (7; 107) is transported from the unloading device (75) to a buffer surface (76) by means of an autonomously movable, driverless transport vehicle (9) and is buffered there, and
ii) in a second picking step, the (second) transport loading aid (7; 107) is transported from the buffer surface (76) to the unloading device (75) by means of an autonomously movable, driverless transport vehicle (9) and is provided there, if a required quantity of an article (2) falls below the stock of said article (2), and subsequently the (second) transport loading aid (7; 107) is loaded with one or multiple second article carrier(s) (3),
and
- transporting the (second) transport loading aid (7; 107) from the unloading device (75) to the reloading device (32) by means of an autonomously movable, driverless transport vehicle (9) after steps i) and ii) have been concluded, and
- transferring the article carrier stack (8'; 8") onto a target loading aid (34; 134) by means of the reloading device (32).

6. The method for storing and picking articles according to claim 1, **characterized in that** assembling the article carriers (3) for the mentioned picking order is carried out in such a way that the article carriers (3) removed from the article carrier stack (8) at the unloading device (32) or the article carrier stack (8) is transferred onto a target loading aid (34; 134) by the unloading device (32).

7. The method for storing and picking articles according to one of claims 2 to 6, **characterized by** the additional steps
- transporting a transport loading aid (7; 107) from the unloading station back into the storage zone (5) after removal of the article carriers (3), if not all article carriers (3) have been removed from the mentioned transport loading aid (7; 107), or
- transporting a transport loading aid (7; 107) from a first unloading device (32) to a second unloading device (32) after removal of the article carriers (3), if not all article carriers (3) have been removed from the mentioned transport loading aid (7; 107) and if said article carriers (3) are needed at the second unloading device (32) for a picking order, or
- transporting a transport loading aid (7; 107) from the unloading device (32) to a waiting zone (37) in the unloading station after removal of the article carriers (3), if not all article carriers (3) have been removed from the mentioned transport loading aid (7; 107) and if said article carriers (3) are needed at the mentioned unloading device (32) or one of the unloading devices (32) for an already advised picking order, or
- transporting a transport loading aid (7; 107) back to the loading station after removal of the article carrier stack (8; 8'; 8") and providing the transport loading aid (7; 107) either at the automatically operated first loading device (13; 113) or on the buffer surface (30), if all article carriers (3) have been removed from the mentioned transport loading aid (7; 107).

8. The method for storing and picking articles according to claim 1, **characterized by** the additional steps
- providing a depalletizing station in the delivery zone (4),
- separating article carrier stacks (8) of an article carrier stack group (10) assembled of article carrier stacks (8) each of multiple article carriers (3) arranged on top of one another by means of an automatically operated depalletizing device (11) of the depalletizing station,
- transporting the article carrier stacks (8) from the at least one automatically operated depalletizing device (11) to one or multiple automatically operated first loading device(s) (13; 113).

9. The method for storing and picking articles according to one of claims 2 to 5, **characterized by** the step
- assembling article carrier stacks (8) on the target loading aid (34; 134) with multiple article carrier stacks (8) by means of the automatically operated reloading device (32) of the reloading station.

10. The method for storing and picking articles according to one of claims 1 to 9, further comprising the steps
- providing stack loading aids (100a, 100b) in each case for stabilizing the position of an order stack (101) assembled of the article carriers (3) according to the mentioned picking order, of which the stack loading aids (100a, 100b) comprise at least one first stack loading aid (100a) and/or at least one second stack loading aid (100b), and which, in turn, comprise a base (205) and stack walls (206a, 206b) connected thereto,
- lading the first stack loading aid (100a) with a target loading aid (34) at a lading station by means of one or multiple automatically operated lading device(s) (170), by the target loading aid (34) being placed on the base (205) if a first stack loading aid (100a) is used in the order fulfillment facility (1a; 1b; 1c; 1d), and/or
- defining the second stack loading aid (100b) as the target loading aid (134) if a second stack loading aid (100b) is used in the order fulfillment facility (1a; 1b; 1c; 1d).

11. The method for storing and picking articles according to claim 10, **characterized by** the steps
- transporting stack loading aids (100a, 100b) by means of the autonomously movable, driverless transport vehicles (9) to the unloading station and providing one or multiple stack loading aid(s) (100a, 100b) either on one or on multiple automatically operated unloading device(s) (32; 65; 75; 132) or on a buffer surface (136) close to the unloading device(s) (32; 65; 75; 132),
- assembling the article carriers (3) according to the mentioned picking order to the order stack (101) on the target loading aid (34; 134) in the first stack loading aid (100a) or on the base (205) of the second stack loading aid (100b), said first stack loading aid (100a) or second stack loading aid (100b) being provided at the automatically operated unloading device(s) (32; 65; 75; 132).

12. The method for storing and picking articles according to one of claims 1 to 10, **characterized by** the steps
- providing one or multiple automatically operated second loading device(s) (160),
- providing article carrier stack groups (10) of multiple article carrier stacks (8) arranged next to one another with article carriers (3) arranged on top of one another in the delivery zone (4) of the order fulfillment facility (1a; 1b; 1c; 1d),
- providing empty (third) transport loading aids (150) each for receiving and stabilizing the position of an article carrier stack group (10),
- transporting empty (third) transport loading aids (150) by means of the autonomously movable, driverless transport vehicles (9) to the loading station and providing one or multiple empty (third) transport loading aid(s) (150) either on one or on multiple automatically operated second loading device(s) (160) or on a buffer surface (163) close to the second loading device(s) (160),
- loading one of the empty (third) transport loading aids (150), which is provided at the automatically operated second loading device (160), with at least one article carrier stack group (10) from the delivery zone (4) by means of the automatically operated second loading device (160),
- transporting of the (third) transport loading aid (150) loaded with the article carrier stack group (10) from the loading station to the storage zone (5) by means of the autonomously movable, driverless transport vehicle (9),
- placing the (third) transport loading aid (150) loaded with at least one article carrier stack (8) on the storage surface (31) in the storage zone (5),
- storing the (third) transport loading aid (150) loaded with the article carrier stack group (10) in the storage zone (5),
processing a picking order comprises the following steps
- transporting one or multiple (third) transport loading aid(s) (150) containing the article carriers (3) required for the picking order from the storage zone (5) to the unloading station and providing said (third) transport loading aid(s) (150) either at one or at multiple partially automated unloading device(s) (151) or on a buffer surface (153a) close the unloading device(s) (151) by means of one or multiple autonomously movable, driverless transport vehicle(s) (9),
- manually unloading one or multiple ones of the (first) transport loading aid(s) (150), which is (are) provided at the partially automated unloading device(s) (151), by removing the article carriers (3) required for processing the mentioned picking order, and
- manually assembling the article carriers (3) on one or multiple target loading aids (34; 134) for the mentioned picking order, if the target loading aid(s) (34; 134) is (are) provided at the partially automated unloading device(s) (151).

13. The method for storing and picking articles according to claim 12, further comprising the steps
- transporting partially loaded target loading aids (34; 134) by means of the autonomously movable, driverless transport vehicles (9) from the automatically operated unloading device (32; 65; 75; 132) to the partially automated unloading device (151) or to a buffer surface (153b) close to the partially automated unloading device(s) (151) after the article carriers (3) have been assembled on the partially loaded target loading aid (34; 134) at the automatically operated unloading device (32; 65; 75; 132) and if article carriers (3) are still required for the mentioned picking order which are provided via the (third) target loading aids (150) at the partially automated unloading device(s) (151),
- manually assembling the article carriers (3) on one or multiple partially loaded target loading aids (34; 134) for the mentioned picking order, if the partially loaded target loading aid(s) (34; 134) is (are) provided at the partially automated unloading device(s) (151).

14. The method for storing and picking articles according to claim 12 or 13, **characterized by** the steps
- transporting stack loading aids (100a, 100b) by means of the autonomously movable, driverless transport vehicles (9) to the unloading station and providing one or multiple stack loading aid(s) (100a, 100b) either on one or on multiple partially automated unloading device(s) (151) or on a buffer surface (153b) close to the unloading device(s) (151),
- assembling the article carriers (3) according to the mentioned picking order to the order stack (101) on the target loading aid (34) in the first stack loading aid (100a) or on the base (205) of the second stack loading aid (100b), said first stack loading aid (100a) or second stack loading aid (100b) being provided at the partially automated unloading device(s) (151).

15. The method for storing and picking articles according to one of claims 10 to 14, further comprising the steps
- providing an order stack load securing station either with one or multiple automatically operated load securing device(s) (180) or with one or multiple automatically operated load securing device(s) (180) and a buffer surface (185) close to the load securing device(s) (180), said load securing devices (180) being formed with a securing means (181) for securing transport of an order stack (101),
- transporting stack loading aids (100a, 100b) each loaded with one order stack (101) by means of the autonomously movable, driverless transport vehicles (9) to the mentioned order stack load securing station and providing one or multiple stack loading aid(s) (100a, 100b) either on one or on multiple automatically operated load securing device(s) (180) or on a buffer surface (185) close to the load securing device(s) (180),
- removing the order stack (101) from the stack loading aid (100a, 100b) by means of a lifting device (183, 184), by means of which the target loading aid (34) with the order stack (101) is lifted from the first stack loading aid (100a), if the order fulfillment facility (1a; 1b; 1c; 1d) comprises the first stack loading aid (100a), or by means of which the order stack (101) is lifted from the second stack loading aid (100b) if the order fulfillment facility (1a; 1b; 1c; 1d) comprises the second stack loading aid (100b),
- securing the order stack (101) with the securing means (181) by means of the automatically operated load securing device (180), in that the securing means (181) is placed circumferentially around the order stack (101),
- transporting the secured order stack (101), in particular by means of the autonomously movable, driverless transport vehicles (9), from the load securing station to a dispatch zone,
transporting the unloaded stack loading aids (100a, 100b) by means of the autonomously movable, driverless transport vehicles (9), comprising
- transporting the first stack loading aid (100a) from the load securing station to the lading station with one or multiple automatically operated lading device(s) (170), if a first stack loading aid is (100a) used in the order fulfillment facility (1a; 1b; 1c; 1d), and/or
- transporting the second stack loading aid (100b) from the load securing station to the unloading station and providing the second stack loading aid(s) (100b) either at an automatically operated unloading device (32; 65; 75; 132) or on a buffer surface (136) close to the reloading device (32; 65; 75; 132), if a second stack loading aid (100b) is used in the order fulfillment facility (1a; 1b; 1c; 1d).

16. The order fulfillment facility (1a; 1b; 1c; 1d) for storing and picking article carriers (3), which contain articles (2) and are stackable, in particular for carrying out the method according to one of claims 1 to 15, comprising
an order-processing computer (46) for detecting a picking order and for determining articles (2) which are required for the picking order,
a plurality of article carrier stacks (8) of multiple article carriers (3) arranged on top of one another,
a delivery zone (4) for providing article carrier stacks (8) of multiple article carriers (3) arranged on top of one another,
**characterized by**
a plurality of transport loading aids (7; 107) each for receiving and stabilizing the position of at least one article carrier stack (8) of multiple article carriers (3) arranged on top of one another, wherein the transport loading aids (7; 107) comprise mobile, empty (first) transport loading aids (7; 107),
a loading station either with one or multiple automatically operated first loading device(s) (13; 113) or with one or multiple automatically operated first loading device(s) (13; 113) and a buffer surface (30) close to the first loading device(s) (13, 113), said first loading device (13, 113) being configured for loading one of the empty (first) transport loading aids (7; 107) with at least one article carrier stack (8), wherein the empty (first) transport loading aid (7; 107) is provided for loading at the automatically operated first loading device (13; 113),
a storage zone (5) for storing the (first) transport loading aids (7; 107) loaded with at least one article carrier stack (8) or the (first) transport loading aids (7; 107) loaded with individual article carriers (3) on a storage surface (31),
an unloading station with one or multiple automatically operated unloading device(s) (32; 65; 75; 132) for unloading one or multiple ones of the (first) transport loading aid(s) (7; 107) by removing the article carriers (3) required for processing a picking order, wherein the transport loading aid(s) (7; 107) is (are) provided for unloading the automatically operated unloading device(s) (32; 65; 75; 132), and
a plurality of autonomously movable, driverless transport vehicles (9) which are controlled by a control system (47) and each have a chassis (50) with a drive unit and a loading platform (51) arranged on the chassis (50) for receiving a transport loading aid (7; 107),
- to transport empty (first) transport loading aids (7; 107) to the loading station and to provide one of the empty (first) transport loading aids (7; 107) either at the automatically operated first loading device (13; 113) or on the buffer surface (30) close to the first loading device (13; 113), and
- to transport the transport loading aid (7; 107) loaded with at least one article carrier stack (8) from the loading station to a storage zone (5), and
- to transport one or multiple (first) transport loading aid(s) (7; 107) containing the article carriers (3) required for a picking order from the storage zone (5) to an unloading station and to provide said (first) transport loading aid(s) (7; 107) either at one or multiple automatically operated unloading device(s) (32; 65; 75; 132) or on a buffer surface (36; 66; 76) close to the unloading device(s) (32; 65; 75; 132), a reloading station for assembling the article carriers (3) for the mentioned picking order.

17. The order fulfillment facility according to claim 16, **characterized in that** the (first) transport loading aid (7; 107) and/or (second) transport loading aid (7; 107) comprises a base (55) and side walls (56a, 56b, 56c, 56d) connected thereto, at least one accommodating shaft bounded by the side walls (56a, 56b, 56c, 56d) for accommodating at least one article carrier stack (8) and a loading and unloading opening (57, 57a, 57b), and that the side walls (56a, 56b, 56c, 56d) serving to stabilize the position of the at least one article carrier stack (8) when the it is placed on the base (55),
- exclusively comprise first side walls (56a, 56b, 56d) arranged parallel or inclined to each other, or
- comprise first side walls (56a, 56b, 56d) arranged parallel or inclined to each other and a second side wall (56c) arranged between these.

18. The order fulfillment facility according to claim 17, **characterized in that** the second side wall (56c) comprises a side wall part (200a, 200b) which is inclined at an inclination angle (α₁) towards a vertical plane spanned between the first side walls (56a, 56b, 56d) such that the side wall part (200a, 200b) is inclined backwards with increasing vertical distance from the base (55).

19. The order fulfillment facility according to claim 17 or 18, **characterized in that** the base (55) comprises a base part (201a, 201b) which is inclined downwards in the direction towards the second side wall (56c) at an inclination angle (α₂) towards a horizontal plane spanned between the first side walls (56a, 56b, 56d).

20. The order fulfillment facility according to claim 16, **characterized by** one or multiple stack loading aids (100a, 100b) each for stabilizing the position of an order stack (101) assembled of the article carriers (3) according to the mentioned picking order, which comprise at least one first stack loading aid (100a) and/or at least one second stack loading aid (100b), which, in turn, comprise a base (205) and stack walls (206a, 206b) connected thereto.

21. The order fulfillment facility according to claim 20, **characterized in that** the at least one first stack loading aid (100a) at the base (205) on its upper side forms a placing surface (207) on which a target loading aid (34), in particular a pallet, with the order stack (101) stacked thereon can be placed.

22. The order fulfillment facility according to claim 20, **characterized in that** the at least one second stack loading aid (100b) at the base (205) on its upper side forms protruding placing blocks (211) separated from each other by receiving channels (210), on which the article carriers (3) of the order stack (101) can be placed, so that the at least one second stack loading aid (100b) forms the target loading aid (134).

23. The order fulfillment facility according to one of claims 16 to 22, **characterized by** an order stack load securing station either with one or multiple automatically operated load securing device(s) (180) or with one or multiple automatically operated load securing device(s) (180) and a buffer surface (185) close to the load securing device(s) (180),
- said load securing device (180) being formed with a securing means (181) for secure transport of an order stack (101), and
- which comprises a lifting device (183, 184), by means of which the target loading aid (34) with the order stack (101) is lifted from the stack loading aid (100a) if the order fulfillment facility (1a; 1b; 1c; 1d) comprises the first stack loading aid (100a), or by means of which the order stack (101) is lifted from the stack loading aid (100b) if the order fulfillment facility (1a; 1b; 1c; 1d) comprises the second stack loading aid (100b), for stabilizing the order stack (101) with the securing means (181).

24. The order fulfillment facility according to claim 16, **characterized in that** an automatically operated unloading device (32; 65; 75; 132) has a transfer device (147), which is spatially movable in relation to a support construction (42; 142), for unloading a (first) transport loading aid (7; 107) and for loading a target loading aid (34, 134) with article carriers (3) having the same and/or different longitudinal dimensions by means of clamping gripping, wherein the transfer device (147) comprises
- a base frame (250),
- loading tongues (252a, 252b) movable by means of first drive devices (251a, 251b) relative to the base frame (250) and in a first direction (y) independently of one another between a retracted initial position and an extended receiving position, said loading tongues receiving at least one article carrier (3) in the extended receiving position,
- clamping jaws (254a, 254b) movable by means of a second drive device (253a, 253b) relative to one another in a second direction (x) between a retracted opened position and an abutting clamping position for clampingly gripping at least one article carrier (3),
- a lifting frame (256) movable by means of a third drive device (255) in a third direction (z) relative to the base frame (250), on which lifting frame the clamping jaws (254a, 254b) are mounted and by means of which the clamping jaws (254a, 254b) are movable between a lower height position and an upper height position, such that for unloading the (first) transport loading aid (7; 107)
- the at least one article carrier (3) being liftable by the clamping jaws (254a, 254b) placed against the at least one article carrier (3), and
- at least one of the loading tongues (252a, 252b) being at least partially slidable under the at least one article carrier (3) lifted by the clamping jaws (254a, 254b) for receiving the at least one article carrier (3) in the extended receiving position.

## Revendications

1. Procédé d'entreposage et de préparation de commandes de supports de marchandises (3) contenant des marchandises (2), plus particulièrement de produits alimentaires du secteur des produits frais, et empilables dans un entrepôt (1a ; 1b ; 1c ; 1d), comprenant les étapes suivantes
mise à disposition de véhicules de transport mobiles de manière autonome sans conducteur (9) dans l'entrepôt (1a ; 1b ; 1c ; 1d), qui comprennent chacun un châssis (50) avec une unité d'entraînement et une plateforme de chargement (21), disposée sur le châssis (50), pour le logement d'une aide au chargement de transport mobile (7 ; 107),
mise à disposition de piles de supports de marchandises (8) constituées de plusieurs supports de marchandises (3) disposés les uns sur les autres dans une zone de livraison (4) de l'entrepôt (1a ; 1b ; 1c ; 1d),
**caractérisé par** les étapes supplémentaires suivantes
mise à disposition d'aides au chargement de transport (7 ; 107), chacune pour le logement et la stabilisation de la position d'au moins une pile de supports de marchandises (8 ; 8'), constituée de plusieurs supports de marchandises (3) disposés les uns sur les autres dans l'entrepôt (1a ; 1b ; 1c ; 1d), dans lequel les aides au chargement de transport (7 ; 107) comprennent des (premières) aides au chargement de transport (7 ; 107) mobiles vides,
transport des (premières) aides au chargement de transport (7 ; 107) vides par les véhicules de transport mobiles de manière autonome sans conducteur (9) vers une station de chargement et mise à disposition d'une ou de plusieurs (premières) aides au chargement de transport (7 ; 107) vides soit au niveau d'un ou de plusieurs premiers dispositifs de chargement fonctionnant de manière automatisée (13 ; 113) soit sur une surface tampon (30) proche du ou des premiers dispositifs de chargement (13 ; 113), chargement d'une des (premières) aides au chargement de transport (7 ; 107) mises à disposition au niveau du premier dispositif de chargement fonctionnant de manière automatisée (13 ; 113), avec au moins une pile de supports de marchandises (8) provenant de la zone de livraison (4) par le premier dispositif de chargement fonctionnant de manière automatisée (13 ; 113),
transport de la (première) aide au chargement de transport (7 ; 107) chargée avec au moins une pile de supports de marchandises (8) avec le véhicule de transport mobile de manière autonome sans conducteur (9) de la station de chargement vers une zone d'entreposage (5),
dépose de la (première) aide au chargement de transport (7 ; 107) chargée avec au moins une pile de supports de marchandises (8) sur une surface d'entreposage (31) dans la zone d'entreposage (5),
entreposage de la (première) aide au chargement de transport (7 ; 107) chargée avec au moins une pile de supports de marchandises (8) ou de la (première) aide au chargement de transport (7 ; 107) chargée avec quelques supports de marchandises (3) dans la zone d'entreposage (5),
traitement d'un ordre de préparation de commande comprenant les étapes suivantes
- transport d'une ou de plusieurs (premières) aides au chargement de transport (7 ; 107) contenant les supports de marchandises (3) nécessaires à un ordre de préparation de commande de la zone d'entreposage (5) vers une station de chargement final et mise à disposition des (premières) aides au chargement de transport (7 ; 107) mentionnées soit au niveau d'un ou plusieurs dispositifs de déchargement fonctionnant de manière automatisée (32 ; 65 ; 75 ; 132) sur une surface tampon (36 ; 66 ; 76) proche des dispositifs de déchargement (32 ; 65 ; 75 ; 132), par un ou plusieurs véhicules de transport mobiles de manière autonome sans conducteur (9),
- déchargement d'une ou plusieurs (premières) aides au chargement de transport (7 ; 107) mises à disposition au niveau du ou des dispositifs de déchargement fonctionnant de manière automatisée (32 ; 65 ; 75 ; 132) par le retrait des supports de marchandises (3) nécessaire pour le traitement de l'ordre de préparation de commande et
- regroupement des supports de marchandises (3) sur un ou plusieurs équipements de chargement cibles (34 ; 134), pour l'ordre de préparation de commande dans une zone de traitement de l'ordre (6).

2. Procédé d'entreposage et de préparation de commandes de marchandises selon la revendication 1, **caractérisé en ce que** le regroupement des supports de marchandises (3) pour l'ordre de préparation de commande mentionné est effectué de façon à ce que les supports de marchandises (3) retirés de la pile de supports de marchandises (8) au niveau du ou des dispositifs de déchargement (65 ; 75) ou l'au moins une pile de supports de marchandises (8) retirée au niveau des dispositifs de déchargement
- sont déposés soit sur un système de convoyage fixé, qui se trouve entre la station de déchargement avec le ou les dispositifs de déchargement (65) et une station de transfert avec un ou plusieurs dispositifs de transfert fonctionnant de manière automatisée (32), et le support de marchandises (3) ou la pile de supports de marchandises (8 ; 8') est transportée par le système de convoyage du ou des dispositifs de déchargement vers le ou les dispositifs de transfert (32),
- sont déposés soit sur au moins une (deuxième) aide au chargement de transport (7 ; 107) mobile vide comprenant les aides au chargement de transport (7 ; 107) et l'au moins une (deuxième) aide au chargement de transport (7, 107) chargée avec le support de marchandises (3) ou la pile de supports de marchandises (8' ; 8") est transportée, avec un véhicule de transport mobile de manière autonome sans conducteur (9) du ou des dispositifs de déchargement (75) vers au moins un dispositif de transfert, les supports de marchandises (3) ou la pile de supports de marchandises (8 ; 8' ; 8") étant alors transférée par le dispositif de transfert (32) vers un équipement de chargement cible (34 ; 134).

3. Procédé d'entreposage et de préparation de commandes de marchandises selon la revendication 2, **caractérisé en ce que** les supports de marchandises (3) retirés de la pile de supports de marchandises (8) au niveau du ou des dispositifs de déchargement (65 ; 75) ou les piles de supports de marchandises (8) retirées au niveau du ou des dispositifs de déchargement (65 ; 75) sont déposés, de préférence dans un ordre prévu par l'ordre d'emballage des supports de marchandises (3) au niveau de l'équipement de chargement cible (34 ; 134), les uns après les autres sur le système de convoyage fixe ou sur l'au moins une (deuxième) aide au chargement de transport (7 ; 107) mobile vide et, de préférence dans cet ordre, sont transportés successivement vers l'au moins un dispositif de transfert (32).

4. Procédé d'entreposage et de préparation de commandes de marchandises selon la revendication 2, **caractérisé en ce que** les supports de marchandises (3) retirés de la pile de supports de marchandises (8) au niveau du ou des dispositifs de déchargement (65 ; 75) sont déposés, de préférence dans un ordre prévu par l'ordre d'emballage des supports de marchandises (3) au niveau de l'équipement de chargement cible (34 ; 134), sur le système de convoyage fixe ou sur l'au moins une (deuxième) aide au chargement de transport (7 ; 107) mobile vide, de façon à ce qu'au moins une pile de supports de marchandises (8") (préparée à l'avance) soit assemblée à partir de plusieurs supports de marchandises (3) disposés les uns sur les autres et qu'elle soit ensuite transportée vers l'au moins un dispositif de transfert.

5. Procédé d'entreposage et de préparation de commandes de marchandises selon la revendication 1 ou 2, comprenant les étapes suivantes
- saisie d'ordres de préparation de commandes sur un ordinateur (46),
- détermination des marchandises nécessaires pour un des ordres de préparation de commandes (besoins),
- analyse d'un état du stock concernant les marchandises (2) nécessaires pour l'ordre de préparation de commande mentionné, cet ordre de préparation de commande comprenant un ou plusieurs premiers supports de marchandises (3) contenant la marchandise (2) et un ou plusieurs deuxièmes supports de marchandises (3) contenant la marchandise (2) et
- regroupement des supports de marchandises (3) pour l'ordre de préparation de commande mentionné par étapes successives de préparation de commande si une quantité nécessaire d'une marchandise (2) dépasse le stock de cette marchandise (2), dans lequel
i) dans une première étape de préparation de commande, au niveau du dispositif de déchargement (75), la (deuxième) aide au chargement de transport (7 ; 107) est chargée avec un ou plusieurs supports de marchandises (3) puis cette (deuxième) aide au chargement de transport (7 ; 107) est transportée, avec un véhicule de transport mobile de manière autonome sans conducteur (9) du dispositif de déchargement (75) vers une surface tampon (76) et y est entreposé et
ii) dans une deuxième étape de préparation de commande, la (deuxième) aide au chargement de transport (7 ; 107) est transportée, avec un véhicule de transport mobile de manière autonome sans conducteur (9), de la surface tampon (76) vers le dispositif de déchargement (75) et y est mise à disposition tant qu'une quantité nécessaire d'une marchandise (2) est inférieure au stock de cette marchandise (2) puis la (deuxième) aide au chargement de transport (7 ; 107) est chargée avec un ou plusieurs deuxièmes supports de marchandises (3) et
- transport de la (deuxième) aide au chargement de transport (7 ; 107), après l'exécution des étapes i) et ii), avec un véhicule de transport mobile de manière autonome sans conducteur (9), du dispositif de déchargement (75) vers le dispositif de transfert (32) et
- transfert de la pile de supports de marchandises (8' ; 8") par le dispositif de transfert (32) sur un équipement de chargement cible (34 ; 134).

6. Procédé d'entreposage et de préparation de commandes de marchandises selon la revendication 1, **caractérisé en ce que** le regroupement des supports de marchandises (3), pour l'ordre de préparation de commande mentionné, est effectué de façon à ce que les supports de marchandises (3) retirés de la pile de supports de marchandises (8) au niveau du dispositif de déchargement (32) ou la pile de supports de marchandises (8) est transféré par le dispositif de déchargement (32) sur un équipement de chargement cible (34 ; 134).

7. Procédé d'entreposage et de préparation de commandes de marchandises selon l'une des revendications 2 à 6, **caractérisé par** les étapes supplémentaires suivantes
- transport de retour d'une aide au chargement de transport (7 ; 107), après le retrait des supports de marchandises (3), de la station de déchargement vers la zone d'entreposage (5), si tous les supports de marchandises (3) n'ont pas été retirés de l'aide au chargement de transport (7, 107) ou
- transport d'une aide au chargement de transport (7 ; 107), après le retrait des supports de marchandises, d'un premier dispositif de déchargement (32) vers un deuxième dispositif de déchargement (32) si tous les supports de marchandises (3) n'ont pas été retirés de l'aide au chargement de transport (7, 107) et si ces supports de marchandises (3) sont nécessaires pour un ordre de préparation de commande au niveau du deuxième dispositif de déchargement (32) ou
- transport d'une aide au chargement de transport (7 ; 107), après le retrait des supports de marchandises, du dispositif de déchargement (32) vers une zone d'attente (37) dans la station de déchargement si tous les supports de marchandises (3) n'ont pas été retirés de l'aide au chargement de transport (7, 107) et si ces supports de marchandises (3) sont nécessaires pour un ordre de préparation de commande déjà avisé au niveau du dispositif de déchargement (32) mentionné ou d'un des dispositifs de déchargement (32) ou
- transport de retour d'une aide au chargement de transport (7 ; 107), après le retrait de la pile de supports de marchandises (8 ; 8' ; 8"), vers la station de chargement et mise à disposition de l'aide au chargement de transport (7 ; 107) soit au niveau du premier dispositif de chargement fonctionnant de manière automatisée (13 ; 113) soit sur la surface tampon (30) si tous les supports de marchandises (3) n'ont pas été retirés de l'aide au chargement de transport (7, 107).

8. Procédé d'entreposage et de préparation de commandes de marchandises selon la revendication 1, **caractérisé par** les étapes supplémentaires suivantes
- mise à disposition d'une station de dépalettisation dans la zone de livraison (4),
- séparation des piles de supports de marchandises (8) d'un groupe de piles de supports de marchandises (10) constitué de piles de supports de marchandises (8), constituées chacune de supports de marchandises (3) disposés les un sur les autres, par au moins un dispositif de dépalettisation (11), fonctionnant de manière automatisée, de la station de dépalettisation,
- transport des piles de supports de marchandises (8) par l'au moins un dispositif de dépalettisation fonctionnant de manière automatisée (11) vers un ou plusieurs premiers dispositifs de chargement fonctionnant de manière automatisée (13 ; 113).

9. Procédé d'entreposage et de préparation de commandes de marchandises selon l'une des revendications 2 à 5, **caractérisé par** l'étape suivante
- regroupement de piles de supports de marchandises (8) sur l'équipement de chargement cible (34 ; 134) avec plusieurs piles de supports de marchandises (8) par le dispositif de transfert (32), fonctionnant de manière automatisée, de la station de transfert.

10. Procédé d'entreposage et de préparation de commandes de marchandises selon l'une des revendications 1 à 9, comprenant en outre les étapes suivantes
- mise à disposition d'aides au chargement par empilement (100a, 100b), chacune pour la stabilisation de la position d'une pile de supports de marchandises (101) constituée des supports de marchandises (3) selon l'ordre de préparation de commande mentionné, les aides au chargement par empilement (100a, 100b) comprenant au moins une première aide au chargement par empilement (100a) et/ou au moins une deuxième aide au chargement par empilement (100b), comprenant elles-mêmes un fond (205) et des parois d'empilement (206a, 206b) reliées avec celui-ci,
- équipement de la première aide au chargement par empilement (100a) avec un premier équipement de chargement cible (34) au niveau d'une station d'équipement avec un ou plusieurs dispositifs d'équipement fonctionnant de manière automatisée (170), en posant l'équipement de chargement cible (34) sur le fond (205) si une première aide au chargement par empilement (100a) est utilisée dans l'entrepôt de préparation de commandes (1a ; 1b ; 1c ; 1d) et/ou
- définition de la deuxième aide au chargement par empilement (100b) en tant qu'équipement de chargement cible (134) si une deuxième aide au chargement par empilement (100b) est utilisée dans l'entrepôt de préparation de commandes (1a ; 1b ; 1c ; 1d).

11. Procédé d'entreposage et de préparation de commandes de marchandises selon la revendication 10, **caractérisé par** les étapes suivantes
- transport des aides au chargement par empilement (100a, 100b) par les véhicules de transport mobiles de manière autonome sans conducteur (9) vers la station de déchargement et mise à disposition d'une ou plusieurs aides au chargement par empilement (100a, 100b) soit au niveau d'un ou plusieurs dispositifs de déchargement fonctionnant de manière automatisée (32 ; 65 ; 75 ; 132) soit sur une surface tampon (136) proche du ou des dispositifs de déchargement (32 ; 65 ; 75 ; 132),
- regroupement des supports de marchandises (3) selon l'ordre de préparation de commande mentionné en une pile de commande (101) sur l'équipement de chargement cible (34 ; 134) dans la première aide au chargement par empilement (100a) ou sur le fond (205) de la deuxième aide au chargement par empilement (100b), la première aide au chargement par empilement (100a) ou la deuxième aide au chargement par empilement (100b) étant mise à disposition au niveau du ou des dispositifs de déchargement fonctionnant de manière automatisée (32 ; 65 ; 75 ; 132).

12. Procédé d'entreposage et de préparation de commandes de marchandises selon l'une des revendications 1 à 10, **caractérisé par** les étapes suivantes
- mise à disposition d'un ou plusieurs dispositifs de chargement fonctionnant de manière automatisée (160),
- mise à disposition d'un groupe de piles de supports de marchandises (10), constitué de plusieurs piles de supports de marchandises (8) disposées les unes à côté des autres, avec des supports de marchandises (3) disposés les uns sur les autres dans la zone de livraison (4) de l'entrepôt (la ; 1b ; 1c ; 1d),
- mise à disposition de (troisièmes) aides au chargement de transport (150) vides, chacune pour le logement et la stabilisation de la position d'un groupe de piles de supports de marchandises (10),
- transport des (troisièmes) aides au chargement de transport (150) vides par le véhicule de transport mobile de manière autonome sans conducteur (9) vers la station de chargement et mise à disposition d'une ou plusieurs (troisièmes) aides au chargement de transport (150) vides soit au niveau d'un ou plusieurs deuxièmes dispositifs de chargement fonctionnant de manière automatisée (160) soit sur une surface tampon (163) proche des deuxièmes dispositifs de chargement (160),
- chargement d'une des (troisièmes) aides au chargement de transport (150) vides mises à disposition au niveau du deuxième dispositif de chargement fonctionnant de manière automatisée (160) avec au moins un groupe de piles de supports de marchandises (10) provenant de la zone de livraison (4) par le deuxième dispositif de chargement fonctionnant de manière automatisée (160),
- transport de la (troisième) aide au chargement de transport (150) chargée avec le groupe de piles de supports de marchandises (10) avec le véhicule de transport mobile de manière autonome sans conducteur (9) de la station de chargement vers la zone d'entreposage (5),
- dépose de la (troisième) aide au chargement de transport (150) chargée avec au moins une pile de supports de marchandises (8) sur la surface d'entreposage (31) dans la zone d'entreposage (5),
- entreposage de la (troisième) aide au chargement de transport (150) chargée avec le groupe de piles de supports de marchandises (10) dans la zone d'entreposage (5), traitement d'un ordre de préparation de commande comprenant les étapes suivantes
- transport d'une ou plusieurs (troisièmes) aides au chargement de transport (150) contenant les supports de marchandises (3) nécessaires à l'ordre de préparation de commande de la zone d'entreposage (5) vers la station de déchargement et mise à disposition des (troisièmes) aides au chargement de transport (150) mentionnées soit au niveau d'un ou plusieurs dispositifs de déchargement fonctionnant de manière partiellement automatisée (151) ou sur une surface tampon (153a) proche du ou des dispositifs de déchargement (151) par un ou plusieurs véhicules de transport mobiles de manière autonome sans conducteur (9),
- déchargement manuel d'une ou plusieurs des (troisièmes) aides au chargement de transport (150) mises à disposition au niveau du ou des dispositifs de déchargement fonctionnant de manière partiellement automatisée (151), par le retrait des supports de marchandises (3) nécessaires pour le traitement de l'ordre de préparation de commande mentionné et
- regroupement manuel des supports de marchandises (3) sur un ou plusieurs équipements de chargement cibles (34 ; 134) pour l'ordre de préparation de commande mentionné, si le ou les équipements de chargement cibles (34 ; 134) est/sont mis à disposition au niveau du ou des dispositifs de déchargement fonctionnant de manière partiellement automatisée (151) .

13. Procédé d'entreposage et de préparation de commandes de marchandises selon la revendication 12, comprenant les étapes suivantes
- transport des équipements de chargement cibles (34 ; 134) partiellement chargés par les véhicules de transport mobiles de manière autonome sans conducteur (9), du dispositif de déchargement fonctionnant de manière automatisée (32 ; 65 ; 75 ; 132) vers le dispositif de déchargement fonctionnant de manière partiellement automatisée (151) ou vers une surface tampon (153b) proche du ou des dispositifs de déchargement fonctionnant de manière partiellement automatisée (151), après que, au niveau du dispositif de déchargement fonctionnant de manière automatisée (32 ; 65 ; 75 ; 132), les supports de marchandises (3) aient été regroupés sur l'équipement de chargement cible (34 ; 134) partiellement chargé et si, pour l'ordre de préparation de commande mentionné, des supports d'articles (3) sont encore nécessaires, qui sont mis à disposition par l'intermédiaire des (troisièmes) aides au chargement de transport (150) au niveau du ou des dispositifs de déchargement fonctionnant de manière partiellement automatisée (151) ,
- regroupement manuel des supports de marchandises (3) sur un ou plusieurs équipements de chargement cibles (34 ; 134) partiellement chargés pour l'ordre de préparation de commande mentionné si le ou les équipements de chargement cibles (34 ; 134) partiellement chargés sont mis à disposition au niveau du ou des dispositifs de déchargement fonctionnant de manière partiellement automatisée (151).

14. Procédé d'entreposage et de préparation de commandes de marchandises selon la revendication 12 ou 13, **caractérisé par** les étapes suivantes
- transport d'aides au chargement par empilement (100a, 100b) par les véhicules de transport mobiles de manière autonome sans conducteur (9), vers la station de déchargement et mise à disposition d'une ou plusieurs aides au chargement par empilement (100a, 100b) soit au niveau d'un ou plusieurs dispositifs de déchargement fonctionnant de manière partiellement automatisée (151) soit sur une surface tampon (153b) proche du ou des dispositifs de déchargement (151),
- regroupement des supports de marchandises (3) selon l'ordre de préparation de commande mentionné en une pile de commande (101) sur l'équipement de chargement cible (34) dans la première aide au chargement par empilement (100a) ou sur le fond (205) de la deuxième aide au chargement par empilement (100b), la première aide au chargement par empilement (100a) ou la deuxième aide au chargement par empilement (100b) étant mise à disposition au niveau du ou des dispositifs de déchargement fonctionnant de manière partiellement automatisée (151).

15. Procédé d'entreposage et de préparation de commandes de marchandises selon l'une des revendications 10 à 14, comprenant en outre les étapes suivantes
- mise à disposition d'une station de sécurisation de chargement de piles de commande soit avec un ou plusieurs dispositifs de sécurisation de chargement fonctionnant de manière automatisée (180) soit avec un ou plusieurs dispositifs de sécurisation de chargement fonctionnant de manière automatisée (180) et une surface tampon (185) proche du ou des dispositifs de sécurisation de chargement (180), ce dispositif de sécurisation de chargement (180) étant conçu pour la sécurisation de transport d'une pile de commande (101) avec un moyen de sécurisation (181),
- transport d'aides au chargement par empilement (100a, 100b), chargées avec une pile de commande (101) par les véhicules de transport mobiles de manière autonome sans conducteur (9), vers la station de sécurisation de chargement de piles de commande mentionnée et mise à disposition d'une ou plusieurs aides au chargement par empilement (100a, 100b) soit au niveau d'un ou plusieurs dispositifs de sécurisation de chargement fonctionnant de manière automatisée (180) soit sur une surface tampon (185) proche du ou des dispositifs de sécurisation de chargement (180),
- retrait de la pile de commande (101) de l'aide au chargement par empilement (100a, 100b) par un dispositif de levage (183, 184) avec lequel l'équipement de chargement cible (34) est soulevé, avec la pile de commande (101), de l'aide au chargement par empilement (100a) si l'entrepôt (la ; 1b ; 1c ; 1d) comprend la première aide au chargement par empilement (100a), ou avec lequel la pile de commande (101) est soulevée de la deuxième aide au chargement par empilement (100b) si l'entrepôt (la ; 1b ; 1c ; 1d) comprend la deuxième aide au chargement par empilement (100b),
- sécurisation de la pile de commande (101) avec le moyen de fixation (181) par le dispositif de sécurisation de chargement fonctionnant de manière automatisée (180) en posant le moyen de sécurisation (181) sur la périphérie de la pile de commande (101),
- transport de la pile de commande (101) fixée, plus particulièrement par les véhicules de transport mobiles de manière autonome sans conducteur (9), de la station de sécurisation de chargement vers une zone de livraison, transport des aides au chargement par empilement (100a, 100b) par les véhicules de transport mobiles de manière autonome sans conducteur (9), comprenant
- le transport de la première aide au chargement par empilement (100a) de la station de sécurisation de chargement vers la station d'équipement avec un ou plusieurs dispositifs d'équipement fonctionnant de manière automatisée (170) si, dans l'entrepôt (la ; 1b ; 1c ; 1d), une première aide au chargement par empilement (100a) est utilisée et/ou
- le transport de la deuxième aide au chargement par empilement (100b) de la station de sécurisation de chargement vers la station de déchargement et mise à disposition de la ou des deuxièmes aides au chargement par empilement (100b) soit au niveau d'un dispositif de déchargement fonctionnant de manière automatisée (32 ; 65 ; 75 ; 132) ou sur une surface tampon (136) proche du dispositif de transfert (32 ; 65 ; 75 ; 132) si, dans l'entrepôt (la ; 1b ; 1c ; 1d), une deuxième aide au chargement par empilement (100b) est utilisée.

16. Entrepôt (la ; 1b ; 1c ; 1d) pour l'entreposage et la préparation de commandes de supports de marchandises (3) contenant des marchandises (2) et empilables, plus particulièrement pour l'exécution du procédé selon l'une des revendications 1 à 15, comprenant
un ordinateur (46) pour la saisie d'un ordre de préparation de commande et pour la détermination des marchandises (2) nécessaires pour l'ordre de préparation de commande,
une pluralité de piles de supports de marchandises (8) constituées de plusieurs supports de marchandises (3) disposés les uns sur les autres,
une zone de livraison (4) pour la mise à disposition de piles de supports de marchandises (8) constituées de plusieurs supports de marchandises (3) disposés les uns sur les autres, **caractérisé par**
une pluralité d'aides au chargement de transport (7 ; 107), chacune pour le logement et la stabilisation de la position d'au moins une pile de supports de marchandises (8) constituées de plusieurs supports de marchandises (3) disposés les uns sur les autres, dans lequel les aides au chargement de transport (7 ; 107) comprennent des (premières) aides au chargement de transport (7 ; 107) mobiles vides,
une station de chargement soit avec un ou plusieurs premiers dispositifs de chargement fonctionnant de manière automatisée (13 ; 113) soit avec un ou plusieurs premiers dispositifs de chargement fonctionnant de manière automatisée (13 ; 113) et une surface tampon (30) proche du ou des premiers dispositifs de chargement fonctionnant de manière automatisée (13 ; 113), ce premier dispositif de chargement fonctionnant de manière automatisée (13 ; 113) étant conçu pour le chargement d'une des (premières) aides au chargement de transport (7 ; 107) vides avec au moins une pile de supports de marchandises (8), dans lequel la (première) aide au chargement de transport (7 ; 107) vide est mise à disposition pour le chargement au niveau du premier dispositif de chargement fonctionnant de manière automatisée (13 ; 113),
une zone d'entreposage (5) pour l'entreposage des (premières) aides au chargement de transport (7 ; 107) chargées avec au moins une pile de supports de marchandises (8) ou de (premières) aides au chargement de transport (7 ; 107) chargées avec quelques supports de marchandises (3) sur une surface d'entreposage (31),
une station de déchargement avec un ou plusieurs dispositifs de déchargement fonctionnant de manière automatisée (32 ; 65 ; 75 ; 132) pour le déchargement d'une ou plusieurs des (premières) aides au chargement de transport (7 ; 107), par le retrait des supports de marchandises (3) nécessaires au traitement d'un ordre de préparation de commande, dans lequel la ou les aides au chargement de transport (7 ; 107) sont mises à disposition pour le déchargement au niveau du ou des dispositifs de déchargement fonctionnant de manière automatisée (32 ; 65 ; 75 ; 132) et
une pluralité de véhicules de transport mobiles de manière autonome sans conducteur (9), qui sont contrôlés par un système de contrôle (47) et qui comprennent chacun un châssis (50) avec une unité d'entraînement et une plateforme de chargement (51) disposée sur le châssis (50) pour le logement d'une aide au chargement de transport (7 ; 107),
- afin de transporter des (premières) aides au chargement de transport (7 ; 107) vides vers la station de chargement et de mettre à disposition une des (premières) aides au chargement de transport (7 ; 107) vides soit au niveau du premier dispositif de chargement fonctionnant de manière automatisée (13 ; 113) soit sur la surface tampon (30) proche du premier dispositif de chargement (13 ; 113) et
- afin de transporter la (première) aide au chargement de transport (7 ; 107) chargée avec au moins une pile de supports de marchandises (8) de la station de chargement vers une zone d'entreposage (5) et
- afin de transporter une ou plusieurs (premières) aides au chargement de transport (7 ; 107) contenant les supports de marchandises (3) nécessaires à un ordre de préparation de commande de la zone d'entreposage (5) vers une station de déchargement et de mettre à disposition les (premières) aides au chargement de transport (7 ; 107) mentionnées soit au niveau d'un ou plusieurs dispositifs de déchargement fonctionnant de manière automatisée (32 ; 65 ; 75 ; 132) soit sur une surface tampon (36 ; 66 ; 76) proche du ou des dispositifs de déchargement (32 ; 65 ; 75 ; 132),
une station de transfert pour le regroupement des supports de marchandises (3) pour l'ordre de préparation de commande mentionné.

17. Entrepôt selon la revendication 16, **caractérisé en ce que** la (première) au chargement de transport (7 ; 107) et/ou la deuxième aide au chargement de transport (7 ; 107) comprend un fond (55) et des parois latérales (56a, 56b, 56c, 56d) reliées avec celui-ci, au moins un compartiment de logement limité par les parois latérales (56a, 56b, 56c, 56d) pour le logement d'au moins une pile de supports de marchandises (8) et une ouverture de chargement et de déchargement (57, 57a, 57b) et **en ce que** les parois latérales (56a, 56b, 56c, 56d), pour la stabilisation de la position de l'au moins une pile de supports de marchandises (8), lorsque celle-ci est posée sur le fond (55),
- comprennent des premières parois latérales (56a, 56b, 56c) exclusivement parallèles ou disposées de manière inclinée entre elles ou
- comprennent des premières parois latérales (56a, 56b, 56c) parallèles ou inclinées entre elles et une deuxième paroi latérale (56c) disposée entre elles.

18. Entrepôt selon la revendication 17, **caractérisé en ce que** la deuxième paroi latérale (56c) comprend une partie de paroi latérale (200a, 200b) qui est inclinée d'un angle d'inclinaison (α₁) par rapport à un plan vertical s'étendant entre les premières parois latérales (56a, 56b, 56d), de façon à ce que lorsque la distance verticale par rapport au fond (55) augmente, la partie de paroi latérale (200a, 200b) s'étend de manière inclinée vers l'arrière.

19. Entrepôt selon la revendication 17 ou 18, **caractérisé en ce que** le fond (55) comprend une partie de paroi de fond (201a, 201b) qui s'étend de manière inclinée vers le bas d'un angle d'inclinaison (α₂) par rapport à un plan horizontal s'étendant entre les premières parois latérales (56a, 56b, 56c) en direction de la deuxième paroi latérale (56c).

20. Entrepôt selon la revendication 16, **caractérisé par** une ou plusieurs aides au chargement par empilement (100a, 100b), chacun pour la stabilisation de la position d'une pile de commande (101) regroupée à partir des supports de marchandises (3) selon l'ordre de préparation de commande mentionné, qui comprennent au moins une première aide au chargement par empilement (100a) et/ou au moins une deuxième aide au chargement par empilement (100b), qui comprennent elles-mêmes un fond (205) et des parois d'empilement (206a, 206b) reliées avec celui-ci.

21. Entrepôt selon la revendication 20, **caractérisé en ce que** l'au moins une première aide au chargement par empilement (100a) forme, sur le fond (205), sur son côté supérieur, une surface de pose (207) sur laquelle un équipement de chargement cible (34), plus particulièrement une palette, avec la pile de commande (101) empilée sur celui-ci, peut être posé.

22. Entrepôt selon la revendication 20, **caractérisé en ce que** l'au moins une deuxième (100b) forme, sur le fond (205), des blocs de pose (211) dépassant sur son côté supérieur et séparés entre eux par des canaux de logement (210), sur lesquels les supports de marchandises (3) de la pile de commande (101) peuvent être posés, de façon à ce que l'au moins une deuxième aide au chargement par empilement (100b) forme l'équipement de chargement cible (134).

23. Entrepôt selon l'une des revendications 16 à 22, **caractérisé par** une station de sécurisation de chargement de pile de commande soit avec un ou plusieurs dispositifs de sécurisation de chargement fonctionnant de manière automatisée (180) soit avec un ou plusieurs dispositifs de sécurisation de chargement fonctionnant de manière automatisée (180) et une surface tampon (185) proche du ou des dispositifs de sécurisation de chargement fonctionnant de manière automatisée (180),
- ce dispositif de sécurisation de chargement (180) étant conçu pour la sécurisation de transport d'une pile de commande (101) avec un moyen de sécurisation (181) et
- qui comprend un dispositif de levage (183, 184) avec lequel l'équipement de chargement cible (34) avec la pile de commande (101) est soulevé de l'aide au chargement par empilement (100a) lorsque l'entrepôt (la ; 1b ; 1c ; 1d) comprend la première aide au chargement par 'empilement (100a) ou avec lequel la pile de commande (101) est soulevée de l'aide au chargement par empilement (100b) lorsque l'entrepôt (la ; 1b ; 1c ; 1d) comprend la deuxième aide au chargement par empilement (100b), afin de stabiliser la pile de commande (101) avec le moyen de sécurisation (181).

24. Entrepôt selon la revendication 16, **caractérisé en ce qu'**un dispositif de déchargement fonctionnant de manière automatisée (32 ; 65 ; 75 ; 132) comprend un dispositif de transfert (147) mobile dans l'espace par rapport à une structure porteuse (42 ; 142) pour le déchargement d'une (première) aide au chargement de transport (7 ; 107) et pour le chargement d'un équipement de chargement cible (34, 134) avec des supports de marchandises (3) de même longueur et/ou de longueurs différentes par préhension par serrage, dans lequel le dispositif de transfert (147) comprend
- un cadre de base (250),
- des lames de chargement (252a, 252b) pouvant être déplacées par des premiers dispositifs d'entraînement (251a, 251b) par rapport au cadre de base (250) dans une première direction (y) indépendamment entre elles entre une position initiale rétractée et une position de logement déployée, qui logent, dans la position de logement déployée, au moins un support de marchandises (3),
- des mâchoires de serrage (254a, 254b) pouvant être déplacées par au moins un deuxième dispositif d'entraînement (253a, 253b) dans une deuxième direction (x) les uns par rapport aux autres entre une position d'ouverture rétractée et une position de serrage, pour la préhension par serrage d'au moins un support de marchandise (3),
- un cadre de levage (256) pouvant être déplacé par au moins un troisième dispositif d'entraînement (255) dans une troisième direction (z) par rapport au cadre de base (250), sur lequel les mâchoires de serrage (254a, 254b) sont logées et grâce auquel les mâchoires de serrage (254a, 254b) sont mobiles entre une position en hauteur inférieure et une position en hauteur supérieure, de façon à ce que, pour le déchargement de la (première) aide au chargement de transport (7 ; 107),
- l'au moins un support de marchandise (3) puisse être soulevé par les mâchoires de serrage (254a, 254b) appuyées contre l'au moins un support de marchandise (3) et
- au moins une des lames de chargement (252a, 252b) puisse être poussée au moins partiellement sous l'au moins un support de marchandise (3) soulevé par les mâchoires de serrage (254a, 254b), afin de loger l'au moins un support de marchandise (3) dans la position de logement déployée.
